(19) Europäisches Patentamt / European Patent Office / Office européen des brevets

(11) **EP 4 369 671 A1**

(12) **EUROPEAN PATENT APPLICATION**
published in accordance with Art. 153(4) EPC

(43) Date of publication:
**15.05.2024 Bulletin 2024/20**

(21) Application number: **22837334.6**

(22) Date of filing: **10.05.2022**

(51) International Patent Classification (IPC):
**H04L 27/26** (2006.01)     **H04B 7/06** (2006.01)
**H04W 16/14** (2009.01)     **H04W 16/28** (2009.01)
**H04W 72/04** (2023.01)

(52) Cooperative Patent Classification (CPC):
**H04B 7/06; H04L 27/26; H04W 16/14;
H04W 16/28; H04W 72/04**

(86) International application number:
**PCT/JP2022/019838**

(87) International publication number:
**WO 2023/281913 (12.01.2023 Gazette 2023/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.07.2021 JP 2021114138**

(71) Applicant: **Panasonic Intellectual Property
Corporation
of America
Torrance, CA 90504 (US)**

(72) Inventor: **MURAKAMI, Yutaka
Kadoma-shi, Osaka 571-0057 (JP)**

(74) Representative: **Grünecker Patent- und
Rechtsanwälte
PartG mbB
Leopoldstraße 4
80802 München (DE)**

(54) **WIRELESS DEVICE AND SENSING METHOD**

(57)     This wireless device comprises: a wireless unit that carries out wireless communication by frame units having a first resource group divided in a frequency direction and a second resource group divided in a time direction; and a control unit that selects, from the first and second resource groups included in the frame units, a resource to be used for sensing.

FIG. 54

## Description

Technical Field

The present disclosure relates to a radio apparatus and a sensing method.

Background Art

An exemplary system using a frequency equal to or higher than 52.6 GHz is a communication system using a 60 GHz band.

A scheme disclosed in Patent Literature 1 is one of a communication method for extending a communication distance. FIG. 71 illustrates an exemplary communication state of radio communication devices disclosed in Patent Literature 1.

For example, radio communication device 001 transmits a sector sweep signal. After that, radio communication device 051 transmits a sector sweep signal. Then, radio communication device 051 transmits a signal including feedback information on the sector sweep to radio communication device 001.

Following this procedure, radio communication device 001 determines a method of "transmit beamforming and/or receive beamforming", and radio communication device 051 also determines a method of "transmit beamforming and/or receive beamforming". This extends the communication distance between radio communication device 001 and radio communication device 051.

Citation List

Patent Literature

PTL 1
Japanese Unexamined Patent Application Publication (Translation of PCT Application) No. 2018-518855

Non Patent Literature

NPL 1
S. Schuster, S. Scheiblhofer, R. Feger, and A. Stelzer, "Signal model and statistical analysis for the sequential sampling pulse radar technique," in Proc. IEEE Radar Conf, 2008, pp. 1-6, 2008
NPL 2
D. Cao, T. Li, P. Kang, H. Liu, S. Zhou, H. Su, "Single-Pulse Multi-Beams Operation of Phased Array Radar", 2016 CIE International Conference on Radar (RADAR), pp. 1-4, 2016
NPL 3
A. Bourdoux, K. Parashar, and M. Bauduin, "Phenomenology of mutual interference of FMCW and PMCW automotive radars," in 2017 IEEE Radar Conference (Radar Conf.), pp. 1709-1714, 2017
NPL 4
J. Fink, F. K. Jondral, "Comparison of OFDM radar and chirp sequence radar," in 2015 16th International Radar Symposium (IRS), pp. 315-320, 2015

Summary of Invention

Incidentally, target sensing accuracy using a radio signal depends on how wide the frequency bandwidth of the radio signal is. For example, wider frequency bandwidth of a radio signal improves the sensing accuracy. Thus, a radio apparatus capable of sensing a target in accordance with required accuracy is desired.

One non-limiting and exemplary embodiment facilitates providing a technique to realize target sensing in accordance with required accuracy.

A radio apparatus according to an embodiment of the present disclosure includes: <claim 1>

A sensing method according to an embodiment of the present disclosure includes: <claim 7>

It should be noted that general or specific embodiments may be implemented as a system, an apparatus, a method, an integrated circuit, a computer program, a storage medium, or any selective combination thereof.

A non-limiting exemplary embodiment of the present disclosure realizes target sensing in accordance with required accuracy.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1A illustrates an exemplary configuration of a communication apparatus in Embodiment 1;
FIG. 1B illustrates an exemplary configuration of the communication apparatus different from the configuration in FIG. 1A in Embodiment 1;
FIG. 1C illustrates an exemplary configuration of the communication apparatus different from the configurations in FIGS. 1A and 1B in Embodiment 1;
FIG. 2 illustrates an exemplary configuration of an i-th transmitter;
FIG. 3 illustrates an exemplary configuration of transmission panel antenna i in FIGS. 1A, 1B, and 1C;
FIG. 4 illustrates an exemplary configuration of reception panel antenna i in FIGS. 1A, 1B, and 1C;
FIG. 5 illustrates an exemplary configuration of a transmission apparatus in a case of using an OFDM scheme;

FIG. 6 illustrates an exemplary configuration of a reception apparatus in a case of using an OFDM scheme;

FIG. 7 illustrates an exemplary configuration of the reception apparatus in a case of using a single-carrier scheme based on DFT;

FIG. 8 illustrates an exemplary configuration of the reception apparatus in a case of using a single-carrier scheme based on time domain;

FIG. 9 illustrates an exemplary communication state in Embodiment 1;

FIG. 10 illustrates an exemplary modulation signal transmitted by base station #1 in FIG. 9;

FIG. 11 illustrates exemplary sector sweep reference signals in FIG. 10 transmitted by base station #1 in FIG. 9 with the configuration in FIG. 1A, 1B, or 1C;

FIG. 12 illustrates an exemplary configuration of a "sector sweep reference signal in transmission panel antenna i for frequency $b_p$" in FIG. 11;

FIG. 13 illustrates an exemplary operation in the time period from time t1 to t2, which is a terminal response period;

FIG. 14 illustrates exemplary occupation by terminals in terminal "sector sweep reference signal" transmission periods illustrated in FIG. 13;

FIG. 15A illustrates an exemplary configuration of a terminal #i "sector sweep reference signal";

FIG. 15B illustrates an exemplary configuration of a "sector sweep reference signal in terminal #i transmission panel antenna xi" in FIG. 15A;

FIG. 16A illustrates an exemplary configuration of a feedback signal that is present in the time period from t2 to t3 in FIG. 10 and transmitted by base station #1;

FIG. 16B illustrates exemplary specific feedback signal assignment for the feedback signal illustrated in FIG. 16A;

FIG. 17A illustrates an exemplary configuration of a data-symbol-included frame that is present in the time period from t4 to t5 in FIG. 10 and transmitted by base station #1;

FIG. 17B illustrates exemplary specific modulation signal (slot) assignment for the data-symbol-included frame illustrated in FIG. 17A;

FIG. 18 illustrates an exemplary state where base station #1 and "terminal #1 to terminal #6" communicate with each other;

FIG. 19 illustrates an exemplary modulation signal transmission state of base station #1 and an exemplary modulation signal transmission state of a terminal such as "terminal #1 to terminal #6" after the state in FIG. 18;

FIG. 20A illustrates an exemplary configuration of a "data-symbol-included frame" transmitted by terminal #1;

FIG. 20B illustrates an exemplary configuration of a

"data-symbol-included frame" transmitted by terminal #2;

FIG. 20C illustrates an exemplary configuration of a "data-symbol-included frame" transmitted by terminal #3;

FIG. 20D illustrates an exemplary configuration of a "data-symbol-included frame" transmitted by terminal #4;

FIG. 20E illustrates an exemplary configuration of a "data-symbol-included frame" transmitted by terminal #5;

FIG. 20F illustrates an exemplary configuration of a "data-symbol-included frame" transmitted by terminal #6;

FIG. 21 illustrates an exemplary configuration of a terminal response period in the time period from time t1 to t2 in FIG. 10;

FIG. 22A illustrates an exemplary configuration, in time and frequency, of a terminal "sector sweep reference signal";

FIG. 22B illustrates an exemplary configuration, in time and frequency, of a terminal "sector sweep reference signal";

FIG. 23A illustrates an exemplary configuration of a feedback signal that is present in the time period from t2 to t3 in FIG. 10 and transmitted by base station #1;

FIG. 23B illustrates exemplary specific feedback signal assignment for the feedback signal illustrated in FIG. 23A;

FIG. 24A illustrates an exemplary configuration of a data-symbol-included frame that is present in the time period from t4 to t5 in FIG. 10 and transmitted by base station #1;

FIG. 24B illustrates exemplary assignment of modulation signals (slots) for frequency for the data-symbol-included frame illustrated in FIG. 24A;

FIG. 25A illustrates an exemplary configuration of a data-symbol-included frame transmitted by a terminal;

FIG. 25B illustrates an exemplary configuration of a data-symbol-included frame transmitted by a terminal;

FIG. 25C illustrates an exemplary configuration of a data-symbol-included frame transmitted by a terminal;

FIG. 25D illustrates an exemplary configuration of a data-symbol-included frame transmitted by a terminal;

FIG. 25E illustrates an exemplary configuration of a data-symbol-included frame transmitted by a terminal;

FIG. 25F illustrates an exemplary configuration of a data-symbol-included frame transmitted by a terminal;

FIG. 26 illustrates an exemplary communication state according to Embodiment 3;

FIG. 27 illustrates exemplary sector sweep reference signals in FIG. 10 transmitted by base station #1 in FIG. 26;

FIG. 28 illustrates an exemplary configuration of a "sector sweep reference signal in transmission panel antenna i" in FIG. 27;

FIG. 29 illustrates exemplary occupation of the terminal "sector sweep reference signal" transmission periods illustrated in FIG. 13;

FIG. 30 illustrates an exemplary configuration of a "sector sweep reference signal in a transmission panel antenna" in FIG. 27;

FIG. 31 illustrates an exemplary configuration of the feedback signal that is present in the time period from t2 to t3 in FIG. 10 and transmitted by base station #1;

FIG. 32 illustrates an exemplary configuration of the data-symbol-included frame that is present in the time period from t4 to t5 in FIG. 10 and transmitted by base station #1;

FIG. 33 illustrates an exemplary configuration of the "data-symbol-included frame" transmitted by the terminal;

FIG. 34 illustrates an exemplary configuration for the sector sweep reference signals;

FIG. 35 illustrates an exemplary configuration of the "sector sweep reference signal in frequency $b_p$" in FIG. 34;

FIG. 36 illustrates an exemplary configuration of the terminal #i "sector sweep reference signal" in FIG. 14;

FIG. 37 illustrates an exemplary configuration of the sector sweep reference signal in FIG. 29;

FIG. 38A illustrates the first example of a relationship between gNB and a terminal;

FIG. 38B illustrates the second example of a relationship between gNB and a terminal;

FIG. 38C illustrates the third example of a relationship between gNB and a terminal;

FIG. 39 illustrates an exemplary configuration of the gNB and terminal;

FIG. 40 illustrates exemplary interaction between the gNB and terminal;

FIG. 41A illustrates a frame configuration of a signal transmitted by the gNB;

FIG. 41B illustrates a frame configuration of a signal transmitted by the terminal;

FIG. 41C illustrates a frame configuration of a signal transmitted by the gNB;

FIG. 41D illustrates a frame configuration of a signal transmitted by terminal x102;

FIG. 42A illustrates exemplary mapping of a communication signal;

FIG. 42B illustrates exemplary mapping of the communication signal;

FIG. 42C illustrates exemplary mapping of the communication signal;

FIG. 42D illustrates exemplary mapping of the communication signal;

FIG. 42E illustrates exemplary mapping of the communication signal;

FIG. 42F illustrates exemplary mapping of the communication signal;

FIG. 43A illustrates exemplary mapping of a sensing signal;

FIG. 43B illustrates exemplary mapping of the sensing signal;

FIG. 43C illustrates exemplary mapping of the sensing signal;

FIG. 43D illustrates exemplary mapping of the sensing signal;

FIG. 43E illustrates exemplary mapping of the sensing signal;

FIG. 43F illustrates exemplary mapping of the sensing signal;

FIG. 44 illustrates exemplary interaction between the gNB and terminal;

FIG. 45 illustrates exemplary interaction between the gNB and terminal;

FIG. 46A illustrates exemplary assignment of a modulation signal transmitted by the first terminal in the frequency and time axes;

FIG. 46B illustrates exemplary assignment of a modulation signal transmitted by the first terminal in the frequency and time axes;

FIG. 46C illustrates exemplary assignment of a modulation signal transmitted by the first terminal in the time axis;

FIG. 47 illustrates an exemplary configuration of a "resource in time and frequency used by the first terminal for transmitting a modulation signal for communication", another "resource in time and frequency used by the first terminal for transmitting a modulation signal for communication", and a "time resource used by the first terminal for transmitting a modulation signal for communication";

FIG. 48 illustrates an exemplary configuration of control information transmitted by the terminal;

FIG. 49 illustrates an exemplary configuration of control information transmitted by the gNB;

FIG. 50 illustrates an exemplary configuration of a modulation signal transmitted by the gNB or terminal;

FIG. 51 illustrates an exemplary configuration of a modulation signal transmitted by the gNB or terminal;

FIG. 52A illustrates an exemplary resource for a modulation signal transmitted by the gNB;

FIG. 52B illustrates an exemplary resource for a modulation signal transmitted by the terminal;

FIG. 53A illustrates the first example of resource allocation for a modulation signal transmitted by the terminal;

FIG. 53B illustrates the second example of resource allocation for a modulation signal transmitted by the terminal;

FIG. 53C illustrates the third example of resource allocation for a modulation signal transmitted by the terminal;

FIG. 54 illustrates an exemplary sector-sweep reference signal;

FIG. 55A illustrates an exemplary resource for a modulation signal transmitted by the gNB;

FIG. 55B illustrates an exemplary resource for a modulation signal transmitted by the terminal;

FIG. 56A illustrates the first example of resource allocation for a modulation signal transmitted by the terminal;

FIG. 56B illustrates the second example of resource allocation for a modulation signal transmitted by the terminal;

FIG. 56C illustrates the second example of resource allocation for a modulation signal transmitted by the terminal;

FIG. 57A illustrates an exemplary resource for a modulation signal transmitted by the gNB;

FIG. 57B illustrates an exemplary resource for a modulation signal transmitted by the terminal;

FIG. 58A illustrates an exemplary configuration of "the third time" for a modulation signal transmitted by a base station;

FIG. 58B illustrates an exemplary configuration of "the third time" for a modulation signal transmitted by a base station;

FIG. 59A illustrates an exemplary configuration of "the sixth time" for a modulation signal transmitted by the terminal;

FIG. 59B illustrates an exemplary configuration of "the sixth time" for a modulation signal transmitted by the terminal;

FIG. 60 illustrates an exemplary configuration of a communication apparatus;

FIG. 61 illustrates an exemplary configuration of a communication apparatus;

FIG. 62A illustrates an exemplary relationship between the gNB and terminal;

FIG. 62B illustrates an exemplary relationship between the gNB and terminal;

FIG. 62C illustrates an exemplary relationship between the gNB and terminal;

FIG. 62D illustrates an exemplary relationship between the gNB and terminal;

FIG. 62E illustrates an exemplary relationship between the gNB and terminal;

FIG. 62F illustrates an exemplary relationship between the gNB and terminal;

FIG. 63 illustrates an exemplary configuration of the gNB in FIG. 62A;

FIG. 64A illustrates an exemplary configuration of the terminal in FIG. 62A;

FIG. 64B illustrates an exemplary configuration of the terminal in FIG. 62A;

FIG. 64C illustrates an exemplary configuration of the terminal in FIG. 62A;

FIG. 65 illustrates exemplary information included in a modulation signal transmitted by the terminal;

FIG. 66 illustrates exemplary information included in a modulation signal transmitted by the gNB;

FIG. 67 illustrates an exemplary relationship between the gNB and terminal;

FIG. 68 illustrates an exemplary configuration of an apparatus performing sensing;

FIG. 69 illustrates an exemplary configuration of an apparatus performing sensing using radio waves;

FIG. 70 illustrates an exemplary configuration of an apparatus performing communication and sensing; and

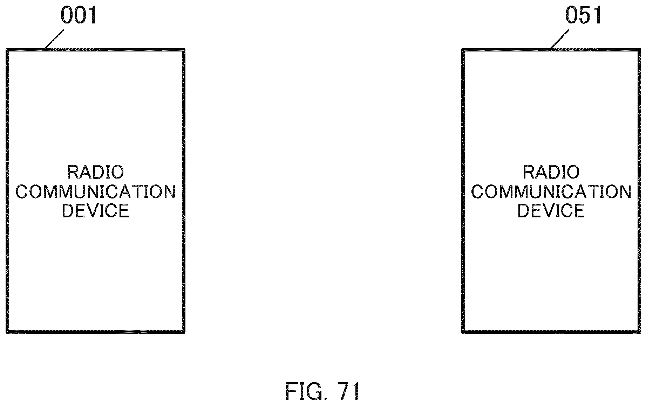

FIG. 71 illustrates an exemplary communication state of radio communication devices according to a conventional technique.

Description of Embodiments

Hereinafter, embodiments of the present disclosure will be described in detail with reference to the accompanying drawings.

First, communication methods using sector sweep will be described in Embodiments 1 to 5, and then sensing methods when sector sweep-based communication is in use will be described.

(Embodiment 1)

In Embodiment 1, a description will be given of a communication system, a communication apparatus, and a communication method using sector sweep.

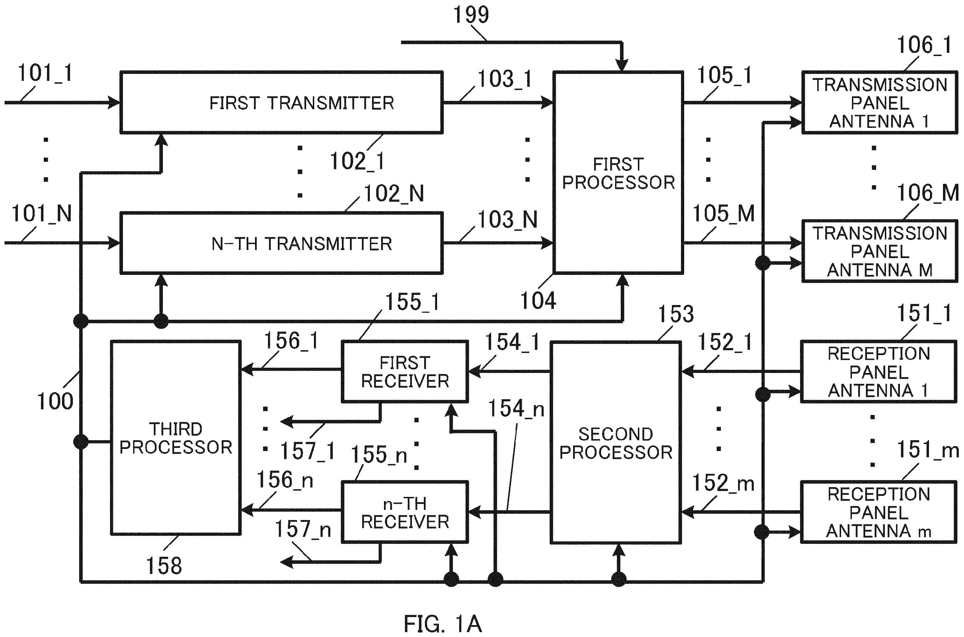

FIG. 1A illustrates an exemplary configuration of a communication apparatus, such as a base station, an access point, a terminal, and a repeater, for example, in Embodiment 1.

The communication apparatus in FIG. 1A includes N transmitters, which are "first transmitter 102_1 to N-th transmitter 102_N". Note that N is an integer equal to or greater than 1 or an integer equal to or greater than 2.

The communication apparatus in FIG. 1A also includes M transmission panel antennas, which are "transmission panel antenna 1 labeled 106_1 to transmission panel antenna M labeled 106_M", for transmission. Note that M is an integer equal to or greater than 1 or an integer equal to or greater than 2.

The communication apparatus in FIG. 1A includes n receivers, which are "first receiver 155_1 to n-th receiver 155_n". Note that n is an integer equal to or greater than 1 or an integer equal to or greater than 2.

The communication apparatus in FIG. 1A includes m reception panel antennas, which are "reception panel antenna 1 labeled 151_1 to reception panel antenna m labeled 151_m", for reception. Note that m is an integer equal to or greater than 1 or an integer equal to or greater than 2.

The i-th transmitter 102_i takes control signal 100 and i-th data 101_i as input, performs processing such as error correction coding and mapping based on a modulation scheme, and outputs i-th modulation signal 103_i. Note that i is an integer from 1 to N (both inclusive).

Note that i-th data 101_i may be configured to include data of one or more users. In this case, an error correction code, a modulation scheme, and a transmission method may be configured for each user.

First processor 104 takes i-th modulation signal 103_i (i is an integer from 1 to N (both inclusive)), control signal 100, and reference signal 199 as input and outputs j-th transmission signal 105_j (j is an integer from 1 to M (both inclusive)) based on frame configuration information included in control signal 100. Note that some of i-th modulation signals 103_i may include no signal, and some of j-th transmission signals 105j may include no signal.

Then, j-th transmission signal 105j is outputted as a radio wave from transmission panel antenna j labeled 106_j. Note that transmission panel antenna j labeled 106_j may perform beamforming and change the transmission directivity taking control signal 100 as input. In addition, transmission panel antenna j labeled 106_j may be switched by control signal 100 in transmitting a modulation signal to a communication counterpart. This will be described later.

Reception panel antenna i labeled 151_i receives i-th received signal 152_i. Note that reception panel antenna i labeled 151_i may perform beamforming and change the reception directivity taking control signal 100 as input. This will be described later.

Second processor 153 performs processing such as frequency conversion taking i-th received signal 152_i and control signal 100 as input, and outputs j-th signal-processing-subjected signal (i.e., j-th signal that has been subjected to signal processing) 154_j. Note that some of i-th received signals 152_i may include no signal, and some of j-th signal-processing-subjected signals 154j may include no signal.

Then, j-th receiver 155_j takes j-th signal-processing-subjected signal 154_j and control signal 100 as input, performs processing such as demodulation and error correction decoding on j-th signal-processing-subjected signal 154_j based on control signal 100, and outputs j-th control data 156_j and j-th data 157_j.

Note that j-th control data 156_j may be configured to include control data of one or more users, and j-th data 157_j may be configured to include data of one or more users.

Third processor 158 takes j-th control data 156_j as input, generates control signal 100 based on information obtained from the communication counterpart, and outputs generated control signal 100.

Incidentally, first processor 104 of the communication apparatus in FIG. 1A may perform processing for transmit beamforming (transmission directivity control), for example, precoding processing. Meanwhile, second processor 153 may perform processing for reception directivity control. As another example, first processor 104 may perform processing of outputting first modulation signal 103_1 as first transmission signal 105_1, second modulation signal 103_2 as second transmission signal 105_2, and third modulation signal 103_3 as third transmission signal 105_3, for example. Alternatively, first processor 104 may perform processing of outputting second modulation signal 103_2 as first transmission signal 105_1. In addition, second processor 153 may perform processing of outputting first received signal 152_1 as first signal-processing-subjected signal 154_1, second received signal 152_2 as second signal-processing-subjected signal 154_2, and third received signal 152_3 as third signal-processing-subjected signal 154_3. Alternatively, the second processor 153 may perform processing of outputting first received signal 152_1 as second signal-processing-subjected signal 154_2.

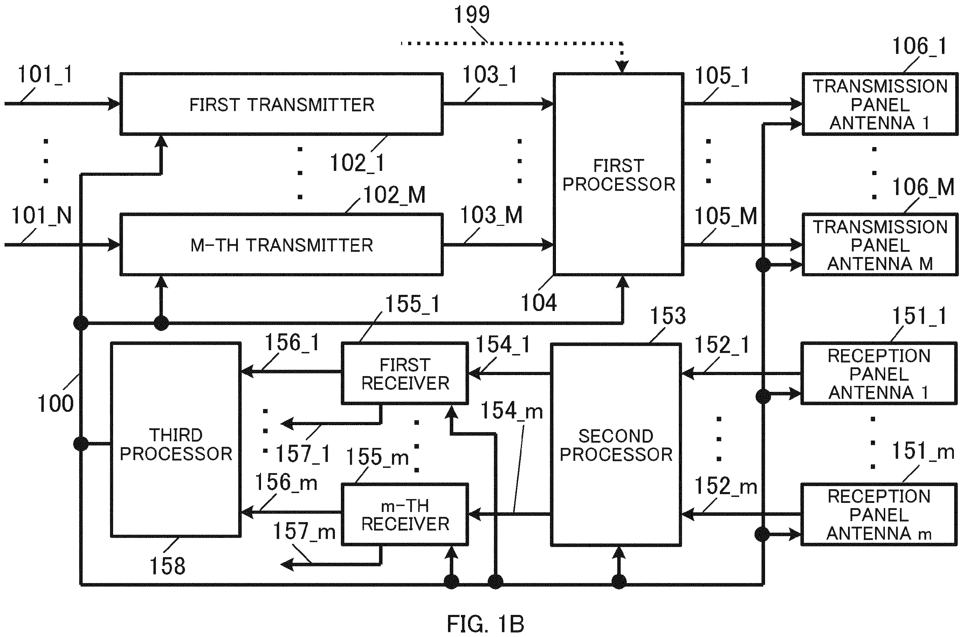

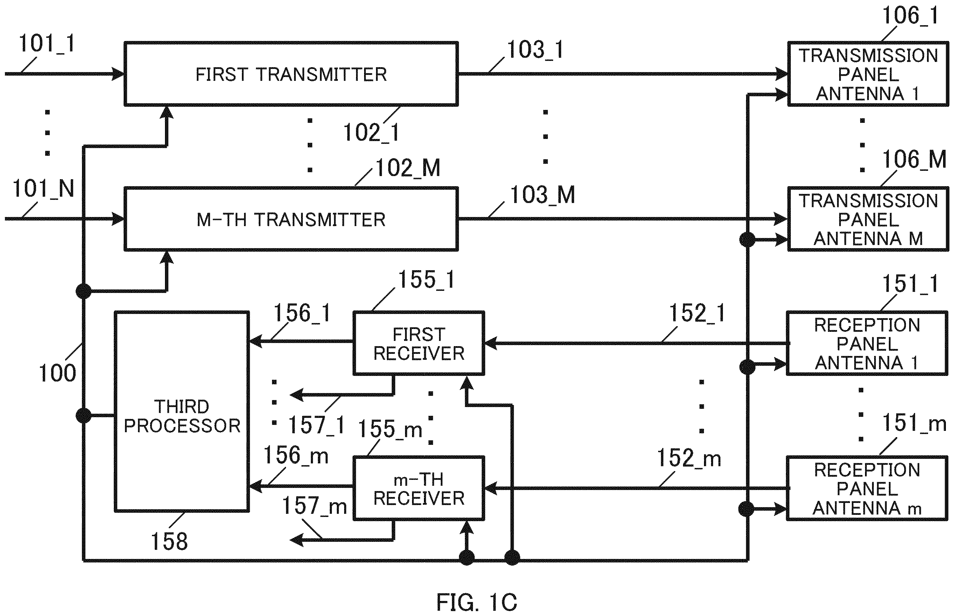

The configuration in FIG. 1A may include a processor not illustrated in FIG. 1A. For example, an interleaver for sorting symbols and/or data, a padder for padding, and the like may be included in the communication apparatus. Moreover, the communication apparatus in FIG. 1A (also in FIG. 1B and FIG. 1C) may perform transmission and/or reception corresponding to multiple input multiple output (MIMO) transmission for transmitting a plurality of modulation signals (a plurality of streams), using a plurality of antennas. Further, the communication apparatus in FIG. 1A (also in FIG. 1B and FIG. 1C) may perform transmission corresponding to multi-user MIMO transmission for transmitting, using a first frequency (band), modulation signals to a plurality of terminals in a first time period at least.

FIG. 1B illustrates an exemplary configuration of the communication apparatus in Embodiment 1, such as a base station, an access point, a terminal, a repeater, etc., different from the configuration in FIG. 1A. In FIG. 1B, the components that operate in the same manner as in FIG. 1A are denoted by the same reference signs, and detailed descriptions thereof will be omitted.

The configuration in FIG. 1B is characterized in that the number of transmitters and the number of transmission panel antennas are the same. In this case, first processor 104 may perform processing for transmit beamforming (transmission directivity control), for example, precoding processing. First processor 104 may output y-th modulation signal 103_y as x-th transmission signal 105_x. Note that x is an integer from 1 to M (both inclusive), and y is an integer from 1 to M (both inclusive).

In addition, the number of receivers and the number of reception panel antennas are the same. In this case, second processor 153 may perform processing for the reception directivity control. Second processor 153 may output y-th received signal 152_y as x-th signal-processing-subjected signal 154_x. Note that x is an integer from 1 to m (both inclusive), and y is an integer from 1 to m (both inclusive).

FIG. 1C illustrates an exemplary configuration of the communication apparatus in Embodiment 1, such as a base station, an access point, a terminal, a repeater, etc., different from the configurations in FIGS. 1A and 1B. In FIG. 1C, the components that operate in the same manner as in FIG. 1A are denoted by the same reference signs, and detailed descriptions thereof will be omitted.

The configuration in FIG. 1C is characterized in that the number of transmitters and the number of transmission panel antennas are the same and the first processor is not present. In addition, the number of receivers and the number of reception panel antennas are the same and the second processor is not present.

Note that FIGS. 1A, 1B, and 1C illustrate exemplary configurations of the communication apparatus, such as a base station, an access point, a terminal, a repeater, etc., and the configuration method of the communication apparatus is not limited to these examples.

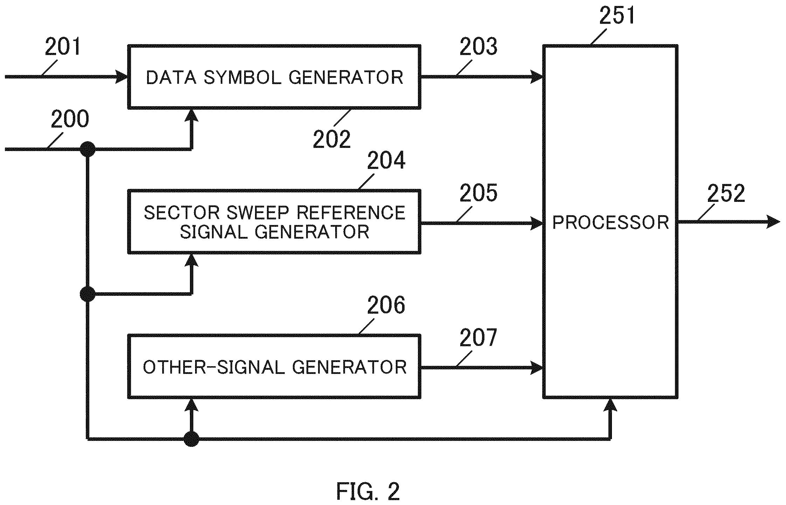

FIG. 2 illustrates an exemplary configuration of i-th transmitter 102_i. Note that i is "an integer from 1 to N (both inclusive)" or "an integer from 1 to M (both inclusive)".

Data symbol generator 202 takes data 201 and control signal 200 as input, performs error correction coding, mapping, signal processing for transmission, etc. on the basis of information on an error correction coding method, information on a modulation scheme, information on a transmission method, information on a frame configuration method, etc. included in control signal 200, and outputs data symbol modulation signal 203. Note that data 201 corresponds to i-th data 101_i, and control signal 200 corresponds to control signal 100. Thus, data 201 may include data of one or more users.

Sector sweep reference signal (i.e., reference signal for sector sweep) generator 204 takes control signal 200 as input, generates sector sweep reference signal 205 based on the frame configuration information included in control signal 200, and outputs the generated signal. Note that specific configuration methods and transmission methods for sector sweep reference signal 205 will be described later in detail.

Other-signal generator 206 takes control signal 200 as input, generates other signals 207 based on the control signal, and outputs the generated signals.

Processor 251 takes data symbol modulation signal 203, sector sweep reference signal 205, other signals 207, and control signal 200 as input, generates frame configuration-based modulation signal (i.e., modulation signal in accordance with frame configuration) 252 based on the frame configuration information included in control signal 200, and outputs the generated signal. Note that frame configuration-based modulation signal 252 corresponds to i-th modulation signal 103_i, and specific examples of the frame configuration will be described later in detail.

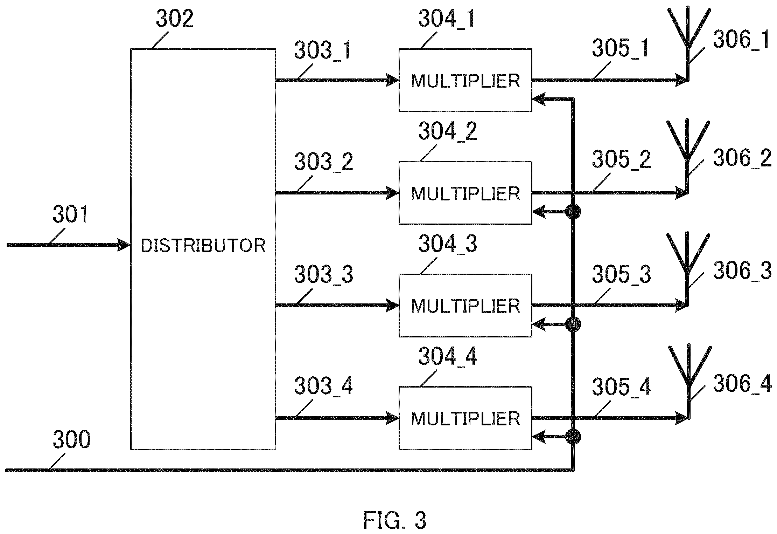

FIG. 3 illustrates an exemplary configuration of transmission panel antenna i labeled 106_i in FIGS. 1A, 1B, and 1C. Note that i is "an integer from 1 to M (both inclusive)". Distributor 302 takes transmission signal 301 as input, performs distribution, and outputs first transmission signal 303_1, second transmission signal 303_2, third transmission signal 303_3, and fourth transmission signal 303_4. Note that transmission signal 301 corresponds to "i-th transmission signal 105_i in FIGS. 1A and 1B" or "i-th modulation signal 103_i in FIG. 1C".

Multiplier 304_1 takes first transmission signal 303_1 and control signal 300 as input, multiplies first transmission signal 303_1 by a multiplication coefficient based on control signal 300, generates and outputs coefficient-multiplication-subjected first transmission signal (i.e., first transmission signal that has been subjected to the coefficient multiplication) 305_1. Then, coefficient-multiplication-subjected first transmission signal 305_1 is outputted from antenna 306_1 as a radio wave. Note that control signal 300 corresponds to control signal 100.

A specific description follows. First transmission signal 303_1 is represented by tx1(t). Note that t represents time. When the multiplication coefficient is w1, coefficient-multiplication-subjected first transmission signal 305_1 can be expressed as $tx1(t) \times w1$. Note that tx1(t) can be represented by a complex number, and thus, it may be a real number. Likewise, w1 can be represented by a complex number, and thus, it may be a real number.

Multiplier 304_2 takes second transmission signal 303_2 and control signal 300 as input, multiplies second transmission signal 303_2 by a multiplication coefficient based on control signal 300, generates and outputs coefficient-multiplication-subjected second transmission signal 305_2. Then, coefficient-multiplication-subjected second transmission signal 305_2 is outputted from antenna 306_2 as a radio wave.

A specific description follows. Second transmission signal 303_2 is represented by tx2(t). Note that t represents time. When the multiplication coefficient is w2, coefficient-multiplication-subjected second transmission signal 305_2 can be expressed as $tx2(t) \times w2$. Note that tx2(t) can be represented by a complex number, and thus, it may be a real number. Likewise, w2 can be represented by a complex number, and thus, it may be a real number.

Multiplier 304_3 takes third transmission signal 303_3 and control signal 300 as input, multiplies third transmission signal 303_3 by a multiplication coefficient based on control signal 300, generates and outputs coefficient-multiplication-subjected third transmission signal 305_3. Then, coefficient-multiplication-subjected third transmission signal 305_3 is outputted from antenna 306_3 as a radio wave.

A specific description follows. Third transmission signal 303_3 is represented by tx3(t). Note that t represents time. When the multiplication coefficient is w3, coefficient-multiplication-subjected third transmission signal 305_3 can be expressed as $tx3(t) \times w3$. Note that tx3(t) can be represented by a complex number, and thus, it may be a real number. Likewise, w3 can be represented by a complex number, and thus, it may be a real number.

Multiplier 304_4 takes fourth transmission signal 303_4 and control signal 300 as input, multiplies fourth transmission signal 303_4 by a multiplication coefficient based on control signal 300, generates and outputs coefficient-multiplication-subjected fourth transmission signal 305_4. Then, coefficient-multiplication-subjected fourth transmission signal 305_4 is outputted from antenna 306_4 as a radio wave.

A specific description follows. Fourth transmission signal 303_4 is represented by tx4(t). Note that t represents time. When the multiplication coefficient is w4, coefficient-multiplication-subjected fourth transmission signal 305_4 can be expressed as tx4(t) × w4. Note that tx4(t) can be represented by a complex number, and thus, it may be a real number. Likewise, w4 can be represented by a complex number, and thus, it may be a real number.

Note that "an absolute value of w1, an absolute value of w2, an absolute value of w3, and an absolute value of w4 may be equal to each other". This corresponds to a case where a phase change has been performed. It is needless to say that the absolute value of w1, the absolute value of w2, the absolute value of w3, and the absolute value of w4 need not be equal to each other.

The respective values of w1, w2, w3, and w4 may be switched for each frame, each slot, each minislot, each multiple-symbols, or each symbol. The switch timings of the respective values of w1, w2, w3, and w4 are not limited to the above examples.

Further, FIG. 3 illustrates an example of the transmission panel antenna composed of four antennas (and four multipliers), but the number of antennas is not limited to four and the transmission panel antenna only needs to be composed of two or more antennas.

Note that transmission panel antenna i labeled 106_i in FIGS. 1A, 1B, and 1C may perform directivity control by changing the characteristics of the antenna itself, and in this case, transmission panel antenna i labeled 106_i may be composed of one or more antennas.

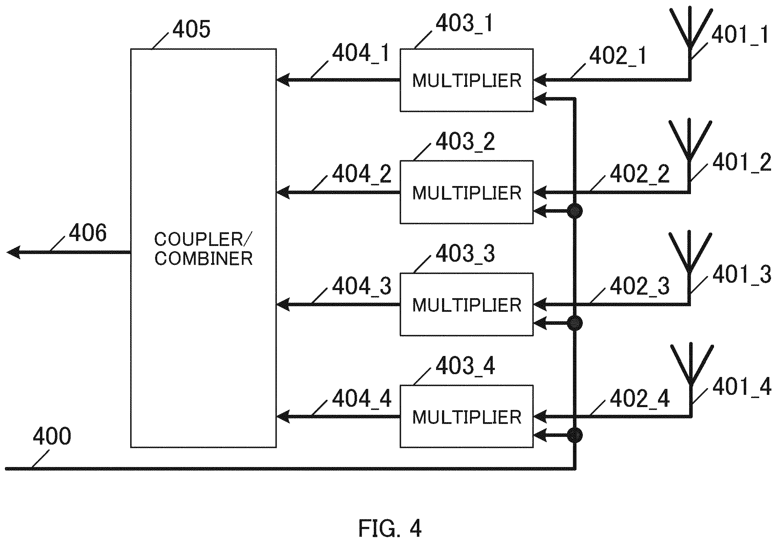

FIG. 4 illustrates an exemplary configuration of reception panel antenna i labeled 151_i in FIGS. 1A, 1B, and 1C. Note that i is "an integer from 1 to m (both inclusive)".

Multiplier 403_1 takes first received signal 402_1 received at antenna 401_1 and control signal 400 as input, multiplies first received signal 402_1 by a multiplication coefficient based on control signal 400, and outputs coefficient-multiplication-subjected first received signal 404_1.

A specific description follows. First received signal 402_1 is represented by rx1(t). Note that t represents time. When the multiplication coefficient is d1, coefficient-multiplication-subjected first received signal 404_1 can be expressed as rx1(t) × d1. Note that rx1(t) can be represented by a complex number, and thus, it may be a real number. Likewise, d1 can be represented by a complex number, and thus, it may be a real number.

Multiplier 403_2 takes second received signal 402_2 received at antenna 401_2 and control signal 400 as input, multiplies second received signal 402_2 by a multiplication coefficient based on control signal 400, and outputs coefficient-multiplication-subjected second received signal 404_2.

A specific description follows. Second received signal 402_2 is represented by rx2(t). Note that t represents time. When the multiplication coefficient is d2, coefficient-multiplication-subjected second received signal 404_2 can be expressed as rx2(t) × d2. Note that rx2(t) can be represented by a complex number, and thus, it may be a real number. Likewise, d2 can be represented by a complex number, and thus, it may be a real number.

Multiplier 403_3 takes third received signal 402_3 received at antenna 401_3 and control signal 400 as input, multiplies third received signal 402_3 by a multiplication coefficient based on control signal 400, and outputs coefficient-multiplication-subjected third received signal 404_3.

A specific description follows. Third received signal 402_3 is represented by rx3(t). Note that t represents time. When the multiplication coefficient is d3, coefficient-multiplication-subjected third received signal 404_3 can be expressed as rx3(t) × d3. Note that rx3(t) can be represented by a complex number, and thus, it may be a real number. Likewise, d3 can be represented by a complex number, and thus, it may be a real number.

Multiplier 403_4 takes fourth received signal 402_4 received at antenna 401_4 and control signal 400 as input, multiplies fourth received signal 402_4 by a multiplication coefficient based on control signal 400, and outputs coefficient-multiplication-subjected fourth received signal 404_4.

A specific description follows. Fourth received signal 402_4 is represented by rx4(t). Note that t represents time. When the multiplication coefficient is d4, coefficient-multiplication-subjected fourth received signal 404_4 can be expressed as rx4(t) × d4. Note that rx4(t) can be represented by a complex number, and thus, it may be a real number. Likewise, d4 can be represented by a complex number, and thus, it may be a real number.

Coupler/combiner 405 takes coefficient-multiplication-subjected first received signal 404_1, coefficient-multiplication-subjected second received signal 404_2, coefficient-multiplication-subjected third received signal 404_3, and coefficient-multiplication-subjected fourth received signal 404_4 as input, combines coefficient-multiplication-subjected first received signal 404_1, coefficient-multiplication-subjected second received signal 404_2, coefficient-multiplication-subjected third received signal 404_3, and coefficient-multiplication-subjected fourth received signal 404_4, and outputs modulation signal 406. Note that modulation signal 406 is expressed as rx1(t) × d1 + rx2(t) × d2 + rx3(t) × d3 + rx4(t) × d4.

Note that control signal 400 corresponds to control signal 100, and modulation signal 406 corresponds to i-th received signal 152_i.

In addition, "an absolute value of d1, an absolute value of d2, an absolute value of d3, and an absolute value of d4 may be equal to each other". This corresponds to a case where a phase change has been performed. It is needless to say that the absolute value of d1, the absolute value of d2, the absolute value of d3, and the absolute value of d4 need not be equal to each other.

The respective values of d1, d2, d3, and d4 may be switched for each frame, each slot, each mini-slot, each multiple-symbols, or each symbol. The switch timings of the respective values of d1, d2, d3, and d4 are not limited to the above examples.

Further, FIG. 4 illustrates an example of the reception panel antenna composed of four antennas (and four multipliers), but the number of antennas is not limited to four and the reception panel antenna only needs to be composed of two or more antennas.

Note that reception panel antenna i labeled 151_i in FIGS. 1A, 1B, and 1C may perform directivity control by changing the characteristics of the antenna itself, and in this case, reception panel antenna i labeled 151_i may be composed of one or more antennas.

In the present embodiment, in a case where FIGS. 1A, 1B, and 1C illustrate a base station, communication apparatus in g Node B (gNB), or terminal, for example, it supports multi-carrier transmission such as orthogonal frequency division multiplexing (OFDM). The base station, gNB, or terminal in FIGS. 1A, 1B, and 1C may also support orthogonal frequency division multiple access (OFDMA).

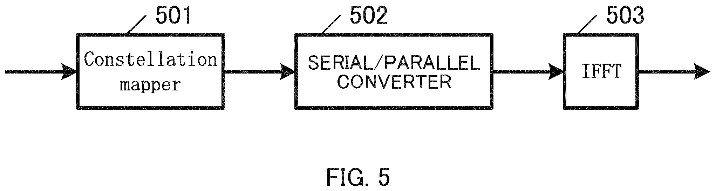

FIG. 5 illustrates an exemplary configuration of a transmission apparatus in a case of using an OFDM scheme. As illustrated in FIG. 5, the transmission apparatus is composed of, for example, constellation mapper 501, serial/parallel converter 502, and inverse fast Fourier transform (IFFT) 503.

Constellation mapper 501, for example, takes data as input, performs mapping based on the configured modulation scheme, and outputs the modulation signal.

Serial/parallel converter 502 converts serial signals into parallel signals. Note that serial/parallel converter 502 need not be present when parallel signals are already obtained.

IFFT 503 performs IFFT processing on an input signal, and outputs the modulation signal based on the OFDM scheme. Note that IFFT 503 may be an inverse Fourier transformer performing inverse Fourier transform.

The transmission apparatus in a case of using the OFDM scheme may include another processor (e.g., error correction coder, interleaver, etc.), and the configuration is not limited to that in FIG. 5.

In the present embodiment, in a case where FIGS. 1A, 1B, and 1C illustrate a base station, communication apparatus in gNB, or terminal, for example, it may support multi-carrier reception such as in the OFDM scheme or may support single-carrier reception such as in a single-carrier scheme based on discrete Fourier transform (DFT), for example. The following description is about an exemplary configuration of a reception part in a single-carrier scheme.

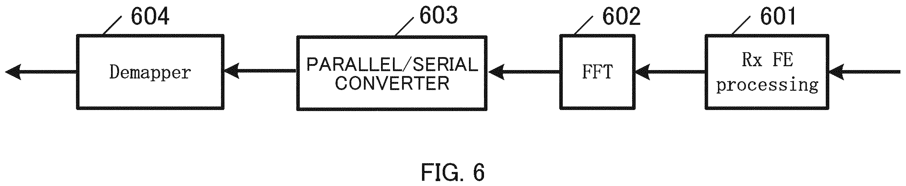

FIG. 6 illustrates an exemplary configuration of a reception apparatus in a case of using the OFDM scheme. As illustrated in FIG. 6, the reception apparatus in a case of using the OFDM scheme is composed of receiver (Rx) front end (FE) processing 601, fast Fourier transform 602, parallel/serial converter 603, and demapper 604.

Rx FE processing 601 performs processing of a reception front end.

FFT 602 performs FFT processing on the input signal.

Parallel/serial converter 603 converts parallel signals into serial signals. Note that parallel/serial converter 603 need not be present when serial signals are already obtained.

Demapper 604 performs demodulation processing based on the transmission method and modulation scheme.

Note that the reception apparatus may include another processor (e.g., deinterleaver, decoder for error correction coding, etc.), and the configuration is not limited to that in FIG. 6.

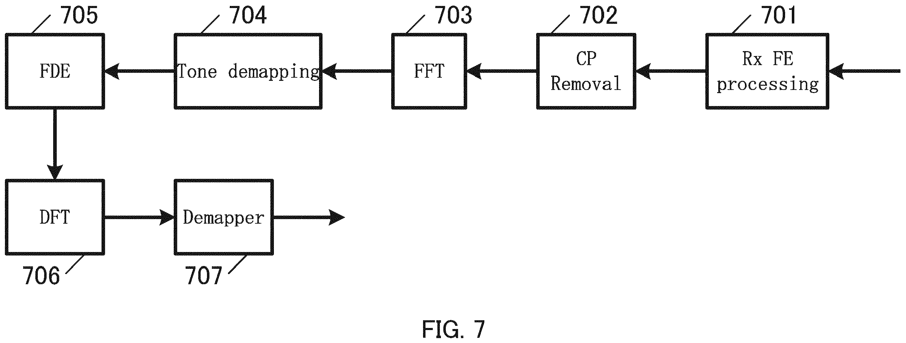

FIG. 7 illustrates an exemplary configuration of the reception apparatus in a case of using a single-carrier scheme based on DFT. As illustrated in FIG. 7, the reception apparatus is composed of receiver (Rx) FE processing 701, CP removal 702, fast Fourier transform 703, tone demapping 704, frequency domain equalization (FDE) 705, DFT 706, and demapper 707. Note that the reception apparatus may include a processor other than the above.

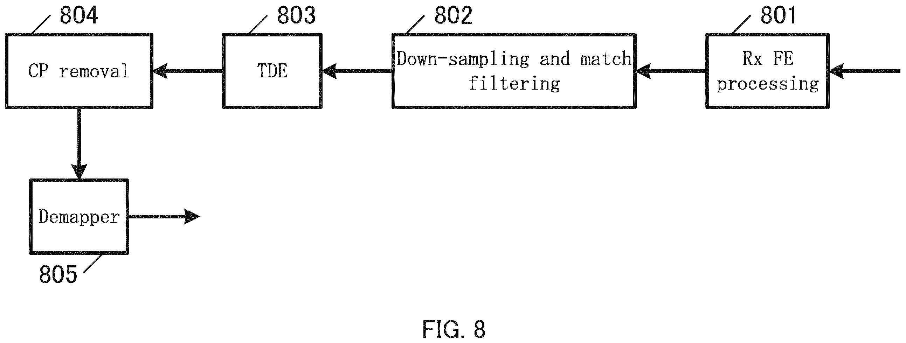

FIG. 8 illustrates an exemplary configuration of the reception apparatus in a case of using a single-carrier scheme based on time domain. As illustrated in FIG. 8, the reception apparatus is composed of receiver (Rx) FE processing 801, down-sampling and match filtering 802, time domain equalization (TDE) 803, CP removal 804, and demapper 805. Note that the reception apparatus may include a processor other than the above.

Although exemplary reception methods in single-carrier schemes and exemplary configurations of the reception apparatus have been described above, the reception method in a single-carrier scheme and the reception apparatus are not limited to these. For example, examples of the single-carrier scheme include "discrete Fourier transform (DFT)-spread orthogonal frequency division multiplexing (OFDM)" (DFT-S OFDM), "trajectory constrained DFT-spread OFDM", "constrained DFT-spread OFDM" (constrained DFT-S OFDM), "OFDM based single carrier (SC)", "single carrier (SC)-frequency division multiple access (FDMA)", "guard interval DFT-spread OFDM", a time-domain implementation single carrier scheme (e.g., single carrier (SC)-QAM), and the like.

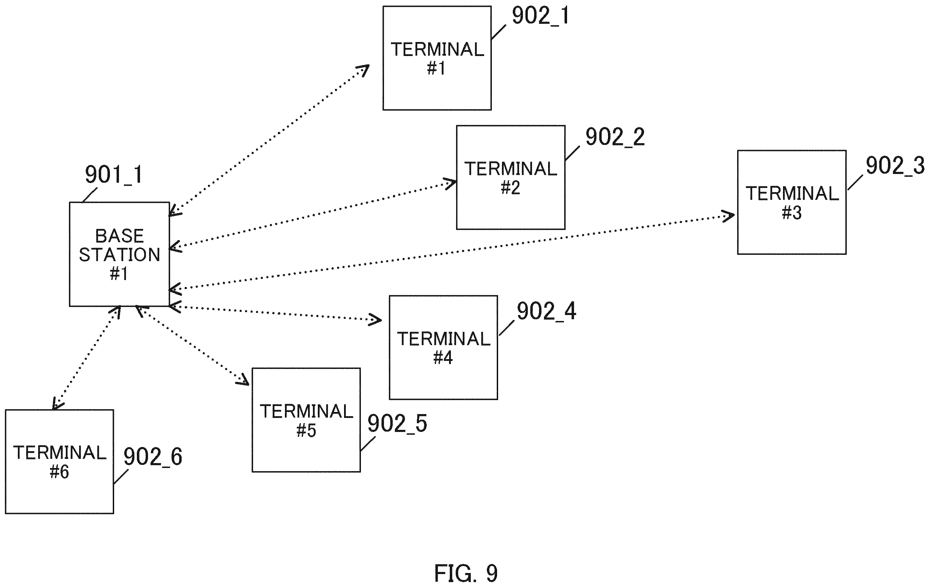

FIG. 9 illustrates an exemplary communication state in Embodiment 1. As illustrated in FIG. 9, a case to be discussed is where base station #1 labeled 901_1 communicates with terminal #1 labeled 902_1, terminal #2 labeled 902_2, terminal #3 labeled 902_3, terminal #4 labeled 902_4, terminal #5 labeled 902_5, and terminal #6 labeled 902_6. A relationship between a base station and terminals, however, is not limited to this example, and the base station may communicate with one or more terminals, for example.

Note that the following description is about an exemplary case where the base station transmits modulation signals to the terminals using the OFDMA scheme.

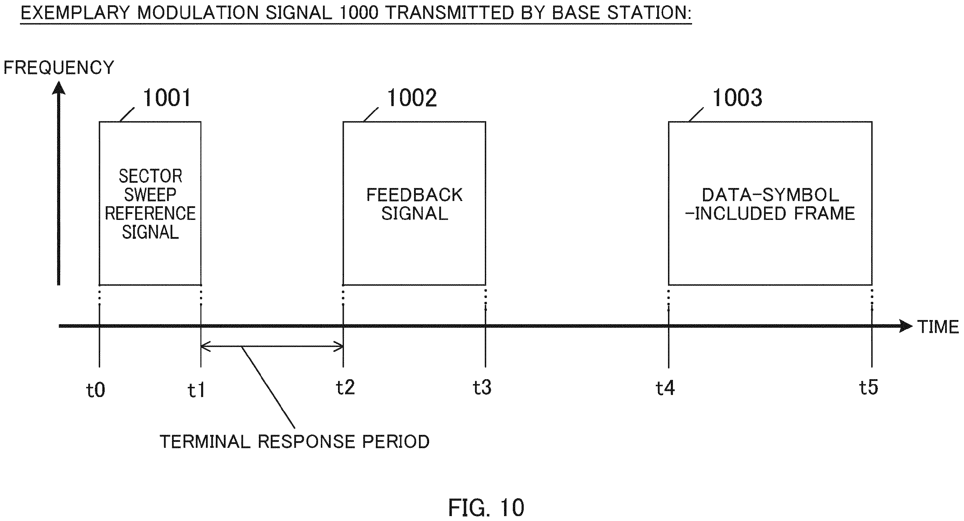

FIG. 10 illustrates an example of modulation signal 1000 transmitted by base station #1 labeled 901_1 in FIG. 9. In FIG. 10, the horizontal axis represents time and the vertical axis represents frequency. In the time period from time t0 to t1, sector sweep (sector-sweep level) reference signal 1001 is present. Note that sector sweep reference signal 1001 will be described later.

The time period from time t1 to t2 is a terminal response period. Note that the terminal response will be described later.

In the time period from time t2 to t3, feedback signal 1002 is present. Note that feedback signal 1002 will be described later.

In the time period from time t4 to t5, data-symbol-included frame 1003 is present. Note that data-symbol-included frame 1003 will be described later.

The reference signal for sector sweep is referred to as sector sweep reference signal 1001 in FIG. 10, but the name is not limited thereto and may be a reference signal, a reference symbol, a training signal, a training symbol, or the like. The signal denoted by reference sign 1002 is referred to as feedback signal 1002, but the name is not limited thereto and may be a feedback symbol, a terminal-addressed signal, a terminal-addressed symbol, a control signal, a control symbol, or the like. In addition, the frame including a data symbol is referred to as data-symbol-included frame 1003, but the name is not limited thereto and may be a slot/mini-slot/unit-included frame, or the like.

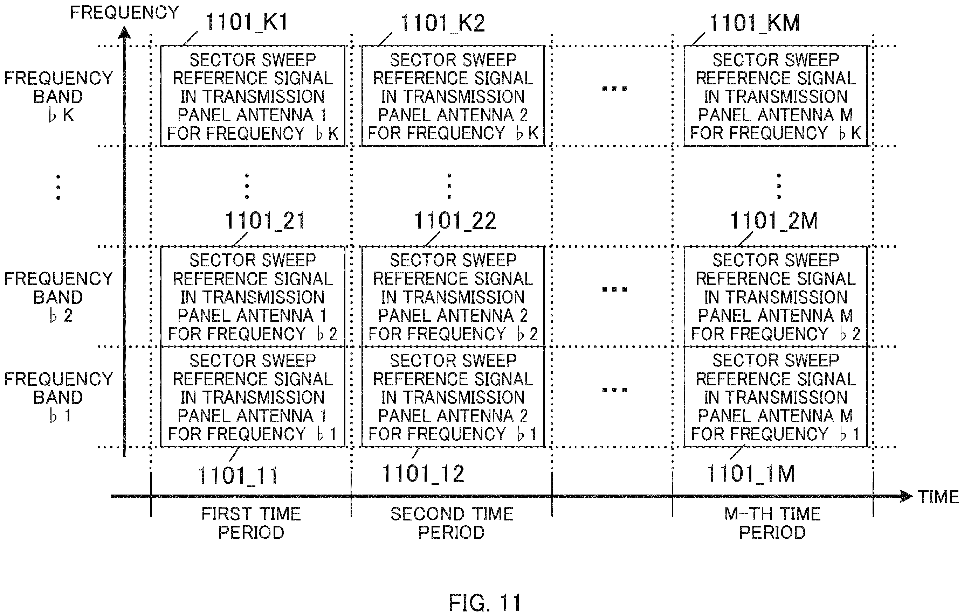

FIG. 11 illustrates examples of sector sweep reference signal 1001 in FIG. 10 transmitted by base station #1 labeled 901_1 in FIG. 9 with the configuration in FIG. 1A, 1B, or 1C, for example. Note that the horizontal axis represents time and the vertical axis represents frequency in FIG. 11. In the example of FIG. 11, the frequency is divided into frequency band $b1$, frequency band $b2$, ..., frequency band $bK$ as illustrated in FIG. 11 for base station #1 labeled 901_1 to transmit modulation signals based on OFDMA. Note that K is an integer equal to or greater than 1 or an integer equal to or greater than 2. Note that, in a case of using OFDM(A), for example, a single frequency band includes one or more (sub)carriers or includes two or more (sub)carriers. This may apply to the other drawings and embodiments.

In frequency band $b1$, for example, sector sweep reference signal 1101_11 in transmission panel antenna 1 for frequency $b1$ is present in the first time period, sector sweep reference signal 1101_12 in transmission panel antenna 2 for frequency $b1$ is present in the second time period, ..., sector sweep reference signal 1101_1M in transmission panel antenna M for frequency $b1$ is present in the M-th time period.

That is, in frequency band $bi$, sector sweep reference signal 1101_i1 in transmission panel antenna 1 for frequency $bi$ is present in the first time period, sector sweep reference signal 1101_i2 in transmission panel antenna 2 for frequency $bi$ is present in the second time period, ..., sector sweep reference signal 1101_iM in transmission panel antenna M for frequency $bi$ is present in the M-th time period. Note that i is an integer from 1 to K (both inclusive).

Note that sector sweep reference signal 1101_ij in transmission panel antenna j for frequency $bi$ is transmitted from transmission panel antenna j labeled 106_j of base station #1 labeled 901_1 with the configuration in FIG. 1A, 1B, or 1C. In this case, j is an integer from 1 to M (both inclusive).

One feature is that "sector sweep reference signals are transmitted from the same transmission panel antenna in the i-th time period regardless of the frequency band in FIG. 11". At this time, the same beamforming parameter is used in a first period of time regardless of the frequency band. Note that the beamforming will be described later.

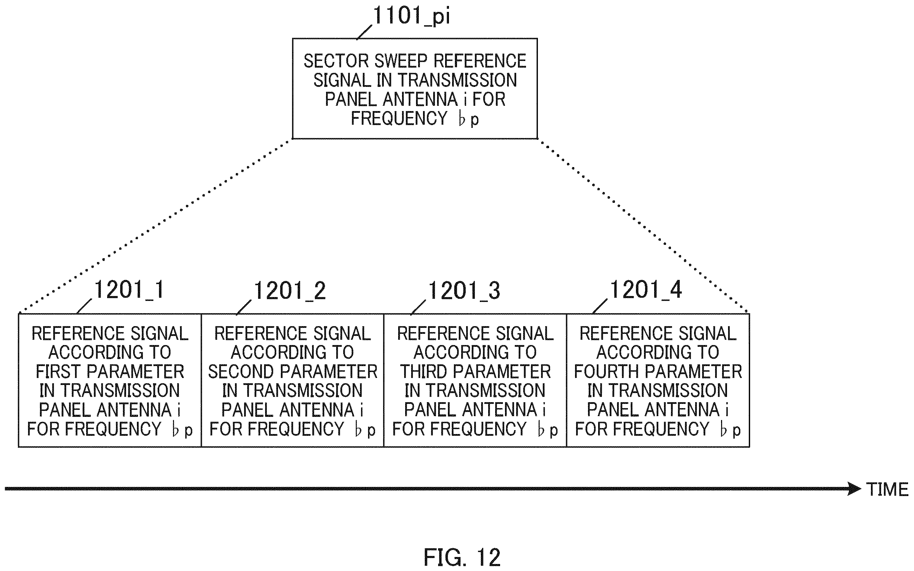

FIG. 12 illustrates an exemplary configuration of "sector sweep reference signal 1101_pi in transmission panel antenna i for frequency $bp$" in FIG. 11. Note that the horizontal axis represents time in FIG. 12. Note that p is an integer from 1 to K (both inclusive) and i is an integer from 1 to M (both inclusive).

For example, base station #1 labeled 901_1 with the configuration in FIG. 1A, 1B, or 1C includes the configuration in FIG. 3 as transmission panel antenna i labeled 106_i.

A description will be given of "reference signal 1201_1 according to first parameter in transmission panel antenna i for frequency $bp$".

When base station #1 labeled 901_1 transmits "reference signal 1201_1 according to first parameter in transmission panel antenna i for frequency $bp$" illustrated in FIG. 12, base station #1 labeled 901_1 sets the multiplication coefficient in multiplier 304_1 in transmission panel antenna i labeled 106_i as w1(i, 1). When first transmission signal 303_1 of "reference signal 1201_1 according to first parameter in transmission panel antenna i for frequency $bp$" is tx1ref1(t), multiplier 304_1 obtains tx1ref1(t) × w1(i, 1). Then, base station #1 labeled 901_1 transmits tx1ref1(t) × w1(i, 1) from antenna 306_1 in FIG. 3. Note that t represents time.

When base station #1 labeled 901_1 transmits "reference signal 1201_1 according to first parameter in transmission panel antenna i for frequency $bp$" illustrated

in FIG. 12, base station #1 labeled 901_1 sets the multiplication coefficient in multiplier 304_2 in transmission panel antenna i labeled 106_i as w2(i, 1). When second transmission signal 303_2 of "reference signal 1201_1 according to first parameter in transmission panel antenna i for frequency ♭p" is tx2ref1(t), multiplier 304_2 obtains tx2ref1(t) × w2(i, 1). Then, base station #1 labeled 901_1 transmits tx2ref1(t) × w2(i, 1) from antenna 306_2 in FIG. 3.

When base station #1 labeled 901_1 transmits "reference signal 1201_1 according to first parameter in transmission panel antenna i for frequency ♭p" illustrated in FIG. 12, base station #1 labeled 901_1 sets the multiplication coefficient in multiplier 304_3 in transmission panel antenna i labeled 106_i as w3(i, 1). When third transmission signal 303_3 of "reference signal 1201_1 according to first parameter in transmission panel antenna i for frequency ♭p" is tx3ref1(t), multiplier 304_3 obtains tx3ref1(t) × w3(i, 1). Then, base station #1 labeled 901_1 transmits tx3ref1(t) × w3(i, 1) from antenna 306_3 in FIG. 3.

When base station #1 labeled 901_1 transmits "reference signal 1201_1 according to first parameter in transmission panel antenna i for frequency ♭p" illustrated in FIG. 12, base station #1 labeled 901_1 sets the multiplication coefficient in multiplier 304_4 in transmission panel antenna i labeled 106_i as w4(i, 1). When fourth transmission signal 303_4 of "reference signal 1201_1 according to first parameter in transmission panel antenna i for frequency ♭p" is tx4ref1(t), multiplier 304_4 obtains tx4ref1(t) × w4(i, 1). Then, base station #1 labeled 901_1 transmits tx4ref1(t) × w4(i, 1) from antenna 306_4 in FIG. 3.

A description will be given of "reference signal 1201_j according to j-th parameter in transmission panel antenna i for frequency bp".

When base station #1 labeled 901_1 transmits "reference signal 1201_j according to j-th parameter in transmission panel antenna i for frequency ♭p" illustrated in FIG. 12, base station #1 labeled 901_1 sets the multiplication coefficient in multiplier 304_1 in transmission panel antenna i labeled 106_i as w1(i, j). When first transmission signal 303_1 of "reference signal 1201_j according to j-th parameter in transmission panel antenna i for frequency ♭p" is tx1refj(t), multiplier 304_1 obtains tx1refj(t) × w1(i, j). Then, base station #1 labeled 901_1 transmits tx1refj(t) × w1(i,j) from antenna 306_1 in FIG. 3. Note that t represents time.

When base station #1 labeled 901_1 transmits "reference signal 1201_j according to j-th parameter in transmission panel antenna i for frequency ♭p" illustrated in FIG. 12, base station #1 labeled 901_1 sets the multiplication coefficient in multiplier 304_2 in transmission panel antenna i labeled 106_i as w2(i, j). When second transmission signal 303_2 of "reference signal 1201_j according to j-th parameter in transmission panel antenna i for frequency ♭p" is tx2refj(t), multiplier 304_2 obtains tx2refj(t) × w2(i, j). Then, base station #1 labeled 901_1 transmits tx2refj(t) × w2(i, j) from antenna 306_2 in FIG. 3.

When base station #1 labeled 901_1 transmits "reference signal 1201_j according to j-th parameter in transmission panel antenna i for frequency ♭p" illustrated in FIG. 12, base station #1 labeled 901_1 sets the multiplication coefficient in multiplier 304_3 in transmission panel antenna i labeled 106_i as w3(i, j). When third transmission signal 303_3 of "reference signal 1201_j according to j-th parameter in transmission panel antenna i for frequency ♭p" is tx3refj(t), multiplier 304_3 obtains tx3refj(t) × w3(i, j). Then, base station #1 labeled 901_1 transmits tx3refj(t) × w3(i, j) from antenna 306_3 in FIG. 3.

When base station #1 labeled 901_1 transmits "reference signal 1201_j according to j-th parameter in transmission panel antenna i for frequency ♭p" illustrated in FIG. 12, base station #1 labeled 901_1 sets the multiplication coefficient in multiplier 304_4 in transmission panel antenna i labeled 106_i as w4(i, j). When fourth transmission signal 303_4 of "reference signal 1201_j according to j-th parameter in transmission panel antenna i for frequency ♭p" is tx4refj(t), multiplier 304_4 obtains tx4refj(t) × w4(i, j). Then, base station #1 labeled 901_1 transmits tx4refj(t) × w4(i, j) from antenna 306_4 in FIG. 3.

Note that j is an integer from 1 to 4 (both inclusive) in the case of FIG. 12. The number Z of parameter changes is four in FIG. 12, but the number Z of parameter changes is not limited to four. The same can be implemented as long as Z is an integer equal to or greater than 1 or an integer equal to or greater than 2. At this time, j is an integer from 1 to Z (both inclusive).

As illustrated in FIGS. 11 and 12, when base station #1 labeled 901_1 transmits "sector sweep reference signal 1101_i in transmission panel antenna i for frequency ♭p", "reference signal 1201_j according to j-th parameter in transmission panel antenna i for frequency ♭p" includes, for example, the following information:

· Identification number (ID) of the transmission panel antenna, which corresponds to i here, for example;

· Identification number (ID) of the parameter used for beamforming (directivity control), which corresponds to j here, for example; and

· The number of time divisions in which sector sweep reference signals can be transmitted when the terminals transmit the sector sweep reference signals, which will be described later.

Note that "reference signal 1201_j according to j-th parameter in transmission panel antenna i for frequency ƀp" may include other information. Examples of the information will be described in the other embodiments, for example, in Embodiment 6 or later.

The following information may also be included in "reference signal 1201_j according to j-th parameter in transmission panel antenna i for frequency ƀp";

· Information on the frequency band and/or frequency ƀp (information of the number of frequency divisions may also be included), which will be described later.

Transmission of the "identification number (ID) of the transmission panel antenna for frequency ƀp" and the "identification number (ID) of the parameter used for beamforming (directivity control)" by base station #1 labeled 901_1 allows the terminals to recognize the "identification number (ID) of the transmission panel antenna" and the "identification number (ID) of the parameter used for beamforming (directivity control)" that have allowed successful reception; accordingly, base station #1 labeled 901_1 and the terminals can perform appropriate control. This produces the effect of enhancing data reception quality.

Note that "the number of time divisions in which sector sweep reference signals can be transmitted when the terminals transmit the sector sweep reference signals" may be changeable according to the frame and/or time, for example. This produces the effect of enhancing data transmission efficiency of a communication system.

Further, transmission of the "information on the frequency band and/or frequency ƀp" by base station #1 labeled 901_1 allows the terminals to obtain the information and transmit "information relative to a frequency that the terminals desire the base station to use for transmission". This allows the base station to perform appropriate control and produces the effect of enhancing data reception quality.

Next, a description will be given of an operation in the time period from time t1 to t2 in FIG. 10, which is the terminal response period. Note that, in Embodiment 1, the description is based on a case where the terminals use OFDM and frequency (bands) used by the base station and frequency (bands) used by the terminals partially overlap each other.

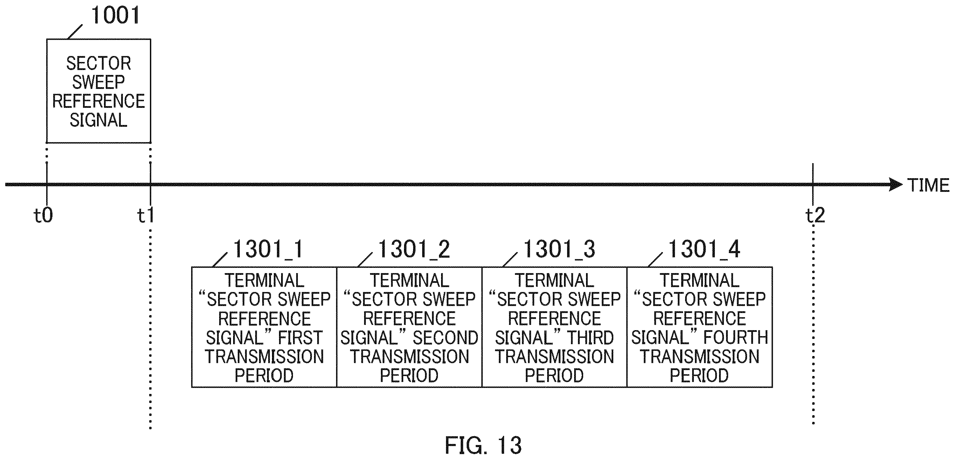

FIG. 13 illustrates an exemplary operation in the time period from time t1 to t2, which is the terminal response period. Note that the horizontal axis represents time in FIG. 13. Terminals such as terminal #1 labeled 902_1, terminal #2 labeled 902_2, terminal #3 labeled 902_3, terminal #4 labeled 902_4, terminal #5 labeled 902_5, and terminal #6 labeled 902_6 in FIG. 9 transmit sector sweep reference signals in the time period from time t1 to t2, which is the terminal response period.

As illustrated in FIGS. 10 and 13, for example, base station #1 labeled 901_1 transmits sector sweep reference signals in the time period from time t0 to t1. After that, the terminal response period, which is the time period from time t1 to t2, includes terminal "sector sweep reference signal" first transmission period (i.e., first transmission period for terminals to transmit sector sweep reference signals) 1301_1, terminal "sector sweep reference signal" second transmission period 1301_2, terminal "sector sweep reference signal" third transmission period 1301_3, and terminal "sector sweep reference signal" fourth transmission period 1301_4, as illustrated in FIG. 13.

Thus, in the case of FIG. 13, "the number of time divisions in which sector sweep reference signals can be transmitted when the terminals transmit the sector sweep reference signals" is set to four by base station #1 labeled 901_1.

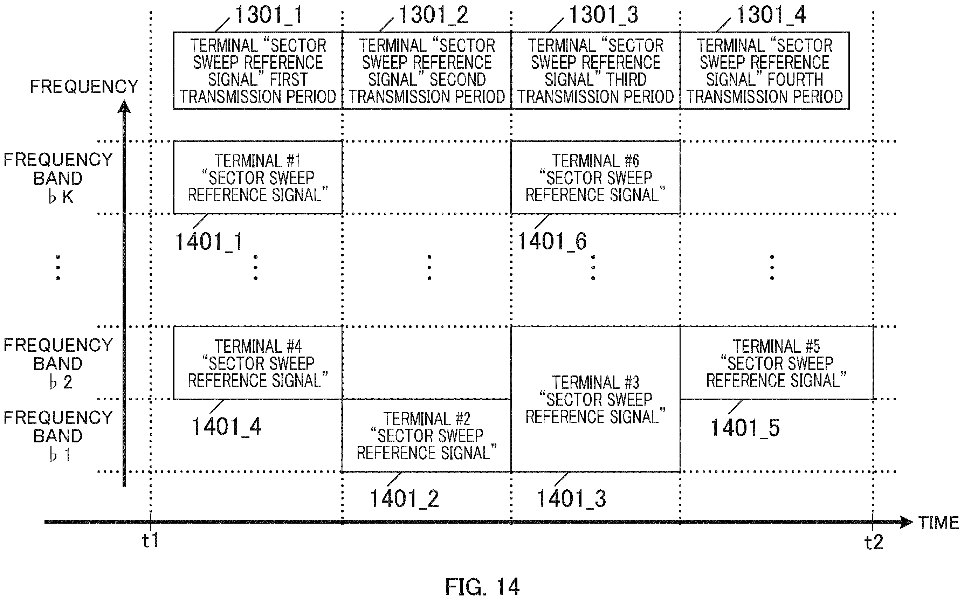

FIG. 14 illustrates exemplary occupation by the terminals in terminal "sector sweep reference signal" first transmission period 1301_1, terminal "sector sweep reference signal" second transmission period 1301_2, terminal "sector sweep reference signal" third transmission period 1301_3, and terminal "sector sweep reference signal" fourth transmission period 1301_4 illustrated in FIG. 13. Note that the horizontal axis represents time and the vertical axis represents frequency in FIG. 14.

Terminal #1 labeled 902_1 in FIG. 9 receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. In addition, the "information on the frequency band and/or frequency ƀp" included in sector sweep reference signal 1001 may be used for this estimation.

Terminal #1 labeled 902_1 estimates, for example, "transmission panel antenna a1 and parameter b1" as the "transmission panel antenna and parameter" with high reception quality. Terminal #1 labeled 902_1 also estimates frequency band ƀK as the "frequency domain" with high reception quality.

In addition, while estimating the "transmission panel antenna and parameter" with high reception quality, terminal #1 labeled 902_1 simultaneously obtains information of "the number of time divisions in which sector sweep reference signals can be transmitted when the terminals transmit the sector sweep reference signals". In the case of FIG. 14, terminal #1 labeled 902_1 obtains information indicating that "the number of time divisions in which sector sweep reference signals can be transmitted when the terminals transmit the sector sweep reference signals" is four.

In this case, terminal #1 labeled 902_1 obtains, for example, any one of the values "0", "1", "2", and "3" using a random number. For example, terminal #1 labeled 902_1 obtains "0" using a random number. In this case, since "0" + 1 = 1, terminal #1 labeled 902_1 transmits terminal #1 "sector sweep reference signal" 1401_1 using "terminal "sector sweep reference signal" first (= "0" + 1) transmission period 1301_1" in FIG. 14. Here, the transmission period for the sector sweep reference signal is configured using a random number, but the transmission period for the sector sweep reference signal may be configured using, instead of a random number, a random number of an integer or a natural number, an irregular integer or natural number, a regular integer or natural number, an integer or a natural number held uniquely by the terminal, for example. Hence, the configuration of the transmission period for the sector sweep reference signal is not limited to the above example, and the transmission period for the sector sweep reference signal is configured for each terminal, for example. This is also applicable to the following similar descriptions.

Note that terminal #1 "sector sweep reference signal" 1401_1 includes information of the "transmission panel antenna and parameter" with high reception quality obtained by terminal #1 labeled 902_1, that is, information of "transmission panel antenna a1 and parameter b1". Terminal #1 "sector sweep reference signal" 1401_1 may also include information of the "frequency domain", for example, information of "frequency band $\flat$K". This will be described later.

Likewise, terminal #2 labeled 902_2 in FIG. 9 receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. In addition, the "information on the frequency band and/or frequency $\flat$p"

included in sector sweep reference signal 1001 may be used for this estimation.

Terminal #2 labeled 902_2 estimates, for example, "transmission panel antenna a2 and parameter b2" as the "transmission panel antenna and parameter" with high reception quality. Terminal #2 labeled 902_2 also estimates frequency band $\flat$1 as the "frequency domain" with high reception quality.

In addition, while estimating the "transmission panel antenna and parameter" with high reception quality, terminal #2 labeled 902_2 simultaneously obtains information of "the number of time divisions in which sector sweep reference signals can be transmitted when the terminals transmit the sector sweep reference signals". In the case of FIG. 14, terminal #2 labeled 902_2 obtains information indicating that "the number of time divisions in which sector sweep reference signals can be transmitted when the terminals transmit the sector sweep reference signals" is four.

In this case, terminal #2 labeled 902_2 obtains, for example, any one of the values "0", "1", "2", and "3" using a random number. For example, terminal #2 labeled 902_2 obtains "1" using a random number. In this case, since "1" + 1 = 2, terminal #2 labeled 902_2 transmits terminal #2 "sector sweep reference signal" 1401_2 using "terminal "sector sweep reference signal" second (= "1" + 1) transmission period 1301_2" in FIG. 14.

Note that terminal #2 "sector sweep reference signal 1401_2" includes information of the "transmission panel antenna and parameter" with high reception quality obtained by terminal #2 labeled 902_2, that is, information of "transmission panel antenna a2 and parameter b2". Terminal #2 "sector sweep reference signal" 1401_2 may also include information of the "frequency domain", for example, information of "frequency band $\flat$1". This will be described later.

Thus, terminal #i labeled 902_i receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. Note that i is an integer equal to or greater than 1, for example. In addition, the "information on the frequency band and/or frequency $\flat$p" included in sector sweep reference signal 1001 may be used for this estimation.

Terminal #i labeled 902_i estimates, for example, "transmission panel antenna ai and parameter bi" as the "transmission panel antenna and parameter" with high reception quality. Terminal #i labeled 902_i also estimates frequency band bzi as the "frequency domain" with high reception quality.

In addition, while estimating the "transmission panel antenna and parameter" with high reception quality, terminal #i labeled 902_i simultaneously obtains information of "the number of time divisions in which sector sweep reference signals can be transmitted when the terminals transmit the sector sweep reference signals". In the case of FIG. 14, terminal #i labeled 902_i obtains information indicating that "the number of time divisions in which sector sweep reference signals can be transmitted when the terminals transmit the sector sweep reference signals" is four.

In this case, terminal #i labeled 902_i obtains, for example, any one of the values "0", "1", "2", and "3" using a random number. For example, terminal #i labeled 902_i obtains "yi" using a random number. Note that yi is any one of the values "0", "1", "2", and "3". In this case, terminal #i labeled 902_i transmits terminal #i "sector sweep reference signal" 1401_i using terminal "sector sweep reference signal" ("yi" + 1)-th transmission period 1301_("yi" + 1) in FIG. 14.

Note that terminal #i "sector sweep reference signal" 1401_i includes information of the "transmission panel antenna and parameter" with high reception quality obtained by terminal #i labeled 902_i, that is, information of "transmission panel antenna ai and parameter bi". Terminal #i "sector sweep reference signal" 1401_i may also include information of the "frequency domain", for example, information of "frequency band bp". This will be described later.

Note that terminal #i "sector sweep reference signal" 1401_i may be assigned to a plurality of frequency bands as illustrated in FIG. 14. For example, terminal #3 "sector sweep reference signal" 1401_3 is assigned to frequency band b1 and frequency band b2. As another example, terminal #i "sector sweep reference signal" 1401_i may be assigned to frequency bands discretely. For example, terminal #i "sector sweep reference signal" 1401_i may be assigned to frequency band b1 and frequency band bK. (As a result, terminal #i "sector sweep reference signal" 1401_i is assigned to one or more frequency bands.)

In the manner described above, a collision of the sector sweep reference signals transmitted by the respective terminals can be reduced. This produces the effect that the base station can receive more sector sweep reference signals and can communicate with more terminals.

A description will be given of a configuration of terminal #i "sector sweep reference signal" 1401_i transmitted by terminal #i labeled 902_i described with reference to FIG. 14. To simplify the description, terminal #i labeled 902_i has the configuration in FIG. 1A, 1B, or 1C, and terminal #i labeled 902_i with the configuration in FIG. 1A, 1B, or 1C includes the configuration in FIG. 3 as transmission panel antenna xi labeled 106_xi. Note that the configuration of terminal #i labeled 902_i is not limited to the configuration in FIG. 1A, 1B, or 1C, and the configuration of transmission panel antenna xi labeled 106_xi included in terminal #i labeled 902_i with the configuration in FIG. 1A, 1B, or 1C is not limited to the configuration in FIG. 3.

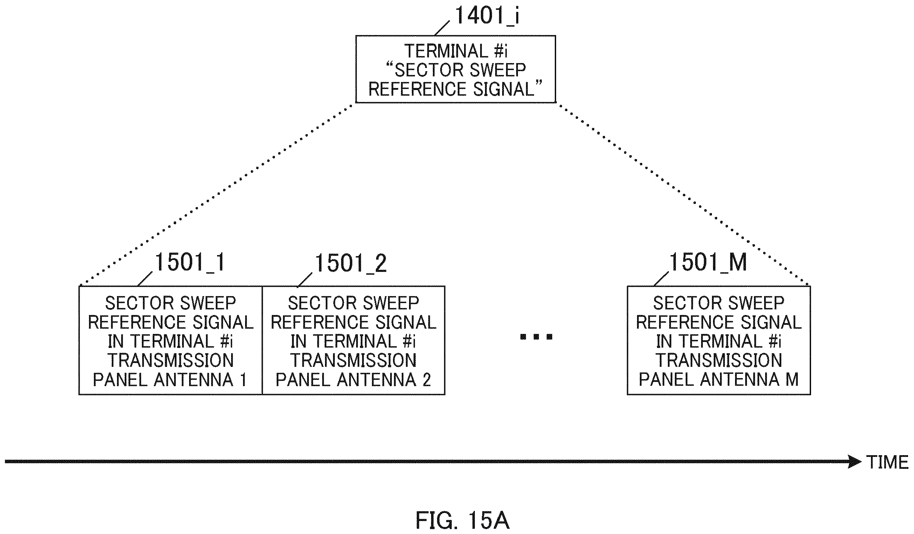

Terminal #i labeled 902_i transmits terminal #i "sector sweep reference signal" 1401_i as illustrated in FIG. 14. FIG. 15A illustrates an exemplary configuration of terminal #i "sector sweep reference signal" 1401_i. Note that the horizontal axis represents time in FIG. 15A.

As illustrated in FIG. 15A, terminal #i "sector sweep reference signal" 1401_i of terminal #i labeled 902_i is composed of "sector sweep reference signal 1501_1 in terminal #i transmission panel antenna 1, sector sweep reference signal 1501_2 in terminal #i transmission panel antenna 2, ..., sector sweep reference signal 1501_M in terminal #i transmission panel antenna M".

For example, terminal #i labeled 902_i with the configuration in FIG. 1A, 1B, or 1C transmits "sector sweep reference signal 1501_1 in terminal #i transmission panel antenna 1" using transmission panel antenna 1 labeled 106_1.

That is, terminal #i labeled 902_i with the configuration in FIG. 1A, 1B, or 1C transmits "sector sweep reference signal 1501_k in terminal #i transmission panel antenna k" using transmission panel antenna k labeled 106_k. Note that k is an integer from 1 to M (both inclusive).

Note that the number of transmission panel antennas included in terminal #i labeled 902_i is M in FIG. 15A, but the number of transmission panel antennas is not limited to this and may be N, where N is an integer equal to or greater than 1.

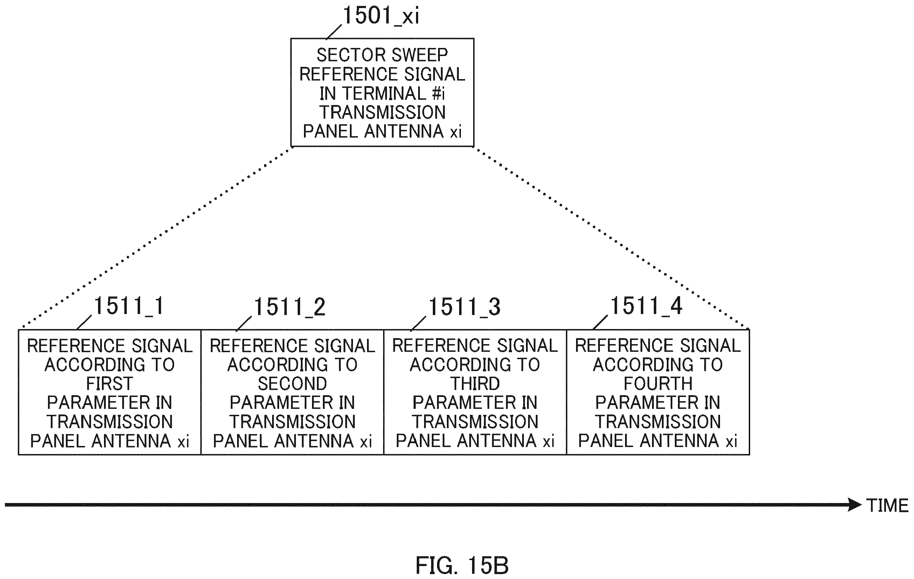

FIG. 15B illustrates an exemplary configuration of "sector sweep reference signal 1501_xi in terminal #i transmission panel antenna xi" in FIG. 15A. Note that the horizontal axis represents time in FIG. 15.

As illustrated in FIG. 15B, "sector sweep reference signal 1501_xi in terminal #i transmission panel antenna xi" is composed of, for example, "reference signal 1511_1 according to first parameter in transmission panel antenna xi", "reference signal 1511_2 according to second parameter in transmission panel antenna xi", "reference signal 1511_3 according to third parameter in transmission panel antenna xi", and "reference signal 1511_4 according to fourth parameter in transmission panel antenna xi".

For example, terminal #i labeled 902_i with the configuration in FIG. 1A, 1B, or 1C includes the configuration in FIG. 3 as transmission panel antenna xi labeled 106_xi.

A description will be given of "reference signal 1511_1 according to first parameter in transmission panel antenna xi".

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_1 in transmission panel antenna xi labeled 106_xi as w1(xi, 1). When first transmission signal 303_1 of "reference signal 1511_1 according to first parameter in transmission panel antenna xi" is tx1ref1(t), multiplier 304_1 obtains tx1ref1(t) × w1(xi, 1). Then, terminal #i labeled 902_i transmits tx1ref1(t) × w1(xi, 1) from antenna 306_1 in FIG. 3. Note that t represents time.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_2 in transmission panel antenna xi labeled 106_xi as w2(xi, 1). When second transmission signal 303_2 of "reference signal 1511_1 according to first parameter in transmission panel antenna xi" is tx2ref1(t), multiplier 304_2 obtains tx2ref1(t) × w2(xi, 1). Then, terminal #i labeled 902_i transmits tx2ref1(t) × w2(xi, 1) from antenna 306_2 in FIG. 3.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_3 in transmission panel antenna xi labeled 106_xi as w3(xi, 1). When third transmission signal 303_3 of "reference signal 1511_1 according to first parameter in transmission panel antenna xi" is tx3ref1(t), multiplier 304_3 obtains tx3ref1(t) × w3(xi, 1). Then, terminal #i labeled 902_i transmits tx3ref1(t) × w3(xi, 1) from antenna 306_3 in FIG. 3.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_4 in transmission panel antenna xi labeled 106_xi as w4(xi, 1). When fourth transmission signal 303_4 of "reference signal 1511_1 according to first parameter in transmission panel antenna xi" is tx4ref1(t), multiplier 304_4 obtains tx4ref1(t) × w4(xi, 1). Then, terminal #i labeled 902_i transmits tx4ref1(t) × w4(xi, 1) from antenna 306_4 in FIG. 3.

A description will be given of "reference signal 1511_j according to j-th parameter in transmission panel antenna xi".

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_1 in transmission panel antenna xi labeled 106_xi as w1(xi, j). When first transmission signal 303_1 of "reference signal 1511_j according to j-th parameter in transmission panel antenna xi" is tx1refj(t), multiplier 304_1 obtains tx1refj(t) × w1(xi, j). Then, terminal #i labeled 902_i transmits tx1refj(t) × w1(xi, j) from antenna 306_1 in FIG. 3. Note that t represents time.

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_2 in transmission panel antenna xi labeled 106_xi as w2(xi, j). When second transmission signal 303_2 of "reference signal 1511_j according to j-th parameter in transmission panel antenna xi" is tx2refj(t), multiplier 304_2 obtains tx2refj(t) × w2(xi, j). Then, terminal #i labeled 902_i transmits tx2refj(t) × w2(xi, j) from antenna 306_2 in FIG. 3.

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_3 in transmission panel antenna xi labeled 106_xi as w3(xi, j). When third transmission signal 303_3 of "reference signal 1511_j according to j-th parameter in transmission panel antenna xi" is tx3refj(t), multiplier 304_3 obtains tx3refj(t) × w3(xi, j). Then, terminal #i labeled 902_i transmits tx3refj(t) × w3(xi, j) from antenna 306_3 in FIG. 3.

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_4 in transmission panel antenna xi labeled 106_xi as w4(xi, j). When fourth transmission signal 303_4 of "reference signal 1511_j according to j-th parameter in transmission panel antenna xi" is tx4refj(t), multiplier 304_4 obtains tx4refj(t) × w4(xi, j). Then, terminal #i labeled 902_i transmits tx4refj(t) × w4(xi, j) from antenna 306_4 in FIG. 3.

Note that j is an integer from 1 to 4 (both inclusive) in the case of FIG. 15B. The number Z of parameter changes is four in FIG. 15B, but the number Z of parameter changes is not limited to four. The same can be implemented as long as Z is an integer equal to or greater than 1 or an integer equal to or greater than 2. At this time, j is an integer from 1 to Z (both inclusive).

As illustrated in FIGS. 14, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information:

· Information of the "transmission panel antenna and parameter" of base station #1 labeled 901_1 with high reception quality, as described above.

Thus, terminal #i labeled 902_i transmits the "information of the "transmission panel antenna and parameter" of base station #1 labeled 901_1 with high reception quality" in "sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A.

Note that "reference signal 1511j according to j-th parameter in transmission panel antenna xi" may include other information.

In addition, terminal #i labeled 902_i transmits the "information of the "transmission panel antenna and parameter" of base station #1 labeled 901_1 with high reception quality" in "reference signal 1511_1 according to first parameter in transmission panel antenna xi", "reference signal 1511_2 according to second parameter in transmission panel antenna xi", "reference signal 1511_3 according to third parameter in transmission panel antenna xi", and "reference signal 1511_4 according to fourth parameter in transmission panel antenna xi" in FIG. 15B in ""sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A".

In this case, base station #1 labeled 901_1 is more likely to receive, even with an omnidirectional antenna for example, any of ""sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A" transmitted by terminal #i labeled 902_i. This is because terminal #i labeled 902_i performs transmit beamforming (directivity control). This produces the effect that base station #1 labeled 901_1 is more likely to receive the "information of the "transmission panel antenna and parameter" of base station #1 labeled 901_1 with high reception quality" transmitted by terminal #i labeled 902_i. Accordingly, base station #1 labeled 901_1 can transmit a modulation signal to terminal #i labeled 902_i based on the "information of the "transmission panel antenna and parameter" of base station #1 labeled 901_1 with high reception quality", and terminal #i labeled 902_i can receive the modulation signal with high reception quality.

In a case where a plurality of terminals transmit the sector sweep reference signals as in FIG. 14, base station #1 labeled 901_1 can obtain the "information of the "transmission panel antenna and parameter" of base station #1 labeled 901_1 with high reception quality" from the plurality of terminals. This produces the effect that base station #1 labeled 901_1 can transmit modulation signals to the plurality of terminals based on the "information of the "transmission panel antenna and parameter" of base station #1 labeled 901_1 with high reception quality" from the plurality of terminals, and that the plurality of terminals can receive the modulation signals with high reception quality.

As illustrated in FIGS. 14, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information:

· Identification number (ID) of the transmission panel antenna, which corresponds to xi here, for example; and

· Identification number (ID) of the parameter used for beamforming (directivity control), which corresponds to j here, for example.

Transmission of the "identification number (ID) of the transmission panel antenna" and the "identification number (ID) of the parameter used for beamforming (directivity control)" by terminal #i labeled 902_i allows base station #1 labeled 901_1 to recognize the "identification number (ID) of the transmission panel antenna" and the "identification number (ID) of the parameter used for beamforming (directivity control)" that have allowed successful reception; accordingly, terminal #i labeled 902_i and base station #1 labeled 901_1 can perform appropriate control. This produces the effect of enhancing data reception quality.

Note that "reference signal 1511j according to j-th parameter in transmission panel antenna xi" may include other information. Examples of the information will be described in the other embodiments, for example, in Embodiment 6 or later.

Further, as illustrated in FIGS. 14, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information:

· "Information on the frequency band and/or frequency ♭p" that has been used for transmission by terminal #i labeled 902_i or that terminal #i labeled 902_i desires base station #1 labeled 901_1 to use.

Transmission of the "information on the frequency band and/or frequency ♭p" by terminal #i labeled 902_i allows base station #1 labeled 901_1 to recognize the "information on the frequency band and/or frequency ♭p"; accordingly, terminal #i labeled 902_i and base station #1 labeled 901_1 can perform appropriate control. This produces the effect of enhancing data reception quality.

In a case where base station #1 labeled 901_1 and terminal #i labeled 902_i perform communication using the same frequency band, however, they can recognize the "information on the frequency band and/or frequency ♭p" by detecting modulation signals transmitted from each other without the transmission of the "information on the frequency band and/or frequency ♭p".

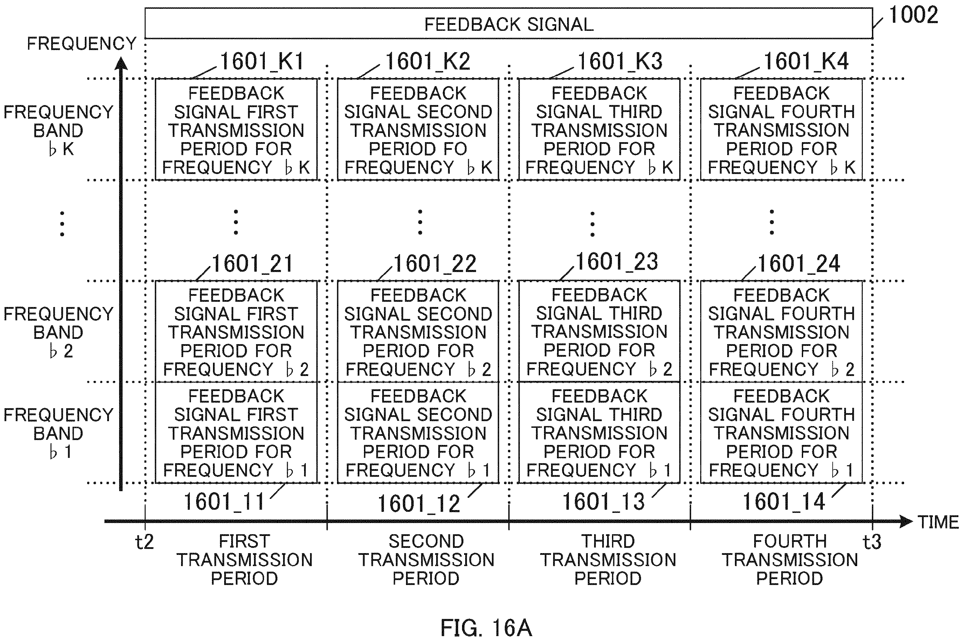

FIG. 16A illustrates an exemplary configuration of feedback signal 1002 that is present in the time period from t2 to t3 in FIG. 10 and transmitted by base station #1 labeled 901_1. Note that the horizontal axis represents time and the vertical axis represents frequency in FIG. 16A. In this example, since "the number of time divisions in which sector sweep reference signals can be transmitted when the terminals transmit the sector sweep reference signals" is four, there are a first transmission period, a second transmission period, a third transmission period, and a fourth transmission period for feedback signal 1002 as illustrated in FIG. 16A. Note that, in a case where "the number of time divisions in which sector sweep reference signals can be transmitted when the terminals transmit the sector sweep reference signals" is S2, for example, S2 transmission periods may be configured to be present for feedback signal 1002, where $\Omega$ is an integer equal to or greater than 1 or an integer equal to or greater than 2.

In addition, there are frequency band $\flat 1$, frequency band $\flat 2$, ..., frequency band $\flat K$ for feedback signal 1002 in FIG. 16A.

Thus, the first transmission period includes feedback signal first transmission period 1601_11 for frequency $\flat 1$, feedback signal first transmission period 1601_21 for frequency $\flat 2$, ..., feedback signal first transmission period 1601_K1 for frequency $\flat K$. Likewise, the second transmission period includes feedback signal second transmission period 1601_12 for frequency $\flat 1$, feedback signal second transmission period 1601_22 for frequency $\flat 2$, ..., feedback signal second transmission period 1601_K2 for frequency $\flat K$. The third transmission period includes feedback signal third transmission period 1601_13 for frequency $\flat 1$, feedback signal third transmission period 1601_23 for frequency $\flat 2$, ..., feedback signal third transmission period 1601_K3 for frequency $\flat K$. The fourth transmission period includes feedback signal fourth transmission period 1601_14 for frequency $\flat 1$, feedback signal fourth transmission period 1601_24 for frequency $\flat 2$, ..., feedback signal fourth transmission period 1601_K4 for frequency $\flat K$.

One feature is that "feedback signals are transmitted from the same transmission panel antenna in the i-th time period regardless of the frequency band in FIG. 16A".

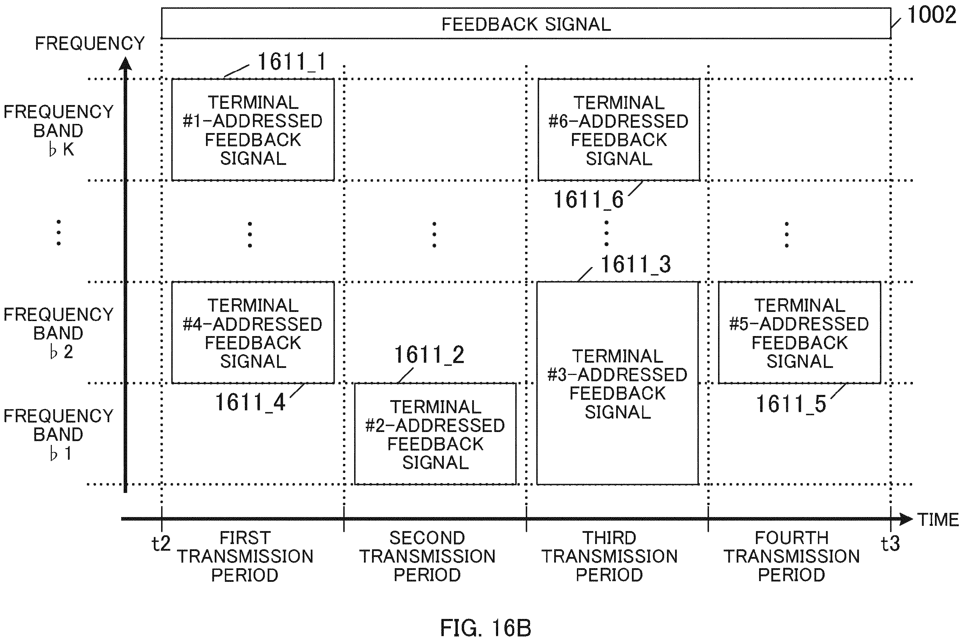

FIG. 16B illustrates exemplary specific feedback signal assignment for feedback signal 1002 illustrated in FIG. 16A.

As in FIG. 14, for example, terminal #1 labeled 902_1 transmits terminal #1 "sector sweep reference signal" 1401_1, terminal #2 labeled 902_2 transmits terminal #2 "sector sweep reference signal" 1401_2, terminal #3 labeled 902_3 transmits terminal #3 "sector sweep reference signal" 1401_3, terminal #4 labeled 902_4 transmits terminal #4 "sector sweep reference signal" 1401_4, terminal #5 labeled 902_5 transmits terminal #5 "sector sweep reference signal" 1401_5, and terminal #6 labeled 902_6 transmits terminal #6 "sector sweep reference signal" 1401_6.

Since terminal #1 "sector sweep reference signal" 1401_1 is present in frequency band $\flat K$ as in FIG. 14, terminal #1-addressed feedback signal (i.e., feedback signal addressed to terminal #1) 1611_1 is present in frequency band $\flat K$ in FIG. 16B.

Since terminal #2 "sector sweep reference signal" 1401_2 is present in frequency band $\flat 1$ as in FIG. 14, terminal #2-addressed feedback signal 1611_2 is present in frequency band $\flat 1$ in FIG. 16B.

Since terminal #3 "sector sweep reference signal" 1401_3 is present in frequency bands $\flat 1$ and $\flat 2$ as in FIG. 14, terminal #3-addressed feedback signal 1611_3 is present in frequency bands $\flat 1$ and $\flat 2$ in FIG. 16B.

Since terminal #4 "sector sweep reference signal" 1401_4 is present in frequency band $\flat 2$ as in FIG. 14, terminal #4-addressed feedback signal 1611_4 is present in frequency band $\flat 2$ in FIG. 16B.

Since terminal #5 "sector sweep reference signal" 1401_5 is present in frequency band $\flat 2$ as in FIG. 14, terminal #5-addressed feedback signal 1611_5 is present in frequency band $\flat 2$ in FIG. 16B.

Since terminal #6 "sector sweep reference signal" 1401_6 is present in frequency band $\flat K$ as in FIG. 14, terminal #6-addressed feedback signal 1611_6 is present in frequency band $\flat K$ in FIG. 16B.

In this manner, obtaining terminal #i-addressed feedback signal 1611_i allows terminal #i labeled 902_i to know that communication with base station #1 labeled 901_1 is available and to know the frequency band to be used. Note that FIG. 16B is merely an example. In a case where there is no terminal #1-addressed feedback signal 1611_1 as feedback signal 1002, for example, terminal #1 labeled 902_1 recognizes that the communication with base station #1 labeled 901_1 has not been established.

At this time, terminal #i-addressed feedback signal 1611_i includes, for example, information indicating that communication with terminal #i labeled 902_i is available (or indicating that data-symbol-included frame 1003 in FIG. 10 includes a symbol addressed to terminal #i labeled 902_i).

Further, base station #1 labeled 901_1 selects a frequency (band) and a transmission panel antenna and sets a parameter of beamforming based on the ""frequency (band) information" and information of the "transmission panel antenna and parameter" of base station #1 labeled 901_1 with high reception quality" transmitted by terminal #i labeled 902_i, and base station #1 labeled 901_1 then transmits terminal #i-addressed feedback signal 1611_i.

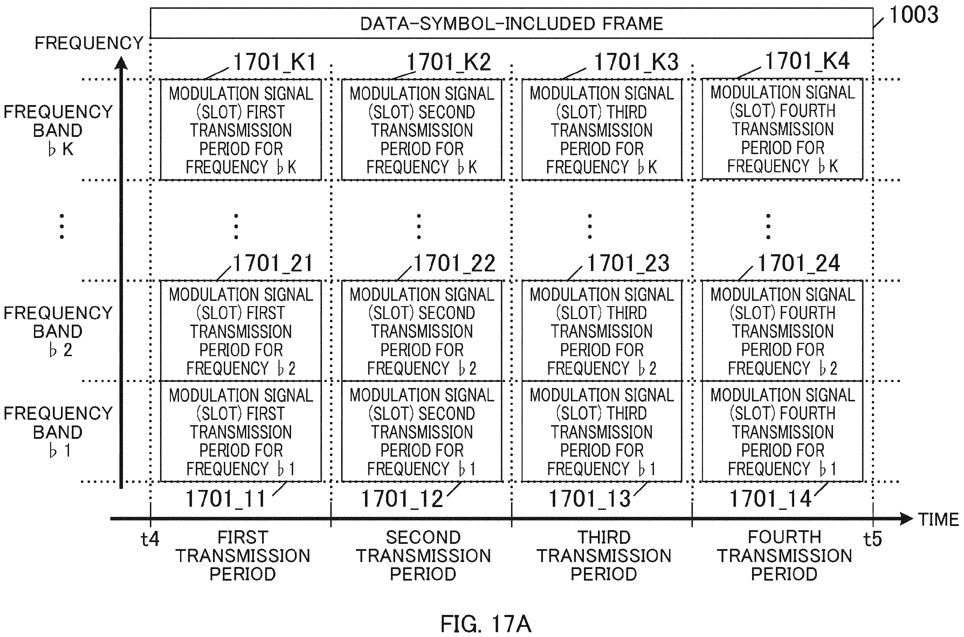

FIG. 17A illustrates an exemplary configuration of data-symbol-included frame 1003 that is present in the time period from t4 to t5 in FIG. 10 and transmitted by base station #1 labeled 901_1. Note that the horizontal axis represents time and the vertical axis represents frequency in FIG. 17A. In this example, since "the number of time divisions in which sector sweep reference signals can be transmitted when the terminals transmit the sector sweep reference signals" is four, there are a first transmission period, a second transmission period, a third transmission period, and a fourth transmission period for data-symbol-included frame 1003 as illustrated in FIG. 17A. Note that, in a case where "the number of time divisions in which sector sweep reference signals can be transmitted when the terminals transmit the sector sweep reference signals" is S2, for example, S2 transmission periods may be configured to be present for data-symbol-included frame 1003, where Ω is an integer equal to or greater than 1 or an integer equal to or greater than 2.

In addition, there are frequency band ♭1, frequency band ♭2, ..., frequency band ♭K for data-symbol-included frame 1003 in FIG. 17A.

Thus, the first transmission period includes modulation signal (slot) first transmission period 1701_11 for frequency ♭1, modulation signal (slot) first transmission period 1701_21 for frequency ♭2, ..., modulation signal (slot) first transmission period 1701_K1 for frequency ♭K. Likewise, the second transmission period includes modulation signal (slot) second transmission period 1701_12 for frequency ♭1, modulation signal (slot) second transmission period 1701_22 for frequency ♭2, ..., modulation signal (slot) second transmission period 1701_K2 for frequency ♭K. The third transmission period includes modulation signal (slot) third transmission period 1701_13 for frequency ♭1, modulation signal (slot) third transmission period 1701_23 for frequency ♭2, ..., modulation signal (slot) third transmission period 1701_K3 for frequency ♭K. The fourth transmission period includes modulation signal (slot) fourth transmission period 1701_14 for frequency ♭1, modulation signal (slot) fourth transmission period 1701_24 for frequency ♭2, ..., modulation signal (slot) fourth transmission period 1701_K4 for frequency ♭K.

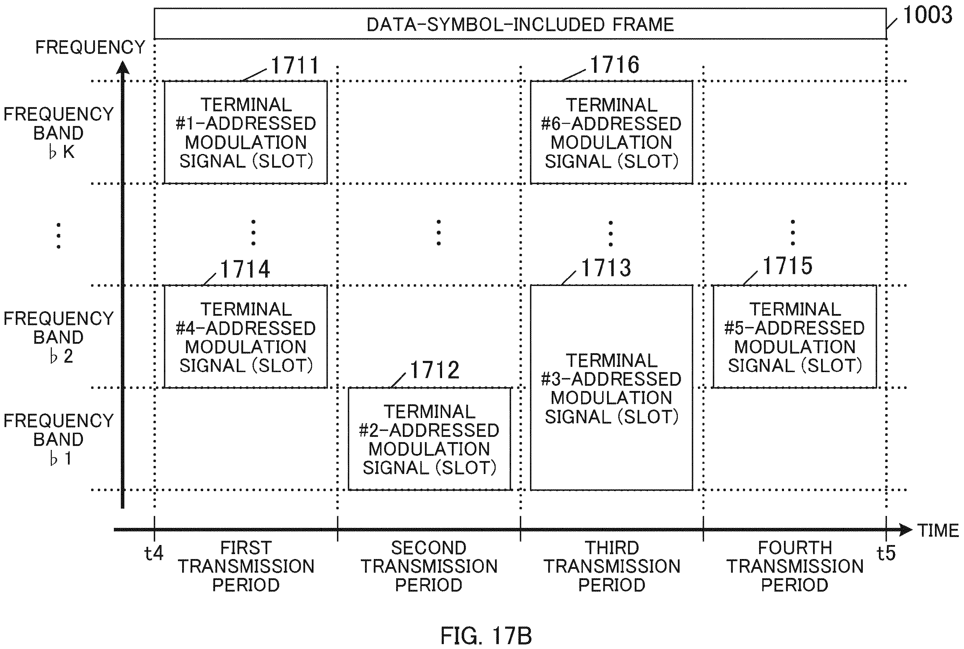

FIG. 17B illustrates exemplary specific modulation signal (slot) assignment for data-symbol-included frame 1003 illustrated in FIG. 17A.

As in FIG. 14, for example, terminal #1 labeled 902_1 transmits terminal #1 "sector sweep reference signal" 1401_1, terminal #2 labeled 902_2 transmits terminal #2 "sector sweep reference signal" 1401_2, terminal #3 labeled 902_3 transmits terminal #3 "sector sweep reference signal" 1401_3, terminal #4 labeled 902_4 transmits terminal #4 "sector sweep reference signal" 1401_4, terminal #5 labeled 902_5 transmits terminal #5 "sector sweep reference signal" 1401_5, and terminal #6 labeled 902_6 transmits terminal #6 "sector sweep reference signal" 1401_6.

Since terminal #1 "sector sweep reference signal" 1401_1 is present in frequency band ♭K as in FIG. 14, terminal #1-addressed modulation signal (slot) (i.e., modulation signal (slot) addressed to terminal #1) 1711 is present in frequency band ♭K in FIG. 17B.

Since terminal #2 "sector sweep reference signal" 1401_2 is present in frequency band ♭1 as in FIG. 14, terminal #2-addressed modulation signal (slot) 1712 is present in frequency band ♭1 in FIG. 17B.

Since terminal #3 "sector sweep reference signal" 1401_3 is present in frequency bands ♭1 and ♭2 as in FIG. 14, terminal #3-addressed modulation signal (slot) 1713 is present in frequency bands ♭1 and ♭2 in FIG. 17B.

Since terminal #4 "sector sweep reference signal" 1401_4 is present in frequency band ♭2 as in FIG. 14, terminal #4-addressed modulation signal (slot) 1714 is present in frequency band ♭2 in FIG. 17B.

Since terminal #5 "sector sweep reference signal" 1401_5 is present in frequency band ♭2 as in FIG. 14, terminal #5-addressed modulation signal (slot) 1715 is present in frequency band ♭2 in FIG. 17B.

Since terminal #6 "sector sweep reference signal" 1401_6 is present in frequency band ♭K as in FIG. 14, terminal #6-addressed modulation signal (slot) 1716 is present in frequency band ♭K in FIG. 17B.

At this time, terminal #i-addressed modulation signal (slot) 171i includes, for example, a data symbol (data and/or information) addressed to terminal #i labeled 902_i.

In this manner, terminal #i-addressed modulation signal (slot) 171i allows terminal #i labeled 902_i to know that communication with base station #1 labeled 901_1 is available and to know the frequency band to be used. Note that FIG. 17B is merely an example. In a case where there is no terminal #1-addressed modulation signal (slot) 1711 as data-symbol-included frame 1003, for example, terminal #1 labeled 902_1 recognizes that the communication with base station #1 labeled 901_1 has not been established.

Further, base station #1 labeled 901_1 selects a frequency (band) and a transmission panel antenna and sets a parameter of beamforming based on the ""frequency (band) information" and information of the "transmission panel antenna and parameter" of base station #1 labeled 901_1 with high reception quality" transmitted by terminal #i labeled 902_i, and base station #1 labeled 901_1 then transmits terminal #i-addressed modulation signal (slot) 171i.

Note that, in FIGS. 16A and 16B, base station #1 labeled 901_1 may estimate the "frequency (band)" and the "transmission panel antenna and parameter" of terminal #i labeled 902_1 with high reception quality in receiving "terminal #i "sector sweep reference signal" 1401_i transmitted by terminal #i labeled 902_i", and the estimated information may be included in terminal #i-addressed feedback signal 1611_i.

Terminal #i labeled 902_i selects a frequency (band) and a transmission panel antenna and determines a beamforming method based on the information of "frequency (band)" and "transmission panel antenna and parameter" of terminal #i labeled 902_i with high reception quality obtained from base station #1 labeled 901_1, and terminal #i labeled 902_i then transmits a symbol, a frame, and/or a modulation signal to base station #1 labeled 901_1. This produces the effect of enhancing data reception quality in base station #1 labeled 901_1.

Incidentally, in the time period from t3 to t4 in FIG. 10, terminal #i labeled 902_i may transmit, to base station #1 labeled 901_1, a modulation signal including information indicating successful reception of a signal from base station #1 labeled 901_1, such as acknowledgement (ACK).

Note that, terminal #i-addressed modulation signal (slot) 171i in FIG. 17B may include, in addition to the data symbol, a "reference signal such as a demodulation reference signal (DMRS), phase tracking reference signal (PTRS), or sounding reference signal (SRS)", a pilot symbol, a pilot signal, a preamble, and a symbol including control information, for example. Examples of the symbol including the control information may include information of a destination terminal (ID for identifying the terminal), a transmission method of the modulation signal, information of the modulation scheme, information of the error correction coding scheme (code length, code rate, etc.), information of the modulation and coding scheme (MCS), and the like.

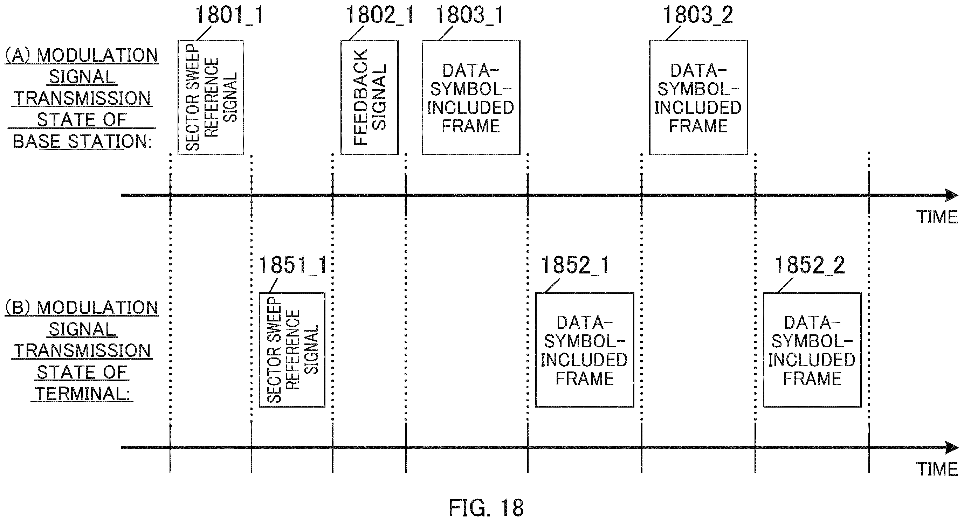

FIG. 18 illustrates an exemplary state where base station #1 labeled 901_1 and "terminal #1 labeled 902_1, terminal #2 labeled 902_2, terminal #3 labeled 902_3, terminal #4 labeled 902_4, terminal #5 labeled 902_5, and terminal #6 labeled 902_6" communicate with each other as illustrated in FIG. 9. (A) of FIG. 18 illustrates an exemplary modulation signal transmission state of base station #1 labeled 901_1, and (B) of FIG. 18 illustrates an exemplary modulation signal transmission state of "terminal #1 labeled 902_1, terminal #2 labeled 902_2, terminal #3 labeled 902_3, terminal #4 labeled 902_4, terminal #5 labeled 902_5, and terminal #6 labeled 902_6". Note that the horizontal axes represent time in (A) and (B) of FIG. 18.

First, base station #1 labeled 901_1 transmits sector sweep reference signal 1801_1. Note that this has already been described with reference to FIG. 10, and the description thereof will be thus omitted.

Then, a terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits sector sweep reference signal 1851_1. Note that this has already been described with reference to, for example, FIGS. 13, 14, 15A, 15B, etc., and the description thereof will be thus omitted.

Base station #1 labeled 901_1 transmits feedback signal 1802_1. Note that this has already been described with reference to FIGS. 16A and 16B, and the description thereof will be thus omitted.

After that, base station #1 labeled 901_1 transmits "data-symbol-included frame 1803_1". Note that this has already been described with reference to FIGS. 17A and 17B, and the description thereof will be thus omitted. (Hence, "data-symbol-included frame 1803_1" is considered to be a frame for downlink, for example).

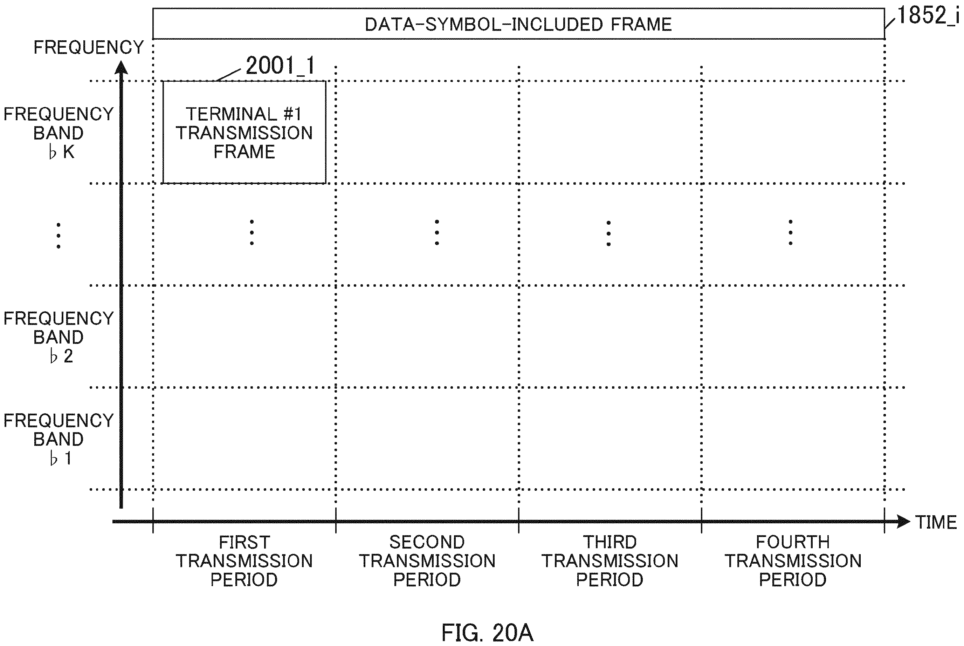

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_1". Note that a configuration of the frame will be described later with reference to FIGS. 20A to 20F. (Hence, "data-symbol-included frame 1852_1" is considered to be a frame for uplink, for example).

Next, base station #1 labeled 901_1 transmits "data-symbol-included frame 1803_2". Note that a configuration method of "data-symbol-included frame 1803_2" is as described with reference to FIGS. 17A and 17B.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_2". Note that a configuration of the frame will be described later with reference to FIGS. 20A to 20F.

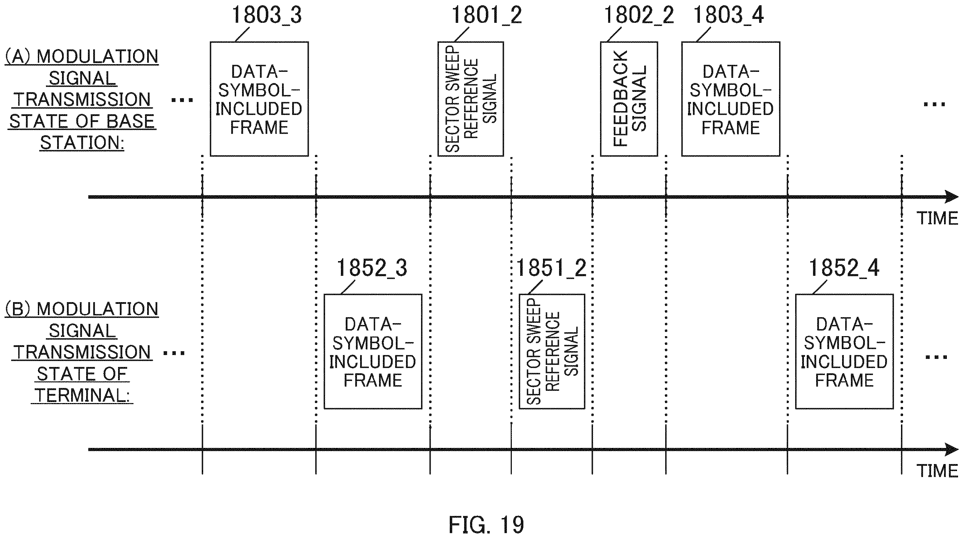

FIG. 19 illustrates an exemplary modulation signal transmission state of base station #1 labeled 901_1 and an exemplary modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" after the state in FIG. 18.

(A) of FIG. 19 illustrates an exemplary modulation signal transmission state of base station #1 labeled 901_1, and it is a temporal continuation from the modulation signal transmission state of base station #1 labeled 901_1 in (A) of FIG. 18.

(B) of FIG. 19 illustrates an exemplary modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6", and it is a temporal continuation from the modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" in (B) of FIG. 18.

Note that the horizontal axes represent time in (A) and (B) of FIG. 19.

After the states in (A) and (B) of FIG. 18, base station #1 labeled 901_1 transmits "data-symbol-included frame 1803_3". Note that a configuration method of "data-symbol-included frame 1803_3" is as described with reference to FIGS. 17A and 17B.

The terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_3". Note that a configuration of the frame will be described later with reference to FIGS. 20A to 20F.

Next, base station #1 labeled 901_1 transmits sector sweep reference signal 1801_2. Note that this has already been described with reference to FIG. 10, and the description thereof will be thus omitted.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits sector sweep reference signal 1851_2. Note that this has already been described with reference to, for example, FIGS. 13, 14, 15A, 15B, etc., and the description thereof will be thus omitted.

Base station #1 labeled 901_1 transmits feedback signal 1802_2. Note that this has already been described with reference to FIGS. 16A and 16B, and the description thereof will be thus omitted.

After that, base station #1 labeled 901_1 transmits "data-symbol-included frame 1803_4". Note that this has already been described with reference to FIGS. 17A and 17B, and the description thereof will be thus omitted.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_4". Note that a configuration of the frame will be described later with reference to FIGS. 20A to 20F.

As described above, base station #1 labeled 901_1 and the terminal transmit the sector sweep reference signals before the "transmission of the "data-symbol-included frames" by base station #1 labeled 901_1 and/or the transmission of the "data-symbol-included frames" by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6"", and again transmit the sector sweep reference signals after the "transmission of the "data-symbol-included frames" by base station #1 labeled 901_1 and/or the transmission of the "data-symbol-included frames" by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6"" Base station #1 labeled 901_1 and the terminal then each configure a frequency (band), select a transmission panel antenna to be used, and configure transmit beamforming. This produces the effect that the base station and/or the terminal achieve high data reception quality.

Next, a description will be given of an exemplary configuration of "data-symbol-included frame 1852_i" transmitted by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" with reference to FIGS. 20A to 20F. Note that i is an integer equal to or greater than 1, for example, and the horizontal axis represents time in FIGS. 20A to 20F.

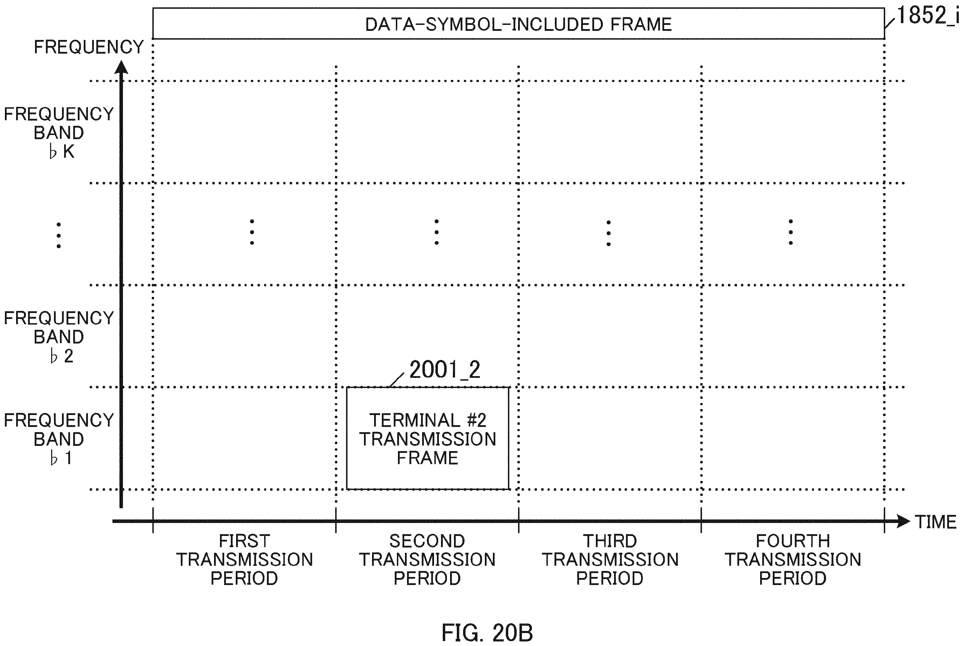

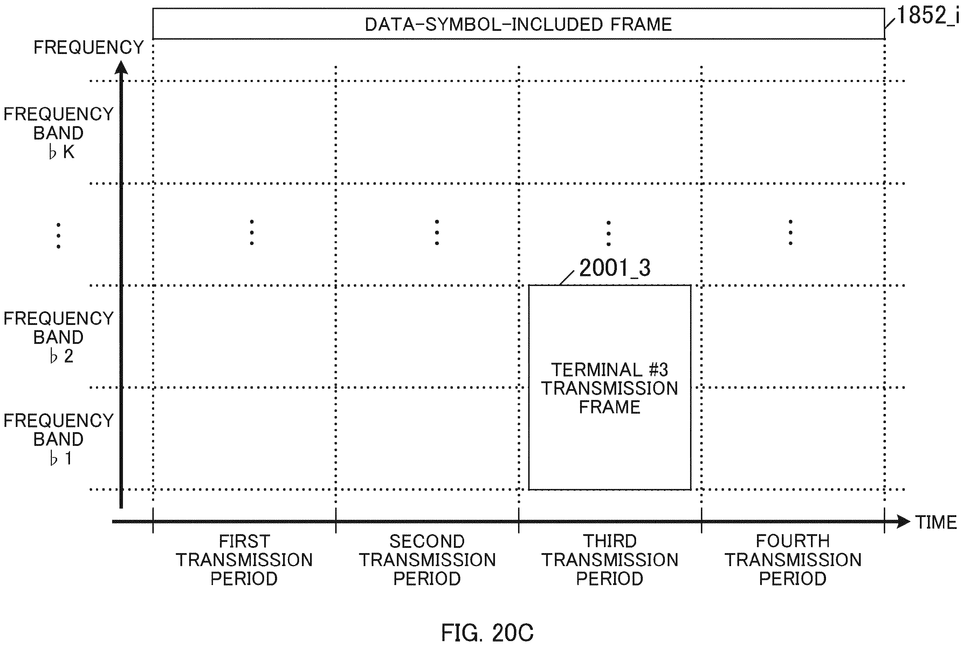

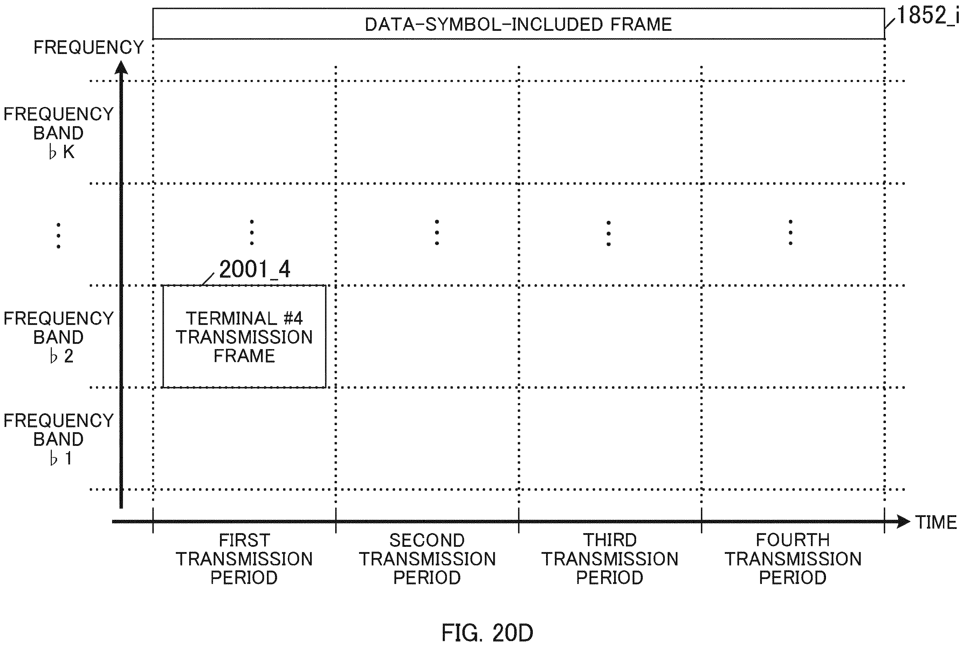

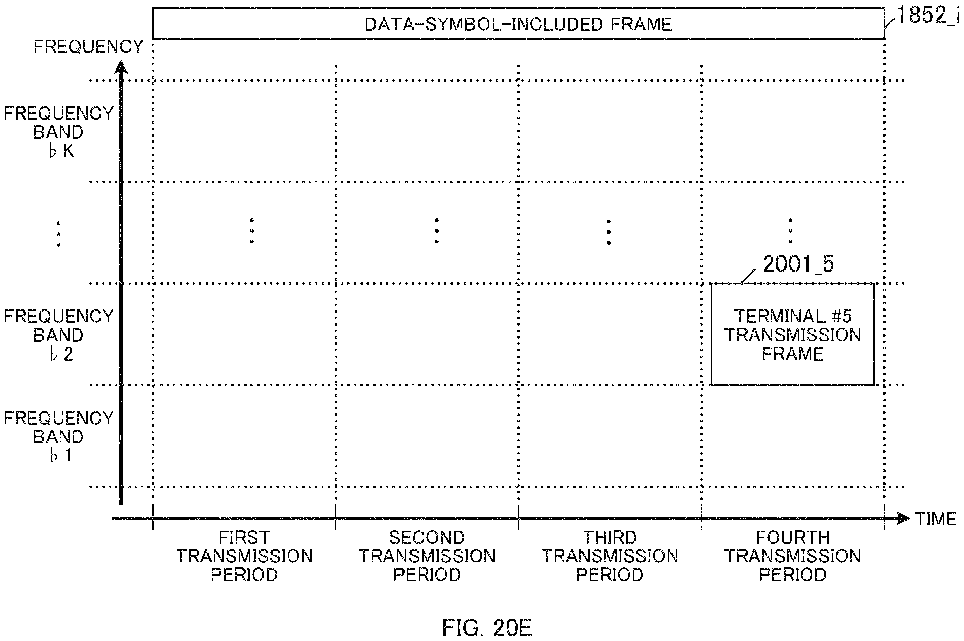

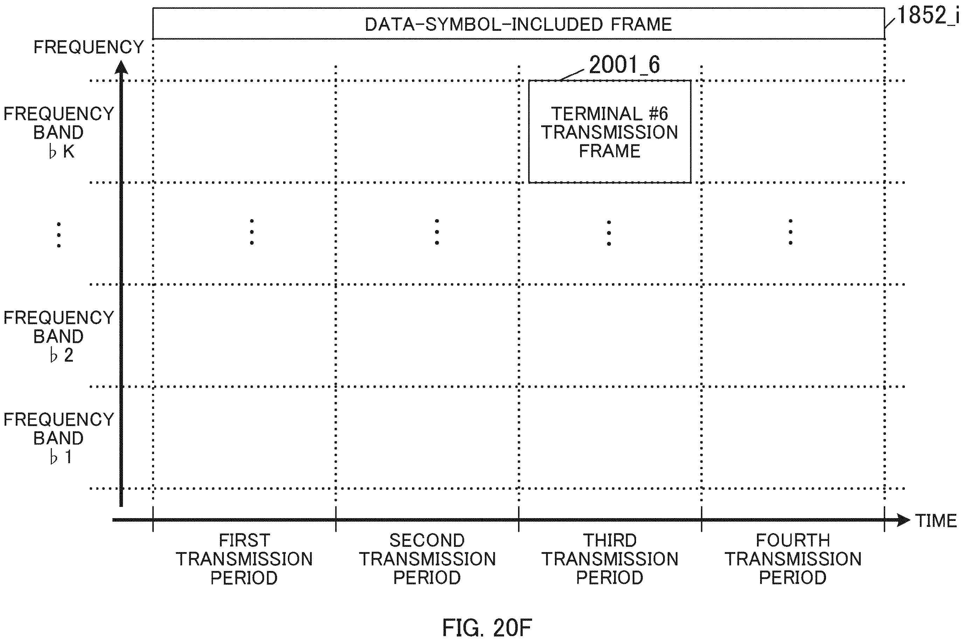

As illustrated in FIGS. 20A, 20B, 20C, 20D, 20E, and 20F, "data-symbol-included frame 1852_i" is composed of a first transmission period, a second transmission period, a third transmission period, and a fourth transmission period. In addition, there are frequency band $b1$, frequency band $b2$, ..., frequency band $bK$ for "data-symbol-included frame 1852_i".

As illustrated in FIG. 20A, terminal #1 labeled 902_1 transmits terminal #1 transmission frame (including a data symbol) 2001_1 using frequency band $bK$ and the first transmission period, for example.

"Terminal #1 labeled 902_1 transmits terminal #1 transmission frame (including a data symbol) 2001_1 using frequency band $bK$" because "base station #1 labeled 901_1 transmits a modulation signal (slot) addressed to terminal #1 labeled 902_1 using frequency band $bK$" as illustrated in FIG. 17B.

As illustrated in FIG. 20B, terminal #2 labeled 902_2 transmits terminal #2 transmission frame (including a data symbol) 2001_2 using frequency band $b1$ and the second transmission period, for example.

"Terminal #2 labeled 902_2 transmits terminal #2 transmission frame (including a data symbol) 2001_2 using frequency band $b1$" because "base station #1 labeled 901_1 transmits a modulation signal (slot) addressed to terminal #2 labeled 902_2 using frequency band $b1$" as illustrated in FIG. 17B.

As illustrated in FIG. 20C, terminal #3 labeled 902_3 transmits terminal #3 transmission frame (including a data symbol) 2001_3 using frequency bands $b1$ and $b2$ and the third transmission period, for example.

"Terminal #3 labeled 902_3 transmits terminal #3 transmission frame (including a data symbol) 2001_3 using frequency bands $b1$ and $b2$" because "base station #1 labeled 901_1 transmits a modulation signal (slot) addressed to terminal #3 labeled 902_3 using frequency bands $b1$ and $b2$" as illustrated in FIG. 17B.

As illustrated in FIG. 20D, terminal #4 labeled 902_4 transmits terminal #4 transmission frame (including a data symbol) 2001_4 using frequency band $b2$ and the first transmission period, for example.

"Terminal #4 labeled 902_4 transmits terminal #4 transmission frame (including a data symbol) 2001_4 using frequency band $b2$" because "base station #1 labeled 901_1 transmits a modulation signal (slot) addressed to terminal #4 labeled 902_4 using frequency band $b2$" as illustrated in FIG. 17B.

As illustrated in FIG. 20E, terminal #5 labeled 902_5 transmits terminal #5 transmission frame (including a data symbol) 2001_5 using frequency band ♭2 and the fourth transmission period, for example.

"Terminal #5 labeled 902_5 transmits terminal #5 transmission frame (including a data symbol) 2001_5 using frequency band ♭2" because "base station #1 labeled 901_1 transmits a modulation signal (slot) addressed to terminal #5 labeled 902_5 using frequency band ♭2" as illustrated in FIG. 17B.

As illustrated in FIG. 20F, terminal #6 labeled 902_6 transmits terminal #6 transmission frame (including a data symbol) 2001_6 using frequency band ♭K and the third transmission period, for example.

"Terminal #6 transmission frame (including a data symbol) 2001_6 using frequency band ♭K" because "base station #1 labeled 901_1 transmits a modulation signal (slot) addressed to terminal #6 labeled 902_6 using frequency band ♭K" as illustrated in FIG. 17B.

As described above, "data-symbol-included frame 1852_i" transmitted by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" is subjected to, for example, OFDMA and/or time division and transmitted by each terminal, and base station #1 labeled 901_1 receives the frame transmitted by the terminal, thereby preventing interference and achieving high data reception quality.

Note that terminal #1 transmission frame 2001_1, terminal #2 transmission frame 2001_2, terminal #3 transmission frame 2001_3, terminal #4 transmission frame 2001_4, terminal #5 transmission frame 2001_5, and terminal #6 transmission frame 2001_6 in FIGS. 20A, 20B, 20C, 20D, 20E, and 20F may include, in addition to the data symbol, a "reference signal such as DMRS, PTRS, or SRS", a pilot symbol, a pilot signal, a preamble, and a symbol including control information, for example.

In FIGS. 20A, 20B, 20C, 20D, 20E, and 20F, a description has been given of a case where the terminals perform OFDMA and/or time division on the frames to be transmitted, but the terminals may perform spatial division on the frames to be transmitted using multi user-multiple-input multiple-output (MU-MIMO).

Note that the present embodiment has provided a description of a case where a terminal transmits a modulation signal in a multi-carrier scheme such as OFDM, for example, but the scheme is not limited to this. For example, a terminal may transmit a signal in a single-carrier scheme when transmitting a signal of a frame in FIGS. 14, 20A, 20B, 20C, 20D, 20E, 20F, etc.

In FIG. 14, for example, terminal #1 labeled 902_1 may transmit terminal #1 "sector sweep reference signal" 1401_1 in frequency band ♭K in a single-carrier scheme. Further, in FIG. 20A, terminal #1 labeled 902_1 may transmit "terminal #1 transmission frame" 2001_1 in frequency band ♭K in a single-carrier scheme. Note that other terminals may also transmit a signal in a single-carrier scheme.

(Embodiment 2)

In Embodiment 2, a description will be given of a communication system, communication apparatus, and communication method using sector sweep as a variation of Embodiment 1. Note that the drawings used in Embodiment 1 are sometimes used in the following description of Embodiment 2.

FIGS. 1A, 1B, and 1C illustrate exemplary configurations of, for example, a base station, an access point, a terminal, and a repeater in Embodiment 2, and the description of the detailed operations will be omitted since they have already been described with reference to FIGS. 2, 3, 4, 5, 6, 7, and 8. For FIGS. 2, 3, 4, 5, 6, 7, and 8, the description of the detailed operations will also be omitted since they have already been described.

FIG. 9 illustrates an exemplary communication state in Embodiment 2. As illustrated in FIG. 9, a case to be discussed is where base station #1 labeled 901_1 communicates with terminal #1 labeled 902_1, terminal #2 labeled 902_2, terminal #3 labeled 902_3, terminal #4 labeled 902_4, terminal #5 labeled 902_5, and terminal #6 labeled 902_6. A relationship between a base station and terminals, however, is not limited to this example, and the base station may communicate with one or more terminals, for example.

Note that the following description is about an exemplary case where the base station transmits modulation signals to the terminals using the OFDMA scheme and the terminals transmit modulation signals to the base station using a single-carrier scheme.

FIG. 10 illustrates an example of modulation signal 1000 transmitted by base station #1 labeled 901_1 in FIG. 9. In FIG. 10, the horizontal axis represents time and the vertical axis represents frequency. In the time period from time t0 to t1, sector sweep (sector-sweep level) reference signal 1001 is present. Note that sector sweep reference signal 1001 will be described later.

The time period from time t1 to t2 is a terminal response period. Note that the terminal response will be described later.

In the time period from time t2 to t3, feedback signal 1002 is present. Note that feedback signal 1002 will be described later.

In the time period from time t4 to t5, data-symbol-included frame 1003 is present. Note that data-symbol-included frame 1003 will be described later.

The reference signal for sector sweep is referred to as sector sweep reference signal 1001 in FIG. 10, but the name is not limited thereto and may be a reference signal, a reference symbol, a training signal, a training symbol, or the like. The signal denoted by reference sign 1002 is referred to as feedback signal 1002, but the name is not limited thereto and may be a feedback symbol, a terminal-addressed signal, a terminal-addressed symbol, a control signal, a control symbol, or the like. In addition, the frame including a data symbol is referred to as data-symbol-included frame 1003, but the name is not limited thereto and may be a slot/mini-slot/unit-included frame, or the like.

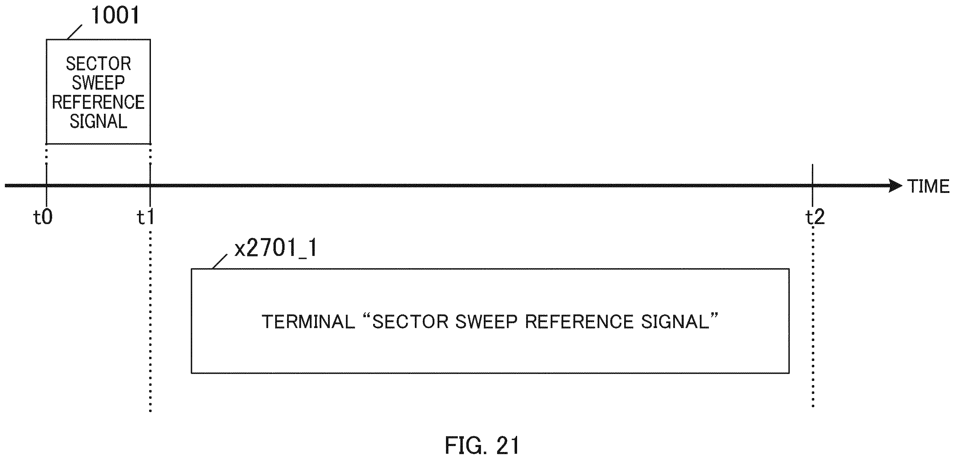

FIG. 21 illustrates an exemplary configuration of the time period from time t1 to t2 in FIG. 10, which is the terminal response period, and the horizontal axis represents time. Sector sweep reference signal 1001 transmitted by the base station is present in the time period from time t0 to t1.

Subsequently, terminal "sector sweep reference signal" x2701 is present in the time period from time t1 to t2.

FIG. 11 illustrates examples of sector sweep reference signal 1001 in FIG. 10 transmitted by base station #1 labeled 901_1 in FIG. 9 with the configuration in FIG. 1A, 1B, or 1C, for example. Note that the horizontal axis represents time and the vertical axis represents frequency in FIG. 11. In the example of FIG. 11, the frequency is divided into frequency band $b1$, frequency band $b2$, ..., frequency band $bK$ as illustrated in FIG. 11 for base station #1 labeled 901_1 to transmit modulation signals based on OFDMA. Note that K is an integer equal to or greater than 1 or an integer equal to or greater than 2.

In frequency band $b1$, for example, sector sweep reference signal 1101_11 in transmission panel antenna 1 for frequency $b1$ is present in the first time period, sector sweep reference signal 1101_12 in transmission panel antenna 2 for frequency $b1$ is present in the second time period, ..., sector sweep reference signal 1101_1M in transmission panel antenna M for frequency $b1$ is present in the M-th time period.

That is, in frequency band $bi$, sector sweep reference signal 1101_i1 in transmission panel antenna 1 for frequency $bi$ is present in the first time period, sector sweep reference signal 1101_i2 in transmission panel antenna 2 for frequency $bi$ is present in the second time period, ..., sector sweep reference signal 1101_iM in transmission panel antenna M for frequency $bi$ is present in the M-th time period. Note that i is an integer from 1 to K (both inclusive).

Note that sector sweep reference signal 1101_ij in transmission panel antenna j for frequency $bi$ is transmitted from transmission panel antenna j labeled 106 j of base station #1 labeled 901_1 with the configuration in FIG. 1A, 1B, or 1C. In this case, j is an integer from 1 to M (both inclusive).

One feature is that "sector sweep reference signals are transmitted from the same transmission panel antenna in the i-th time period regardless of the frequency band in FIG. 11". At this time, the same beamforming parameter is used in a first period of time regardless of the frequency band. Note that the beamforming will be described later.

FIG. 12 illustrates an exemplary configuration of "sector sweep reference signal 1101_pi in transmission panel antenna i for frequency $bp$" in FIG. 11. Note that the horizontal axis represents time in FIG. 12. Note that p is an integer from 1 to K (both inclusive) and i is an integer from 1 to M (both inclusive).

A description will be omitted regarding a specific example of a transmission method for "sector sweep reference signal 1101_pi in transmission panel antenna i for frequency $bp$" that is composed as in FIGS. 11 and 12 and transmitted by base station #1 labeled 901_1 with the configuration in FIG. 1A, 1B, or 1C, since it has already been described.

As illustrated in FIGS. 11 and 12, when base station #1 labeled 901_1 transmits "sector sweep reference signal 1101_i in transmission panel antenna i for frequency $bp$", "reference signal 1201_j according to j-th parameter in transmission panel antenna i for frequency $bp$" includes, for example, the following information:

  · Identification number (ID) of the transmission panel antenna, which corresponds to i here, for example;

  · Identification number (ID) of the parameter used for beamforming (directivity control), which corresponds to j here, for example; and

  · The number of frequency divisions in which sector sweep reference signals can be transmitted when the terminals transmit the sector sweep reference signals, which will be described later.

Note that, in a case where "the number of frequency divisions in which sector sweep reference signals can be transmitted" is determined in advance, information of the number of frequency divisions in which sector sweep reference signals can be transmitted need not be included in "reference signal 1201_j according to j-th parameter in transmission panel antenna i for frequency $bp$".

Note that "reference signal 1201_j according to j-th parameter in transmission panel antenna i for frequency $bp$" may include other information. Examples of the information will be described in the other embodiments, for example, in Embodiment 6 or later.

The following information may also be included in "reference signal 1201_j according to j-th parameter in transmission panel antenna i for frequency $bp$".

  · Information on the frequency band and/or frequen-

cy $b_p$ (information of the number of frequency divisions may also be included), which will be described later.

Transmission of the "identification number (ID) of the transmission panel antenna for frequency $b_p$" and the "identification number (ID) of the parameter used for beamforming (directivity control)" by base station #1 labeled 901_1 allows the terminals to recognize the "identification number (ID) of the transmission panel antenna" and the "identification number (ID) of the parameter used for beamforming (directivity control)" that have allowed successful reception; accordingly, base station #1 labeled 901_1 and the terminals can perform appropriate control. This produces the effect of enhancing data reception quality.

Note that "the number of frequency divisions in which sector sweep reference signals can be transmitted when the terminals transmit the sector sweep reference signals" may be changeable according to the frame and/or time, for example. This produces the effect of enhancing data transmission efficiency of a communication system.

Further, transmission of the "information on the frequency band and/or frequency $b_p$" by base station #1 labeled 901_1 allows the terminals to obtain the information and transmit "information relative to a frequency that the terminals desire the base station to use for transmission". This allows the base station to perform appropriate control and produces the effect of enhancing data reception quality.

Next, a description will be given of an operation in the time period from time t1 to t2 in FIG. 10, which is the terminal response period. Note that, in this Embodiment 6, the description is based on a case where the terminals use a multi-carrier scheme such as the OFDM scheme and frequency (bands) used by the base station and frequency (bands) used by the terminals partially overlap each other, by way of example.

FIG. 21 illustrates an exemplary operation in the time period from time t1 to t2, which is the terminal response period. Note that the horizontal axis represents time in FIG. 21. Terminals such as terminal #1 labeled 902_1, terminal #2 labeled 902_2, terminal #3 labeled 902_3, terminal #4 labeled 902_4, terminal #5 labeled 902_5, and terminal #6 labeled 902_6 in FIG. 9 transmit sector sweep reference signals in the time period from time t1 to t2, which is the terminal response period. Note that, in FIG. 21, the components that operate in the same manner as in FIG. 10 are denoted by the same reference signs.

As illustrated in FIGS. 10 and 21, for example, base station #1 labeled 901_1 transmits sector sweep reference signals in the time period from time t0 to t1. After that, the terminal response period, which is the time period from time t1 to t2, includes terminal "sector sweep reference signal" x2701_1 as illustrated in FIG. 13.

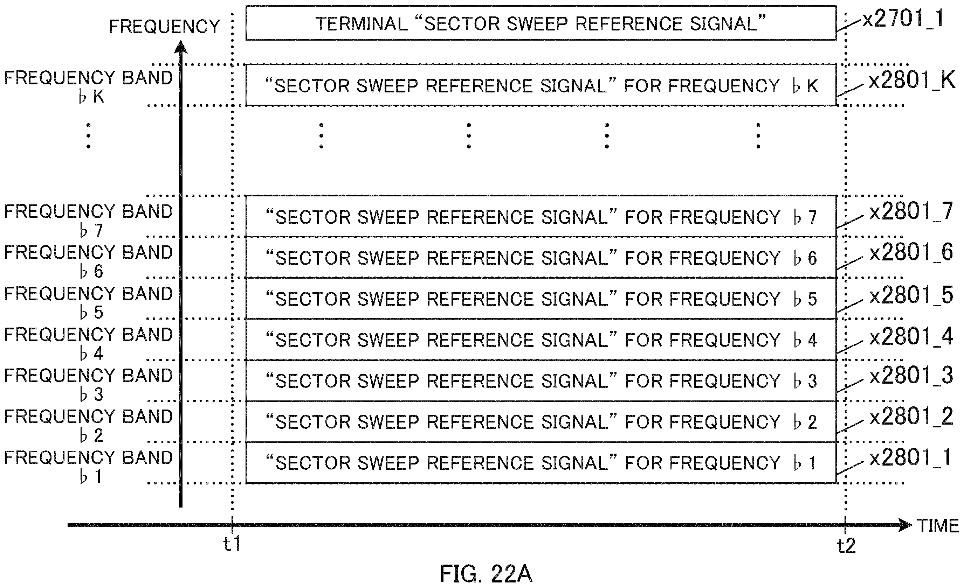

FIG. 22A illustrates an exemplary configuration, in time and frequency, of terminal "sector sweep reference signal" x2701_1 illustrated in FIG. 21. Note that the horizontal axis represents time and the vertical axis represents frequency in FIG. 22A.

As illustrated in FIG. 22A, "terminal "sector sweep reference signal" x2701_1 includes areas for "sector sweep reference signal" x2801_1 for frequency $b_1$, "sector sweep reference signal" x2801_2 for frequency $b_2$, "sector sweep reference signal" x2801_3 for frequency $b_3$, "sector sweep reference signal" x2801_4 for frequency $b_4$, "sector sweep reference signal" x2801_5 for frequency $b_5$, "sector sweep reference signal" x2801_6 for frequency $b_6$, "sector sweep reference signal" x2801_7 for frequency $b_7$, ..., "sector sweep reference signal" x2801_K for frequency $b_K$".

Thus, in the case of FIG. 22A, "the number of frequency divisions in which sector sweep reference signals can be transmitted when the terminals transmit the sector sweep reference signals" is set to K by base station #1 labeled 901_1.

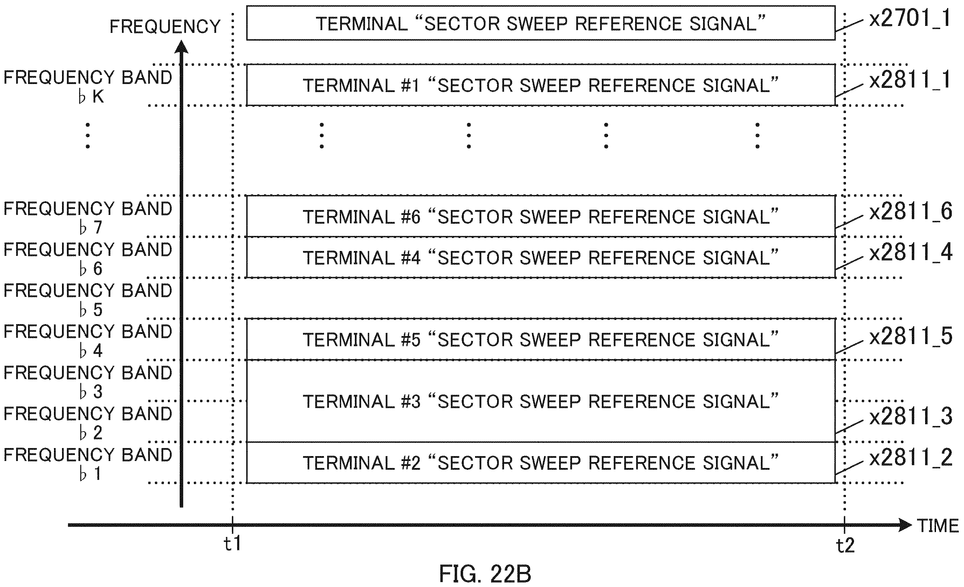

FIG. 22B illustrates exemplary occupation by the terminals in the areas for "sector sweep reference signal" x2801_1 for frequency $b_1$, "sector sweep reference signal" x2801_2 for frequency $b_2$, "sector sweep reference signal" x2801_3 for frequency $b_3$, "sector sweep reference signal" x2801_4 for frequency $b_4$, "sector sweep reference signal" x2801_5 for frequency $b_5$, "sector sweep reference signal" x2801_6 for frequency $b_6$, "sector sweep reference signal" x2801_7 for frequency $b_7$, ..., "sector sweep reference signal" x2801_K for frequency $b_K$" included in terminal "sector sweep reference signal" x2701_1 illustrated in FIG. 21A. Note that the horizontal axis represents time and the vertical axis represents frequency in FIG. 22A.

Terminal #1 labeled 902_1 in FIG. 9 receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. In addition, the "information on the frequency band and/or frequency $b_p$" included in sector sweep reference signal 1001 may be used for this estimation.

Terminal #1 labeled 902_1 estimates, for example, "transmission panel antenna a1 and parameter b1" as the "transmission panel antenna and parameter" with high reception quality. Terminal #1 labeled 902_1 also estimates frequency band $♭K$ as the "frequency domain" with high reception quality. Terminal #1 labeled 902_1 may further estimate the frequency domain with second highest reception quality, the frequency domain with third highest reception quality, and so forth. Note that the frequency domain with highest reception quality will be discussed here to simplify the description.

While estimating the "transmission panel antenna and parameter" with high reception quality, terminal #1 labeled 902_1 may simultaneously obtain information of "the number of frequency divisions in which sector sweep reference signals can be transmitted when the terminals transmit the sector sweep reference signals". In the case of FIG. 22B, terminal #1 labeled 902_1 may obtain information indicating that "the number of frequency divisions in which sector sweep reference signals can be transmitted when the terminals transmit the sector sweep reference signals" is K.

Then, terminal #1 labeled 902_1, for example, transmits terminal #1 "sector sweep reference signal" x2811_1 using frequency band $♭K$ based on the above result. Although the description here is based on an example where terminal #1 labeled 902_1 uses "frequency band $♭K$" that is estimated to have the highest reception quality, a frequency band other than the frequency band estimated to have the highest reception quality may be used.

Note that terminal #1 "sector sweep reference signal" x2811_1 includes information of the "transmission panel antenna and parameter" with high reception quality obtained by terminal #1 labeled 902_1, that is, information of "transmission panel antenna a1 and parameter b1". Terminal #1 "sector sweep reference signal" x2811_1 also includes information of the "frequency domain", for example, information of "frequency band $♭K$". This will be described later.

Likewise, terminal #2 labeled 902_2 in FIG. 9 receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. In addition, the "information on the frequency band and/or frequency $♭p$" included in sector sweep reference signal 1001 may be used for this estimation.

Terminal #2 labeled 902_2 estimates, for example, "transmission panel antenna a2 and parameter b2" as the "transmission panel antenna and parameter" with high reception quality. Terminal #2 labeled 902_2 also estimates frequency band $♭1$ as the "frequency domain" with high reception quality. Terminal #2 labeled 902_2 may further estimate the frequency domain with second highest reception quality, the frequency domain with third highest reception quality, and so forth. Note that the frequency domain with highest reception quality will be discussed here to simplify the description.

While estimating the "transmission panel antenna and parameter" with high reception quality, terminal #2 labeled 902_2 may simultaneously obtain information of "the number of frequency divisions in which sector sweep reference signals can be transmitted when the terminals transmit the sector sweep reference signals". In the case of FIG. 22B, terminal #2 labeled 902_2 may obtain information indicating that "the number of frequency divisions in which sector sweep reference signals can be transmitted when the terminals transmit the sector sweep reference signals" is K.

Then, terminal #2 labeled 902_2, for example, transmits terminal #2 "sector sweep reference signal" x2811_2 using frequency band $♭1$ based on the above result. Although the description here is based on an example where terminal #2 labeled 902_2 uses "frequency band $♭1$" that is estimated to have the highest reception quality, a frequency band other than the frequency band estimated to have the highest reception quality may be used.

Note that terminal #2 "sector sweep reference signal x2811_2" includes information of the "transmission panel antenna and parameter" with high reception quality obtained by terminal #2 labeled 902_2, that is, information of "transmission panel antenna a2 and parameter b2". Terminal #2 "sector sweep reference signal" x2811_2 also includes information of the "frequency domain", for example, information of "frequency band $♭1$". This will be described later.

Thus, terminal #i labeled 902_i receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. Note that i is an integer equal to or greater than 1, for example. In addition, the "information on the frequency band and/or frequency $♭p$" included in sector sweep reference signal 1001 may be used for this estimation.

Terminal #i labeled 902_i estimates, for example, "transmission panel antenna ai and parameter bi" as the "transmission panel antenna and parameter" with high reception quality. Terminal #i labeled 902_i also estimates frequency band bzi as the "frequency domain" with high reception quality. Note that a plurality of frequency domains can be specified. Terminal #i labeled 902_i may further estimate the frequency domain with second highest reception quality, the frequency domain with third highest reception quality, and so forth. Note that the frequency domain with highest reception quality will be discussed here to simplify the description.

While estimating the "transmission panel antenna and parameter" with high reception quality, terminal #i labeled 902_i may simultaneously obtain information of "the number of frequency divisions in which sector sweep reference signals can be transmitted when the terminals transmit the sector sweep reference signals".

Then, terminal #i labeled 902_i, for example, transmits terminal #i "sector sweep reference signal" x2811_i using frequency band bzi based on the above result. Although the description here is based on an example where terminal #i labeled 902_i uses "frequency band bzi" that is estimated to have the highest reception quality, a frequency band other than the frequency band estimated to have the highest reception quality may be used.

Note that terminal #i "sector sweep reference signal" 2811_i includes information of the "transmission panel antenna and parameter" with high reception quality obtained by terminal #i labeled 902_i, that is, information of "transmission panel antenna ai and parameter bi". Terminal #i "sector sweep reference signal" x2811_i also includes information of the "frequency domain", for example, information of "frequency band bzi". This will be described later.

Note that, in FIG. 21, when the frequency (band) used for sector sweep reference signal 1001 transmitted by base station #1 labeled 901_1 is the same as the frequency (band) used for terminal "sector sweep reference signal" x2701_1 transmitted by terminal #i, terminal #i "sector sweep reference signal" x2811_i need not but may include the information of the "frequency domain". In this case, base station #1 labeled 901_1 can recognize the "frequency domain" by referring to the frequency domain where terminal #i "sector sweep reference signal" x2811_i is present.

Meanwhile, in FIG. 21, when the frequency (band) used for sector sweep reference signal 1001 transmitted by base station #1 labeled 901_1 is different from the frequency (band) used for terminal "sector sweep reference signal" x2701_1 transmitted by terminal #i, including the information of the "frequency domain" in terminal #i "sector sweep reference signal" x2811_i produces the effect of accurately transmitting the information of the "frequency domain" to base station #1 labeled 901_1.

A description will be given of a configuration of terminal #i "sector sweep reference signal" x2811_i transmitted by terminal #i labeled 902_i described with reference to FIG. 22B. To simplify the description, terminal #i labeled 902_i has the configuration in FIG. 1A, 1B, or 1C. In addition, terminal #i labeled 902_i with the configuration in FIG. 1A, 1B, or 1C includes the configuration in FIG. 3 as transmission panel antenna xi labeled 106_xi. Note that the configuration of terminal #i labeled 902_i is not limited to the configuration in FIG. 1A, 1B, or 1C, and the configuration of transmission panel antenna xi labeled 106_xi included in terminal #i labeled 902_i with the configuration in FIG. 1A, 1B, or 1C is not limited to the configuration in FIG. 3.

Terminal #i labeled 902_i transmits terminal #i "sector sweep reference signal" x2811_i as illustrated in FIG. 22B. FIG. 15A illustrates an exemplary configuration of terminal #i "sector sweep reference signal" x2811_i. Note that the horizontal axis represents time in FIG. 15A. "Terminal #i "sector sweep reference signal" 1401_i" in FIG. 15A corresponds to an example of "sector sweep reference signal" x2811_i in FIG. 22B.

As illustrated in FIG. 15A, terminal #i "sector sweep reference signal" x2811_i of terminal #i labeled 902_i is composed of "sector sweep reference signal 1501_1 in terminal #i transmission panel antenna 1, sector sweep reference signal 1501_2 in terminal #i transmission panel antenna 2, ..., sector sweep reference signal 1501_M in terminal #i transmission panel antenna M".

For example, terminal #i labeled 902_i with the configuration in FIG. 1A, 1B, or 1C transmits "sector sweep reference signal 1501_1 in terminal #i transmission panel antenna 1" using transmission panel antenna 1 labeled 106_1.

That is, terminal #i labeled 902_i with the configuration in FIG. 1A, 1B, or 1C transmits "sector sweep reference signal 1501_k in terminal #i transmission panel antenna k" using transmission panel antenna k labeled 106_k. Note that k is an integer from 1 to M (both inclusive).

Note that the number of transmission panel antennas included in terminal #i labeled 902_i is M in FIG. 15A, but the number of transmission panel antennas is not limited to this and may be N, where N is an integer equal to or greater than 1.

The details have also been described in other embodiments.

FIG. 15B illustrates an exemplary configuration of "sector sweep reference signal 1501_xi in terminal #i transmission panel antenna xi" in FIG. 15A. Note that the horizontal axis represents time in FIG. 15.

As illustrated in FIG. 15B, "sector sweep reference signal 1501_xi in terminal #i transmission panel antenna xi" is composed of, for example, "reference signal 1511_1 according to first parameter in transmission panel antenna xi", "reference signal 1511_2 according to second parameter in transmission panel antenna xi", "reference signal 1511_3 according to third parameter in transmission panel antenna xi", and "reference signal 1511_4 according to fourth parameter in transmission panel antenna xi".

For example, terminal #i labeled 902_i with the configuration in FIG. 1A, 1B, or 1C includes the configuration in FIG. 3 as transmission panel antenna xi labeled 106_xi.

A description will be given of "reference signal 1511_1 according to first parameter in transmission panel antenna xi".

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_1 in transmission panel antenna xi labeled 106_xi as w1(xi, 1). When first transmission signal 303_1 of "reference signal 1511_1 according to first parameter in transmission panel antenna xi" is tx1ref1(t), multiplier 304_1 obtains tx1ref1(t) × w1(xi, 1). Then, terminal #i labeled 902_i transmits tx1ref1(t) × w1(xi, 1) from antenna 306_1 in FIG. 3. Note that t represents time.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_2 in transmission panel antenna xi labeled 106_xi as w2(xi, 1). When second transmission signal 303_2 of "reference signal 1511_1 according to first parameter in transmission panel antenna xi" is tx2ref1(t), multiplier 304_2 obtains tx2ref1(t) × w2(xi, 1). Then, terminal #i labeled 902_i transmits tx2ref1(t) × w2(xi, 1) from antenna 306_2 in FIG. 3.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_3 in transmission panel antenna xi labeled 106_xi as w3(xi, 1). When third transmission signal 303_3 of "reference signal 1511_1 according to first parameter in transmission panel antenna xi" is tx3ref1(t), multiplier 304_3 obtains tx3ref1(t) × w3(xi, 1). Then, terminal #i labeled 902_i transmits tx3ref1(t) × w3(xi, 1) from antenna 306_3 in FIG. 3.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_4 in transmission panel antenna xi labeled 106_xi as w4(xi, 1). When fourth transmission signal 303_4 of "reference signal 1511_1 according to first parameter in transmission panel antenna xi" is tx4ref1(t), multiplier 304_4 obtains tx4ref1(t) × w4(xi, 1). Then, terminal #i labeled 902_i transmits tx4ref1(t) × w4(xi, 1) from antenna 306_4 in FIG. 3.

A description will be given of "reference signal 1511_j according to j-th parameter in transmission panel antenna xi".

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_1 in transmission panel antenna xi labeled 106_xi as w1(xi, j). When first transmission signal 303_1 of "reference signal 1511_j according to j-th parameter in transmission panel antenna xi" is tx1refj(t), multiplier 304_1 obtains tx1refj(t) × w1(xi, j). Then, terminal #i labeled 902_i transmits tx1refj(t) × w1(xi, j) from antenna 306_1 in FIG. 3. Note that t represents time.

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_2 in transmission panel antenna xi labeled 106_xi as w2(xi, j). When second transmission signal 303_2 of "reference signal 1511_j according to j-th parameter in transmission panel antenna xi" is tx2refj(t), multiplier 304_2 obtains tx2refj(t) × w2(xi, j). Then, terminal #i labeled 902_i transmits tx2refj(t) × w2(xi, j) from antenna 306_2 in FIG. 3.

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_3 in transmission panel antenna xi labeled 106_xi as w3(xi, j). When third transmission signal 303_3 of "reference signal 1511_j according to j-th parameter in transmission panel antenna xi" is tx3refj(t), multiplier 304_3 obtains tx3refj(t) × w3(xi, j). Then, terminal #i labeled 902_i transmits tx3refj(t) × w3(xi, j) from antenna 306_3 in FIG. 3.

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_4 in transmission panel antenna xi labeled 106_xi as w4(xi, j). When fourth transmission signal 303_4 of "reference signal 1511_j according to j-th parameter in transmission panel antenna xi" is tx4refj(t), multiplier 304_4 obtains tx4refj(t) × w4(xi, j). Then, terminal #i labeled 902_i transmits tx4refj(t) × w4(xi, j) from antenna 306_4 in FIG. 3.

Note that j is an integer from 1 to 4 (both inclusive) in the case of FIG. 15B. The number Z of parameter changes is four in FIG. 15B, but the number Z of parameter changes is not limited to four. The same can be implemented as long as Z is an integer equal to or greater than 1 or an integer equal to or greater than 2. At this time, j is an integer from 1 to Z (both inclusive).

As illustrated in FIGS. 22B, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information:

　　· Information of the "transmission panel antenna and parameter" of base station #1 labeled 901_1 with high reception quality, as described above.

Thus, terminal #i labeled 902_i transmits the "information of the "transmission panel antenna and parameter" of base station #1 labeled 901_1 with high reception quality" in "sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A.

In addition, terminal #i labeled 902_i transmits the "information of the "transmission panel antenna and parameter" of base station #1 labeled 901_1 with high reception quality" in "reference signal 1511_1 according to first parameter in transmission panel antenna xi", "reference signal 1511_2 according to second parameter in transmission panel antenna xi", "reference signal 1511_3 according to third parameter in transmission panel antenna xi", and "reference signal 1511_4 according to fourth parameter in transmission panel antenna xi" in FIG. 15B in ""sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A".

In this case, base station #1 labeled 901_1 is more likely to receive, even with an omnidirectional antenna for example, any of ""sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A" transmitted by terminal #i labeled 902_i. This is because terminal #i labeled 902_i performs transmit beamforming (directivity control). This produces the effect that base station #1 labeled 901_1 is more likely to receive the "information of the "transmission panel antenna and parameter" of base station #1 labeled 901_1 with high reception quality" transmitted by terminal #i labeled 902_i. Accordingly, base station #1 labeled 901_1 can transmit a modulation signal to terminal #i labeled 902_i based on the "information of the "transmission panel antenna and parameter" of base station #1 labeled 901_1 with high reception quality", and terminal #i labeled 902_i can receive the modulation signal with high reception quality.

In a case where a plurality of terminals transmit the sector sweep reference signals as in FIG. 22B, base station #1 labeled 901_1 can obtain the "information of the "transmission panel antenna and parameter" of base station #1 labeled 901_1 with high reception quality" from the plurality of terminals. This produces the effect that base station #1 labeled 901_1 can transmit modulation signals to the plurality of terminals based on the "information of the "transmission panel antenna and parameter" of base station #1 labeled 901_1 with high reception quality" from the plurality of terminals, and that the plurality of terminals can receive the modulation signals with high reception quality.

As illustrated in FIGS. 22B, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information:

· Identification number (ID) of the transmission panel antenna, which corresponds to Xi here, for example; and

· Identification number (ID) of the parameter used for beamforming (directivity control), which corresponds to j here, for example.

Transmission of the "identification number (ID) of the transmission panel antenna" and the "identification number (ID) of the parameter used for beamforming (directivity control)" by terminal #i labeled 902_i allows base station #1 labeled 901_1 to recognize the "identification number (ID) of the transmission panel antenna" and the "identification number (ID) of the parameter used for beamforming (directivity control)" that have allowed successful reception; accordingly, terminal #i labeled 902_i and base station #1 labeled 901_1 can perform appropriate control. This produces the effect of enhancing data reception quality.

Note that "reference signal 1511_j according to j-th parameter in transmission panel antenna xi" may include other information.

Further, as illustrated in FIGS. 22B, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information:

· "Information on the frequency band and/or frequency $♭p$" that has been used for transmission by terminal #i labeled 902_i or that terminal #i labeled 902_i desires base station #1 labeled 901_1 to use.

Transmission of the "information on the frequency band and/or frequency $♭p$" by terminal #i labeled 902_i allows base station #1 labeled 901_1 to recognize the "information on the frequency band and/or frequency $♭p$"; accordingly, terminal #i labeled 902_i and base station #1 labeled 901_1 can perform appropriate control. This produces the effect of enhancing data reception quality.

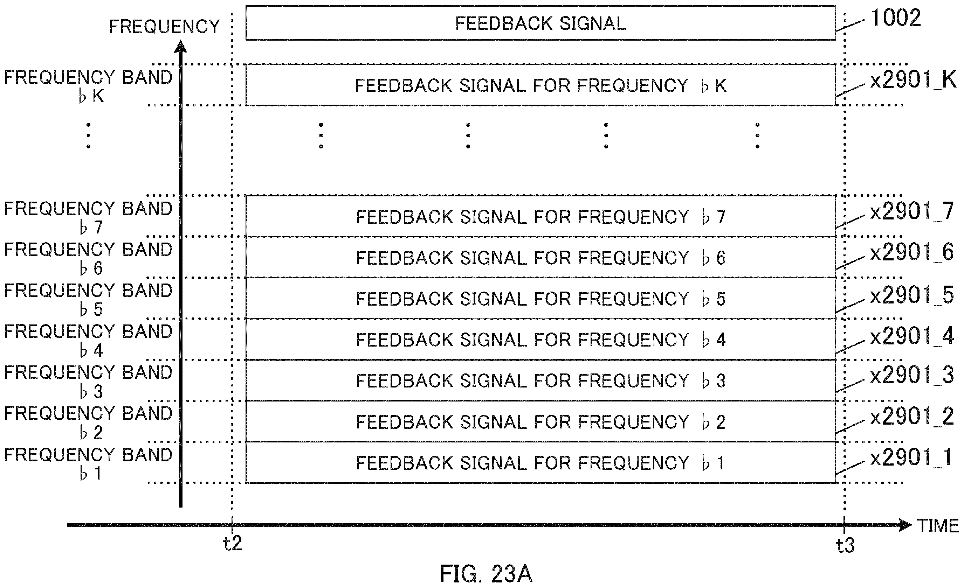

FIG. 23A illustrates an exemplary configuration of feedback signal 1002 that is present in the time period from t2 to t3 in FIG. 10 and transmitted by base station #1 labeled 901_1. Note that the horizontal axis represents time and the vertical axis represents frequency in FIG. 23A. In this example, feedback signal 1002 includes areas for "feedback signal x2901_1 for frequency ♭1, feedback signal x2901_2 for frequency ♭2, feedback signal x2901_3 for frequency ♭3, feedback signal x2901_4 for frequency ♭4, feedback signal x2901_5 for frequency ♭5, feedback signal x2901_6 for frequency ♭6, feedback signal x2901_7 for frequency ♭7, ..., feedback signal x2901_K for frequency ♭K" as illustrated in FIG. 23A.

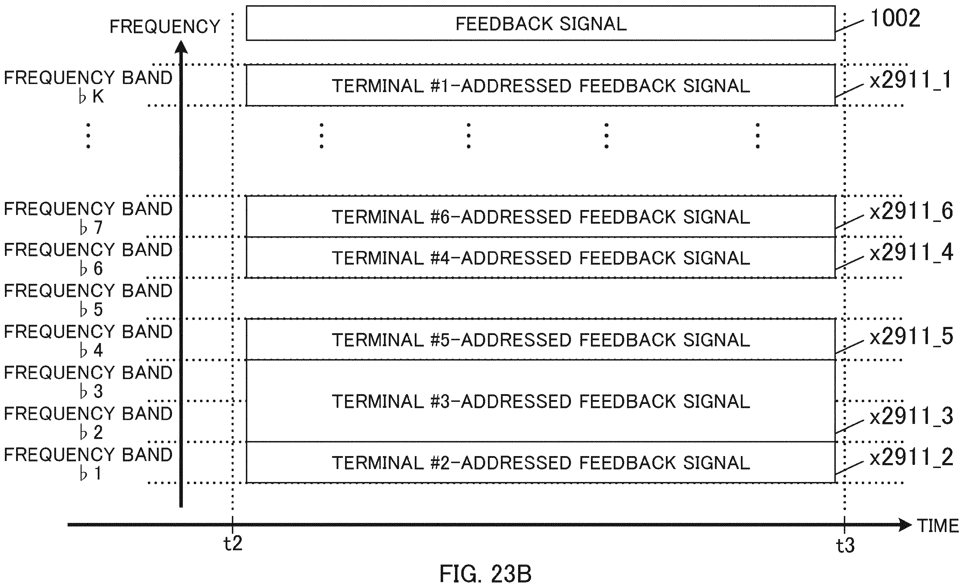

FIG. 23B illustrates exemplary specific feedback signal assignment for feedback signal 1002 in the areas for "feedback signal x2901_1 for frequency ♭1, feedback signal x2901_2 for frequency ♭2, feedback signal x2901_3 for frequency ♭3, feedback signal x2901_4 for frequency ♭4, feedback signal x2901_5 for frequency ♭5, feedback signal x2901_6 for frequency ♭6, feedback signal x2901_7 for frequency ♭7, ..., feedback signal x2901_K for frequency ♭K" illustrated in FIG. 23A.

As in FIG. 22B, for example, terminal #1 labeled 902_1 transmits terminal #1 "sector sweep reference signal" x2811_1, terminal #2 labeled 902_2 transmits terminal #2 "sector sweep reference signal" x2811_2, terminal #3 labeled 902_3 transmits terminal #3 "sector sweep reference signal" x2811_3, and other terminals also transmit sector sweep reference signals.

As in FIG. 23B, base station #1 labeled 901_1 transmits terminal #1-addressed feedback signal x2911_1 using frequency band ♭K based on terminal #1 "sector sweep reference signal" x2811_1.

Base station #1 labeled 901_1 transmits terminal #2-addressed feedback signal x2911_2 using frequency band ♭1 based on terminal #2 "sector sweep reference signal" x2811_2 as in FIG. 23B.

Base station #1 labeled 901_1 transmits terminal #3-addressed feedback signal x2911_3 using frequency bands ♭2 and ♭3 based on terminal #3 "sector sweep reference signal" x2811_3 as in FIG. 23B.

Base station #1 labeled 901_1 transmits terminal #4-addressed feedback signal x2911_4 using frequency band ♭6 based on terminal #4 "sector sweep reference signal" x2811_4 as in FIG. 23B.

Base station #1 labeled 901_1 transmits terminal #5-addressed feedback signal x2911_5 using frequency band ♭4 based on terminal #5 "sector sweep reference signal" x2811_5 as in FIG. 23B.

Base station #1 labeled 901_1 transmits terminal #6-addressed feedback signal x2911_6 using frequency band ♭7 based on terminal #6 "sector sweep reference signal" x2811_6 as in FIG. 23B.

In this manner, obtaining terminal #i-addressed feedback signal x2911_i allows terminal #i labeled 902_i to know that communication with base station #1 labeled 901_1 is available and to know the frequency band to be used. Note that FIG. 23B is merely an example. In a case where there is no terminal #1-addressed feedback signal x2911_1 as feedback signal 1002, for example, terminal #1 labeled 902_1 recognizes that the communication with base station #1 labeled 901_1 has not been established.

At this time, terminal #i-addressed feedback signal 2911_i includes, for example, information indicating that communication with terminal #i labeled 902_i is available (or indicating that data-symbol-included frame 1003 in FIG. 10 includes a symbol addressed to terminal #i labeled 902_i).

Further, base station #1 labeled 901_1 selects a frequency (band) and a transmission panel antenna and sets a parameter of beamforming based on the "information of the "transmission panel antenna and parameter" of base station #1 labeled 901_1 with high reception quality" transmitted by terminal #i labeled 902_i, and base station #1 labeled 901_1 then transmits terminal #i-addressed feedback signal x2911_i. The ""frequency (band) information" of base station #1 labeled 901_1 with high reception quality" transmitted by terminal #i labeled 902_i may be included.

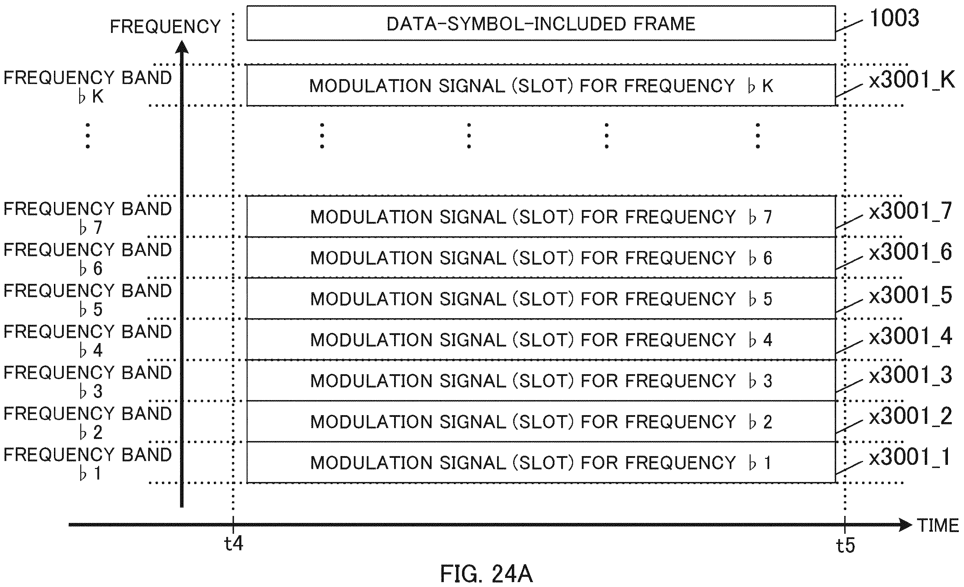

FIG. 24A illustrates an exemplary configuration of data-symbol-included frame 1003 that is present in the time period from t4 to t5 in FIG. 10 and transmitted by base station #1 labeled 901_1. Note that the horizontal axis represents time and the vertical axis represents frequency in FIG. 24A. In this example, data-symbol-included frame 1003 includes areas for "modulation signal (slot) x3001_1 for frequency ♭1, modulation signal (slot) x3001_2 for frequency ♭2, modulation signal (slot) x3001_3 for frequency ♭3, modulation signal (slot) x3001_4 for frequency ♭4, modulation signal (slot) x3001_5 for frequency ♭5, modulation signal (slot) x3001_6 for frequency ♭6, modulation signal (slot) x3001_7 for frequency ♭7, ..., modulation signal (slot) x3001_K for frequency ♭K" as illustrated in FIG. 24A.

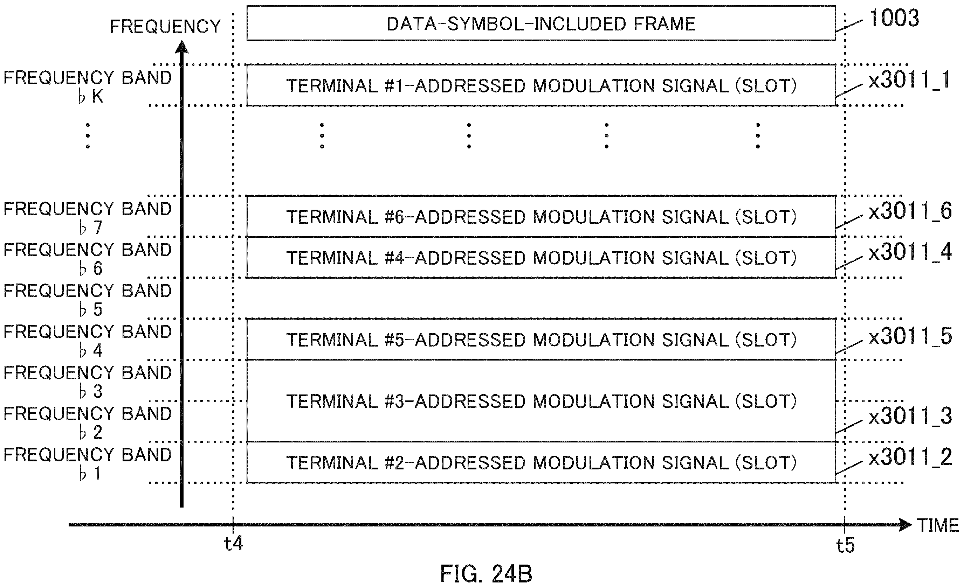

FIG. 24B illustrates exemplary specific modulation signal (slot) assignment for data-symbol-included frame 1003 in the areas for "modulation signal (slot) x3001_1 for frequency ♭1, modulation signal (slot) x3001_2 for frequency ♭2, modulation signal (slot) x3001_3 for frequency ♭3, modulation signal (slot) x3001_4 for frequency ♭4, modulation signal (slot) x3001_5 for frequency ♭5, modulation signal (slot) x3001_6 for frequency ♭6, modulation signal (slot) x3001_7 for frequency ♭7, ..., modulation signal (slot) x3001_K for frequency ♭K" illustrated in FIG. 24A.

As in FIG. 22B, for example, terminal #1 labeled 902_1 transmits terminal #1 "sector sweep reference signal" x2811_1, terminal #2 labeled 902_2 transmits terminal #2 "sector sweep reference signal" x2811_2, terminal #3 labeled 902_3 transmits terminal #3 "sector sweep reference signal" x2811_3, and other terminals also transmit sector sweep reference signals.

As in FIG. 24B, base station #1 labeled 901_1 transmits terminal #1-addressed modulation signal (slot) x3011_1 using frequency band ♭K based on terminal #1 "sector sweep reference signal" x2811_1.

Base station #1 labeled 901_1 transmits terminal #2-addressed modulation signal (slot) x3011_2 using frequency band ♭1 based on terminal #2 "sector sweep reference signal" x2811_2 as in FIG. 24B.

Base station #1 labeled 901_1 transmits terminal #3-addressed modulation signal (slot) x3011_3 using frequency bands ♭2 and ♭3 based on terminal #3 "sector sweep reference signal" 2811_3 as in FIG. 24B.

Base station #1 labeled 901_1 transmits terminal #4-addressed modulation signal (slot) x3011_4 using frequency band ♭6 based on terminal #4 "sector sweep reference signal" 2811_4 as in FIG. 24B.

Base station #1 labeled 901_1 transmits terminal #5-addressed modulation signal (slot) x3011_5 using frequency band ♭4 based on terminal #5 "sector sweep reference signal" 2811_5 as in FIG. 24B.

Base station #1 labeled 901_1 transmits terminal #6-addressed modulation signal (slot) x3011_6 using frequency band ♭7 based on terminal #6 "sector sweep reference signal" 2811_6 as in FIG. 24B.

At this time, terminal #i-addressed modulation signal (slot) x3011_i includes, for example, a data symbol (data and/or information) addressed to terminal #i labeled 902_i.

In this manner, terminal #i-addressed modulation signal (slot) x3011_i allows terminal #i labeled 902_i to know that communication with base station #1 labeled 901_1 is available and to know the frequency band to be used. Note that FIG. 24B is merely an example. In a case where there is no terminal #1-addressed modulation signal (slot) x3011_1 as data-symbol-included frame 1003, for example, terminal #1 labeled 902_1 recognizes that the communication with base station #1 labeled 901_1 has not been established.

Further, base station #1 labeled 901_1 selects a frequency (band) and a transmission panel antenna and sets a parameter of beamforming based on the "information of the "transmission panel antenna and parameter" of base station #1 labeled 901_1 with high reception quality" transmitted by terminal #i labeled 902_i, and base station #1 labeled 901_1 then transmits terminal #i-addressed modulation signal (slot) x3011_i. The ""frequency (band) information" of base station #1 labeled 901_1 with high reception quality" transmitted by terminal #i labeled 902_i may be included.

Note that, in FIGS. 23A and 23B, base station #1 labeled 901_1 may estimate the "frequency (band)" and the "transmission panel antenna and parameter" of terminal #i labeled 902_1 with high reception quality in receiving "terminal #i "sector sweep reference signal" x2811_i transmitted by terminal #i labeled 902_i", and the estimated information may be included in terminal #i-addressed feedback signal x2911_i.

Terminal #i labeled 902_i selects a frequency (band) and a transmission panel antenna and determines a beamforming method based on the information of "frequency (band)" and "transmission panel antenna and parameter" of terminal #i labeled 902_i with high reception quality obtained from base station #1 labeled 901_1, and terminal #i labeled 902_i then transmits a symbol, a frame, and/or a modulation signal to base station #1 labeled 901_1. This produces the effect of enhancing data reception quality in base station #1 labeled 901_1.

Incidentally, in the time period from t3 to t4 in FIG. 10, terminal #i labeled 902_i may transmit, to base station #1 labeled 901_1, a modulation signal including information indicating successful reception of a signal from base station #1 labeled 901_1, such as acknowledgement (ACK).

Note that, terminal #i-addressed modulation signal (slot) x3011_i in FIG. 24B may include, in addition to the data symbol, a "reference signal such as a demodulation reference signal (DMRS), phase tracking reference signal (PTRS), or sounding reference signal (SRS)", a pilot symbol, a pilot signal, a preamble, and a symbol including control information, for example. Examples of the symbol including the control information may include information of a destination terminal (ID for identifying the terminal), a transmission method of the modulation signal, information of the modulation scheme, information of the error correction coding scheme (code length, code rate, etc.), information of the modulation and coding scheme (MCS), and the like.

FIG. 18 illustrates an exemplary state where base station #1 labeled 901_1 and "terminal #1 labeled 902_1, terminal #2 labeled 902_2, terminal #3 labeled 902_3, terminal #4 labeled 902_4, terminal #5 labeled 902_5, and terminal #6 labeled 902_6" communicate with each other as illustrated in FIG. 9. (A) of FIG. 18 illustrates an exemplary modulation signal transmission state of base station #1 labeled 901_1, and (B) of FIG. 18 illustrates an exemplary modulation signal transmission state of "terminal #1 labeled 902_1, terminal #2 labeled 902_2, terminal #3 labeled 902_3, terminal #4 labeled 902_4, terminal #5 labeled 902_5, and terminal #6 labeled 902_6". Note that the horizontal axes represent time in (A) and (B) of FIG. 18.

First, base station #1 labeled 901_1 transmits sector sweep reference signal 1801_1. Note that this has already been described with reference to FIG. 10, and the description thereof will be thus omitted.

Then, a terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits sector sweep reference signal 1851_1. Note that this has already been described with reference to, for example, FIGS. 21, 22A, 22B, 15A, 15B, etc.

Base station #1 labeled 901_1 transmits feedback signal 1802_1. Note that this has already been described with reference to FIGS. 23A and 23B, and the description thereof will be thus omitted.

After that, base station #1 labeled 901_1 transmits "data-symbol-included frame 1803_1". Note that this has already been described with reference to FIGS. 24A and 24B, and the description thereof will be thus omitted. (Hence, "data-symbol-included frame 1803_1" is considered to be a frame for downlink, for example).

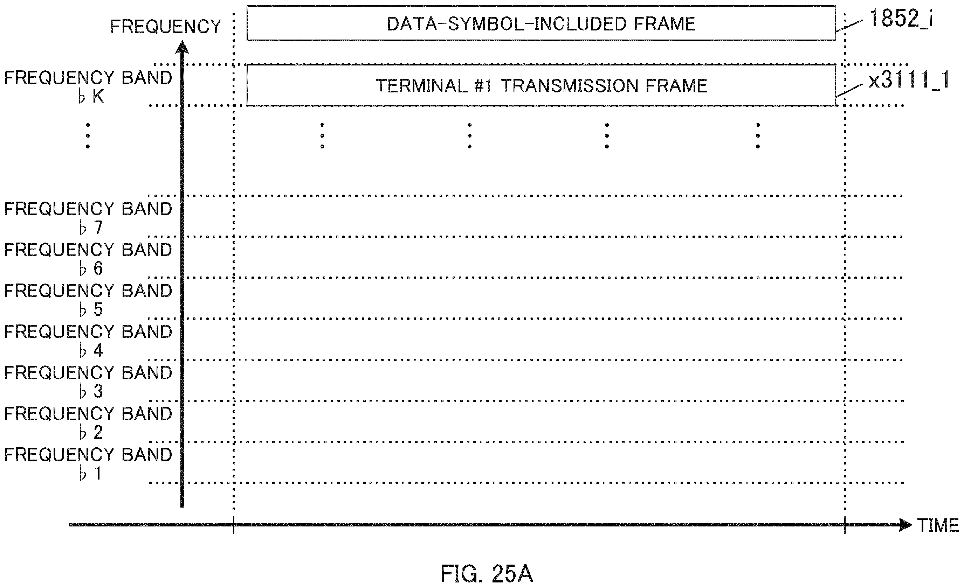

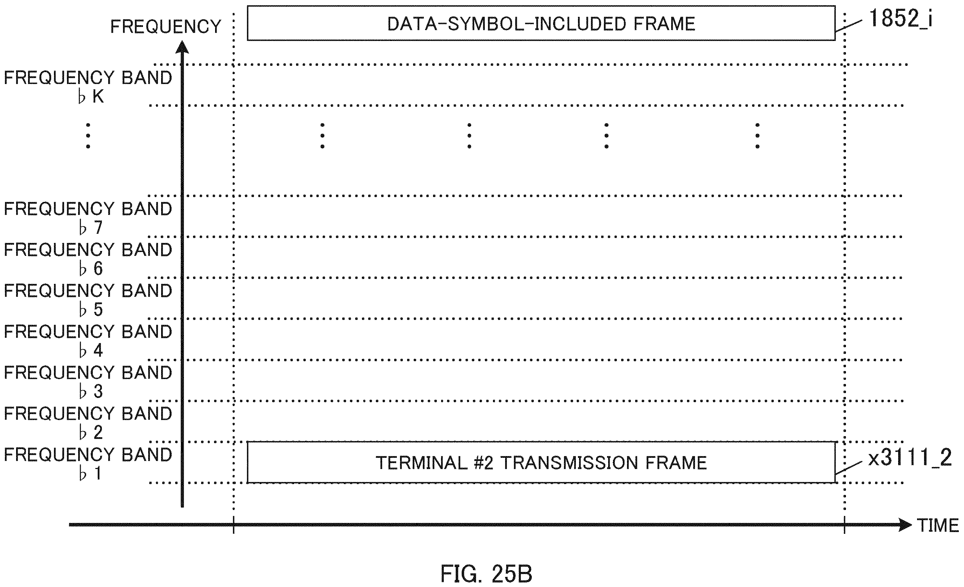

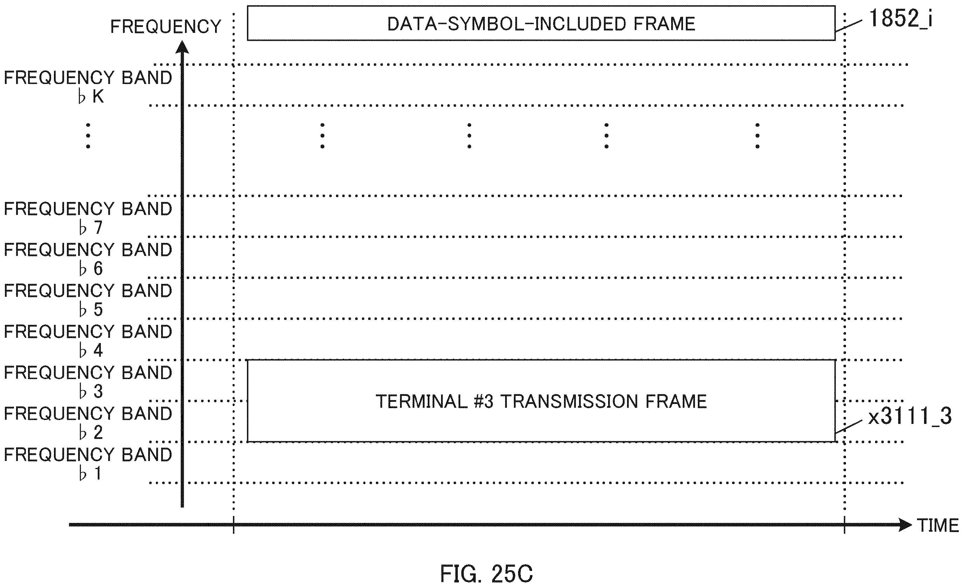

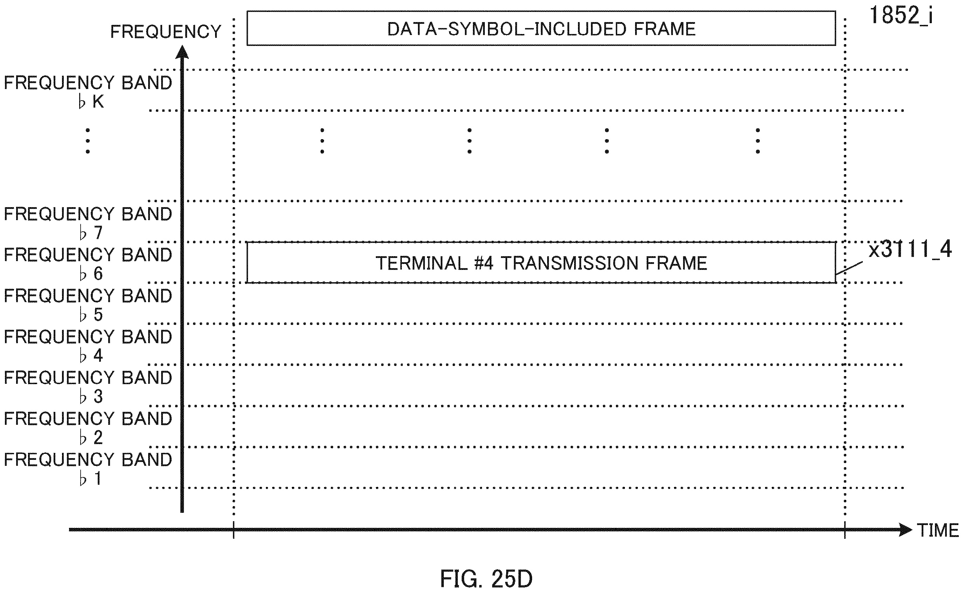

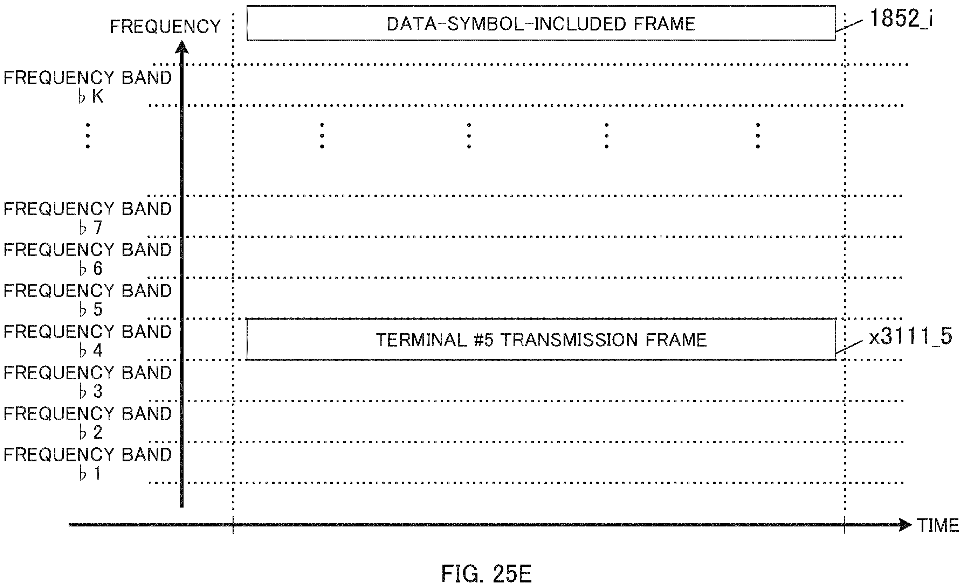

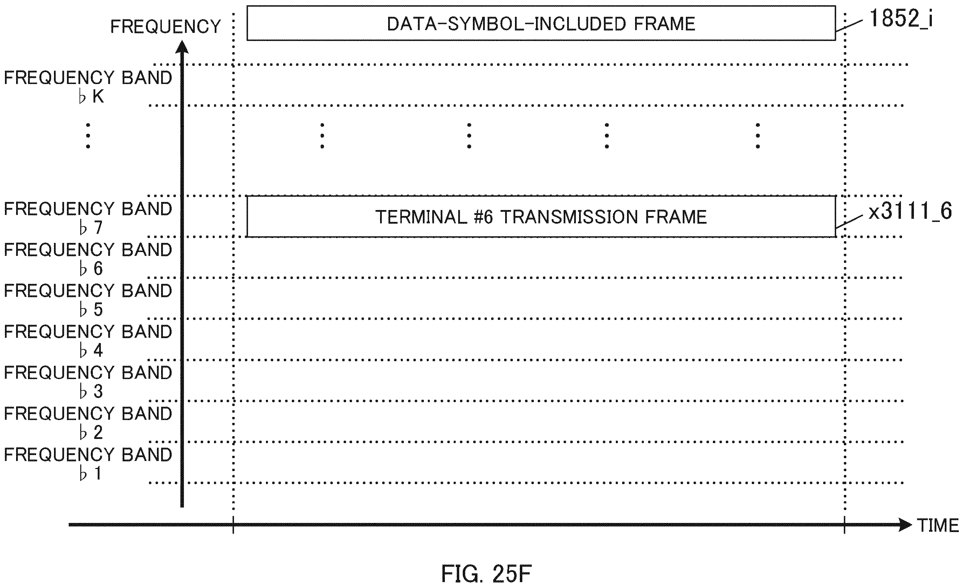

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_1". Note that a configuration of the frame will be described later with reference to FIGS. 25A, 25B, 25C, 25D, 25E, and 25F. (Hence, "data-symbol-included frame 1852_1" is considered to be a frame for uplink, for example).

Next, base station #1 labeled 901_1 transmits "data-symbol-included frame 1803_2". Note that a configuration method of "data-symbol-included frame 1803_2" is as described with reference to FIGS. 24A and 24B.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_2". Note that a configuration of the frame will be described later with reference to FIGS. 25A, 25B, 25C, 25D, 25E, and 25F.

FIG. 19 illustrates an exemplary modulation signal transmission state of base station #1 labeled 901_1 and an exemplary modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" after the state in FIG. 18.

(A) of FIG. 19 illustrates an exemplary modulation signal transmission state of base station #1 labeled 901_1, and it is a temporal continuation from the modulation signal transmission state of base station #1 labeled 901_1 in (A) of FIG. 18.

(B) of FIG. 19 illustrates an exemplary modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6", and it is a temporal continuation from the modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" in (B) of FIG. 18.

Note that the horizontal axes represent time in (A) and (B) of FIG. 19.

After the states in (A) and (B) of FIG. 18, base station #1 labeled 901_1 transmits "data-symbol-included frame 1803_3". Note that a configuration method of "data-symbol-included frame 1803_3" is as described with reference to FIGS. 24A and 24B.

The terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_3". Note that a configuration of the frame will be described later with reference to FIGS. 25A, 25B, 25C, 25D, 25E, and 25F.

Next, base station #1 labeled 901_1 transmits sector sweep reference signal 1801_2. Note that this has already been described with reference to FIG. 10, and the description thereof will be thus omitted.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits sector sweep reference signal 1851_2. Note that this has already been described with reference to, for example, FIGS. 21, 22A, 22B, 15A, 15B, etc., and the description thereof will be thus omitted.

Base station #1 labeled 901_1 transmits feedback signal 1802_2. Note that this has already been described with reference to FIGS. 23A and 23B, and the description thereof will be thus omitted.

After that, base station #1 labeled 901_1 transmits "data-symbol-included frame 1803_4". Note that this has already been described with reference to FIGS. 24A and 24B, and the description thereof will be thus omitted.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_4". Note that a configuration of the frame will be described later with reference to FIGS. 25A, 25B, 25C, 25D, 25E, and 25F.

As described above, base station #1 labeled 901_1 and the terminal transmit the sector sweep reference signals before the "transmission of the "data-symbol-included frames" by base station #1 labeled 901_1 and/or the transmission of the "data-symbol-included frames" by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6""", and again transmit the sector sweep reference signals after the "transmission of the "data-symbol-included frames" by base station #1 labeled 901_1 and/or the transmission of the "data-symbol-included frames" by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6""". Base station #1 labeled 901_1 and the terminal then each configure a frequency (band), select a transmission panel antenna to be used, and configure transmit beamforming. This produces the effect that the base station and/or the terminal achieve high data reception quality.

Next, a description will be given of an exemplary configuration of "data-symbol-included frame 1852_i" transmitted by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" with reference to FIGS. 25A, 25B, 25C, 25D, 25E, and 25F. Note that i is an integer equal to or greater than 1, for example, and the horizontal axis represents time and the vertical axis represents frequency in FIGS. 25A, 25B, 25C, 25D, 25E, and 25F.

As illustrated in FIGS. 25A, 25B, 25C, 25D, 25E, and 25F, there are frequency band ♭1, frequency band ♭2, frequency band ♭3, frequency band ♭4, frequency band ♭5, frequency band ♭6, frequency band ♭7, ..., frequency band ♭K for "data-symbol-included frame 1852_i".

FIG. 25A illustrates "data-symbol-included frame 1852_i" transmitted by terminal #1 labeled 902_1, and terminal #1 labeled 902_1 transmits "terminal #1 transmission frame (including a data symbol) x3111_1" using frequency band ♭K as illustrated in FIG. 25A.

FIG. 25B illustrates "data-symbol-included frame 1852_i" transmitted by terminal #2 labeled 902_2, and terminal #2 labeled 902_2 transmits "terminal #2 transmission frame (including a data symbol) x3111_2" using frequency band ♭1 as illustrated in FIG. 25B.

FIG. 25C illustrates "data-symbol-included frame 1852_i" transmitted by terminal #3 labeled 902_3, and terminal #3 labeled 902_3 transmits "terminal #3 transmission frame (including a data symbol) x3111_3" using frequency bands ♭2 and ♭3 as illustrated in FIG. 25C.

FIG. 25D illustrates "data-symbol-included frame 1852_i" transmitted by terminal #4 labeled 902_4, and terminal #4 labeled 902_4 transmits "terminal #4 transmission frame (including a data symbol) x3111_4" using frequency band ♭6 as illustrated in FIG. 25D.

FIG. 25E illustrates "data-symbol-included frame 1852_i" transmitted by terminal #5 labeled 902_5, and terminal #5 labeled 902_5 transmits "terminal #5 transmission frame (including a data symbol) x3111_5" using frequency band ♭4 as illustrated in FIG. 25E.

FIG. 25F illustrates "data-symbol-included frame 1852_i" transmitted by terminal #6 labeled 902_6, and terminal #6 labeled 902_6 transmits "terminal #6 transmission frame (including a data symbol) x3111_6" using frequency band ♭7 as illustrated in FIG. 25F.

As described above, "data-symbol-included frame 1852_i" transmitted by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" is subjected to, for example, frequency division (OFDMA here) and transmitted by each terminal, and base station #1 labeled 901_1 receives the frame transmitted by the terminal, thereby preventing interference and achieving high data reception quality.

Note that terminal #1 transmission frame x3111_1, terminal #2 transmission frame x3111_2, terminal #3 transmission frame x3111_3, terminal #4 transmission frame x3111_4, terminal #5 transmission frame x3111_5, and terminal #6 transmission frame x3111_6 in FIGS. 25A, 25B, 25C, 25D, 25E, and 25F may include, in addition to the data symbol, a "reference signal such as DMRS, PTRS, or SRS", a pilot symbol, a pilot signal, a preamble, and a symbol including control information, for example.

In FIGS. 25A, 25B, 25C, 25D, 25E, and 25F, a description has been given of a case where the terminals perform frequency division on the frames to be transmitted, but the terminals may perform spatial division on the frames to be transmitted using multi user-multiple-input multiple-output (MU-MIMO).

Note that, although the present embodiment has provided a description of a case where frequency (bands) for signals transmitted by a base station and frequency (bands) for signals transmitted by a terminal are the same or partially overlap each other, by way of example, the same can be implemented in a case where frequency (bands) for signals transmitted by a base station and frequency (bands) for signals transmitted by a terminal are different or partially different from each other.

Further, the present embodiment has provided a description of a case where a terminal transmits a modulation signal in a multi-carrier scheme such as OFDM, for example, but the scheme is not limited to this. For example, a terminal may transmit a signal in a single-carrier scheme when transmitting a signal of a frame in FIGS. 14, 20A, 20B, 20C, 20D, 20E, 20F, etc.

In FIG. 14, for example, terminal #1 labeled 902_1 may transmit terminal #1 "sector sweep reference signal" 1401_1 in frequency band ♭K in a single-carrier scheme. Further, in FIG. 20A, terminal #1 labeled 902_1 may transmit "terminal #1 transmission frame" 2001_1 in frequency band ♭K in a single-carrier scheme. Note that other terminals may also transmit a signal in a single-carrier scheme.

(Embodiment 3)

In Embodiment 3, a description will be given of a communication system, communication apparatus, and communication method using sector sweep in a case where a base station and a terminal performs transmission in a single-carrier scheme. Note that the drawings used in Embodiment 1 are sometimes used in the following description of Embodiment 3.

FIGS. 1A, 1B, and 1C illustrate exemplary configurations of, for example, a base station, an access point, a terminal, and a repeater according to Embodiment 3, and the description of the detailed operations will be omitted since they have already been described with reference to FIGS. 2, 3, 4, 5, 6, 7, and 8. For FIGS. 2, 3, 4, 5, 6, 7, and 8, the description of the detailed operations will also be omitted since they have already been described.

For example, examples of the single-carrier scheme include "discrete Fourier transform (DFT)-spread orthogonal frequency division multiplexing (OFDM)" (DFT-S OFDM), "trajectory constrained DFT-spread OFDM", "constrained DFT-spread OFDM" (constrained DFT-S OFDM), "OFDM based single carrier (SC)", "single carrier (SC)-frequency division multiple access (FDMA)", "guard interval DFT-spread OFDM", a time-domain implementation single carrier scheme (e.g., single carrier (SC)-QAM), and the like.

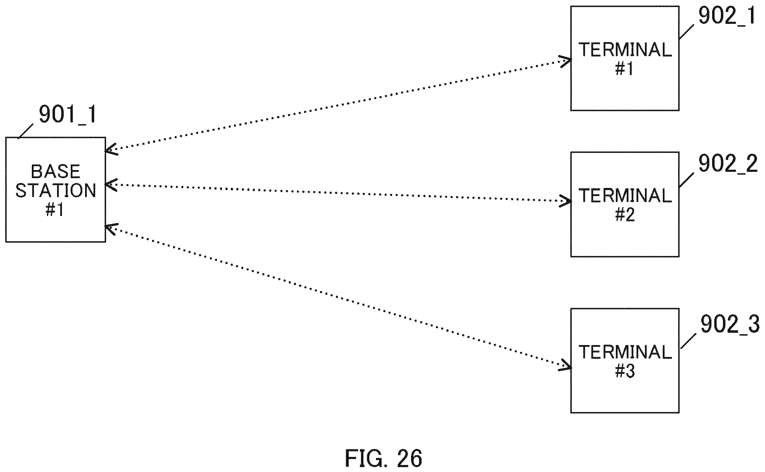

FIG. 26 illustrates an exemplary communication state in Embodiment 3. As illustrated in FIG. 26, a case to be discussed is where base station #1 labeled 901_1 communicates with terminal #1 labeled 902_1, terminal #2 labeled 902_2, and terminal #3 labeled 902_3. A relationship between a base station and terminals, however, is not limited to this example, and the base station may communicate with one or more terminals, for example.

Note that the following description is about an exemplary case where the base station and the terminals perform time division duplex (TDD), time division multiple access (TDMA), or time division multiplexing (TDM).

FIG. 10 illustrates an example of modulation signal 1000 transmitted by base station #1 labeled 901_1 in FIG. 26. In FIG. 10, the horizontal axis represents time. In the time period from time t0 to t1, sector sweep (sector-sweep level) reference signal 1001 is present. Note that sector sweep reference signal 1001 will be described later.

The time period from time t1 to t2 is a terminal response period. Note that the terminal response will be described later.

In the time period from time t2 to t3, feedback signal 1002 is present. Note that feedback signal 1002 will be described later.

In the time period from time t4 to t5, data-symbol-included frame 1003 is present. Note that data-symbol-included frame 1003 will be described later.

The reference signal for sector sweep is referred to as sector sweep reference signal 1001 in FIG. 10, but the name is not limited thereto and may be a reference signal, a reference symbol, a training signal, a training symbol, or the like. The signal denoted by reference sign 1002 is referred to as feedback signal 1002, but the name is not limited thereto and may be a feedback symbol, a terminal-addressed signal, a terminal-addressed symbol, a control signal, a control symbol, or the like. In addition, the frame including a data symbol is referred to as data-symbol-included frame 1003, but the name is not limited thereto and may be a frame, slot, mini-slot, unit, or the like.

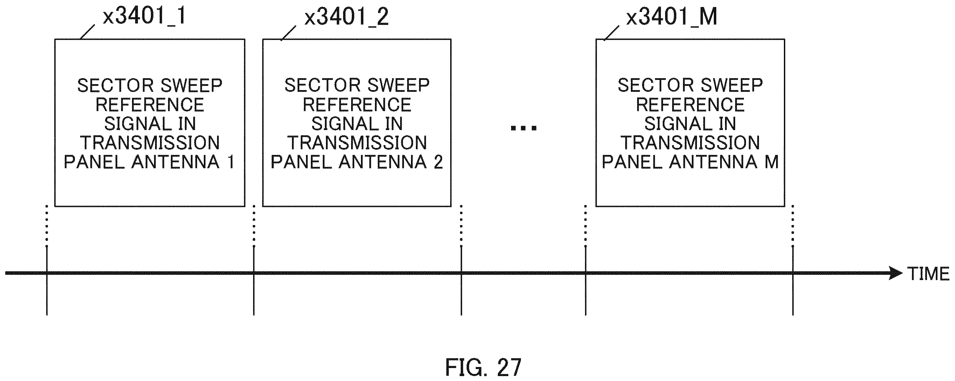

FIG. 27 illustrates examples of sector sweep reference signal 1001 in FIG. 10 transmitted by base station #1 labeled 901_1 in FIG. 26. Note that the horizontal axis represents time in FIG. 27.

For example, base station #1 labeled 901_1 with the configuration in FIG. 1A, 1B, or 1C transmits sector sweep reference signal x3401_1 in transmission panel antenna 1 from transmission panel antenna 1 labeled 106_1.

That is, as illustrated in FIG. 27, base station #1 labeled 901_1 with the configuration in FIG. 1A, 1B, or 1C transmits sector sweep reference signal x3401_i in transmission panel antenna i from transmission panel antenna i labeled 106_i. Note that i is an integer from 1 to M (both inclusive).

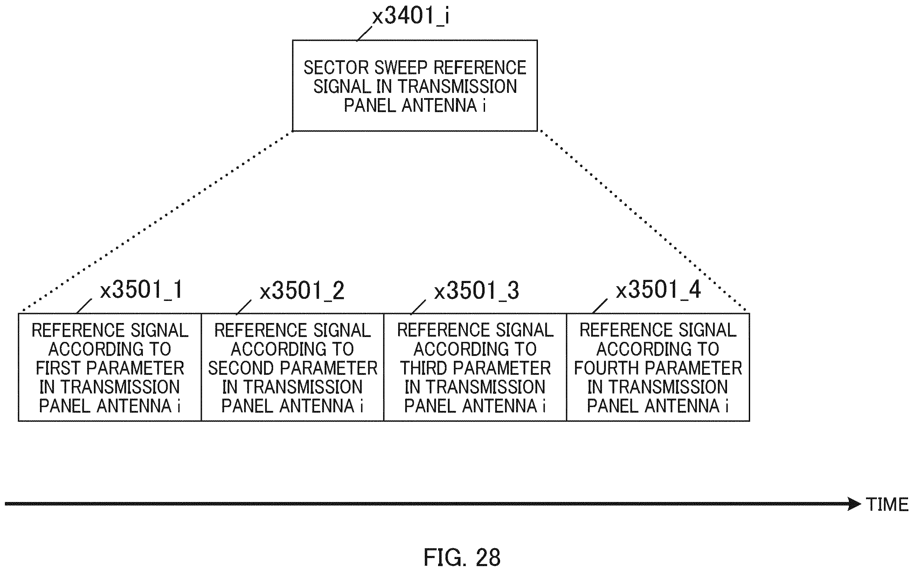

FIG. 28 illustrates an exemplary configuration of "sector sweep reference signal x3401_i in transmission panel antenna i" in FIG. 27. Note that the horizontal axis represents time in FIG. 28.

For example, base station #1 labeled 901_1 with the configuration in FIG. 1A, 1B, or 1C includes the configuration in FIG. 3 as transmission panel antenna i labeled 106_i.

A description will be given of "reference signal x3501_1 according to first parameter in transmission panel antenna i".

When base station #1 labeled 901_1 transmits "reference signal x3501_1 according to first parameter in transmission panel antenna i" illustrated in FIG. 28, base station #1 labeled 901_1 sets the multiplication coefficient in multiplier 304_1 in transmission panel antenna i labeled 106_i as w1(i, 1). When first transmission signal 303_1 of "reference signal x3501_1 according to first parameter in transmission panel antenna i" is tx1ref1(t), multiplier 304_1 obtains tx1ref1(t) $\times$ w1(i, 1). Then, base station #1 labeled 901_1 transmits tx1ref1(t) $\times$ w1(i, 1) from antenna 306_1 in FIG. 3. Note that t represents time.

When base station #1 labeled 901_1 transmits "reference signal x3501_1 according to first parameter in transmission panel antenna i" illustrated in FIG. 28, base station #1 labeled 901_1 sets the multiplication coefficient in multiplier 304_2 in transmission panel antenna i labeled 106_i as w2(i, 1). When second transmission signal 303_2 of "reference signal x3501_1 according to first parameter in transmission panel antenna i" is tx2ref1(t), multiplier 304_2 obtains tx2ref1(t) $\times$ w2(i, 1). Then, base station #1 labeled 901_1 transmits tx2ref1(t) $\times$ w2(i, 1) from antenna 306_2 in FIG. 3.

When base station #1 labeled 901_1 transmits "reference signal x3501_1 according to first parameter in transmission panel antenna i" illustrated in FIG. 28, base station #1 labeled 901_1 sets the multiplication coefficient in multiplier 304_3 in transmission panel antenna i labeled 106_i as w3(i, 1). When third transmission signal 303_3 of "reference signal x3501_1 according to first parameter in transmission panel antenna i" is tx3ref1(t), multiplier 304_3 obtains tx3ref1(t) $\times$ w3(i, 1). Then, base station #1 labeled 901_1 transmits tx3ref1(t) $\times$ w3(i, 1)

from antenna 306_3 in FIG. 3.

When base station #1 labeled 901_1 transmits "reference signal x3501_1 according to first parameter in transmission panel antenna i" illustrated in FIG. 28, base station #1 labeled 901_1 sets the multiplication coefficient in multiplier 304_4 in transmission panel antenna i labeled 106_i as w4(i, 1). When fourth transmission signal 303_4 of "reference signal x3501_1 according to first parameter in transmission panel antenna i" is tx4ref1(t), multiplier 304_4 obtains tx4ref1(t) × w4(i, 1). Then, base station #1 labeled 901_1 transmits tx4ref1(t) × w4(i, 1) from antenna 306_4 in FIG. 3.

A description will be given of "reference signal x3501_j according to j-th parameter in transmission panel antenna i".

When base station #1 labeled 901_1 transmits "reference signal x3501_j according to j-th parameter in transmission panel antenna i" illustrated in FIG. 28, base station #1 labeled 901_1 sets the multiplication coefficient in multiplier 304_1 in transmission panel antenna i labeled 106_i as w1(i, j). When first transmission signal 303_1 of "reference signal x3501_j according to j-th parameter in transmission panel antenna i" is tx1refj(t), multiplier 304_1 obtains tx1refj(t) × w1(i, j). Then, base station #1 labeled 901_1 transmits tx1refj(t) × w1(i, j) from antenna 306_1 in FIG. 3. Note that t represents time.

When base station #1 labeled 901_1 transmits "reference signal x3501_j according to j-th parameter in transmission panel antenna i" illustrated in FIG. 28, base station #1 labeled 901_1 sets the multiplication coefficient in multiplier 304_2 in transmission panel antenna i labeled 106_i as w2(i, j). When second transmission signal 303_2 of "reference signal x3501_j according to j-th parameter in transmission panel antenna i" is tx2refj(t), multiplier 304_2 obtains tx2refj(t) × w2(i, j). Then, base station #1 labeled 901_1 transmits tx2refj(t) × w2(i, j) from antenna 306_2 in FIG. 3.

When base station #1 labeled 901_1 transmits "reference signal x3501_j according to j-th parameter in transmission panel antenna i" illustrated in FIG. 28, base station #1 labeled 901_1 sets the multiplication coefficient in multiplier 304_3 in transmission panel antenna i labeled 106_i as w3(i, j). When third transmission signal 303_3 of "reference signal x3501_j according to j-th parameter in transmission panel antenna i" is tx3refj(t), multiplier 304_3 obtains tx3refj(t) × w3(i, j). Then, base station #1 labeled 901_1 transmits tx3refj(t) × w3(i, j) from antenna 306_3 in FIG. 3.

When base station #1 labeled 901_1 transmits "reference signal x3501_j according to j-th parameter in transmission panel antenna i" illustrated in FIG. 28, base station #1 labeled 901_1 sets the multiplication coefficient in multiplier 304_4 in transmission panel antenna i labeled 106_i as w4(i, j). When fourth transmission signal 303_4 of "reference signal x3501_j according to j-th parameter in transmission panel antenna i" is tx4refj(t), multiplier 304_4 obtains tx4refj(t) × w4(i, j). Then, base station #1 labeled 901_1 transmits tx4refj(t) × w4(i, j) from antenna 306_4 in FIG. 3.

Note that j is an integer from 1 to 4 (both inclusive) in the case of FIG. 12. The number Z of parameter changes is four in FIG. 28, but the number Z of parameter changes is not limited to four. The same can be implemented as long as Z is an integer equal to or greater than 1 or an integer equal to or greater than 2. At this time, j is an integer from 1 to Z (both inclusive).

As illustrated in FIGS. 27 and 28, when base station #1 labeled 901_1 transmits "sector sweep reference signal x3401_i in transmission panel antenna i", "reference signal x3501_j according to j-th parameter in transmission panel antenna i" includes, for example, the following information:

· Identification number (ID) of the transmission panel antenna, which corresponds to i here, for example;

· Identification number (ID) of the parameter used for beamforming (directivity control), which corresponds to j here, for example; and

· The number of slots in which sector sweep reference signals can be transmitted when the terminals transmit the sector sweep reference signals (the number of terminals that can transmit the sector sweep reference signals), which will be described later.

Note that "reference signal x3501_j according to j-th parameter in transmission panel antenna i" may include other information.

Transmission of the "identification number (ID) of the transmission panel antenna" and the "identification number (ID) of the parameter used for beamforming (directivity control)" by base station #1 labeled 901_1 allows the terminals to recognize the "identification number (ID) of the transmission panel antenna" and the "identification number (ID) of the parameter used for beamforming (directivity control)" that have allowed successful reception; accordingly, base station #1 labeled 901_1 and the terminals can perform appropriate control. This produces the effect of enhancing data reception quality.

Note that "the number of slots in which sector sweep reference signals can be transmitted when the terminals transmit the sector sweep reference signals (the number of terminals that can transmit the sector sweep reference signals)" may be changeable according to the frame and/or time, for example. This produces the effect of enhancing data transmission efficiency of a communication system.

Next, a description will be given of an operation in the time period from time t1 to t2 in FIG. 10, which is the terminal response period.

FIG. 13 illustrates an exemplary operation in the time period from time t1 to t2, which is the terminal response period. Note that the horizontal axis represents time in FIG. 13.

As illustrated in FIGS. 10 and 13, for example, base station #1 labeled 901_1 transmits sector sweep reference signals in the time period from time t0 to t1. After that, the terminal response period, which is the time period from time t1 to t2, includes terminal "sector sweep reference signal" first transmission period 1301_1, terminal "sector sweep reference signal" second transmission period 1301_2, terminal "sector sweep reference signal" third transmission period 1301_3, and terminal "sector sweep reference signal" fourth transmission period 1301_4, as illustrated in FIG. 13.

Thus, in the case of FIG. 13, "the number of slots in which sector sweep reference signals can be transmitted when the terminals transmit the sector sweep reference signals (the number of terminals that can transmit the sector sweep reference signals)" is set to four by base station #1 labeled 901_1.

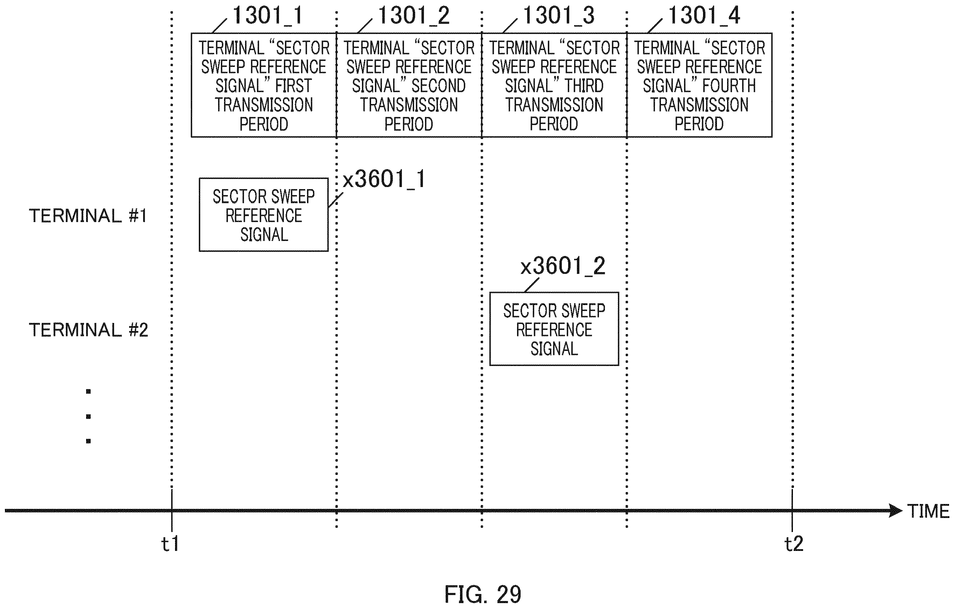

FIG. 29 illustrates exemplary occupation by the terminals in terminal "sector sweep reference signal" first transmission period 1301_1, terminal "sector sweep reference signal" second transmission period 1301_2, terminal "sector sweep reference signal" third transmission period 1301_3, and terminal "sector sweep reference signal" fourth transmission period 1301_4 illustrated in FIG. 13. Note that the horizontal axis represents time in FIG. 29.

Terminal #1 labeled 902_1 in FIG. 26 receives sector sweep reference signal 1001 transmitted by base station #1 labeled 901_1 and estimates the "transmission panel antenna and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001.

Terminal #1 labeled 902_1 estimates, for example, "transmission panel antenna a1 and parameter b1" as the "transmission panel antenna and parameter" with high reception quality.

In addition, while estimating the "transmission panel antenna and parameter" with high reception quality, terminal #1 labeled 902_1 simultaneously obtains information of "the number of slots in which sector sweep reference signals can be transmitted when the terminals transmit the sector sweep reference signals (the number of terminals that can transmit the sector sweep reference signals)". In the case of FIG. 29, terminal #1 labeled 902_1 obtains information indicating that "the number of slots in which sector sweep reference signals can be transmitted when the terminals transmit the sector sweep reference signals (the number of terminals that can transmit the sector sweep reference signals)" is four.

In this case, terminal #1 labeled 902_1 obtains, for example, any one of the values "0", "1", "2", and "3" using a random number. For example, terminal #1 labeled 902_1 obtains "0" using a random number. In this case, since "0" + 1 = 1, terminal #1 labeled 902_1 transmits sector sweep reference signal x3601_1 using "terminal "sector sweep reference signal" first (= "0" + 1) transmission period 1301_1" in FIG. 29. Here, the transmission period for the sector sweep reference signal is configured using a random number, but the transmission period for the sector sweep reference signal may be configured using, instead of a random number, a random number of an integer or a natural number, an irregular integer or natural number, a regular integer or natural number, an integer or a natural number held uniquely by the terminal, for example. Hence, the configuration of the transmission period for the sector sweep reference signal is not limited to the above example, and the transmission period for the sector sweep reference signal is configured for each terminal, for example. This is also applicable to the following similar descriptions.

Note that sector sweep reference signal 1401_1 includes information of the "transmission panel antenna and parameter" with high reception quality obtained by terminal #1 labeled 902_1, that is, information of "transmission panel antenna a1 and parameter b1". This will be described later.

Likewise, terminal #2 labeled 902_2 in FIG. 26 receives sector sweep reference signal 1001 transmitted by base station #1 labeled 901_1 and estimates the "transmission panel antenna and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001.

Terminal #2 labeled 902_2 estimates, for example, "transmission panel antenna a2 and parameter b2" as the "transmission panel antenna and parameter" with high reception quality.

In addition, while estimating the "transmission panel antenna and parameter" with high reception quality, terminal #2 labeled 902_2 simultaneously obtains information of "the number of slots in which sector sweep reference signals can be transmitted when the terminals transmit the sector sweep reference signals (the number of terminals that can transmit the sector sweep reference signals)". In the case of FIG. 29, terminal #2 labeled 902_2 obtains information indicating that "the number of slots in which sector sweep reference signals can be transmitted when the terminals transmit the sector sweep reference signals (the number of terminals that can transmit the sector sweep reference signals)" is four.

In this case, terminal #2 labeled 902_2 obtains, for example, any one of the values "0", "1", "2", and "3" using a random number. For example, terminal #2 labeled 902_2 obtains "2" using a random number. In this case, since "2" + 1 = 3, terminal #2 labeled 902_2 transmits sector sweep reference signal x3601_2 using "terminal "sector sweep reference signal" third (= "2" + 1) transmission period 1301_3" in FIG. 29.

Note that sector sweep reference signal 1401_2 includes information of the "transmission panel antenna and parameter" with high reception quality obtained by terminal #2 labeled 902_2, that is, information of "transmission panel antenna a2 and parameter b2". This will be described later.

Thus, terminal #i labeled 902_i receives sector sweep reference signal 1001 transmitted by base station #1 labeled 901_1 and estimates the "transmission panel antenna and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. Note that i is an integer equal to or greater than 1, for example.

Terminal #i labeled 902_i estimates, for example, "transmission panel antenna ai and parameter bi" as the "transmission panel antenna and parameter" with high reception quality.

In addition, while estimating the "transmission panel antenna and parameter" with high reception quality, terminal #i labeled 902_i simultaneously obtains information of "the number of slots in which sector sweep reference signals can be transmitted when the terminals transmit the sector sweep reference signals (the number of terminals that can transmit the sector sweep reference signals)". In the case of FIG. 29, terminal #i labeled 902_i obtains information indicating that "the number of slots in which sector sweep reference signals can be transmitted when the terminals transmit the sector sweep reference signals (the number of terminals that can transmit the sector sweep reference signals)" is four.

In this case, terminal #i labeled 902_i obtains, for example, any one of the values "0", "1", "2", and "3" using a random number. For example, terminal #i labeled 902_i obtains "j" using a random number. Note that j is any one of the values "0", "1", "2", and "3". In this case, terminal #i labeled 902_i transmits sector sweep reference signal x3601_i using terminal "sector sweep reference signal" ("j" + 1)-th transmission period 1301_("j" + 1) in FIG. 29.

Note that sector sweep reference signal 3601_i includes information of the "transmission panel antenna and parameter" with high reception quality obtained by terminal #i labeled 902_i, that is, information of "transmission panel antenna ai and parameter bi". This will be described later.

In the manner described above, a collision of the sector sweep reference signals transmitted by the respective terminals can be reduced. This produces the effect that the base station can receive more sector sweep reference signals and can communicate with more terminals.

A description will be given of a configuration of sector sweep reference signal x3601_i transmitted by terminal #i labeled 902_i described with reference to FIG. 29. To simplify the description, terminal #i labeled 902_i has the configuration in FIG. 1A, 1B, or 1C. In addition, terminal #i labeled 902_i with the configuration in FIG. 1A, 1B, or 1C includes the configuration in FIG. 3 as transmission panel antenna xi labeled 106_xi. Note that the configuration of terminal #i labeled 902_i is not limited to the configuration in FIG. 1A, 1B, or 1C, and the configuration of transmission panel antenna xi labeled 106_xi included in terminal #i labeled 902_i with the configuration in FIG. 1A, 1B, or 1C is not limited to the configuration in FIG. 3.

FIG. 27 illustrates examples of sector sweep reference signal x3401_i transmitted by terminal #i labeled 902_i. Note that the horizontal axis represents time in FIG. 27.

For example, terminal #i labeled 902_i with the configuration in FIG. 1A, 1B, or 1C transmits sector sweep reference signal x3401_1 in transmission panel antenna 1 from transmission panel antenna 1 labeled 106_1.

That is, as illustrated in FIG. 27, terminal #i labeled 902_i with the configuration in FIG. 1A, 1B, or 1C transmits sector sweep reference signal x3401_xi in transmission panel antenna xi from transmission panel antenna xi labeled 106_xi. Note that xi is an integer from 1 to M (both inclusive).

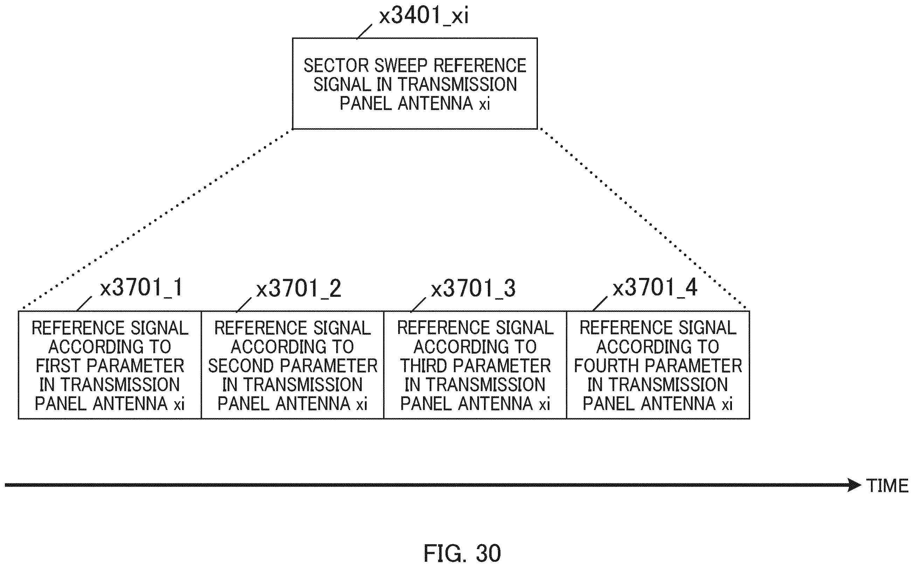

FIG. 30 illustrates an exemplary configuration of "sector sweep reference signal x3401_xi in transmission panel antenna xi" in FIG. 27. Note that the horizontal axis represents time in FIG. 30.

For example, terminal #i labeled 902_i with the configuration in FIG. 1A, 1B, or 1C includes the configuration in FIG. 3 as transmission panel antenna xi labeled 106_xi.

A description will be given of "reference signal x3701_1 according to first parameter in transmission panel antenna xi".

When terminal #i labeled 902_i transmits "reference signal x3701_1 according to first parameter in transmission panel antenna xi" illustrated in FIG. 30, terminal #i labeled 902_i sets the multiplication coefficient in multiplier 304_1 in transmission panel antenna xi labeled 106_xi as w1(xi, 1). When first transmission signal 303_1 of "reference signal x3701_1 according to first parameter in transmission panel antenna xi" is tx1ref1(t), multiplier 304_1 obtains tx1ref1(t) × w1(xi, 1). Then, terminal #i labeled 902_i transmits tx1ref1(t) × w1(xi, 1) from antenna 306_1 in FIG. 3. Note that t represents time.

When terminal #i labeled 902_i transmits "reference signal x3701_1 according to first parameter in transmission panel antenna xi" illustrated in FIG. 30, terminal #i labeled 902_i sets the multiplication coefficient in multiplier 304_2 in transmission panel antenna xi labeled 106_xi as w2(xi, 1). When second transmission signal 303_2 of "reference signal x3701_1 according to first parameter in transmission panel antenna xi" is tx2ref1(t), multiplier 304_2 obtains tx2ref1(t) × w2(xi, 1). Then, terminal #i labeled 902_i transmits tx2ref1(t) × w2(xi, 1) from antenna 306_2 in FIG. 3.

When terminal #i labeled 902_i transmits "reference signal x3701_1 according to first parameter in transmission panel antenna xi" illustrated in FIG. 30, terminal #i labeled 902_i sets the multiplication coefficient in multiplier 304_3 in transmission panel antenna xi labeled 106_xi as w3(xi, 1). When third transmission signal 303_3 of "reference signal x3701_1 according to first parameter in transmission panel antenna xi" is tx3ref1(t), multiplier 304_3 obtains tx3ref1(t) × w3(xi, 1). Then, terminal #i labeled 902_i transmits tx3ref1(t) × w3(xi, 1) from antenna 306_3 in FIG. 3.

When terminal #i labeled 902_i transmits "reference signal x3701_1 according to first parameter in transmission panel antenna xi" illustrated in FIG. 30, terminal #i labeled 902_i sets the multiplication coefficient in multiplier 304_4 in transmission panel antenna xi labeled 106_xi as w4(xi, 1). When fourth transmission signal 303_4 of "reference signal x3701_1 according to first parameter in transmission panel antenna xi" is tx4ref1(t), multiplier 304_4 obtains tx4ref1(t) × w4(xi, 1). Then, terminal #i labeled 902_i transmits tx4ref1(t) × w4(xi, 1) from antenna 306_4 in FIG. 3.

A description will be given of "reference signal 3701_j according to j-th parameter in transmission panel antenna xi".

When terminal #i labeled 902_i transmits "reference signal x3701_j according to j-th parameter in transmission panel antenna xi" illustrated in FIG. 30, terminal #i labeled 902_i sets the multiplication coefficient in multiplier 304_1 in transmission panel antenna xi labeled 106_xi as w1(xi, j). When first transmission signal 303_1 of "reference signal x3701_j according to j-th parameter in transmission panel antenna xi" is tx1refj(t), multiplier 304_1 obtains tx1refj(t) × w1(xi, j). Then, terminal #i labeled 902_i transmits tx1refj(t) × w1(xi, j) from antenna 306_1 in FIG. 3. Note that t represents time.

When terminal #i labeled 902_i transmits "reference signal x3701_j according to j-th parameter in transmission panel antenna xi" illustrated in FIG. 30, terminal #i labeled 902_i sets the multiplication coefficient in multiplier 304_2 in transmission panel antenna xi labeled 106_xi as w2(xi, j). When second transmission signal 303_2 of "reference signal x3701_j according to j-th parameter in transmission panel antenna xi" is tx2refj(t), multiplier 304_2 obtains tx2refj(t) × w2(xi, j). Then, terminal #i labeled 902_i transmits tx2refj(t) × w2(xi, j) from antenna 306_2 in FIG. 3.

When terminal #i labeled 902_i transmits "reference signal x3701_j according to j-th parameter in transmission panel antenna xi" illustrated in FIG. 30, terminal #i labeled 902_i sets the multiplication coefficient in multiplier 304_3 in transmission panel antenna xi labeled 106_xi as w3(xi, j). When third transmission signal 303_3 of "reference signal x3701_j according to j-th parameter in transmission panel antenna xi" is tx3refj(t), multiplier 304_3 obtains tx3refj(t) × w3(xi, j). Then, terminal #i labeled 902_i transmits tx3refj(t) × w3(xi, j) from antenna 306_3 in FIG. 3.

When terminal #i labeled 902_i transmits "reference signal x3701_j according to j-th parameter in transmission panel antenna xi" illustrated in FIG. 30, terminal #i labeled 902_i sets the multiplication coefficient in multiplier 304_4 in transmission panel antenna xi labeled 106_xi as w4(xi, j). When fourth transmission signal 303_4 of "reference signal x3701_j according to j-th parameter in transmission panel antenna xi" is tx4refj(t), multiplier 304_4 obtains tx4refj(t) × w4(xi, j). Then, terminal #i labeled 902_i transmits tx4refj(t) × w4(xi, j) from antenna 306_4 in FIG. 3.

Note that j is an integer from 1 to 4 (both inclusive) in the case of FIG. 30. The number Z of parameter changes is four in FIG. 30, but the number Z of parameter changes is not limited to four. The same can be implemented as long as Z is an integer equal to or greater than 1 or an integer equal to or greater than 2. At this time, j is an integer from 1 to Z (both inclusive).

As illustrated in FIGS. 27 and 30, when terminal #i labeled 902_i transmits "sector sweep reference signal x3401_xi in transmission panel antenna xi", "reference signal x3701_j according to j-th parameter in transmission panel antenna xi" includes, for example, the following information:

· Information of the "transmission panel antenna and parameter" of base station #1 labeled 901_1 with high reception quality, as described above.

Thus, terminal #i labeled 902_i transmits the "information of the "transmission panel antenna and parameter" of base station #1 labeled 901_1 with high reception quality" in "sector sweep reference signal x3401_1 in transmission panel antenna 1", "sector sweep reference signal x3401_2 in transmission panel antenna 2", ..., "sector sweep reference signal x3401_M in transmission panel antenna M" in FIG. 27.

In addition, terminal #i labeled 902_i transmits the "information of the "transmission panel antenna and parameter" of base station #1 labeled 901_1 with high reception quality" in "reference signal x3701_1 according to first parameter in transmission panel antenna xi", "reference signal x3701_2 according to second parameter in transmission panel antenna xi", "reference signal x3701_3 according to third parameter in transmission panel antenna xi", and "reference signal x3701_4 according to fourth parameter in transmission panel antenna xi" in FIG. 30 in ""sector sweep reference signal x3401_1 in transmission panel antenna 1", "sector sweep reference signal x3401_2 in transmission panel antenna 2", ..., "sector sweep reference signal x3401_M in transmission panel antenna M" in FIG. 27".

In this case, base station #1 labeled 901_1 is more likely to receive, even with an omnidirectional antenna for example, any of ""sector sweep reference signal x3401_1 in transmission panel antenna 1", "sector sweep reference signal x3401_2 in transmission panel antenna 2", ..., "sector sweep reference signal x3401_M in transmission panel antenna M" in FIG. 27" transmitted by terminal #i labeled 902_i. This is because terminal #i labeled 902_i performs transmit beamforming (directivity control). This produces the effect that base station #1 labeled 901_1 is more likely to receive the "information of the "transmission panel antenna and parameter" of base station #1 labeled 901_1 with high reception quality" transmitted by terminal #i labeled 902_i. Accordingly, base station #1 labeled 901_1 can transmit a modulation signal to terminal #i labeled 902_i based on the "information of the "transmission panel antenna and parameter" of base station #1 labeled 901_1 with high reception quality", and terminal #i labeled 902_i can receive the modulation signal with high reception quality.

In a case where a plurality of terminals transmit the sector sweep reference signals as in FIG. 29, base station #1 labeled 901_1 can obtain the "information of the "transmission panel antenna and parameter" of base station #1 labeled 901_1 with high reception quality" from the plurality of terminals. This produces the effect that base station #1 labeled 901_1 can transmit modulation signals to the plurality of terminals based on the "information of the "transmission panel antenna and parameter" of base station #1 labeled 901_1 with high reception quality" from the plurality of terminals, and that the plurality of terminals can receive the modulation signals with high reception quality.

As illustrated in FIGS. 27 and 30, when terminal #i labeled 902_i transmits "sector sweep reference signal x3401_xi in transmission panel antenna xi", "reference signal x3701_j according to j-th parameter in transmission panel antenna xi" includes, for example, the following information:

· Identification number (ID) of the transmission panel antenna, which corresponds to i here, for example; and

· Identification number (ID) of the parameter used for beamforming (directivity control), which corresponds to j here, for example.

Transmission of the "identification number (ID) of the transmission panel antenna" and the "identification number (ID) of the parameter used for beamforming (directivity control)" by terminal #i labeled 902_i allows base station #1 labeled 901_1 to recognize the "identification number (ID) of the transmission panel antenna" and the "identification number (ID) of the parameter used for beamforming (directivity control)" that have allowed successful reception; accordingly, terminal #i labeled 902_i and base station #1 labeled 901_1 can perform appropriate control. This produces the effect of enhancing data reception quality.

Note that "reference signal 3701_j according to j-th parameter in transmission panel antenna xi" may include other information.

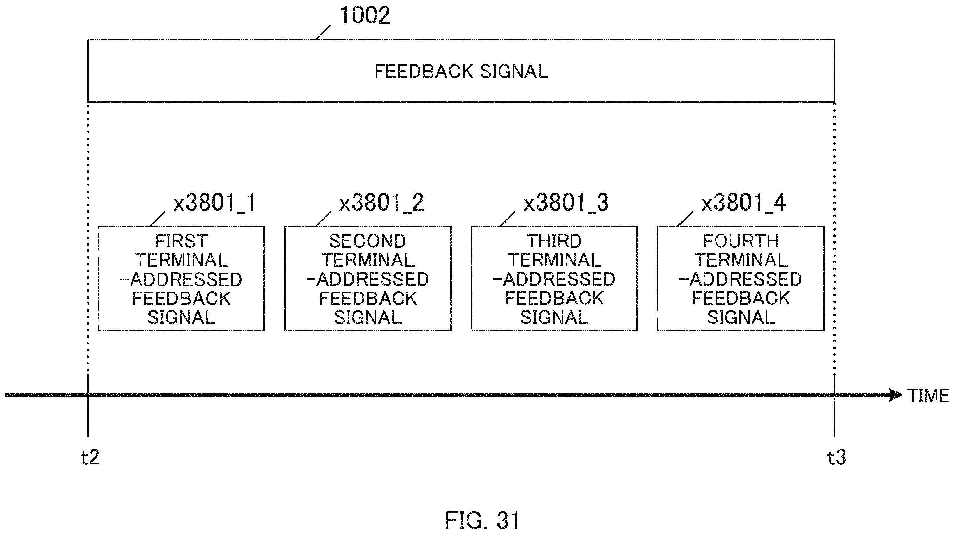

FIG. 31 illustrates an exemplary configuration of feedback signal 1002 that is present in the time period from t2 to t3 in FIG. 10 and transmitted by base station #1 labeled 901_1. Note that the horizontal axis represents time in FIG. 31. In this example, since "the number of slots in which sector sweep reference signals can be transmitted when the terminals transmit the sector sweep reference signals (the number of terminals that can transmit the sector sweep reference signals)" is four, there are four terminal-addressed feedback signals, such as first terminal-addressed feedback signal x3801_1, second terminal-addressed feedback signal x3801_2, third terminal-addressed feedback signal x3801_3, and fourth terminal-addressed feedback signal x3801_4, for feedback signal 1002 as illustrated in FIG. 31. Note that, in a case where "the number of slots in which sector sweep reference signals can be transmitted when the terminals transmit the sector sweep reference signals (the number of terminals that can transmit the sector sweep reference signals)" is S2, for example, S2 terminal feedback signals may be configured to be present for feedback signal 1002, where $\Omega$ is an integer equal to or greater than 1 or an integer equal to or greater than 2.

As in FIG. 29, when terminal #1 labeled 902_1 transmits sector sweep reference signal x3601_1 and terminal #2 labeled 902_2 transmits sector sweep reference signal x3601_2, for example, base station #1 labeled 901_1 transmits a feedback signal to terminal #1 labeled 902_1 using first terminal-addressed feedback signal x3801_1 and transmits a feedback signal to terminal #2 labeled 902_2 using third terminal-addressed feedback signal x3801_3.

At this time, first terminal-addressed feedback signal x3801_1 includes, for example, information indicating that communication with terminal #1 labeled 902_1 is available (or indicating that data-symbol-included frame 1003 in FIG. 10 includes a symbol addressed to terminal #1 labeled 902_1).

Third terminal-addressed feedback signal 3801_3 includes, for example, information indicating that communication with terminal #2 labeled 902_2 is available (or indicating that data-symbol-included frame 1003 in FIG. 10 includes a symbol addressed to terminal #2 labeled 902_2).

Note that base station #1 labeled 901_1 selects a transmission panel antenna and sets a parameter of beamforming based on the "information of the "transmission panel antenna and parameter" of base station #1 labeled 901_1 with high reception quality" transmitted by terminal #1 labeled 902_1, and base station #1 labeled 901_1 then transmits first terminal-addressed feedback signal x3801_1.

Likewise, base station #1 labeled 901_1 selects a transmission panel antenna and sets a parameter of beamforming based on the "information of the "transmission panel antenna and parameter" of base station #1 labeled 901_1 with high reception quality" transmitted by terminal #2 labeled 902_2, and base station #1 labeled 901_1 then transmits third terminal-addressed feedback signal x3801_3.

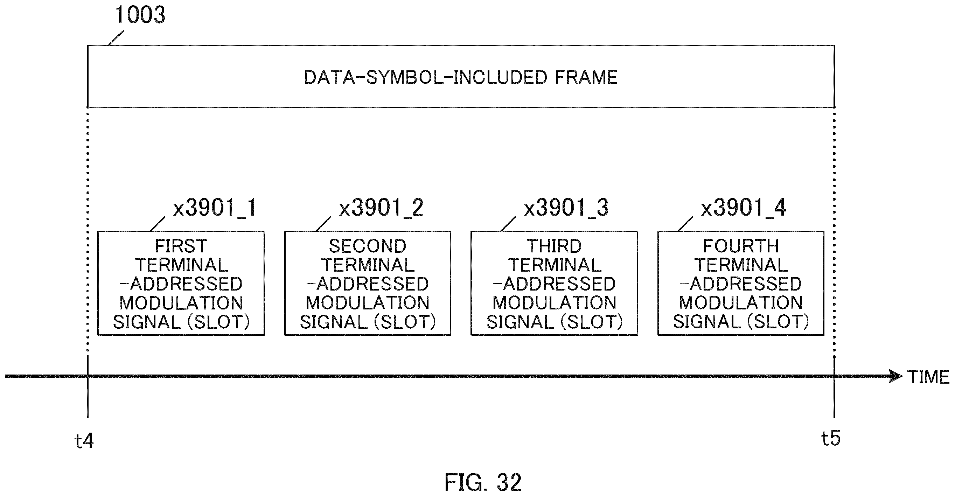

FIG. 32 illustrates an exemplary configuration of data-symbol-included frame 1003 that is present in the time period from t4 to t5 in FIG. 10 and transmitted by base station #1 labeled 901_1. Note that the horizontal axis represents time in FIG. 32. In this example, since "the number of slots in which sector sweep reference signals can be transmitted when the terminals transmit the sector sweep reference signals (the number of terminals that can transmit the sector sweep reference signals)" is four, there are four terminal-addressed modulation signals (slots), such as first terminal-addressed modulation signal (first terminal-addressed slot) x3901_1, second terminal-addressed modulation signal (second terminal-addressed slot) x3901_2, third terminal-addressed modulation signal (third terminal-addressed slot) x3901_3, and fourth terminal-addressed modulation signal (fourth terminal-addressed slot) x3901_4, for data-symbol-included frame 1003 as illustrated in FIG. 17. Note that, in a case where "the number of slots in which sector sweep reference signals can be transmitted when the terminals transmit the sector sweep reference signals (the number of terminals that can transmit the sector sweep reference signals)" is S2, for example, S2 terminal-addressed modulation signals (slots) may be configured to be present for data-symbol-included frame 1003, where $\Omega$ is an integer equal to or greater than 1 or an integer equal to or greater than 2.

As in FIG. 29, when terminal #1 labeled 902_1 transmits sector sweep reference signal x3601_1 and terminal #2 labeled 902_2 transmits sector sweep reference signal x3601_2, for example, base station #1 labeled 901_1 transmits a modulation signal (slot) to terminal #1 labeled 902_1 using first terminal-addressed modulation signal (first terminal-addressed slot) x3901_1 and transmits a modulation signal (slot) to terminal #2 labeled 902_2 using third terminal-addressed modulation signal (first terminal-addressed slot) x3901_3.

At this time, first terminal-addressed modulation signal (first terminal-addressed slot) x3901_1 includes, for example, a data symbol (data/information) addressed to terminal #1 labeled 902_1.

Third terminal-addressed modulation signal (third terminal-addressed slot) x3901_3 includes, for example, a data symbol (data/information) addressed to terminal #2 labeled 902_2.

Note that base station #1 labeled 901_1 selects a transmission panel antenna and sets a parameter of beamforming based on the "information of the "transmission panel antenna and parameter" of base station #1 labeled 901_1 with high reception quality" transmitted by terminal #1 labeled 902_1, and base station #1 labeled 901_1 then transmits first terminal-addressed modulation signal (first terminal-addressed slot) x3901_1.

Likewise, base station #1 labeled 901_1 selects a transmission panel antenna and sets a parameter of beamforming based on the "information of the "transmission panel antenna and parameter" of base station #1 labeled 901_1 with high reception quality" transmitted by terminal #2 labeled 902_2, and base station #1 labeled 901_1 then transmits third terminal-addressed modulation signal (third terminal-addressed slot) x3901_3.

Note that, in FIG. 31, "base station #1 labeled 901_1 may estimate the "transmission panel antenna and parameter" of terminal #1 labeled 902_1 with high reception quality in receiving "sector sweep reference signal 3601_1 transmitted by terminal #1 labeled 902_1", and the estimated information" may be included in first terminal-addressed feedback signal x3801_1.

Terminal #1 labeled 902_1 selects a transmission panel antenna and determines a beamforming method based on the information of "transmission panel antenna and parameter" of terminal #1 labeled 902_1 with high reception quality obtained from base station #1 labeled 901_1, and terminal #1 labeled 902_1 then transmits a symbol, a frame, and/or a modulation signal to base station #1 labeled 901_1. This produces the effect of enhancing data reception quality in base station #1 labeled 901_1.

Further, in FIG. 31, "base station #1 labeled 901_1 may estimate the "transmission panel antenna and parameter" of terminal #2 labeled 902_2 with high reception quality in receiving "sector sweep reference signal x3601_2 transmitted by terminal #2 labeled 902_2", and the estimated information" may be included in third terminal-addressed feedback signal x3801_3.

Terminal #2 labeled 902_2 selects a transmission panel antenna and determines a beamforming method based on the information of "transmission panel antenna and parameter" of terminal #2 labeled 902_2 with high reception quality obtained from base station #2 labeled 901_1, and terminal #2 labeled 902_2 then transmits a symbol, a frame, and/or a modulation signal to base station #1 labeled 901_1. This produces the effect of enhancing data reception quality in base station #1 labeled 901_1.

Incidentally, in the time period from t3 to t4, terminals, which are terminal #1 labeled 902_1 and terminal #2 labeled 902_2 in the above description, may transmit, to base station #1 labeled 901_1, modulation signals including information indicating successful reception of a signal from base station #1 labeled 901_1, such as acknowledgement (ACK).

Note that, first terminal-addressed modulation signal (first terminal-addressed slot) x3901_1 in FIG. 32 may include, in addition to the data symbol, a "reference signal such as a demodulation reference signal (DMRS), phase tracking reference signal (PTRS), or sounding reference signal (SRS)", a pilot symbol, a pilot signal, a preamble, and a symbol including control information, for example. Examples of the symbol including the control information may include information of a destination terminal (ID for identifying the terminal), a transmission method of the modulation signal, information of the modulation scheme, information of the error correction coding scheme (code length, code rate, etc.), information of the modulation and coding scheme (MCS), and the like.

Likewise, second terminal-addressed modulation signal (second terminal-addressed slot) x3901_2, third terminal-addressed modulation signal (third terminal-addressed slot) x3901_3, and fourth terminal-addressed modulation signal (fourth terminal-addressed slot) x3901_4 may include, in addition to the data symbol, a "reference signal such as DMRS, PTRS, or SRS", a pilot symbol, a pilot signal, a preamble, and a symbol including control information, for example. Examples of the symbol including the control information may include information of a destination terminal (ID for identifying the terminal), a transmission method of the modulation signal, information of the modulation scheme, information of the error correction coding scheme (code length, code rate, etc.), information of the MCS, and the like.

FIG. 18 illustrates an exemplary state where base station #1 labeled 901_1 and "terminal #1 labeled 902_1, terminal #2 labeled 902_2, and terminal #3 labeled 902_3" communicate with each other as illustrated in FIG. 26. (A) of FIG. 18 illustrates an exemplary modulation signal transmission state of base station #1 labeled 901_1, and (B) of FIG. 18 illustrates an exemplary modulation signal transmission state of "terminal #1 labeled 902_1, terminal #2 labeled 902_2, and terminal #3 labeled 902_3". Note that the horizontal axes represent time in (A) and (B) of FIG. 18.

First, base station #1 labeled 901_1 transmits sector sweep reference signal 1801_1. Note that this has already been described with reference to FIG. 10, and the description thereof will be thus omitted.

Then, a terminal such as "terminal #1 labeled 902_1, terminal #2 labeled 902_2, and terminal #3 labeled 902_3" transmits sector sweep reference signal 1851_1. Note that this has already been described with reference to, for example, FIGS. 13, 29, etc., and the description thereof will be thus omitted.

Base station #1 labeled 901_1 transmits feedback signal 1802_1. Note that this has already been described with reference to FIG. 31, and the description thereof will be thus omitted.

After that, base station #1 labeled 901_1 transmits "data-symbol-included frame 1803_1". Note that this has already been described with reference to FIG. 32, and the description thereof will be thus omitted. (Hence, "data-symbol-included frame 1803_1" is considered to be a frame for downlink, for example).

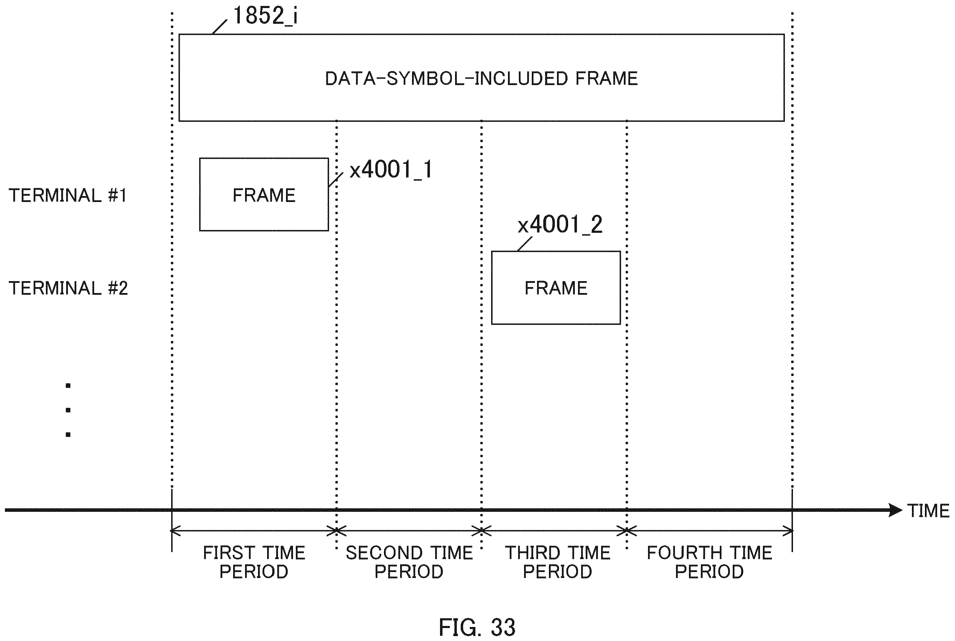

Then, the terminal such as "terminal #1 labeled 902_1, terminal #2 labeled 902_2, and terminal #3 labeled 902_3" transmits "data-symbol-included frame 1852_1". Note that a configuration of the frame will be described later with reference to FIG. 33. (Hence, "data-symbol-included frame 1852_1" is considered to be a frame for uplink, for example).

Next, base station #1 labeled 901_1 transmits "data-symbol-included frame 1803_2". Note that a configuration method of "data-symbol-included frame 1803_2" is as described with reference to FIG. 32.

Then, the terminal such as "terminal #1 labeled 902_1, terminal #2 labeled 902_2, and terminal #3 labeled 902_3" transmits "data-symbol-included frame 1852_2". Note that a configuration of the frame will be described later with reference to FIG. 33.

FIG. 19 illustrates an exemplary modulation signal transmission state of base station #1 labeled 901_1 and an exemplary modulation signal transmission state of the terminal such as "terminal #1 labeled 902_1, terminal #2 labeled 902_2, and terminal #3 labeled 902_3" after the state in FIG. 18.

(A) of FIG. 19 illustrates an exemplary modulation signal transmission state of base station #1 labeled 901_1, and it is a temporal continuation from the modulation signal transmission state of base station #1 labeled 901_1 in (A) of FIG. 18.

(B) of FIG. 19 illustrates an exemplary modulation signal transmission state of "terminal #1 labeled 902_1, terminal #2 labeled 902_2, and terminal #3 labeled 902_3", and it is a temporal continuation from the modulation signal transmission state of "terminal #1 labeled 902_1, terminal #2 labeled 902_2, and terminal #3 labeled 902_3" in (B) of FIG. 18.

Note that the horizontal axes represent time in (A) and (B) of FIG. 19.

After the states in (A) and (B) of FIG. 18, base station #1 labeled 901_1 transmits "data-symbol-included frame 1803_3". Note that a configuration method of "data-symbol-included frame 1803_2" is as described with reference to FIG. 32.

The terminal such as "terminal #1 labeled 902_1, terminal #2 labeled 902_2, and terminal #3 labeled 902_3" transmits "data-symbol-included frame 1852_3". Note that a configuration of the frame will be described later with reference to FIG. 33.

Next, base station #1 labeled 901_1 transmits sector sweep reference signal 1801_2. Note that this has already been described with reference to FIG. 10, and the description thereof will be thus omitted.

Then, the terminal such as "terminal #1 labeled 902_1, terminal #2 labeled 902_2, and terminal #3 labeled 902_3" transmits sector sweep reference signal 1851_2. Note that this has already been described with reference to, for example, FIGS. 13, 29, etc., and the description thereof will be thus omitted.

Base station #1 labeled 901_1 transmits feedback signal 1802_2. Note that this has already been described with reference to FIG. 31, and the description thereof will be thus omitted.

After that, base station #1 labeled 901_1 transmits "data-symbol-included frame 1803_4". Note that this has already been described with reference to FIG. 32, and the description thereof will be thus omitted.

Then, the terminal such as "terminal #1 labeled 902_1, terminal #2 labeled 902_2, and terminal #3 labeled 902_3" transmits "data-symbol-included frame 1852_4". Note that a configuration of the frame will be described later with reference to FIG. 33.

As described above, base station #1 labeled 901_1 and the terminal transmit the sector sweep reference signals before the "transmission of the "data-symbol-included frames" by base station #1 labeled 901_1 and/or the transmission of the "data-symbol-included frames" by the terminal such as "terminal #1 labeled 902_1, terminal #2 labeled 902_2, and terminal #3 labeled 902_3"", and again transmit the sector sweep reference signals after the "transmission of the "data-symbol-included frames" by base station #1 labeled 901_1 and/or the transmission of the "data-symbol-included frames" by the terminal such as "terminal #1 labeled 902_1, terminal #2 labeled 902_2, and terminal #3 labeled 902_3"". Base station #1 labeled 901_1 and the terminal then each select a transmission panel antenna to be used and configure transmit beamforming. This produces the effect that the base station and/or the terminal achieve high data reception quality.

Next, a description will be given of an exemplary configuration of "data-symbol-included frame 1852_i" transmitted by the terminal such as "terminal #1 labeled 902_1, terminal #2 labeled 902_2, and terminal #3 labeled 902_3" with reference to FIG. 33. Note that i is an integer equal to or greater than 1, for example, and the horizontal axis represents time in FIG. 33.

As illustrated in FIG. 33, "data-symbol-included frame 1852_i" is composed of a first time period, a second time period, a third time period, and a fourth time period.

Terminal #1 labeled 902_1 transmits frame (including a data symbol) x4001_1 using the first time period, for example. Terminal #2 labeled 902_2 transmits frame (including a data symbol) x4001_2 using the third time period.

As described above, "data-symbol-included frame 1852_i" transmitted by the terminal such as "terminal #1 labeled 902_1, terminal #2 labeled 902_2, and terminal #3 labeled 902_3" is subjected to, for example, time division and transmitted by each terminal, and base station #1 labeled 901_1 receives the frame transmitted by the terminal, thereby preventing interference and achieving high data reception quality.

Note that frame x4001_1 in FIG. 33 may include, in addition to the data symbol, a "reference signal such as DMRS, PTRS, or SRS", a pilot symbol, a pilot signal, a preamble, and a symbol including control information, for example.

Likewise, frames present in the first time period, the second time period, the third time period, and the fourth time period, such as frames x4001_1 and x4001_2, may include, in addition to the data symbol, a "reference signal such as DMRS, PTRS, or SRS", a pilot symbol, a pilot signal, a preamble, and a symbol including control information, for example.

In FIG. 33, a description has been given of a case where the terminals perform time division on the frames to be transmitted, but the terminals may perform frequency division on the frames to be transmitted or perform spatial division using multi user-multiple-input multiple-output (MU-MIMO). Note that the configurations of the terminals and the base station are not limited to the configurations in FIGS. 1A, 1B, and 1C. In addition, the configurations of a transmission panel antenna and a reception panel antenna are not limited to the configurations in FIGS. 3 and 4, and may be any antenna configurations as long as one or more or a plurality of transmission directivities and reception directivities can be generated, for example. Further, signals, frames, etc. are illustrated in FIGS. 10, 13, 18, 19, 27, 28, 29, 30, 31, 32, and 33, but the names thereof are not limited to those in the drawings and the important part is the functions of the signals to be transmitted.

(Embodiment 4)

The embodiments in the present specification, such as Embodiments 1 to 3, have provided a description of methods of transmitting a sector sweep reference signal (e.g., 1001 in FIG. 10, etc.) by a base station, the example of which is base station #1 labeled 901_1 in FIG. 9, etc., and a description of methods of transmitting a sector sweep reference signal by a terminal, the example of which is the terminal labeled 902_i in FIG. 9, etc. In the present embodiment, a description will be given of variations of the "methods of transmitting a sector sweep reference signal by a base station" and the "methods of transmitting a sector sweep reference signal by a terminal".

The methods of transmitting a sector sweep reference signal by a base station have been described with reference to, for example, FIGS. 11, 12, 27, 28, etc.

To be more specific, a sector sweep reference signal is generated based on the identification (ID) of a transmission panel antenna and the ID of beamforming (see FIG. 12).

For example, a base station transmits sector sweep reference signals using transmission panel antenna #1. In this case, the base station transmits sector sweep reference signals as described below using transmission panel antenna #1.

· "(Reference) signal subjected to processing based on a parameter of beamforming (directivity control) ID 0, which is parameter ID 0, using transmission panel antenna #1"

· "(Reference) signal subjected to processing based on a parameter of beamforming (directivity control) ID 1, which is parameter ID 1, using transmission panel antenna #1"

· "(Reference) signal subj ected to processing based on a parameter of beamforming (directivity control) ID 2, which is parameter ID 2, using transmission panel antenna #1"

· "(Reference) signal subj ected to processing based on a parameter of beamforming (directivity control) ID 3, which is parameter ID 3, using transmission panel antenna #1"

Likewise, the base station transmits sector sweep reference signals using transmission panel antenna #2. In this case, the base station transmits sector sweep reference signals as described below using transmission panel antenna #2.
· "(Reference) signal subj ected to processing based on a parameter of beamforming (directivity control) ID 0, which is parameter ID 0, using transmission panel antenna #2"

· "(Reference) signal subj ected to processing based on a parameter of beamforming (directivity control) ID 1, which is parameter ID 1, using transmission panel antenna #2"

· "(Reference) signal subj ected to processing based on a parameter of beamforming (directivity control) ID 2, which is parameter ID 2, using transmission panel antenna #2"

· "(Reference) signal subj ected to processing based on a parameter of beamforming (directivity control) ID 3, which is parameter ID 3, using transmission panel antenna #2"

That is, the base station transmits sector sweep reference signals using transmission panel antenna #i. Note that i is an integer equal to or greater than 1. In this case, the base station transmits sector sweep reference signals as described below using transmission panel antenna #i.
· "(Reference) signal subj ected to processing based on a parameter of beamforming (directivity control) ID 0, which is parameter ID 0, using transmission panel antenna #i"

· "(Reference) signal subj ected to processing based on a parameter of beamforming (directivity control) ID 1, which is parameter ID 1, using transmission panel antenna #i"

· "(Reference) signal subj ected to processing based on a parameter of beamforming (directivity control) ID 2, which is parameter ID 2, using transmission panel antenna #i"

· "(Reference) signal subj ected to processing based on a parameter of beamforming (directivity control) ID 3, which is parameter ID 3, using transmission panel antenna #i"

In the above, "the ID of a transmission panel antenna and the ID of beamforming (directivity control) of a base station" are distinguished from each other, but the ID may be assigned without distinguishing and the base station may generate and transmit a sector sweep reference signal.
For example, an ID is assigned to "use of beamforming (directivity control) ID 0, which is parameter ID 0, with transmission panel antenna #1", and it is ID ♭0. An ID is assigned to "use of beamforming (directivity control) ID 1, which is parameter ID 1, with transmission panel antenna #1", and it is ID ♭1. An ID is assigned to "use of beamforming (directivity control) ID 2, which is parameter ID 2, with transmission panel antenna #1", and it is ID ♭2. An ID is assigned to "use of beamforming (directivity control) ID 3, which is parameter ID 3, with transmission panel antenna #1", and it is ID ♭3.
An ID is assigned to "use of beamforming (directivity control) ID 0, which is parameter ID 0, with transmission panel antenna #2", and it is ID ♭4. An ID is assigned to "use of beamforming (directivity control) ID 1, which is parameter ID 1, with transmission panel antenna #2", and it is ID ♭5. An ID is assigned to "use of beamforming (directivity control) ID 2, which is parameter ID 2, with transmission panel antenna #2", and it is ID ♭6. An ID is assigned to "use of beamforming (directivity control) ID 3, which is parameter ID 3, with transmission panel antenna #2", and it is ID ♭7.
An ID is assigned to "use of beamforming (directivity control) ID 0, which is parameter ID 0, with transmission panel antenna #3", and it is ID ♭8. An ID is assigned to "use of beamforming (directivity control) ID 1, which is parameter ID 1, with transmission panel antenna #3", and it is ID ♭9. An ID is assigned to "use of beamforming (directivity control) ID 2, which is parameter ID 2, with transmission panel antenna #3", and it is ID ♭10. An ID is assigned to "use of beamforming (directivity control) ID 3, which is parameter ID 3, with transmission panel antenna #3", and it is ID ♭11, and so forth.
Then, the base station transmits, as sector sweep reference signals, a "(reference) signal subjected to processing based on ID ♭0", a "(reference) signal subjected to processing based on ID ♭1", a "(reference) signal subjected to processing based on ID ", a "(reference) signal subjected to processing based on ID ♭3", a "(reference) signal subjected to processing based on ID ♭4", a "(reference) signal subjected to processing based on ID ♭5", a "(reference) signal subjected to processing based on ID ♭6", a "(reference) signal subjected to processing based on ID ♭7", a "(reference) signal subjected to processing based on ID 8", a "(reference) signal subjected to processing based on ID ♭9", a "(reference) signal subjected to processing based on ID ♭10", a "(reference) signal subjected to processing based on ID ♭11", and so forth. Note that the above signals may be transmitted in the above order or in a different order.

At this time, the "(reference) signal subjected to processing based on ID ♭k" transmitted by the base station includes information of ID ♭k, where k is an integer equal to or greater than 0. Note that the "(reference) signal subjected to processing based on ID 6k" transmitted by the base station may include other information. The examples are described in other embodiments, and the description thereof will be thus omitted (information of a transmission panel antenna may be included).

A terminal then receives the sector sweep reference signals transmitted by the base station and transmits a sector sweep reference signal including information of the ID with high reception quality (e.g., when "ID ♭3" has high reception quality, the information of "ID ♭3" is included). Note that the sector sweep reference signal transmitted by a terminal may include other information. The examples are as described in other embodiments. Methods of transmitting the sector sweep reference signal by a terminal are as described in other embodiments and will be described later in the present embodiment.

A transmission panel antenna (see FIGS. 1A, 1B and 1C) of the base station may include the configuration in FIG. 3. The transmission panel antenna may be composed of a single antenna or a plurality of antennas.

Based on the above, the base station may generate and transmit, for example, sector sweep reference signal 1001 in FIG. 10, etc. in the following manner.

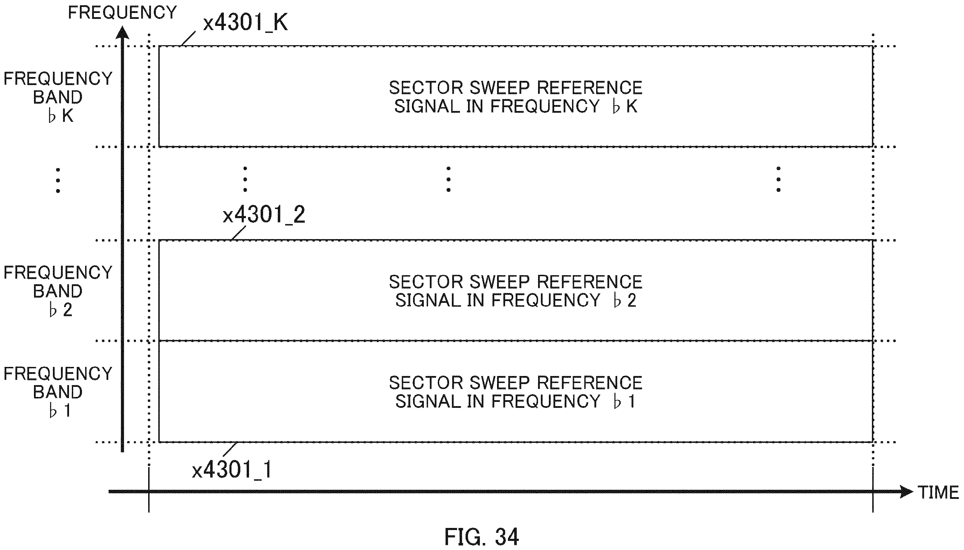

FIG. 34 illustrates an exemplary configuration of sector sweep reference signal 1001, which has been described with reference to FIG. 10 etc., for example, transmitted by the base station. The vertical axis represents frequency and the horizontal axis represents time in FIG. 34. Note that there are frequency band ♭1, frequency band ♭2, ..., frequency band ♭K as in other embodiments.

As illustrated in FIG. 34, sector sweep reference signal 1001 is composed of "sector sweep reference signal x4301_1 in frequency ♭1", "sector sweep reference signal x4301_2 in frequency ♭2", ..., "sector sweep reference signal x4301_K in frequency ♭K".

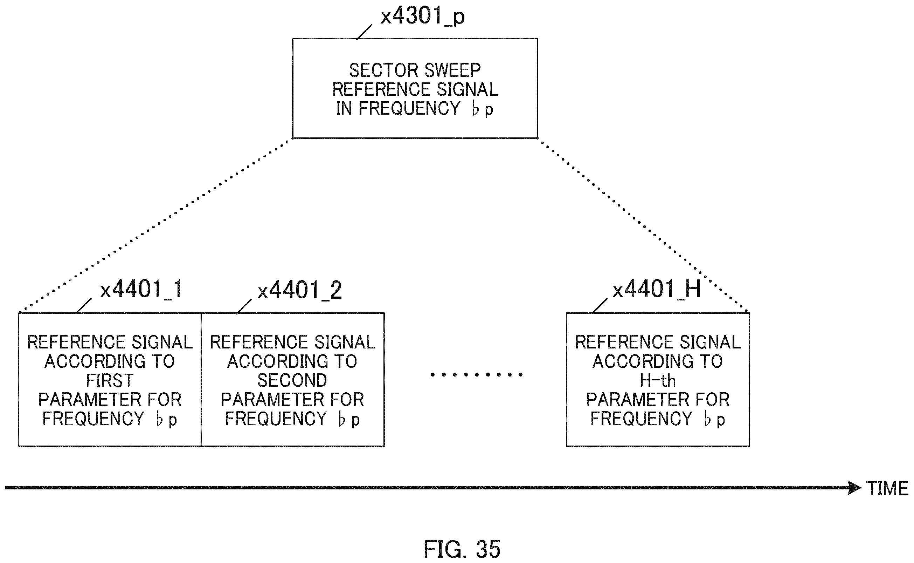

FIG. 35 illustrates an exemplary configuration of "sector sweep reference signal x4301_p in frequency ♭p" in FIG. 34. Note that the horizontal axis represents time in FIG. 35. Note that p is an integer from 1 to K (both inclusive).

"Sector sweep reference signal x4301_p in frequency ♭p" is composed of "reference signal x4401_1 according to first parameter for frequency ♭p", "reference signal x4401_2 according to second parameter for frequency ♭p", ..., "reference signal x4401_H according to H-th parameter for frequency ♭p". Note that H is an integer equal to or greater than 1 or an integer equal to or greater than 2.

In a case where the base station has a configuration in FIG. 1A, 1B, or 1C, "reference signal x4401_i according to i-th parameter for frequency ♭p" is transmitted using one or more transmission panel antennas among transmission panel antenna 1 labeled 106_1 to transmission panel antenna M labeled 106_M. Note that i is an integer from 1 to H (both inclusive).

For example, in a case where the base station has a configuration in FIG. 1A or 1B, "reference signal x4401_i according to i-th parameter for frequency ♭p" is subjected to signal processing (beamforming (directivity control)) according to the i-th parameter in first processor 104, and first processor 104 generates "reference signal x4401_i according to i-th parameter for frequency ♭p" to be transmitted using one or more transmission panel antennas among transmission panel antenna 1 labeled 106_1 to transmission panel antenna M labeled 106_M.

"Reference signal x4401_i according to i-th parameter for frequency ♭p" includes, for example, the following information.

· Information on the i-th parameter, that is, a beamforming (directivity control) identification number (ID), which corresponds to i here, for example;

· The number of time divisions in which sector sweep reference signals can be transmitted when the terminals transmit the sector sweep reference signals; and

· Information on the frequency band and/or frequency ♭p (information of the number of frequency divisions may also be included).

Other information may also be included, and "reference signal x4401_i according to i-th parameter for frequency ♭p" may include, for example, information similar to the information included in reference signal 1201_a according to a-th parameter in a transmission panel antenna for frequency ♭p in FIG. 12. Thus, for operations on "reference signal 1201_a according to a-th parameter in a transmission panel antenna for frequency $b_p$ in FIG. 12" in the present specification, the same can be implemented by replacing "reference signal 1201_a according to a-th parameter in a transmission panel antenna for frequency $b_p$ in FIG. 12" with "reference signal x4401_i according to i-th parameter for frequency $b_p$".

In addition, "reference signal x4401_i according to i-th parameter for frequency $b_p$" may include information of an antenna (e.g., transmission panel antenna ID, sector antenna information, and antenna port number) used for transmitting "reference signal x4401_i according to i-th parameter for frequency $b_p$".

Note that, although the above description is based on a case of multi-carrier such as OFDM, by way of example, the present disclosure is not limited to this and the same can be implemented in a case of single-carrier. It can be implemented in a single-carrier scheme, for example, considering that there is only frequency $b_1$ in FIG. 34, etc.

Next, a variation on a sector sweep reference signal transmitted by a terminal will be described.

The methods of transmitting a sector sweep reference signal by a terminal have described with reference to, for example, FIGS. 14, 15A, 15B, etc.

To be more specific, a sector sweep reference signal is generated based on the identification (ID) of a transmission panel antenna and the ID of beamforming (see FIGS. 15A and 15B).

For example, a terminal transmits sector sweep reference signals using transmission panel antenna #1. In this case, the terminal transmits the following sector sweep reference signals using transmission panel antenna #1.

· "(Reference) signal subjected to processing based on a parameter of beamforming (directivity control) ID 0, which is parameter ID 0, using transmission panel antenna #1"

· "(Reference) signal subjected to processing based on a parameter of beamforming (directivity control) ID 1, which is parameter ID 1, using transmission panel antenna #1"

· "(Reference) signal subjected to processing based on a parameter of beamforming (directivity control) ID 2, which is parameter ID 2, using transmission panel antenna #1"

· "(Reference) signal subjected to processing based on a parameter of beamforming (directivity control) ID 3, which is parameter ID 3, using transmission panel antenna #1"

Likewise, the terminal transmits sector sweep reference signals using transmission panel antenna #2. In this case, the terminal transmits the following sector sweep reference signals using transmission panel antenna #2.

· "(Reference) signal subjected to processing based on a parameter of beamforming (directivity control) ID 0, which is parameter ID 0, using transmission panel antenna #2"

· "(Reference) signal subjected to processing based on a parameter of beamforming (directivity control) ID 1, which is parameter ID 1, using transmission panel antenna #2"

· "(Reference) signal subjected to processing based on a parameter of beamforming (directivity control) ID 2, which is parameter ID 2, using transmission panel antenna #2"

· "(Reference) signal subjected to processing based on a parameter of beamforming (directivity control) ID 3, which is parameter ID 3, using transmission panel antenna #2"

That is, the terminal transmits sector sweep reference signals using transmission panel antenna #i. Note that i is an integer equal to or greater than 1. In this case, the terminal transmits the following sector sweep reference signals using transmission panel antenna #i.

· "(Reference) signal subjected to processing based on a parameter of beamforming (directivity control) ID 0, which is parameter ID 0, using transmission panel antenna #i"

· "(Reference) signal subjected to processing based on a parameter of beamforming (directivity control) ID 1, which is parameter ID 1, using transmission panel antenna #i"

· "(Reference) signal subjected to processing based on a parameter of beamforming (directivity control) ID 2, which is parameter ID 2, using transmission panel antenna #i"

· "(Reference) signal subjected to processing based on a parameter of beamforming (directivity control) ID 3, which is parameter ID 3, using transmission panel antenna #i"

In the above, "the ID of a transmission panel antenna and the ID of beamforming (directivity control) of a terminal" are distinguished from each other, but the ID may be assigned without distinguishing and the terminal may generate and transmit a sector sweep reference signal.

For example, an ID is assigned to "use of beamforming (directivity control) ID 0, which is parameter ID 0, with transmission panel antenna #1", and it is ID ƀ0. An ID is assigned to "use of beamforming (directivity control) ID 1, which is parameter ID 1, with transmission panel antenna #1", and it is ID ƀ1. An ID is assigned to "use of beamforming (directivity control) ID 2, which is parameter ID 2, with transmission panel antenna #1", and it is ID ƀ2. An ID is assigned to "use of beamforming (directivity control) ID 3, which is parameter ID 3, with transmission panel antenna #1", and it is ID ƀ3.

An ID is assigned to "use of beamforming (directivity control) ID 0, which is parameter ID 0, with transmission panel antenna #2", and it is ID ƀ4. An ID is assigned to "use of beamforming (directivity control) ID 1, which is parameter ID 1, with transmission panel antenna #2", and it is ID ƀ5. An ID is assigned to "use of beamforming (directivity control) ID 2, which is parameter ID 2, with transmission panel antenna #2", and it is ID ƀ6. An ID is assigned to "use of beamforming (directivity control) ID 3, which is parameter ID 3, with transmission panel antenna #2", and it is ID ƀ7.

An ID is assigned to "use of beamforming (directivity control) ID 0, which is parameter ID 0, with transmission panel antenna #3", and it is ID ƀ8. An ID is assigned to "use of beamforming (directivity control) ID 1, which is parameter ID 1, with transmission panel antenna #3", and it is ID ƀ9. An ID is assigned to "use of beamforming (directivity control) ID 2, which is parameter ID 2, with transmission panel antenna #3", and it is ID ƀ10. An ID is assigned to "use of beamforming (directivity control) ID 3, which is parameter ID 3, with transmission panel antenna #3", and it is ID ƀ11, and so forth.

Then, the terminal transmits, as sector sweep reference signals, a "(reference) signal subjected to processing based on ID ƀ0", a "(reference) signal subjected to processing based on ID ƀ1", a "(reference) signal subjected to processing based on ID ƀ2", a "(reference) signal subjected to processing based on ID ƀ3", a "(reference) signal subjected to processing based on ID ƀ4", a "(reference) signal subjected to processing based on ID ƀ5", a "(reference) signal subjected to processing based on ID ƀ6", a "(reference) signal subjected to processing based on ID ƀ7", a "(reference) signal subjected to processing based on ID 8", a "(reference) signal subjected to processing based on ID ƀ9", a "(reference) signal subjected to processing based on ID ƀ10", a "(reference) signal subjected to processing based on ID ƀ11", and so forth. Note that the above signals may be transmitted in the above order or in a different order.

At this time, the "(reference) signal subjected to processing based on ID 6k" transmitted by the terminal includes information of ID 6k, where k is an integer equal to or greater than 0. Note that the "(reference) signal subjected to processing based on ID ƀk" transmitted by the terminal may include other information. The examples are described in other embodiments, and the description thereof will be thus omitted (information of a transmission panel antenna may be included).

A base station then receives the sector sweep reference signals transmitted by the terminal and transmits a feedback signal including information of the ID with high reception quality (e.g., when "ID ƀ3" has high reception quality, the information of "ID ƀ3" is included). Note that the feedback signal transmitted by a base station may include other information. The examples are as described in other embodiments. Methods of transmitting the feedback signal by a base station are as described in other embodiments and will be described later in the present embodiment.

A transmission panel antenna (see FIGS. 1A, 1B and 1C) of the terminal may include the configuration in FIG. 3. The transmission panel antenna may be composed of a single antenna or a plurality of antennas.

Based on the above, the terminal may generate and transmit, for example, a terminal sector sweep reference signal in FIG. 13, etc. in the following manner.

FIG. 14 illustrates exemplary assignment of sector sweep reference signals transmitted by the terminals. The description thereof will be omitted since it has already been described.

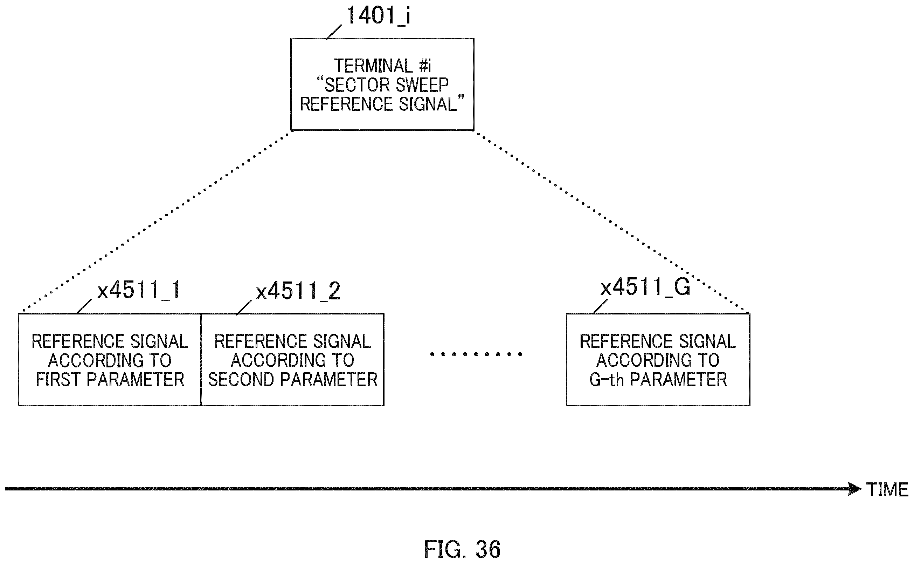

FIG. 36 illustrates an exemplary configuration of terminal #i "sector sweep reference signal" 1401_i in FIG. 14. Terminal #i "sector sweep reference signal" 1401_i is composed of "reference signal x4511_1 according to first parameter", "reference signal x4511_2 according to second parameter", ..., "reference signal x4511_G according to G-th parameter". Note that G is an integer equal to or greater than 1 or an integer equal to or greater than 2.

In a case where terminal #i has a configuration in FIG. 1A, 1B, or 1C, terminal #i "sector sweep reference signal" 1401_i is transmitted using one or more transmission panel antennas among transmission panel antenna 1 labeled 106_1 to transmission panel antenna M labeled 106_M.

For example, in a case where the terminal has a configuration in FIG. 1A or 1B, "reference signal x4511_k according to k-th parameter" is subjected to signal processing (beamforming (directivity control)) according to the k-th parameter in first processor 104, and first processor 104 generates "reference signal x4511_k according to k-th parameter" to be transmitted using one or more transmission panel antennas among transmission panel antenna 1 labeled 106_1 to transmission panel antenna M labeled 106_M. Note that k is an integer from 1 to G (both inclusive).

"Reference signal x451 1_k according to k-th parameter" includes, for example, the following information:

· Information on the k-th parameter, that is, a beamforming (directivity control) identification number (ID), for example; and

· Information to be fed back to the base station, for example, information of a frequency (band) with high reception quality, information of a parameter of beamforming (directivity control) with high reception quality, and information of an antenna with high reception quality that have been estimated by the terminal in receiving sector sweep reference signals transmitted by the base station.

Information included in "reference signal x4511 k according to k-th parameter" are as described in other embodiments, including the above-described information.

Thus, for operations on "reference signal 1511_a according to a-th parameter in transmission panel antenna xi in FIG. 15B" in the present specification, the same can be implemented by replacing "reference signal 1511_a according to a-th parameter in transmission panel antenna xi in FIG. 15B" with "reference signal x4511_k according to k-th parameter".

In addition, "reference signal x4511_k according to k-th parameter" may include information of an antenna (e.g., transmission panel antenna ID, sector antenna information, and antenna port number) used for transmitting "reference signal x4511_k according to k-th parameter".

Another example will be described.

A transmission panel antenna (see FIGS. 1A, 1B and 1C) of the terminal may include the configuration in FIG. 3. The transmission panel antenna may be composed of a single antenna or a plurality of antennas.

Based on the above, the terminal may generate and transmit, for example, a terminal sector sweep reference signal in FIG. 23, etc. in the following manner.

FIG. 24 illustrates exemplary assignment of sector sweep reference signals transmitted by the terminals. The description thereof will be omitted since it has already been described.

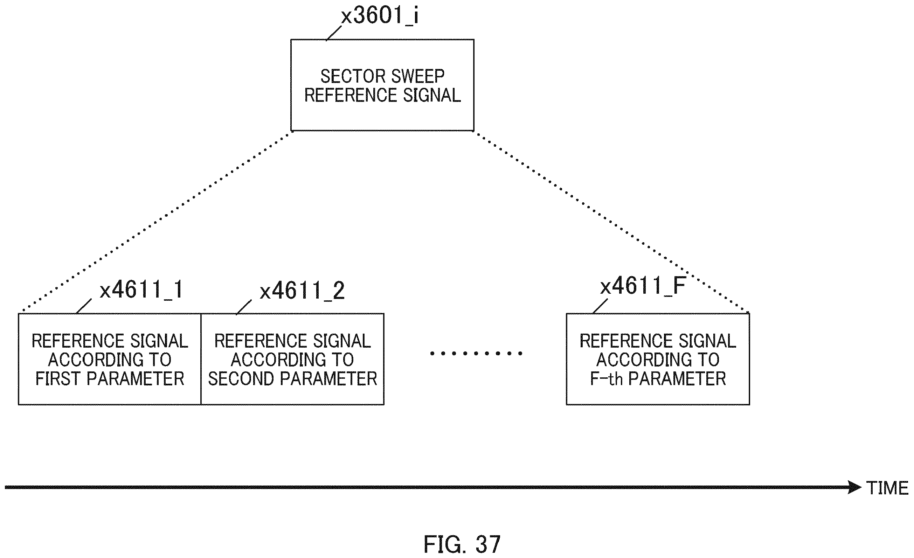

FIG. 37 illustrates an exemplary configuration of sector sweep reference signal x3601_i in FIG. 29. Sector sweep reference signal x3601_i is composed of "reference signal x4611_1 according to first parameter", "reference signal x4611_2 according to second parameter", ..., "reference signal x4611_F according to F-th parameter". Note that F is an integer equal to or greater than 1 or an integer equal to or greater than 2.

In a case where terminal #i has a configuration in FIG. 1A, 1B, or 1C, sector sweep reference signal x3601_i is transmitted using one or more transmission panel antennas among transmission panel antenna 1 labeled 106_1 to transmission panel antenna M labeled 106_M.

For example, in a case where the terminal has a configuration in FIG. 1A or 1B, "reference signal x4611_k according to k-th parameter" is subjected to signal processing (beamforming (directivity control)) according to the k-th parameter in first processor 104, and first processor 104 generates "reference signal x4611_k according to k-th parameter" to be transmitted using one or more transmission panel antennas among transmission panel antenna 1 labeled 106_1 to transmission panel antenna M labeled 106_M. Note that k is an integer from 1 to F (both inclusive).

"Reference signal x4611_k according to k-th parameter" includes, for example, the following information.

· Information on the k-th parameter, that is, a beamforming (directivity control) identification number (ID), for example; and

· Information to be fed back to the base station, for example, information of a frequency (band) with high reception quality, information of a parameter of beamforming (directivity control) with high reception quality, and information of an antenna with high reception quality that have been estimated by the terminal in receiving sector sweep reference signals transmitted by the base station.

Information included in "reference signal x4611_k according to k-th parameter" are as described in other embodiments, including the above-described information.

Thus, for operations on "reference signal 1511_a according to a-th parameter in transmission panel antenna xi in FIG. 15B" in the present specification, the same can be implemented by replacing "reference signal 1511_a according to a-th parameter in transmission panel antenna xi in FIG. 15B" with "reference signal x4611_k according to k-th parameter".

In addition, "reference signal x4611_k according to k-th parameter" may include information of an antenna (e.g., transmission panel antenna ID, sector antenna information, and antenna port number) used for transmitting "reference signal x4611_k according to k-th parameter".

The base station may transmit, to a communication counterpart (terminal), information of a reception panel antenna used for reception of a modulation signal and information of a parameter of beamforming (directivity control) for the reception. In addition, as is the case with the above examples on transmission, an ID may be assigned without distinguishing between the information of a reception panel antenna and the beamforming (directivity control), and the ID information may be transmitted to the communication counterpart (terminal).

Note that, although FIGS. 1A, 1B, and 1C have been used for the configuration example of the base station, the configuration is not limited to these. The configuration of a reception panel antenna is not limited to the configuration in FIG. 4 either, and the reception panel antenna may be composed of a single antenna or a plurality of antennas.

At this time, the beamforming (directivity control) for reception may be performed using one or more reception panel antennas (one or more reception antennas). Then, information of a parameter of the beamforming (directivity control) used for the reception may be transmitted to a communication counterpart (terminal).

The terminal may transmit, to a communication counterpart (base station), information of a reception panel antenna used for reception of a modulation signal and information of a parameter of beamforming (directivity control) for the reception. In addition, as is the case with the above examples on transmission, an ID may be assigned without distinguishing between the information of a reception panel antenna and the beamforming (directivity control), and the ID information may be transmitted to the communication counterpart (base station).

Note that, although FIGS. 1A, 1B, and 1C have been used for the configuration example of the terminal, the configuration is not limited to these. The configuration of a reception panel antenna is not limited to the configuration in FIG. 4 either, and the reception panel antenna may be composed of a single antenna or a plurality of antennas.

At this time, the beamforming (directivity control) for reception may be performed using one or more reception panel antennas (one or more reception antennas). Then, information of a parameter of the beamforming (directivity control) used for the reception may be transmitted to a communication counterpart (base station).

Note that a description has been given of examples of transmission beamforming by a base station, reception beamforming by the base station, transmission beamforming by a terminal, and reception beamforming by the terminal using Embodiment 1 to Embodiment 4, but the implementation method is not limited to these examples. For example, the base station may use either a multi-carrier scheme such as OFDM or a single-carrier scheme, and the base station may support both the multi-carrier scheme such as OFDM and the single-carrier scheme. Likewise, the terminal may use either a multi-carrier scheme such as OFDM or a single-carrier scheme, and the terminal may support both the multi-carrier scheme such as OFDM and the single-carrier scheme.

(Embodiment 5)

Methods for a base stations and a terminal to perform processing for sector-sweep have been described in Embodiment 1 to Embodiment 4. The base station may use a multi-carrier transmission scheme such as OFDM or a single-carrier transmission scheme, that is, the base station may perform processing for sector-sweep using any of the schemes. Likewise, the terminal may use a multi-carrier transmission scheme such as OFDM or a single-carrier transmission scheme, that is, the terminal may perform processing for sector-sweep using any of the schemes.

(Embodiment 6)

A description will be given of a method for enabling both sensing and communication.

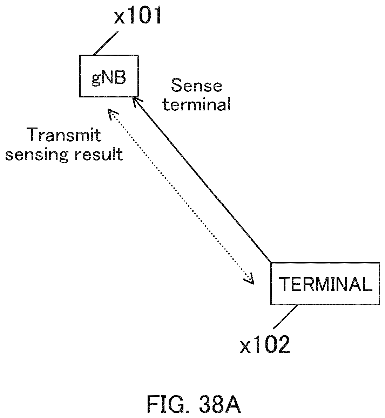

FIG. 38A illustrates the first example of a relationship between gNB and a terminal (user equipment: UE) in the present disclosure.

In the first example, gNB x101 receives a signal transmitted by terminal x102 and senses terminal x102. Note that "sensing terminal x102" is any one of "estimating the location of terminal x102", "detecting terminal x102", "estimating the shape and size of terminal x102", and "estimating the material of terminal x102", for example. This is applicable to the present embodiment as a whole.

Then, gNB x101 may transmit the sensing result to terminal x102.

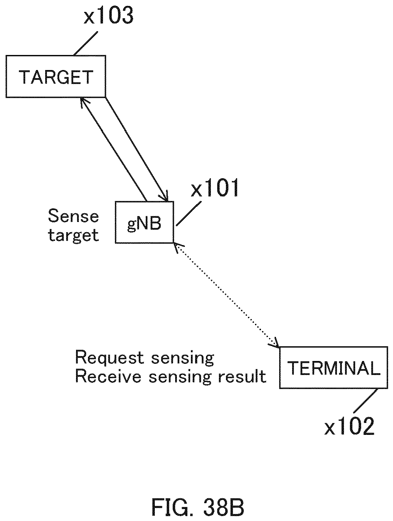

FIG. 38B illustrates the second example of a relationship between the gNB and terminal (UE) in the present disclosure.

Terminal x102 makes a sensing request to gNB x101. Then, gNB x101 senses target x103. At this time, gNB x101 may sense target x103 by receiving a signal transmitted from target x103 or may sense target x103 in the manner in which gNB x101 transmits a signal, the signal hits target x103, and gNB x101 receives the signal as a result.

Note that "sensing target x103" is any one of "estimating the location of target x103", "detecting target x103", "estimating the shape and size of target x103", and "estimating the material of target x103", for example. This is applicable to the present embodiment as a whole. Target x103 may be a terminal (need not be a terminal).

Subsequently, gNB x101 transmits a result obtained by the sensing to terminal x102. In addition, terminal x102 may indicate reception of the result obtained by the sensing to gNB x101.

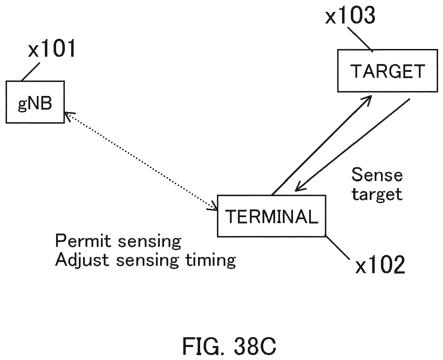

FIG. 38C illustrates the third example of a relationship between the gNB and terminal (UE) in the present disclosure.

In the case of FIG. 38C, terminal x102 implements sensing. In this case, terminal x102 asks gNB x101 whether sensing can be implemented. Then, terminal x102 obtains information of "timing at which sensing can be implemented and/or usable frequency" from gNB x101.

Terminal x102 senses target x103 based on the information of "timing at which sensing can be implemented and/or usable frequency". At this time, terminal x102 may sense target x103 by receiving a signal transmitted from target x103 or may sense target x103 in the manner in which terminal x102 transmits a signal, the signal hits target x103, and terminal x102 receives the signal as a result.

Note that "sensing target x103" is any one of "estimating the location of target x103", "detecting target x103", "estimating the shape and size of target x103", and "estimating the material of target x103", for example. This is applicable to the present embodiment as a whole. Target x103 may be a terminal (need not be a terminal).

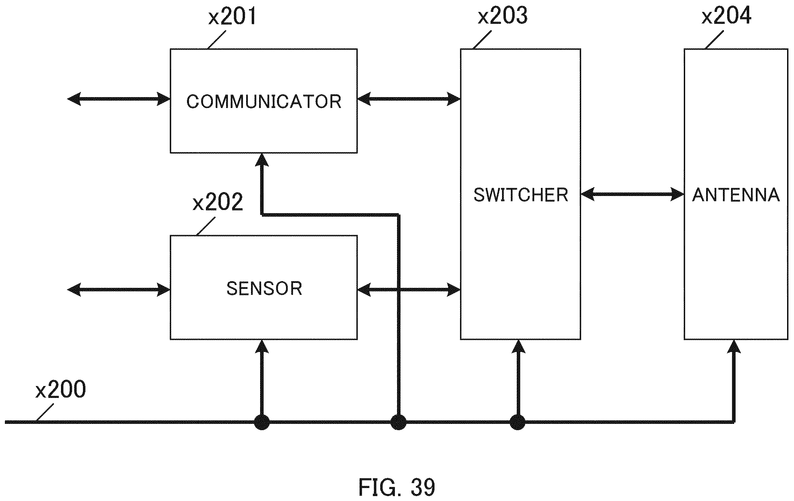

FIG. 39 illustrates an exemplary configuration of gNB x101 and terminal x102 in FIGS. 38A, 38B, and 38C.

Control signal x200 includes information of "whether to implement sensing and whether to implement communication".

Thus, communicator x201 takes control signal x200 as input, and performs an operation for implementing communication when control signal x200 indicates "implementing communication". In addition, switcher x203 takes control signal x200 as input, and performs an operation for connecting communicator x201 and antenna x204 when control signal x200 indicates "implementing communication".

Note that, when control signal x200 indicates "implementing communication", "communicator x201, switcher x200, and antenna x204" perform operations for implementing communication as described in other embodiments with reference to FIGS. 1A, 1B, 1C, etc. The detailed operations will not be described since they have been described in other embodiments.

Sensor x202 takes control signal x200 as input, and performs an operation for implementing sensing when control signal x200 indicates "implementing sensing". In addition, switcher x203 takes control signal x200 as input, and performs an operation for connecting sensor x202 and antenna x204 when control signal x200 indicates "implementing sensing".

Note that the detailed operation of each component in FIG. 39 will be described later.

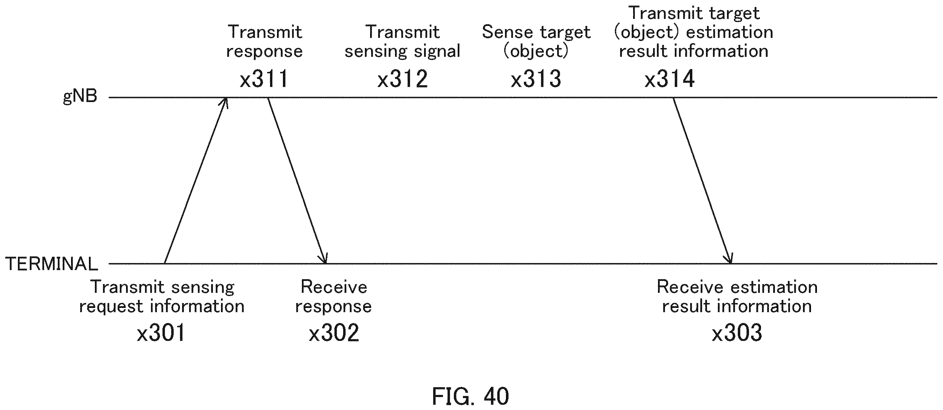

FIG. 40 illustrate exemplary interaction between gNB x101 and terminal x102 in the case of FIG. 38B.

As illustrated in FIG. 40, the terminal transmits sensing request information to the gNB. (x301)

The gNB receives the sensing request information transmitted by the terminal and transmits a response including information whether to implement sensing (x311).

The terminal receives the response transmitted by the gNB. (x302) In the following, a description will be given of a case where the gNB implements sensing.

As illustrated in FIG. 40, after the transmission x311 of the response, the gNB transmits a sensing signal for sensing target x103 as in FIG. 38B (x312).

The sensing signal then hits the target, and the gNB receives the signal. This allows the gNB to sense the target (object) (x313).

The gNB transmits, to the terminal, information of the estimation result from sensing the target (object) (x314).

The terminal obtains the "information of the estimation result from sensing the target (object)" transmitted by the gNB (x303).

A description will be given of exemplary frame configurations of a signal transmitted by gNB x101 and a signal transmitted by terminal x102 in FIGS. 38B and 40.

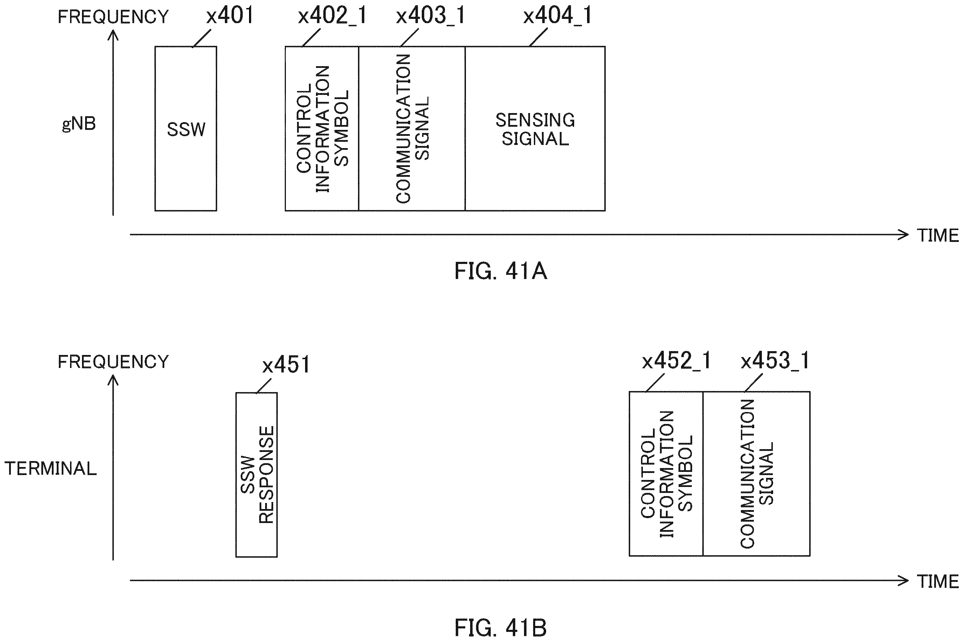

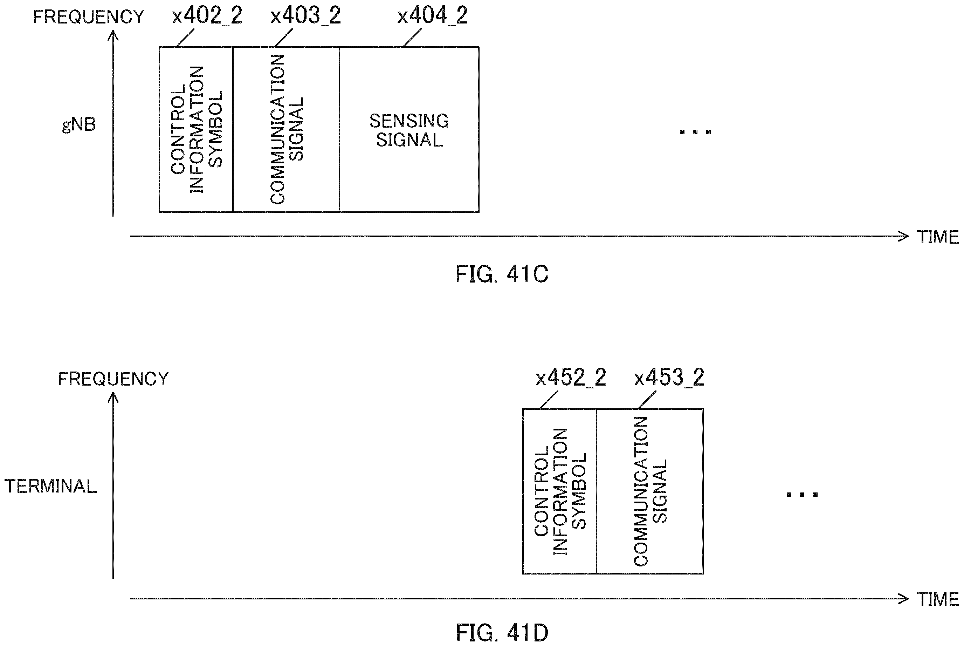

FIGS. 41A and 41C illustrate frame configurations of a signal transmitted by gNB x101, and FIGS. 41B and 41D illustrate frame configurations of a signal transmitted by terminal x102.

FIGS. 41A and 41B illustrate frames in the first time period, and FIGS. 41C and 41D illustrate frames in the second time period.

gNB x101 transmits a frame as illustrated in FIG. 41A and then transmits a frame as illustrated in FIG. 41C. Terminal x102 transmits a frame as illustrated in FIG. 41B and then transmits a frame as illustrated in FIG. 41D.

The vertical axes represent frequency and the horizontal axes represent time in FIGS. 41A, 41B, 41C, and 41D. A signal transmitted by gNB x101 may be a signal of a multi-carrier scheme such as OFDM or a signal of a single-carrier scheme. A signal transmitted by gNB x101 may also be a signal of a multi-carrier scheme obtained by arranging signals of a single-carrier scheme along the frequency axis. At this time, the signals of a single-carrier scheme signal may be arranged continuously or discretely along the frequency axis.

In addition, a signal transmitted by terminal x102 may be a signal of a multi-carrier scheme such as OFDM or a signal of a single-carrier scheme. A signal transmitted by terminal x102 may also be a signal of a multi-carrier scheme obtained by arranging signals of a single-carrier scheme along the frequency axis. At this time, the signals of a single-carrier scheme signal may be arranged continuously or discretely along the frequency axis.

As illustrated in FIG. 41A, gNB x101 transmits a sector sweep-related signal (SSW) x401.

Then, as illustrated in FIG. 41B, terminal x102 receives SSW x401 transmitted by gNB x101 and transmits response x451 on the SSW to gNB x101.

Note that operations related to sector sweep have been described in detail in other embodiments, and thus the description thereof will be omitted.

Subsequently, gNB x101 transmits, for example, control information symbol x402_1, communication signal x403_1, and sensing signal x404_1.

Terminal x102 then transmits control information symbol x452_1 and communication signal x453_1.

After that, as illustrated in FIG. 41C, for example, gNB x101 transmits control information symbol x402_2, communication signal x403_2, and sensing signal x404_2.

Terminal x102 then transmits control information symbol x452_2 and communication signal x453_2.

gNB x101 similarly transmits control information symbol x402_k, communication signal x403_k, and sensing signal x404_k thereafter. Note that k is an integer of 3 or more.

Likewise, terminal x102 transmits control information symbol x452_k and communication signal x453_k. Note that k is an integer of 3 or more.

In FIGS. 41A and 41C, communication signal x403_i is a resource for communication, and sensing signal x404_i is a resource for sensing. Note that i is an integer of 1 or more, for example.

Communication signal x403_i may include a physical downlink shared channel (PDSCH), for example. Control information symbol x402_i may include any one or more of a "synchronization signal (SS) block", "physical broadcast channel (PBCH) block", "SS/PBCH block", "physical downlink control channel (PDCCH) block", "broadcast channel (BCH)", "downlink shared channel (DL-SCH)", and "paging channel (PCH)".

In FIGS. 41B and 41D, communication signal x453_i is a resource for communication. Note that i is an integer of 1 or more, for example.

Communication signal x453_i may include a physical uplink shared channel (PUSCH), for example. Control information symbol x452_i may include any one or more of a physical random access channel (PRACH), physical uplink control channel (PUCCH), uplink shared channel (UL-SCH), and random access channel (RACH).

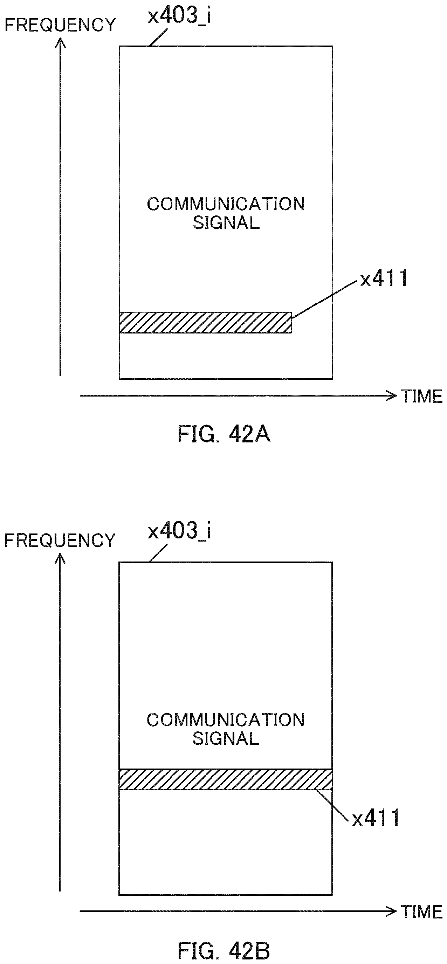

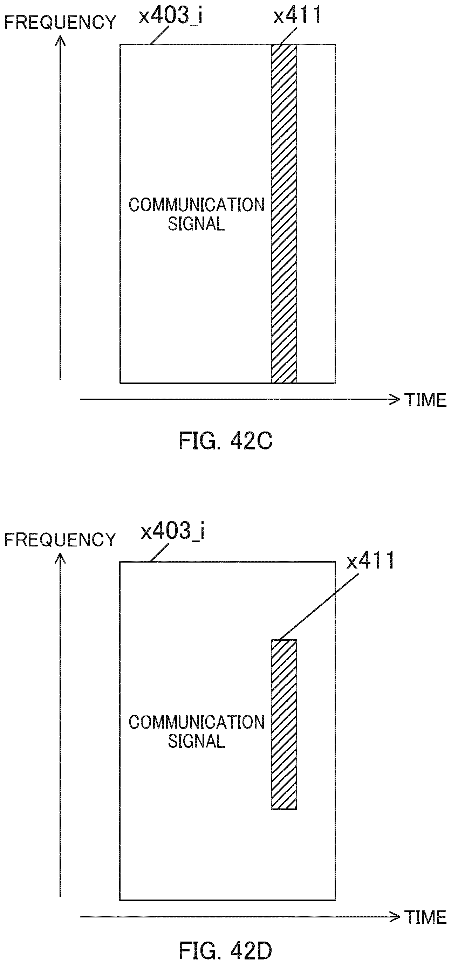

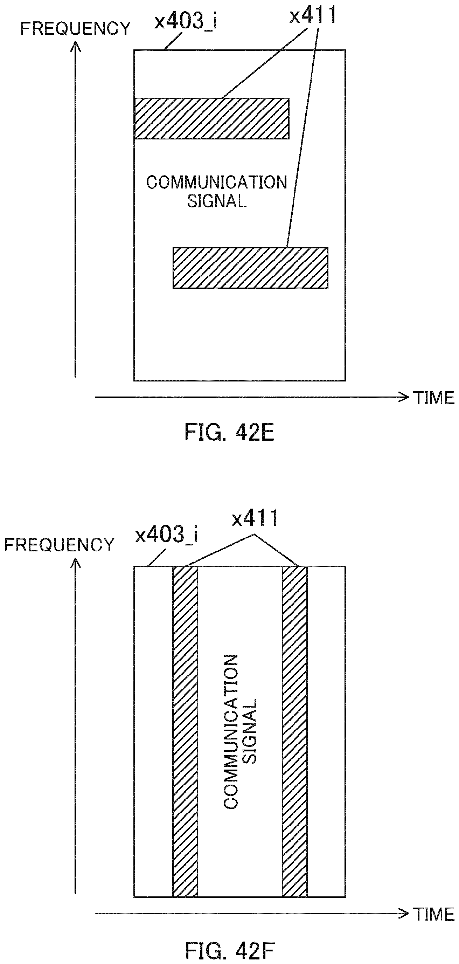

FIGS. 42A, 42B, 42C, 42D, 42E, and 42F illustrate exemplary mapping of signals transmitted to terminal x102 in FIG. 38B for communication signals x403_i transmitted by gNB x101 in FIGS. 41A and 41C.

In a case where gNB x101 and terminal x102 communicate with each other as in FIGS. 38B and 40, when gNB x101 transmits a signal including data to terminal x102, the "terminal x102-addressed signal" is x411 in FIGS. 42A, 42B, 42C, 42D, 42E, and 42F. Note that the horizontal axes represent time and the vertical axes represent frequency in FIGS. 42A, 42B, 42C, 42D, 42E, and 42F. In FIGS. 42A, 42B, 42C, 42D, 42E, and 42F, communication signals may be arranged continuously or discretely in the frequency axis direction.

In the example of FIG. 42A, "terminal x102-addressed signal" x411 is present in some time on a specific frequency of frequencies where communication signal x403_i is present.

In the example of FIG. 42B, "terminal x102-addressed signal" x411 is present on a specific frequency of frequencies where communication signal x403_i is present.

In the example of FIG. 42C, "terminal x102-addressed signal" x411 is present in a specific time in communication signal x403_i.

In the example of FIG. 42D, "terminal x102-addressed signal" x411 is present in a specific time on a specific frequency in communication signal x403_i.

In the example of FIG. 42E, a plurality of "terminal x102-addressed signals" x411 are present in "specific times on specific frequencies" in communication signal x403_i. Note that the signals are present at two locations in the example of FIG. 42E, but the signals may be present at more than two locations.

In the example of FIG. 42F, a plurality of "terminal x102-addressed signals" x411 are present in specific times in communication signal x403_i. Note that the signals are present at two locations in the example of FIG. 42F, but the signals may be present at more than two locations.

Note that, in the cases of FIGS. 42A, 42B, 42D, and 42E, gNB x101 transmits a communication signal of a multi-carrier scheme. In the cases of FIGS. 42C and 42F, gNB x101 may transmit a communication signal of either a multi-carrier scheme or single-carrier scheme.

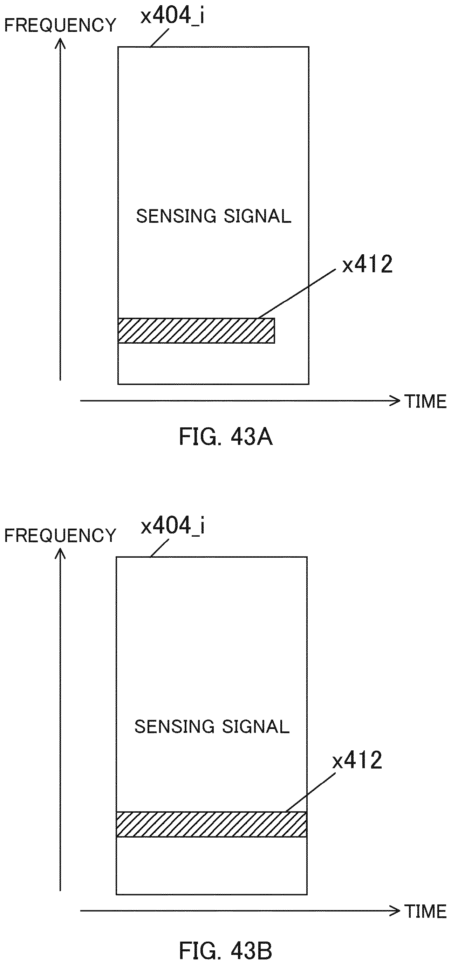

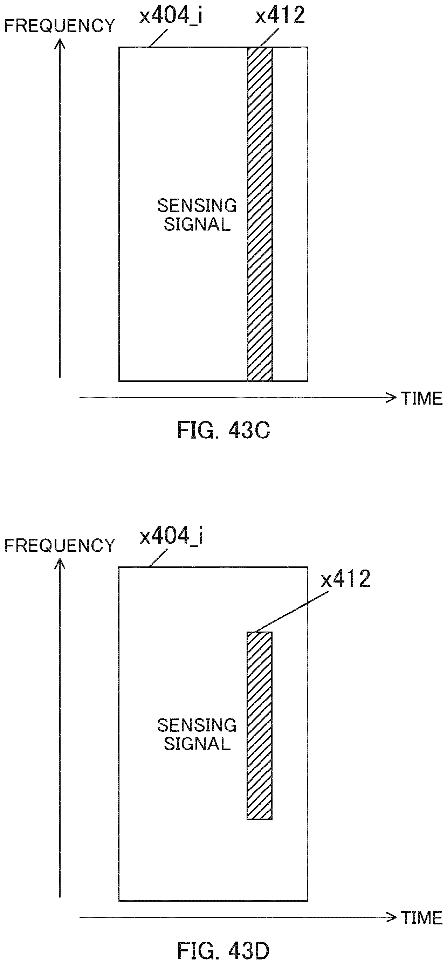

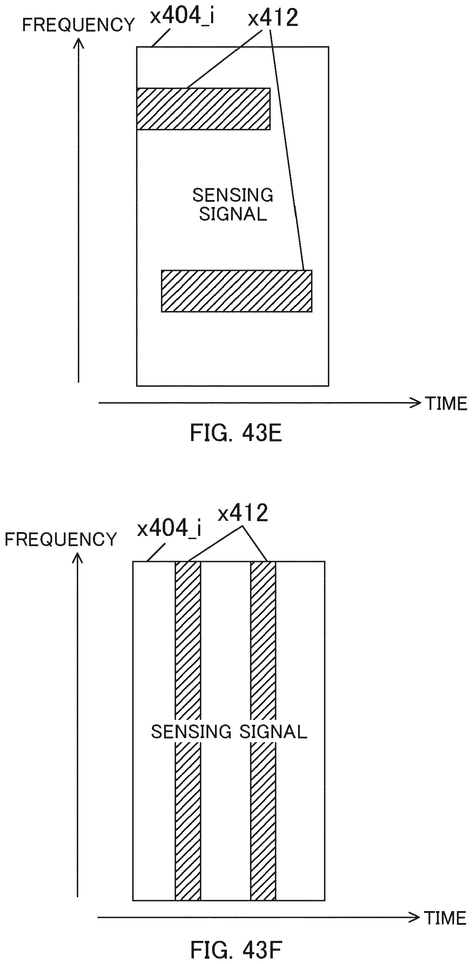

FIGS. 43A, 43B, 43C, 43D, 43E, and 43F illustrate exemplary mapping of signals transmitted for implementing sensing by a sensing request for sensing signals x404_i transmitted by gNB x101 in FIGS. 41A and 41C when the sensing request is received from terminal x102 in FIG. 38B.

For example, in a case where gNB x101 is requested to sense target x103 from terminal x102 as in FIGS. 38B and 40, when gNB x101 transmits a signal for sensing target x103, the "signal for sensing target x103" is x412 in FIGS. 43A, 43B, 43C, 43D, 43E, and 43F. Note that the horizontal axes represent time and the vertical axes represent frequency in FIGS. 43A, 43B, 43C, 43D, 43E, and 43F. In FIGS. 43A, 43B, 43C, 43D, 43E, and 43F, sensing signals may be arranged continuously or discretely in the frequency axis direction.

In the example of FIG. 43A, "signal for sensing target x103" x412 is present in some time on a specific frequency of frequencies where sensing signal x404_i is present.

In the example of FIG. 43B, "signal for sensing target x103" x412 is present on a specific frequency of frequencies where sensing signal x404_i is present.

In the example of FIG. 43C, "signal for sensing target x103" x412 is present in a specific time in sensing signal x404_i.

In the example of FIG. 43D, "signal for sensing target x103" x412 is present in a specific time on a specific frequency in sensing signal x404_i.

In the example of FIG. 43E, a plurality of "signals for sensing target x103" x412 are present in "specific times on specific frequencies" in sensing signal x404_i. Note that the signals are present at two locations in the example of FIG. 43E, but the signals may be present at more than two locations.

In the example of FIG. 43F, a plurality of "signals for sensing target x103" x412 are present in specific times in sensing signal x404_i. Note that the signals are present at two locations in the example of FIG. 43F, but the signals may be present at more than two locations.

Note that, in the cases of FIGS. 43A, 43B, 43D, and 43E, gNB x101 transmits a sensing signal of a multi-carrier scheme. In the cases of FIGS. 43C and 43F, gNB x101 may transmit a sensing signal of either a multi-carrier scheme or single-carrier scheme. Note that gNB x101 transmits not only a "sensing signal of either a multi-carrier scheme or single-carrier scheme" but also a signal such as a tone signal, continuous wave (CW), and non-modulation signal as a sensing signal. (Any signal will do as long as it is a sensing signal.)

Here, separating the "communication signal, i.e., communication resource" and the "sensing signal, i.e., sensing resource" in the signal transmitted by the gNB as in FIGS. 41A and 41C produces an effect of enabling resource allocation according to the communication purpose and sensing purpose.

In addition, allocating a sensing signal in the frequency direction as in FIGS. 43A, 43B, 43D, and 43E produces an effect of simultaneously implementing sensing a plurality of times.

When a sensing signal is allocated in the time axis direction as in FIGS. 43C and 43F, the sensing signal can be allocated broadly in the frequency axis direction, thereby producing an effect of improving the sensing accuracy.

In FIGS. 41A and 41C, control information symbol x402_i transmitted by gNB x101 preferably includes frequency and/or time allocation information of communication signal x403_i for each terminal and frequency and/or time allocation information of a sensing signal for each terminal.

In the case of FIGS. 38B and 40, a terminal x102-addressed signal is present in communication signal x403_i in FIGS. 41A and 41C, and a "signal for implementing sensing requested from terminal x102" is present in sensing signal x404_i.

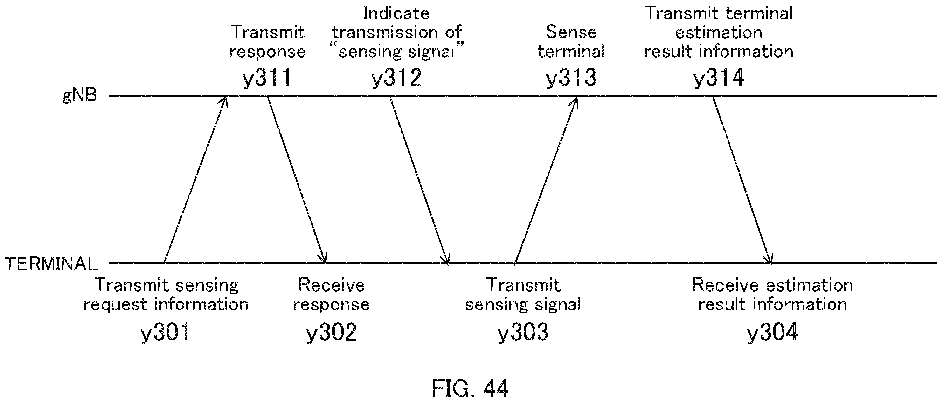

Next, FIG. 44 illustrates exemplary interaction between gNB x101 and terminal x102 when the gNB and terminal are in the state as in FIG. 38A.

For example, as illustrated in FIG. 44, the terminal first transmits "sensing request" information to the base station (y301).

Then, the gNB receives the information transmitted by the terminal and responds to the sensing request (y311).

The terminal receives information of the response transmitted by the gNB (y302).

Note that, in the following, a description will be given of a case where the gNB transmits a response to a sensing request from the terminal to implement sensing.

Subsequently, the gNB indicates transmission of a "sensing signal" to the terminal (y312).

Upon receiving this indication from the gNB, the terminal transmits a sensing signal (y303).

The gNB receives the sensing signal transmitted by the terminal and senses the terminal (y313).

Then, the gNB transmits, to the terminal, information of the sensing estimation result of the terminal obtained by sensing the terminal (y314).

This allows the terminal to receive the information of the sensing estimation result of the terminal estimated by the gNB (y304).

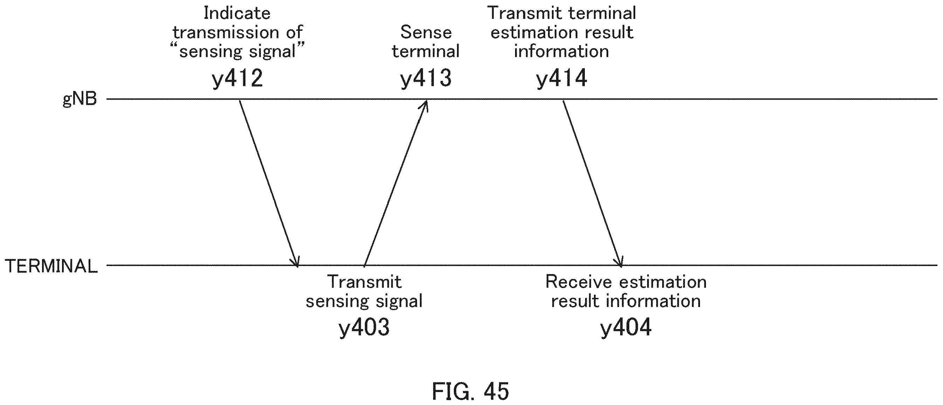

A description will be given of the example of FIG. 45 illustrating interaction between gNB x101 and terminal x102 different from that in FIG. 44 when the gNB and terminal are in the state as in FIG. 38A.

For example, the gNB and terminal communicate with each other. Then, the gNB gets ready for sensing the terminal and indicates transmission of a "sensing signal" to the terminal (y412).

Upon receiving this indication from the gNB, the terminal transmits a sensing signal (y403).

The gNB receives the sensing signal transmitted by the terminal and senses the terminal (y413).

Then, the gNB transmits, to the terminal, information of the sensing estimation result of the terminal obtained by sensing the terminal (y414).

This allows the terminal to receive the information of the sensing estimation result of the terminal estimated by the gNB (y404).

Note that communication and access between the gNB and terminal before the "sensing signal" transmission indication y412 by the gNB in FIG. 45 may be in any states.

The terminal transmitting a sensing signal in FIGS. 44 and 45 is referred to as the first terminal.

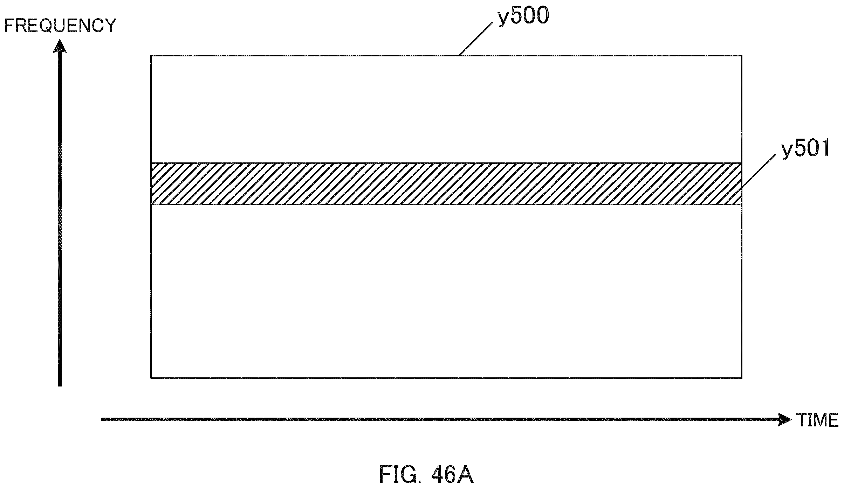

FIG. 46A illustrates exemplary assignment of a modulation signal transmitted by the first terminal in the frequency and time axes. Note that the vertical axis represents frequency and the horizontal axis represents time in FIG. 46A.

y500 in FIG. 46A indicates a resource in time and frequency that can be used by terminals including the first terminal for transmitting modulation signals.

y501 in FIG. 46A indicates a resource in time and frequency used by the first terminal for transmitting a modulation signal for communication.

Frequency division may be performed so that a plurality of terminals can transmit modulation signals as described above.

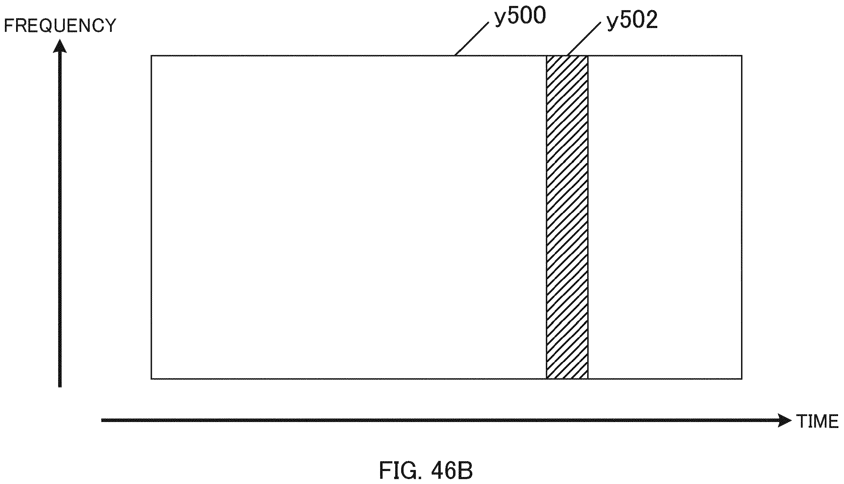

FIG. 46B illustrates exemplary assignment of a modulation signal transmitted by the first terminal in the frequency and time axes, different from that in FIG. 46A. Note that the vertical axis represents frequency and the horizontal axis represents time in FIG. 46B.

y500 in FIG. 46B indicates a resource in time and frequency that can be used by terminals including the first terminal for transmitting modulation signals.

y502 in FIG. 46B indicates a resource in time and frequency used by the first terminal for transmitting a modulation signal for communication.

Time division may be performed so that a plurality of terminals can transmit modulation signals as described above.

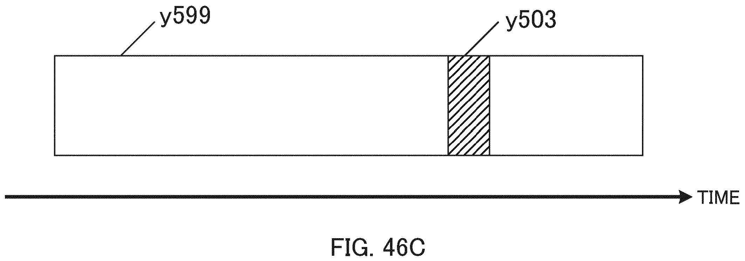

FIG. 46C illustrates exemplary assignment of a modulation signal transmitted by the first terminal in the time axis. Note that the horizontal axis represents time in FIG. 46C.

y599 in FIG. 46C indicates a resource in time that can be used by terminals including the first terminal for transmitting modulation signals.

y503 in FIG. 46C indicates a resource in time used by the first terminal for transmitting a modulation signal for communication.

Time division may be performed so that a plurality of terminals can transmit modulation signals as described above.

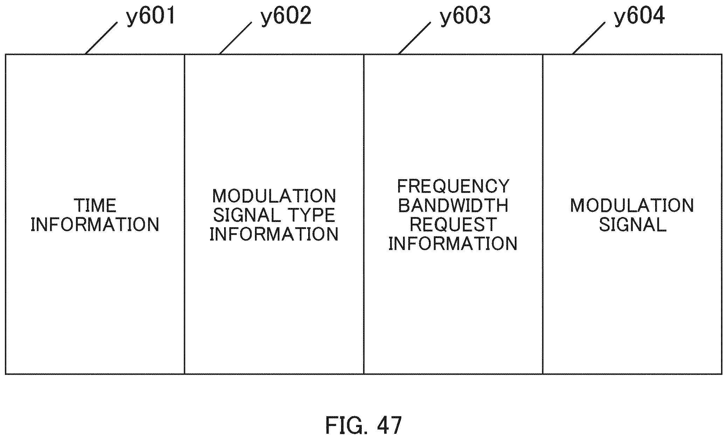

FIG. 47 illustrates an exemplary configuration of "resource in time and frequency used by the first terminal for transmitting a modulation signal for communication" y501 in FIG. 46A, "resource in time and frequency used by the first terminal for transmitting a modulation signal for communication" y502 in FIG. 46B, and "time resource used by the first terminal for transmitting a modulation signal for communication" y503 in FIG. 46C.

It is possible to transmit data for performing communication by modulation signal y604 while it is also possible to use modulation signal y604 as a sensing signal when indicated by gNB.

Time information y601 includes information of the transmission time of a modulation signal transmitted by a terminal. This improves sensing accuracy when the gNB senses the terminal, for example.

Modulation signal type information y602 includes information of "communication" when modulation signal y604 is used for communication and includes information of "sensing" when modulation signal y604 is used for sensing.

Frequency bandwidth request information y603 includes information for requesting a frequency bandwidth from the terminal to the gNB for improving sensing accuracy.

Note that FIG. 47 is an exemplary configuration method of "resource in time and frequency used by the first terminal for transmitting a modulation signal for communication" y501 in FIG. 46A, "resource in time and frequency used by the first terminal for transmitting a modulation signal for communication" y502 in FIG. 46B, and "time resource used by the first terminal for transmitting a modulation signal for communication" y503 in FIG. 46C. The configuration is not limited to this, and other information may be included.

The above operation produces an effect of enabling the gNB to sense the terminal using a resource allocated for the terminal to transmit a modulation signal for communication.

Next, a description will be given of a case where terminal x102 senses target x103 as in FIG. 38C.

In the case of FIG. 38C, gNB x101 possibly communicates with a terminal other than terminal x102. Thus, it is necessary not to interrupt communication between gNB x101 and another terminal when terminal x102 implements sensing. The following description is about methods of reducing signal interference.

A method using a sector sweep-related procedure will be described by way of example.

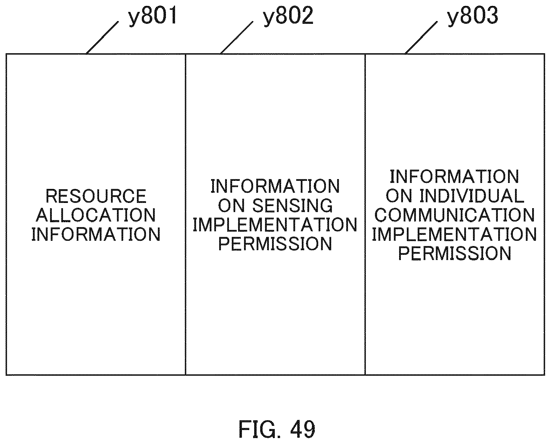

gNB x101 in FIG. 38C transmits a sector sweep-related signal as in FIG. 10. At this time, control information as illustrated in FIG. 49 is transmitted in feedback signal 1002 and/or data-symbol-included frame 1003. Note that FIG. 49 will be described later.

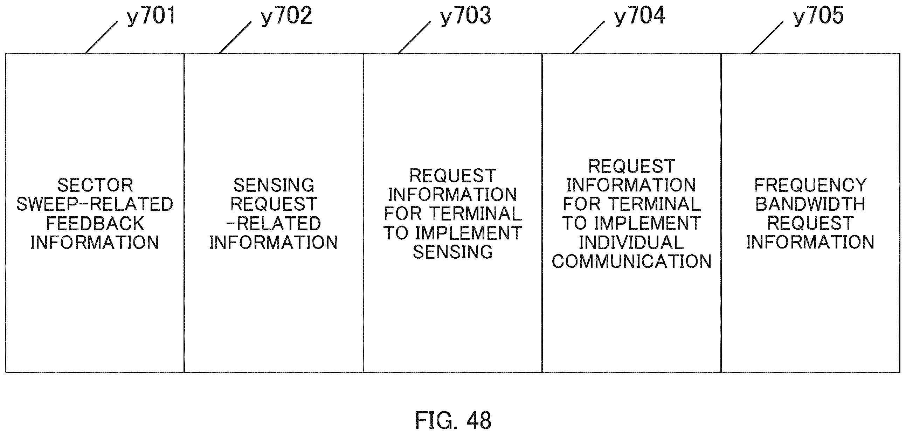

A signal transmitted by terminal x102 in FIG. 38C includes a "sector sweep reference signal" transmitted by a terminal as illustrated in FIG. 13. Terminal x102 in FIG. 38C also transmits a modulation signal including (a data symbol). At this time, terminal x102 transmits control information as illustrated in FIG. 48 using the "sector sweep reference signal", "modulation signal including (a data symbol)", etc.

FIG. 48 illustrates an exemplary configuration of control information transmitted by terminal x102 in FIG. 38C.

The control information is composed of, for example, "sector sweep-related feedback information y701", "sensing request-related information y702", "request information for terminal to implement sensing y703", "request information for terminal to implement individual communication y704", and "frequency bandwidth request information y705". Note that the control information need not include all the above information.

A configuration of "sector sweep-related feedback information y701" has already been described in other embodiments, and thus the description thereof will be omitted.

"Sensing request-related information y702" is information on whether terminal x102 requests sensing to the gNB. When "sensing request-related information y702" indicates "request", for example, the gNB that has received this information may sense terminal x102 or may sense another object.

"Request information for terminal to implement sensing y703" is information for asking whether sensing can be implemented to obtain permission to implement sensing from the gNB when the terminal desires to sense a target as in FIG. 38C.

"Request information for terminal to implement individual communication y704" is information for asking whether individual communication can be implemented to obtain permission to implement individual communication from the gNB when the terminal desires to individually communicate with another terminal in FIG. 38C.

"Frequency bandwidth request information y705" is information for requesting from the gNB a frequency bandwidth that the terminal desires to use for sensing when the terminal senses a target as in FIG. 38C. Note that the terminal requests a broader frequency bandwidth to achieve sensing with higher accuracy, for example.

Then, the gNB receives such control information transmitted by the terminal. After that, gNB x101 in FIG. 38C transmits control information in FIG. 49, for example.

Note that a configuration of the control information transmitted by the terminal in FIG. 48 is not limited to this example and may include other control information. The control information need not include all the above information illustrated in FIG. 48.

FIG. 49 illustrates an exemplary configuration of control information transmitted by gNB x101 in FIG. 38C.

The control information is composed of, for example, "resource allocation information y801", "information on sensing implementation permission y802", and "information on individual communication implementation permission y803". Note that the control information need not include all the above information.

"Resource allocation information y801" is "information on a resource "in time and/or frequency" used by the terminal in FIG. 38C for transmitting a modulation signal for communication" and/or "information on a resource "in time and/or frequency" used by the terminal in FIG. 38C for transmitting a modulation signal for sensing". In this manner, the gNB may allocate "only a resource for communication for the terminal", may allocate "only a resource for sensing for the terminal", or may allocate "a resource for communication and a resource for sensing for the terminal".

"Information on sensing implementation permission y802" is permission information on whether the terminal in FIG. 38C can implement sensing. Thus, when the terminal asks the gNB whether it may implement sensing and the gNB permits the sensing implementation by the terminal, "information on sensing implementation permission y802" includes information of permission to implement. Then, the terminal obtains "permission to implement" and senses a target.

"Information on individual communication implementation permission y803" is permission information on whether the terminal in FIG. 38C can implement individual communication. Thus, when the terminal asks the gNB whether it may implement individual communication and the gNB permits the individual communication implementation by the terminal, "information on individual communication implementation permission y803" includes information of permission to implement. Then, the terminal obtains "permission to implement" and implements individual communication.

Note that a frame that transmits the control information in FIG. 48 transmitted by the terminal may be present in a modulation signal that transmits data described in other embodiments. Further, a frame that transmits the control information in FIG. 49 transmitted by the gNB may be present in a modulation signal that transmits data described in other embodiments.

As described above, by the terminal implementing "sensing and/or individual communication" with permission from the gNB, the "sensing and/or individual communication" is implemented with reduced impact on another communication apparatus, thereby producing an effect of improving space utilization efficiency.

Next, a description will be given of a frame configuration in "a case where the gNB implements sensing and a case where the terminal implements sensing" as described above.

As described with reference to FIGS. 38A, 38B, and 38C, the gNB and terminal transmit modulation signals for sensing. In the following, exemplary frame configurations of modulation signals for sensing transmitted by the gNB and terminal will be described.

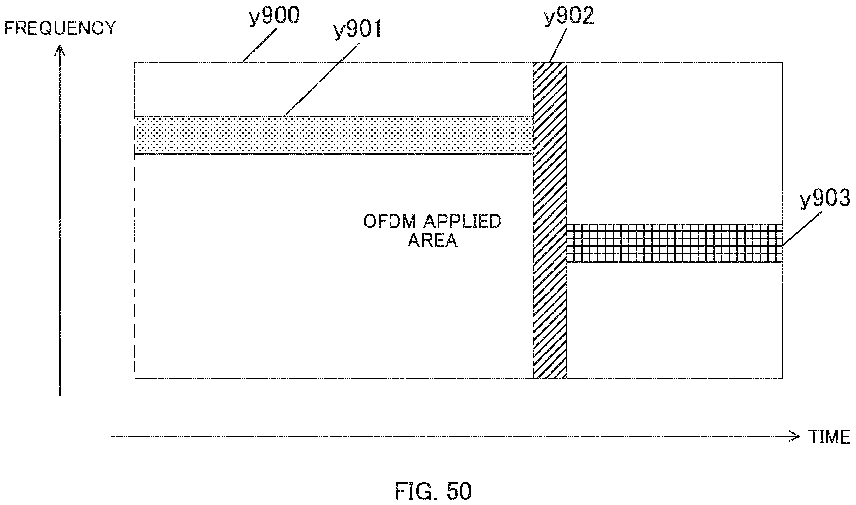

FIG. 50 illustrates an exemplary configuration of a modulation signal transmitted by the gNB or terminal. Note that the horizontal axis represents time and the vertical axis represents frequency.

The case where the gNB transmits a modulation signal will be described. A case where a multi-carrier transmission method is used will be described, by way of example. For example, y900 is an orthogonal frequency division multiplexing (OFDM) applied area, and the gNB transmits a modulation signal in OFDM applied area y900.

Then, the gNB transmits a "modulation signal for communication or modulation signal for sensing" using "area y901 and/or area y902 and/or area y903".

Frequency division may be performed as in area y901 and area y903, and time division may be performed as in area y902, that is, a time division area and frequency division areas are present in OFDM applied area y900.

Note that sensing with broader frequency bandwidth (e.g., area y902) enables sensing with high accuracy. Thus, modulation signal generation as in FIG. 50 produces an effect of enabling flexible area allocation relative to sensing accuracy.

The case where the terminal transmits a modulation signal will be described. A case where a multi-carrier transmission method is used will be described, by way of example. For example, y900 is an OFDM applied area

Then, the terminal transmits a "modulation signal for communication or modulation signal for sensing using area y901" and/or "modulation signal for communication or modulation signal for sensing using area y902" and/or "modulation signal for communication or modulation signal for sensing using area y903".

Frequency division may be performed as in area y901 and area y903, and time division may be performed as in area y902, that is, a time division area and frequency division areas are present in OFDM applied area y900.

Note that sensing with broader frequency bandwidth (e.g., area y902) enables sensing with high accuracy. Thus, modulation signal generation as in FIG. 50 produces an effect of enabling flexible area allocation relative to sensing accuracy.

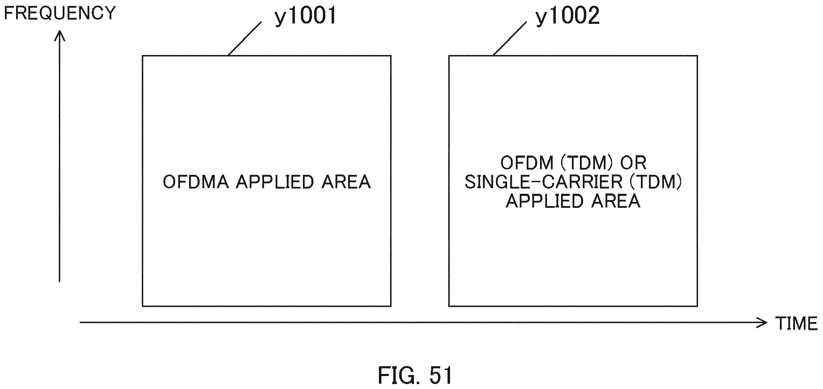

FIG. 51 illustrates an exemplary configuration of a modulation signal transmitted by the gNB or terminal, different from that in FIG. 50. Note that the horizontal axis represents time and the vertical axis represents frequency.

The case where the gNB transmits a modulation signal will be described. For example, y1001 is an orthogonal frequency division multiple access (OFDMA) applied area, and the gNB transmits a modulation signal in OFDMA applied area y1001.

In this case, the gNB performs frequency division in OFDMA applied area y1001 to allocate areas for a plurality of terminals. For example, OFDMA applied area y1001 is divided into the "first frequency area", "second frequency area", ..., "M-th frequency area". Note that M is an integer equal to or greater than 2. At this time, the first frequency area is an area for the first terminal, and the second frequency area is an area for the second terminal, for example.

Alternatively, the first frequency area may be an area for the first sensing, and the second frequency may be an area for the second sensing.

Here, both an area for a terminal and an area for sensing may be present in OFDMA applied area y1001.

As an exception, OFDMA applied area y1001 may be used as an area for a single terminal, or OFDMA applied area y 1001 may be used as a sensing area for a single sensing implementation.

For example, y1002 is an "OFDM (time division multiplexing (TDM)) or single-carrier (TDM) applied area", and the gNB transmits a modulation signal in "OFDM (TDM) or single-carrier (TDM) applied area y1002".

In this case, the gNB performs time division in "OFDM (TDM) or single-carrier (TDM) applied area y1002" to allocate areas for a plurality of terminals. For example, "OFDM (TDM) or single-carrier (TDM) applied area y1002" is divided into the "first time area", "second time area",..., "M-th time area". Note that M is an integer equal to or greater than 2. At this time, the first time area is an area for the first terminal, and the second time area is an area for the second terminal, for example.

Alternatively, the first time area may be an area for the first sensing, and the second time area may be an area for the second sensing.

Here, both an area for a terminal and an area for sensing may be present in "OFDM (TDM) or single-carrier (TDM) applied area y1002".

As an exception, "OFDM (TDM) or single-carrier (TDM) applied area y1002" may be used as an area for a single terminal, or "OFDM (TDM) or single-carrier (TDM) applied area y1002" may be used as a sensing area for a single sensing implementation.

In this manner, modulation signal generation as in FIG. 51 produces an effect of enabling flexible area allocation relative to sensing accuracy, as is the case with FIG. 50.

In addition, the base station and terminal can obtain an effect of achieving communication with great data efficiency.

The case where the terminal transmits a modulation signal will be described. For example, y 1001 is an OFDMA applied area

In this case, frequency division is performed in OFDMA applied area y1001 and the areas are allocated as transmission areas for a plurality of terminals. For example, OFDMA applied area y1001 is divided into the "first frequency area", "second frequency area", ..., "M-th frequency area". Note that M is an integer equal to or greater than 2. At this time, the first frequency area is an area for the first terminal to transmit a modulation signal, and the second frequency area is an area for the second terminal to transmit a modulation signal, for example.

Alternatively, the first frequency area may be an area for the first sensing where a terminal implements sensing, and the second frequency may be an area for the second sensing where a terminal implements sensing.

Here, both an area for a terminal to transmit a modulation signal for communication and an area for sensing where a terminal implements sensing may be present in OFDMA applied area y1001.

As an exception, OFDMA applied area y1001 may be used as an area for a single terminal to transmit a modulation signal, or OFDMA applied area y1001 may be used as a sensing area for a single terminal to implement sensing.

For example, y1002 is an "OFDM (TDM) or single-carrier (TDM) applied area", and the terminal transmits a modulation signal in "OFDM (TDM) or single-carrier (TDM) applied area y1002".

In this case, "OFDM (TDM) or single-carrier (TDM) applied area y1002" is time-divided to be allocated as transmission areas for a plurality of terminals. For example, "OFDM (TDM) or single-carrier (TDM) applied area y1002" is divided into the "first time area", "second time area",..., "M-th time area". Note that M is an integer equal to or greater than 2. At this time, the first time area is an area for the first terminal to transmit a modulation signal, and the second time area is an area for the second terminal to transmit a modulation signal, for example.

Alternatively, the first time area may be an area for the first sensing where a terminal implements sensing, and the second time area where a terminal implements sensing may be an area for the second sensing.

Here, both an area for a terminal to transmit a modulation signal for communication and an area for sensing where a terminal implements sensing may be present in "OFDM (TDM) or single-carrier (TDM) applied area y1002".

As an exception, "OFDM (TDM) or single-carrier (TDM) applied area y1002" may be used as an area for a single terminal to transmit a modulation signal, or "OFDM (TDM) or single-carrier (TDM) applied area y1002" may be used as a sensing area for a single terminal to implement sensing.

In this manner, modulation signal generation as in FIG. 51 produces an effect of enabling flexible area allocation relative to sensing accuracy, as is the case with FIG. 50.

In addition, the base station and terminal can obtain an effect of achieving communication with great data efficiency.

Further specific operations will be described below.

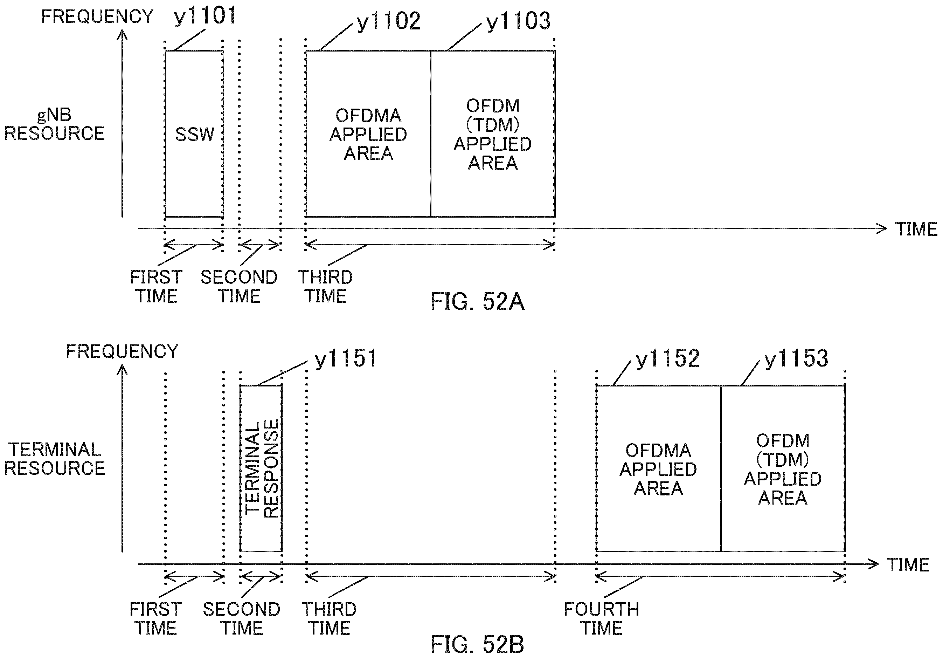

FIG. 52A illustrates an exemplary resource for a modulation signal transmitted by the gNB, and FIG. 52B illustrates an exemplary resource for a modulation signal transmitted by the terminal, where the horizontal axis represents time and the vertical axis represents frequency.

As illustrated in FIG. 52A, the gNB first transmits sector sweep-related signal (SSW) y1101 in the first time. Note that examples of a configuration and a transmission method of sector sweep-related signal (SSW) y1101 have been described in other embodiments, and thus the description thereof will be omitted.

As illustrated in FIG. 52B, "terminal response" frame y1151 is present in the second time for the terminal to transmit a modulation signal. Note that examples of a configuration and a transmission method of "terminal response" frame y1151 have been described in other embodiments, and thus the description thereof will be omitted.

As illustrated in FIG. 52A, the gNB transmits a modulation signal corresponding to OFDMA applied area y1102 and a modulation signal corresponding to OFDM (TDM, however) applied area y1103 in the third time. Note that examples of a configuration and a transmission method of "OFDMA applied area y1102 and OFDM (TDM, however) applied area y1103" have been described with reference to FIG. 51, etc., and thus the description thereof will be omitted.

As illustrated in FIG. 52B, "OFDMA applied area y1152" and "OFDM (TDM is performed, however) applied area y1153" are present in the fourth time for the terminal to transmit a modulation signal. Note that a configuration and a transmission method of "OFDMA applied area y1152" and a configuration and a transmission method of "OFDM (TDM is performed, however) applied area y1153" have been described with reference to FIG. 51, etc., and thus the description thereof will be omitted.

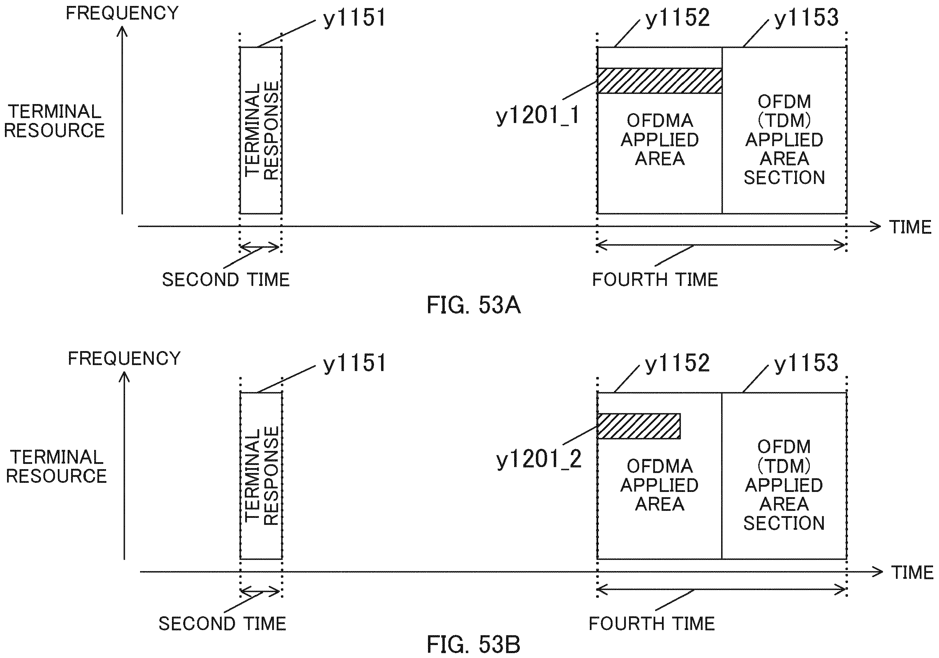

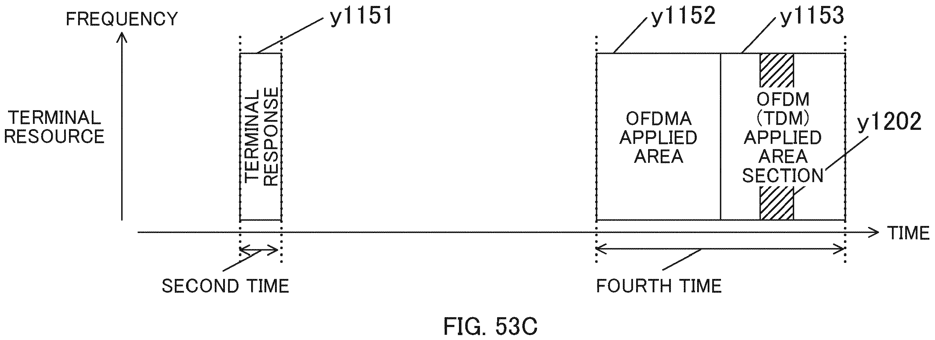

FIG. 53A illustrates the first example of resource allocation for a modulation signal transmitted by the terminal, FIG. 53B illustrates the second example of resource allocation for a modulation signal transmitted by the terminal, and FIG. 53C illustrates the third example of resource allocation for a modulation signal transmitted by the terminal, where the horizontal axis represents time and the vertical axis represents frequency. Note that, in FIGS. 53A, 53B, and 53C, the components that operate in the same manner as in FIG. 52B are denoted by the same reference signs, and the description thereof will be omitted.

In the first example, as illustrated in FIG. 53A, the first terminal among terminals, for example, is allowed to use area y1201_1 in OFDMA applied area y1152, i.e., the first frequency resource from the gNB. Thus, the first terminal transmits a modulation signal for communication or a modulation signal for sensing using area y1201_1.

In the second example, as illustrated in FIG. 53B, the second terminal among terminals, for example, is allowed to use area y1201_2 in OFDM applied area y1152, i.e., part of the second frequency resource from the gNB. Thus, the second terminal transmits a modulation signal for communication or a modulation signal for sensing using area y1201_2.

In the third example, as illustrated in FIG. 53C, the third terminal among terminals, for example, is allowed to use area y1202 in OFDM (TDM) applied area y1153, i.e., the first time resource from the gNB. Thus, the third terminal transmits a modulation signal for communication or a modulation signal for sensing using area y1202.

Next, a description will be given of exemplary sector sweep-related operations in resource allocation to a terminal as in FIGS. 53A, 53B, and 53C.

By way of example, the case where a base station and terminals are connected as in FIG. 26 will be discussed.

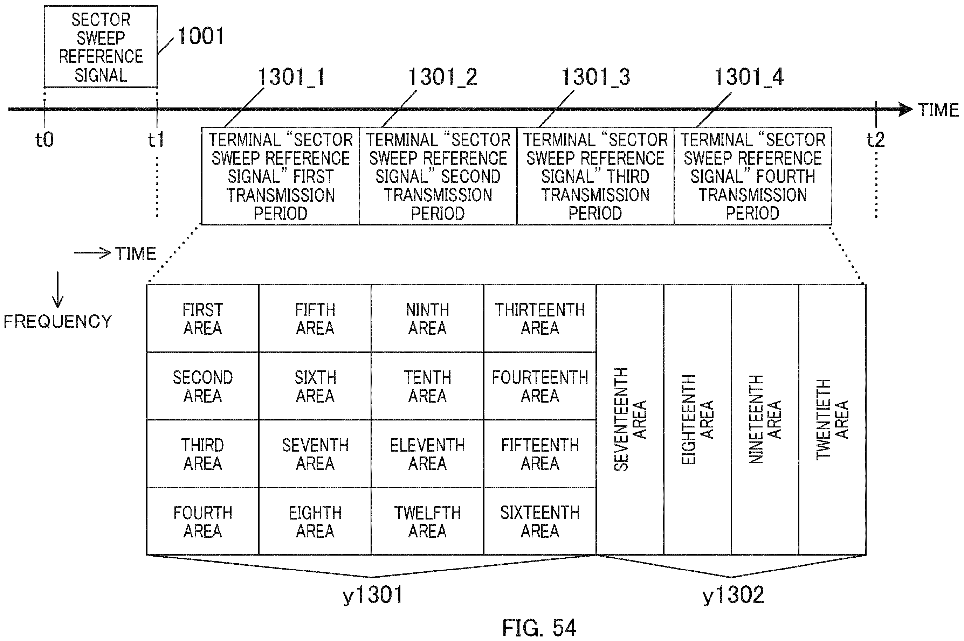

FIG. 54 illustrates sector sweep reference signal 1001 in FIG. 13 transmitted by base station #1 in FIG. 26 and terminal "sector sweep reference signal" i-th transmission period 1301_i illustrated in FIG. 13, which have been described in other embodiments. Note that i is an integer from 1 to 4 (both inclusive).

OFDMA applied areas and OFDM (TDM) applied areas are present in FIGS. 52A, 52B, 53A, 53B, and 53C. Thus, the terminal "sector sweep reference signal" transmission period is not time-divided like terminal "sector sweep reference signal" i-th transmission period 1301_i in FIG. 13, but frequency-divided and time-divided like OFDMA and OFDM (TDM) as in FIG. 54.

For example, area y1301 is at least frequency-divided in FIG. 54. Further, area y1302 is time-divided. Note that the vertical axis represents frequency and the horizontal axis represents time.

Further, area y1301 is divided into the first area, second area, third area, fourth area, fifth area, sixth area, seventh area, eighth area, ninth area, tenth area, eleventh area, twelfth area, thirteenth area, fourteenth area, fifteenth area, and sixteenth area.

Then, area y1302 is divided into the seventeenth area, eighteenth area, nineteenth area, and twentieth area.

For example, terminal #1 labeled 902_1 in FIG. 26 transmits a sector sweep reference signal to base station #1 labeled 901_1 using the first area of area y1301 in FIG. 54.

Then, base station #1 labeled 901_1 transmits a modulation signal addressed to terminal #1 labeled 902_1 using OFDMA applied area y1102 in FIG. 52A.

Base station #1 labeled 901_1 also transmits "resource allocation information and sensing implementation permission information" for terminal #1 labeled 902_1 using feedback signal 1002 in FIG. 10, for example. Note that, in the above-described case, OFDMA applied area y1152 in FIG. 52B is allocated when terminal #1 labeled 902_1 transmits a modulation signal. Thus, the "resource allocation information" transmitted by base station #1 labeled 901_1 includes information of allocating a resource to OFDMA applied area y1152.

Terminal #1 labeled 902_1 then transmits a modulation signal using (part of) OFDMA applied area y1152. Note that, when the "sensing implementation permission information" includes information of sensing permission, terminal #1 labeled 902_1 transmits a modulation signal for sensing. Other than that, terminal #1 labeled 902_1 transmits a modulation signal for communication.

When terminal X transmits a sector sweep reference signal using any of the first area to sixteenth area in FIG. 54 as in the above example, the base station transmits a modulation signal addressed to terminal X using OFDMA applied area y1102 in FIG. 52A, and terminal X transmits a modulation signal using OFDMA applied area y1152 in FIG. 52B.

As another example, terminal #2 labeled 902_2 in FIG. 26 transmits a sector sweep reference signal to base station #1 labeled 901_1 using the seventeenth area of area y1302 in FIG. 54.

Then, base station #1 labeled 901_1 transmits a modulation signal addressed to terminal #2 labeled 902_2 using OFDM (TDM) applied area y1103 in FIG. 52A.

Base station #1 labeled 901_1 also transmits "resource allocation information and sensing implementation permission information" for terminal #2 labeled 902_2 using feedback signal 1002 in FIG. 10, for example. Note that, in the above-described case, OFDM (TDM) applied area y1153 in FIG. 52B is allocated when terminal #2 labeled 902_2 transmits a modulation signal. Thus, the "resource allocation information" transmitted by base station #1 labeled 901_1 includes information of allocating a resource to OFDM (TDM) applied area y1153.

Terminal #2 labeled 902_2 then transmits a modulation signal using (part of) OFDM (TDM) applied area y1153. Note that, when the "sensing implementation permission information" includes information of sensing permission, terminal #2 labeled 902_2 transmits a modulation signal for sensing. Other than that, terminal #2 labeled 902_2 transmits a modulation signal for communication.

When terminal Y transmits a sector sweep reference signal using any of the seventeenth area to twentieth area in FIG. 54 as in the above example, the base station transmits a modulation signal addressed to terminal Y using OFDM (TDM) applied area y1103 in FIG. 52A, and terminal Y transmits a modulation signal using OFDM (TDM) applied area y1153 in FIG. 52B.

Note that the base station can determine which of OFDMA and OFDM (TDM) is requested depending on the area where the terminal transmits a sector sweep signal as in FIG. 54.

Although time-division is performed in area y1301 in FIG. 54, time-division is not necessary. In this case, the "first area, fifth area, ninth area, and thirteenth area" in FIG. 54 are aggregated as a single area, the "second area, sixth area, tenth area, and fourteenth area" are aggregated as a single area, the "third area, seventh area, eleventh area, and fifteenth area" are aggregated as a single area, and the "fourth area, eighth area, twelfth area, and sixteenth area" are aggregated as a single area.

Note that a method of dividing areas y1301 and y1302 in FIG. 54 is not limited to the example of FIG. 54.

In the above-described manner, modulation signal generation as in FIGS. 52A, 52B, and 52C produces an effect of enabling flexible area allocation relative to sensing accuracy.

In addition, the base station and terminal can obtain an effect of achieving communication with great data efficiency.

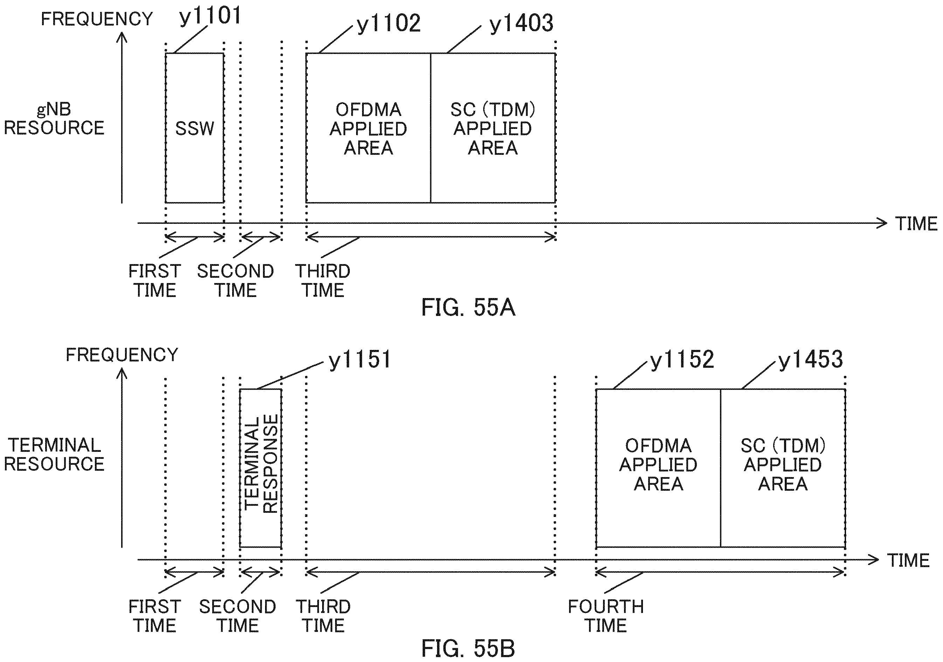

Another example will be described. FIG. 55A illustrates an exemplary resource for a modulation signal transmitted by the gNB, and FIG. 55B illustrates an exemplary resource for a modulation signal transmitted by the terminal, where the horizontal axis represents time and the vertical axis represents frequency. Note that, in FIG. 55A, components that operate in the same manner as in FIG. 52A are denoted by the same reference signs. In FIG. 55B, components that operate in the same manner as in FIG. 52B are denoted by the same reference signs.

As illustrated in FIG. 55A, the gNB first transmits sector sweep-related signal (SSW) y1101 in the first time. Note that examples of a configuration and a transmission method of sector sweep-related signal (SSW) y1101 have been described in other embodiments, and thus the description thereof will be omitted.

As illustrated in FIG. 55B, "terminal response" frame y1151 is present in the second time for the terminal to transmit a modulation signal. Note that examples of a configuration and a transmission method of "terminal response" frame y1151 have been described in other embodiments, and thus the description thereof will be omitted.

As illustrated in FIG. 55A, the gNB transmits a modulation signal corresponding to OFDMA applied area y1102 and a modulation signal corresponding to single carrier (SC) (TDM, however) applied area y1403 in the third time. Note that examples of a configuration and a transmission method of "OFDMA applied area y1102 and SC (TDM, however) applied area y1403" have been described with reference to FIG. 51, etc., and thus the description thereof will be omitted.

As illustrated in FIG. 55B, "OFDMA applied area y1152" and "SC (TDM is performed, however) applied area y1453" are present in the fourth time for the terminal to transmit a modulation signal. Note that a configuration and a transmission method of "OFDMA applied area y 1152" and a configuration and a transmission method of "SC (TDM is performed, however) applied area y1453" have been described with reference to FIG. 51, etc., and thus the description thereof will be omitted.

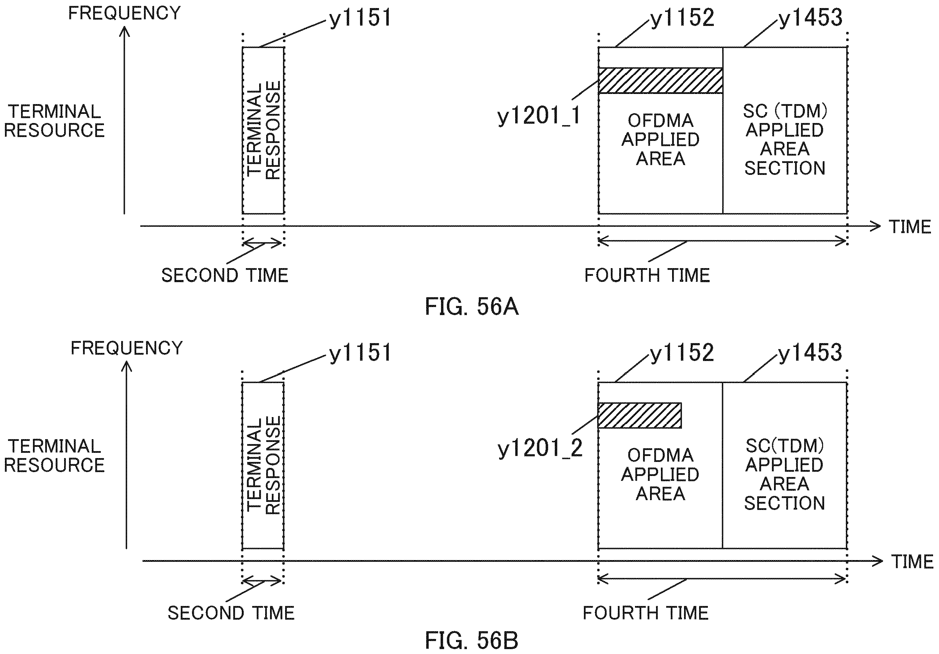

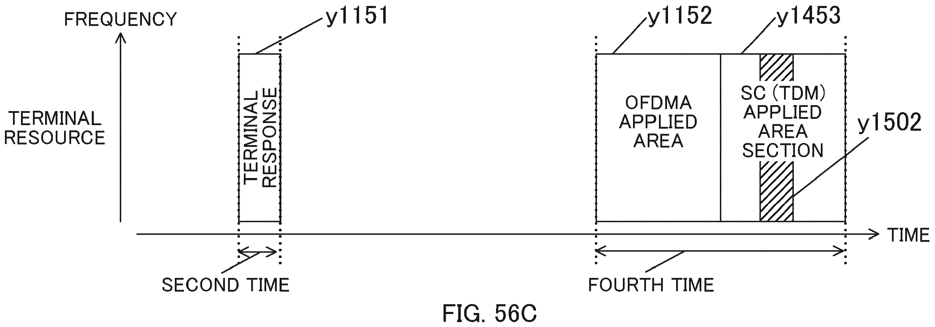

FIG. 56A illustrates the first example of resource allocation for a modulation signal transmitted by the terminal, FIG. 56B illustrates the second example of resource allocation for a modulation signal transmitted by the terminal, and FIG. 56C illustrates the third example of resource allocation for a modulation signal transmitted by the terminal, where the horizontal axis represents time and the vertical axis represents frequency. Note that, in FIGS. 56A, 56B, and 56C, the components that operate in the same manner as in FIG. 52B are denoted by the same reference signs, and the description thereof will be omitted.

In the first example, as illustrated in FIG. 56A, the first terminal among terminals, for example, is allowed to use area y1201_1 in OFDMA applied area y1152, i.e., the first frequency resource from the gNB. Thus, the first terminal transmits a modulation signal for communication or a modulation signal for sensing using area y1201_1.

In the second example, as illustrated in FIG. 56B, the second terminal among terminals, for example, is allowed to use area y1201_2 in OFDM applied area y1152, i.e., part of the second frequency resource from the gNB. Thus, the second terminal transmits a modulation signal for communication or a modulation signal for sensing using area y1201_2.

In the third example, as illustrated in FIG. 56C, the third terminal among terminals, for example, is allowed to use area y1502 in SC (TDM) applied area y1453, i.e., the first time resource from the gNB. Thus, the third terminal transmits a modulation signal for communication or a modulation signal for sensing using area y1502.

Next, a description will be given of exemplary sector sweep-related operations in resource allocation to a terminal as in FIGS. 56A, 56B, and 56C.

By way of example, the case where a base station and terminals are connected as in FIG. 26 will be discussed.

FIG. 54 illustrates sector sweep reference signal 1001 in FIG. 13 transmitted by base station #1 in FIG. 26 and terminal "sector sweep reference signal" i-th transmission period 1301_i illustrated in FIG. 13, which have been described in other embodiments. Note that i is an integer from 1 to 4 (both inclusive).

OFDMA applied areas and SC (TDM) applied areas are present in FIGS. 55A, 56A, 56B, and 56C. Thus, the terminal "sector sweep reference signal" transmission period is not time-divided like terminal "sector sweep reference signal" i-th transmission period 1301_i in FIG. 13, but frequency-divided and time-divided like OFDMA and SC (TDM) as in FIG. 54.

For example, area y1301 is at least frequency-divided in FIG. 54. Further, area y1302 is time-divided. Note that the vertical axis represents frequency and the horizontal axis represents time.

Further, area y1301 is divided into the first area, second area, third area, fourth area, fifth area, sixth area, seventh area, eighth area, ninth area, tenth area, eleventh area, twelfth area, thirteenth area, fourteenth area, fifteenth area, and sixteenth area.

Then, area y1302 is divided into the seventeenth area, eighteenth area, nineteenth area, and twentieth area.

For example, terminal #1 labeled 902_1 in FIG. 26 transmits a sector sweep reference signal to base station #1 labeled 901_1 using the first area of area y1301 in FIG. 54.

Then, base station #1 labeled 901_1 transmits a modulation signal addressed to terminal #1 labeled 902_1 using OFDMA applied area y1102 in FIG. 55A.

Base station #1 labeled 901_1 also transmits "resource allocation information and sensing implementation permission information" for terminal #1 labeled 902_1 using feedback signal 1002 in FIG. 10, for example. Note that, in the above-described case, OFDMA applied area y1152 in FIG. 55B is allocated when terminal #1 labeled 902_1 transmits a modulation signal. Thus, the "resource allocation information" transmitted by base station #1 labeled 901_1 includes information of allocating a resource to OFDMA applied area y1152.

Terminal #1 labeled 902_1 then transmits a modulation signal using (part of) OFDMA applied area y1152. Note that, when the "sensing implementation permission information" includes information of sensing permission, terminal #1 labeled 902_1 transmits a modulation signal for sensing. Other than that, terminal #1 labeled 902_1 transmits a modulation signal for communication.

When terminal X transmits a sector sweep reference signal using any of the first area to sixteenth area in FIG. 54 as in the above example, the base station transmits a modulation signal addressed to terminal X using OFDMA applied area y1102 in FIG. 55A, and terminal X transmits a modulation signal using OFDMA applied area y 1152 in FIG. 55B.

As another example, terminal #2 labeled 902_2 in FIG. 26 transmits a sector sweep reference signal to base station #1 labeled 901_1 using the seventeenth area of area y1302 in FIG. 54.

Then, base station #1 labeled 901_1 transmits a modulation signal addressed to terminal #2 labeled 902_2 using SC (TDM) applied area y1403 in FIG. 55A.

Base station #1 labeled 901_1 also transmits "resource allocation information and sensing implementation permission information" for terminal #2 labeled 902_2 using feedback signal 1002 in FIG. 10, for example. Note that, in the above-described case, SC

(TDM) applied area y1453 in FIG. 55B is allocated when terminal #2 labeled 902_2 transmits a modulation signal. Thus, the "resource allocation information" transmitted by base station #1 labeled 901_1 includes information of allocating a resource to SC (TDM) applied area y1453.

Terminal #2 labeled 902_2 then transmits a modulation signal using (part of) SC (TDM) applied area y1453. Note that, when the "sensing implementation permission information" includes information of sensing permission, terminal #2 labeled 902_2 transmits a modulation signal for sensing. Other than that, terminal #2 labeled 902_2 transmits a modulation signal for communication.

When terminal Y transmits a sector sweep reference signal using any of the seventeenth area to twentieth area in FIG. 54 as in the above example, the base station transmits a modulation signal addressed to terminal Y using SC (TDM) applied area y1403 in FIG. 55A, and terminal Y transmits a modulation signal using SC (TDM) applied area y1453 in FIG. 55B.

Note that the base station can determine which of OFDMA and SC (TDM) is requested depending on the area where the terminal transmits a sector sweep signal as in FIG. 54.

Although time-division is performed in area y1301 in FIG. 54, time-division is not necessary. In this case, the "first area, fifth area, ninth area, and thirteenth area" in FIG. 54 are aggregated as a single area, the "second area, sixth area, tenth area, and fourteenth area" are aggregated as a single area, the "third area, seventh area, eleventh area, and fifteenth area" are aggregated as a single area, and the "fourth area, eighth area, twelfth area, and sixteenth area" are aggregated as a single area.

Note that a method of dividing areas y1301 and y1302 in FIG. 54 is not limited to the example of FIG. 54.

In the above-described manner, modulation signal generation as in FIGS. 52A, 52B, and 52C produces an effect of enabling flexible area allocation relative to sensing accuracy.

Note that modulation signal transmission by the terminal using SC (TDM) applied area section y1453 in FIG. 56B produces an effect of reducing power consumption since an amplifier etc. has great power efficiency.

In addition, the base station and terminal can obtain an effect of achieving communication with great data efficiency.

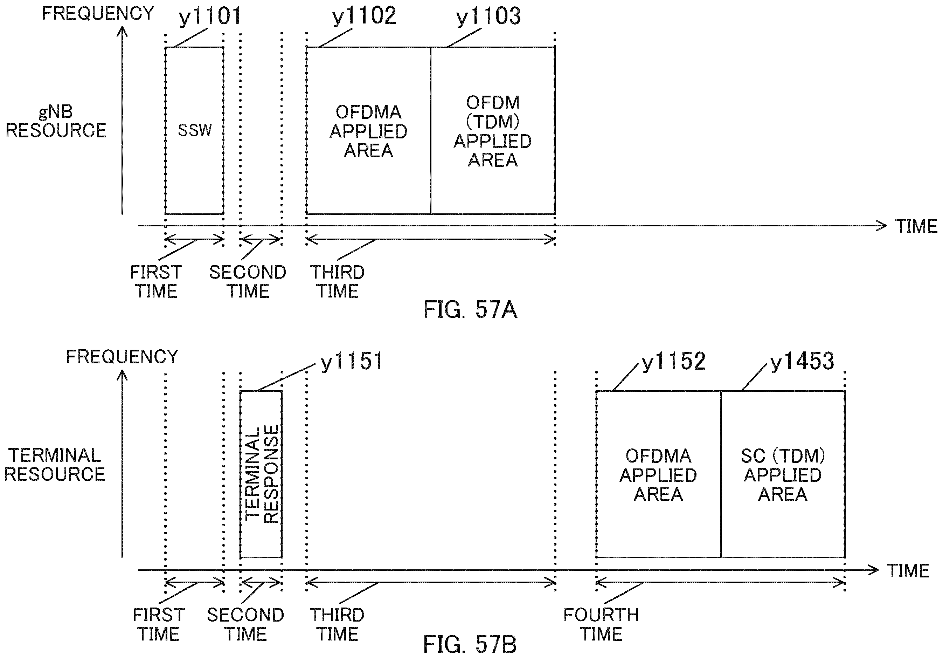

Still another example will be described. FIG. 57A illustrates an exemplary resource for a modulation signal transmitted by the gNB, and FIG. 57B illustrates an exemplary resource for a modulation signal transmitted by the terminal, where the horizontal axis represents time and the vertical axis represents frequency. Note that, in FIG. 57A, components that operate in the same manner as in FIG. 52A are denoted by the same reference signs. In FIG. 57B, components that operate in the same manner as in FIGS. 52B and 55B are denoted by the same reference signs.

As illustrated in FIG. 57A, the gNB first transmits sector sweep-related signal (SSW) y1101 in the first time. Note that examples of a configuration and a transmission method of sector sweep-related signal (SSW) y1101 have been described in other embodiments, and thus the description thereof will be omitted.

As illustrated in FIG. 57B, "terminal response" frame y1151 is present in the second time for the terminal to transmit a modulation signal. Note that examples of a configuration and a transmission method of "terminal response" frame y1151 have been described in other embodiments, and thus the description thereof will be omitted.

As illustrated in FIG. 57A, the gNB transmits a modulation signal corresponding to OFDMA applied area y1102 and a modulation signal corresponding to OFDM (TDM, however) applied area y1103 in the third time. Note that examples of a configuration and a transmission method of "OFDMA applied area y1102 and OFDM (TDM, however) applied area y1103" have been described with reference to FIG. 51, etc., and thus the description thereof will be omitted.

As illustrated in FIG. 57B, "OFDMA applied area y1152" and "SC (TDM is performed, however) applied area y1453" are present in the fourth time for the terminal to transmit a modulation signal. Note that a configuration and a transmission method of "OFDMA applied area y1152" and a configuration and a transmission method of "SC (TDM is performed, however) applied area y1453" have been described with reference to FIG. 51, etc., and thus the description thereof will be omitted.

FIG. 56A illustrates the first example of resource allocation for a modulation signal transmitted by the terminal, FIG. 56B illustrates the second example of resource allocation for a modulation signal transmitted by the terminal, and FIG. 56C illustrates the third example of resource allocation for a modulation signal transmitted by the terminal, where the horizontal axis represents time and the vertical axis represents frequency. FIGS. 56A, 56B, and 56C have already been described, and thus the description thereof will be omitted.

Next, a description will be given of exemplary sector sweep-related operations in resource allocation to a terminal as in FIGS. 56A, 56B, and 56C.

By way of example, the case where a base station and terminals are connected as in FIG. 26 will be discussed.

FIG. 54 illustrates sector sweep reference signal 1001 in FIG. 13 transmitted by base station #1 in FIG. 26 and terminal "sector sweep reference signal" i-th transmission period 1301_i illustrated in FIG. 13, which have been described in other embodiments. Note that i is an integer from 1 to 4 (both inclusive).

OFDMA applied areas, OFDM (TDM) applied areas, and SC (TDM) applied areas are present in FIGS. 57A, 56A, 56B, and 56C. Thus, the terminal "sector sweep reference signal" transmission period is not time-divided like terminal "sector sweep reference signal" i-th transmission period 1301_i in FIG. 13, but frequency-divided and time-divided like OFDMA and SC (TDM) as in FIG. 54.

For example, area y1301 is at least frequency-divided in FIG. 54. Further, area y1302 is time-divided.

Note that the vertical axis represents frequency and the horizontal axis represents time.

Further, area y1301 is divided into the first area, second area, third area, fourth area, fifth area, sixth area, seventh area, eighth area, ninth area, tenth area, eleventh area, twelfth area, thirteenth area, fourteenth area, fifteenth area, and sixteenth area.

Then, area y1302 is divided into the seventeenth area, eighteenth area, nineteenth area, and twentieth area.

For example, terminal #1 labeled 902_1 in FIG. 26 transmits a sector sweep reference signal to base station #1 labeled 901_1 using the first area of area y1301 in FIG. 54.

Then, base station #1 labeled 901_1 transmits a modulation signal addressed to terminal #1 labeled 902_1 using OFDMA applied area y1102 in FIG. 57A.

Base station #1 labeled 901_1 also transmits "resource allocation information and sensing implementation permission information" for terminal #1 labeled 902_1 using feedback signal 1002 in FIG. 10, for example. Note that, in the above-described case, OFDMA applied area y1152 in FIG. 57B is allocated when terminal #1 labeled 902_1 transmits a modulation signal. Thus, the "resource allocation information" transmitted by base station #1 labeled 901_1 includes information of allocating a resource to OFDMA applied area y1152.

Terminal #1 labeled 902_1 then transmits a modulation signal using (part of) OFDMA applied area y1152. Note that, when the "sensing implementation permission information" includes information of sensing permission, terminal #1 labeled 902_1 transmits a modulation signal for sensing. Other than that, terminal #1 labeled 902_1 transmits a modulation signal for communication.

When terminal X transmits a sector sweep reference signal using any of the first area to sixteenth area in FIG. 54 as in the above example, the base station transmits a modulation signal addressed to terminal X using OFDMA applied area y1102 in FIG. 57A, and terminal X transmits a modulation signal using OFDMA applied area y1152 in FIG. 57B.

As another example, terminal #2 labeled 902_2 in FIG. 26 transmits a sector sweep reference signal to base station #1 labeled 901_1 using the seventeenth area of area y1302 in FIG. 54.

Then, base station #1 labeled 901_1 transmits a modulation signal addressed to terminal #2 labeled 902_2 using OFDM (TDM) applied area y1103 in FIG. 57A.

Base station #1 labeled 901_1 also transmits "resource allocation information and sensing implementation permission information" for terminal #2 labeled 902_2 using feedback signal 1002 in FIG. 10, for example. Note that, in the above-described case, SC (TDM) applied area y1453 in FIG. 57B is allocated when terminal #2 labeled 902_2 transmits a modulation signal. Thus, the "resource allocation information" transmitted by base station #1 labeled 901_1 includes information of allocating a resource to SC (TDM) applied area y1453.

Terminal #2 labeled 902_2 then transmits a modulation signal using (part of) SC (TDM) applied area y1453. Note that, when the "sensing implementation permission information" includes information of sensing permission, terminal #2 labeled 902_2 transmits a modulation signal for sensing. Other than that, terminal #2 labeled 902_2 transmits a modulation signal for communication.

When terminal Y transmits a sector sweep reference signal using any of the seventeenth area to twentieth area in FIG. 54 as in the above example, the base station transmits a modulation signal addressed to terminal Y using OFDM (TDM) applied area y1103 in FIG. 57A, and terminal Y transmits a modulation signal using SC (TDM) applied area y1453 in FIG. 57B.

Note that the base station can determine which of OFDMA and SC (TDM) is requested depending on the area where the terminal transmits a sector sweep signal as in FIG. 54.

Although time-division is performed in area y1301 in FIG. 54, time-division is not necessary. In this case, the "first area, fifth area, ninth area, and thirteenth area" in FIG. 54 are aggregated as a single area, the "second area, sixth area, tenth area, and fourteenth area" are aggregated as a single area, the "third area, seventh area, eleventh area, and fifteenth area" are aggregated as a single area, and the "fourth area, eighth area, twelfth area, and sixteenth area" are aggregated as a single area.

Note that a method of dividing areas y1301 and y1302 in FIG. 54 is not limited to the example of FIG. 54.

In the above-described manner, modulation signal generation as in FIGS. 52A, 52B, and 52C produces an effect of enabling flexible area allocation relative to sensing accuracy.

Note that modulation signal transmission by the terminal using SC (TDM) applied area section y 1453 in FIG. 57B produces an effect of reducing power consumption since an amplifier etc. has great power efficiency.

In addition, the base station and terminal can obtain an effect of achieving communication with great data efficiency.

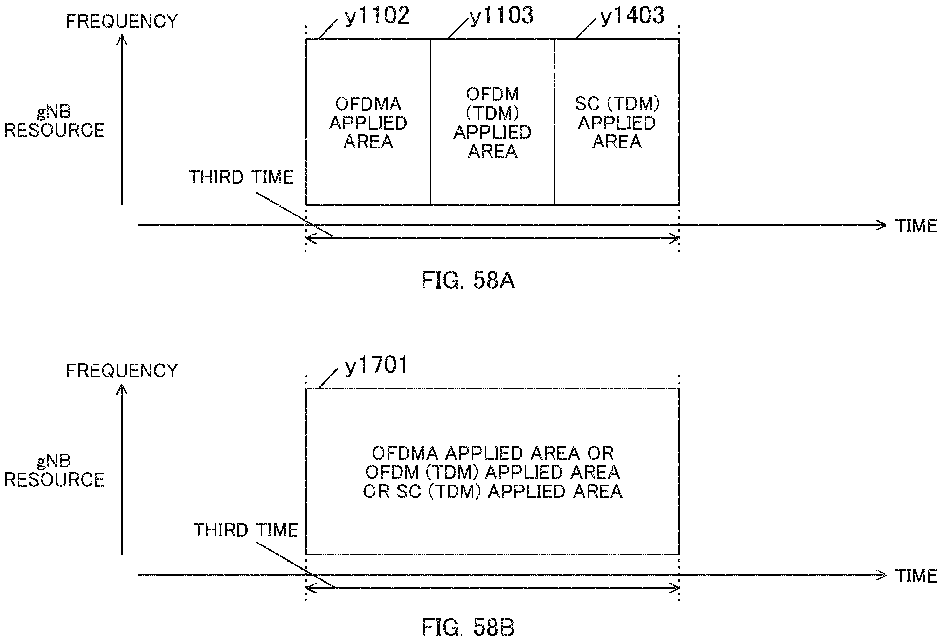

Configurations as in FIGS. 58A and 58B may be considered as variations of "the third time" of a modulation signal transmitted by base station #1 labeled 901_1 in FIG. 52A, 52A, and 52A.

FIG. 58A illustrates an exemplary configuration of "the third time" of a modulation signal transmitted by base station #1 labeled 901_1. Note that the horizontal axis represents time and the vertical axis represents frequency in FIG. 58A. In addition, components that operate in the same manner as in FIGS. 52A and 55A are denoted by the same reference signs.

As illustrated in FIG. 58A, OFDMA applied area y1102, OFDM (TDM) applied area y1103, and SC (TDM) applied area y1403 are present in "the third time", and a modulation signal addressed to each terminal and a modulation signal for sensing are assigned to any of "OFDMA applied area y1102, OFDM (TDM) applied area y1103, and SC (TDM) applied area section y1403". Note that the transmission order of "OFDMA applied area y1102, OFDM (TDM) applied area y1103, and SC (TDM) applied area section y1403" is not limited to the order in FIG. 58A and they may be in any order.

FIG. 58B illustrates an exemplary configuration of "the third time" of a modulation signal transmitted by base station #1 labeled 901_1. Note that the horizontal axis represents time and the vertical axis represents frequency in FIG. 58B.

As illustrated in FIG. 58B, "OFDMA applied area, OFDM (TDM) applied area, or SC (TDM) applied area" y1701 are present in "the third time", and a modulation signal addressed to each terminal and a modulation signal for sensing are assigned to "OFDMA applied area, OFDM (TDM) applied area, or SC (TDM) applied area" y1701.

As another method, at least one of "OFDMA applied area y1102, OFDM (TDM) applied area y1103, and SC (TDM) applied area y1403" are present in "the third time", and a modulation signal addressed to each terminal and a modulation signal for sensing are assigned to it.

As still another method, one or more of "OFDMA applied area y1102, OFDM (TDM) applied area y1103, and SC (TDM) applied area y1403" may be present in time #1, and one or more of "OFDMA applied area y 1102, OFDM (TDM) applied area y1103, and SC (TDM) applied area y1403" may be present in time #2, where time #1 and time #2 include different "applied areas" from each other.

That is, "OFDMA applied area y1102, OFDM (TDM) applied area y1103, and SC (TDM) applied area y1403" may be arranged in any manner as time passes.

According to this, base station #1 labeled 901_1 transmits a modulation signal including information indicating how the "OFDMA applied area, OFDM (TDM) applied area, and SC (TDM) applied area" are arranged.

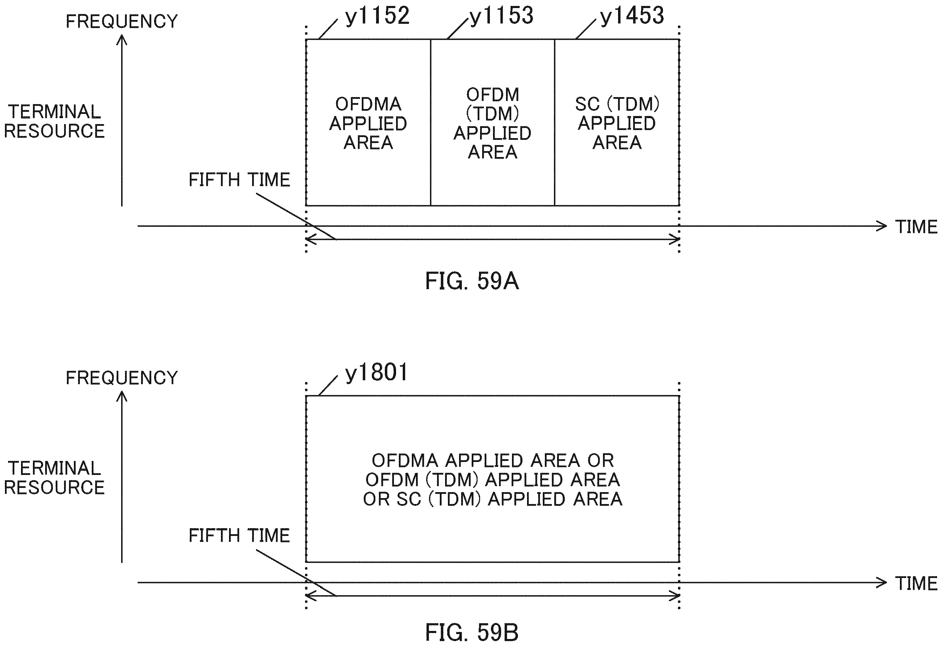

FIG. 59A illustrates an exemplary configuration of "the sixth time" of a modulation signal transmitted by a terminal. Note that the horizontal axis represents time and the vertical axis represents frequency in FIG. 59A. In addition, components that operate in the same manner as in FIGS. 52B and 55B are denoted by the same reference signs.

As illustrated in FIG. 59A, OFDMA applied area y1152, OFDM (TDM) applied area y1153, and SC (TDM) applied area y1453 are present in "the fifth time", and a modulation signal for communication and a modulation signal for sensing transmitted by each terminal are present in any of "OFDMA applied area y1152, OFDM (TDM) applied area y1153, and SC (TDM) applied area section y1453". Note that the transmission order of "OFDMA applied area y1152, OFDM (TDM) applied area y1153, and SC (TDM) applied area section y1453" is not limited to the order in FIG. 59A and they may be in any order.

FIG. 59B illustrates an exemplary configuration of "the sixth time" of a modulation signal transmitted by a terminal. Note that the horizontal axis represents time and the vertical axis represents frequency in FIG. 59B.

As illustrated in FIG. 59B, "OFDMA applied area, OFDM (TDM) applied area, or SC (TDM) applied area" y1801 are present in "the fifth time", and a modulation signal for communication and a modulation signal for sensing transmitted by each terminal are present in "OFDMA applied area, OFDM (TDM) applied area, or SC (TDM) applied area" y1801.

As another method, at least one of "OFDMA applied area y1152, OFDM (TDM) applied area y1153, and SC (TDM) applied area y1453" are present in "the fifth time", and a modulation signal for communication and a modulation signal for sensing transmitted by each terminal may be present there.

As still another method, one or more of "OFDMA applied area y1152, OFDM (TDM) applied area y1153, and SC (TDM) applied area y1453" may be present in time #1, and one or more of "OFDMA applied area y1152, OFDM (TDM) applied area y1153, and SC (TDM) applied area y1453" may be present in time #2, where time #1 and time #2 include different "applied areas" from each other.

That is, "OFDMA applied area y1152, OFDM (TDM) applied area y1153, and SC (TDM) applied area y1453" may be arranged in any manner as time passes.

According to this, base station #1 labeled 901_1 transmits a modulation signal including information indicating how the "OFDMA applied area, OFDM (TDM) applied area, and SC (TDM) applied area", which are transmission areas of a terminal, are arranged.

In the above-described manner, it is possible to gain an effect of enabling flexible area allocation relative to sensing accuracy.

Note that modulation signal transmission by the terminal using SC (TDM) applied area section y 1453 produces an effect of reducing power consumption since an amplifier etc. has great power efficiency.

In addition, the base station and terminal can obtain an effect of achieving communication with great data efficiency.

In the case of the above example, there are a terminal supporting SC transmission, a terminal supporting OFDM transmission, and a terminal performing transmission by "selecting either SC or OFDM".

The present embodiment has been described using OFDM (OFDMA) as an example of multi-carrier transmission schemes, but the same can be implemented using another multi-carrier transmission scheme instead of OFDM (OFDMA).

Further, although frame configurations of a signal transmitted by a base station (gNB) and a terminal are illustrated in FIGS. 41A, 41B, 41C, 41D, 52A, 52B, 53A, 53B, 53C, 55A, 55B, 56A, 56B, 56C, 57A, 57B, 58A, 58B, 59A, and 59B, a symbol, information, a signal and a frame that are not illustrated in the drawings may be included in the drawings.

As described above, a radio apparatus performs radio communication in units of communication including a first resource group (e.g., y1301) divided in the frequency direction and a second resource group (e.g., y1302) divided in the time direction. The units of communication may be, for example, slots or frames. Then, the radio apparatus determines a resource to be used for sensing a target from the first resource group and the second resource group included in the communication units based on, for example, required sensing accuracy. For example, when the required sensing accuracy is the highest, the radio apparatus may determine a resource to be used for sensing a target from the second resource group having a broader frequency bandwidth than that of a resource in the first resource group. This allows the radio apparatus to sense the target according to the required sensing accuracy. The radio apparatus may determine (select) a resource to be used for data signal communication from the first resource group. This allows the radio apparatus to sense the target according to the required accuracy and perform radio communication of a data signal. Note that the resource allocation may be performed considering the usage status of time and frequency.

(Embodiment 7)

In the present embodiment, a description will be given of a configuration of a base station, terminal, repeater, access point, gNB, eNB, etc., different from the configurations in FIGS. 1A, 1B, and 1C.

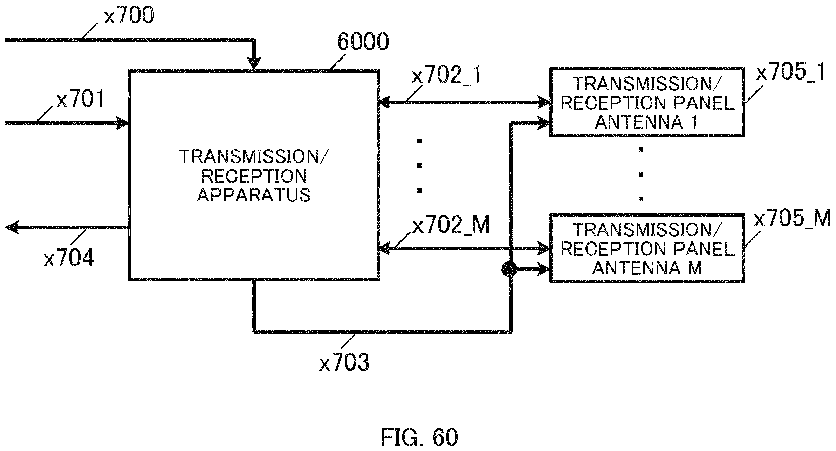

FIG. 60 illustrates an exemplary configuration of a base station, terminal, repeater, access point, gNB, eNB, etc., different from the configurations in FIGS. 1A, 1B, and 1C. When transmission/reception apparatus 6000 performs an operation for transmission, transmission/reception apparatus 6000 takes data x701 and control signal x700 as input, generates modulation signals for transmitting data x701 based on control signal x700, and outputs the signals (x702_1 to x702_M).

When transmission/reception apparatus 6000 performs an operation for reception, transmission/reception apparatus 6000 takes a received signal received by at least one of "transmission/reception panel antenna 1 labeled x705_1 to transmission/reception panel antenna M labeled x705_M" as input (x702_1 to x702_M), performs a reception operation, and outputs received data x704.

Transmission/reception panel antenna i labeled x705_i in FIG. 60 is an antenna including components in FIGS. 3 and 4, for example. Here, i is an integer from 1 to M (both inclusive), and M is an integer equal to or greater than 1 or an integer equal to or greater than 2. Thus, transmission/reception panel antenna i labeled x705_i can perform transmit beamforming (transmission directivity control) and receive beamforming (reception directivity control) by taking control signal x703 for the antenna as input.

Note that specific operations of transmit beamforming (transmission directivity control) and receive beamforming (reception directivity control) have already been described, and the apparatus performs transmit beamforming (transmission directivity control) to transmit a sector sweep reference signal, feedback signal, frame, slot, modulation signal, data symbol, and the like.

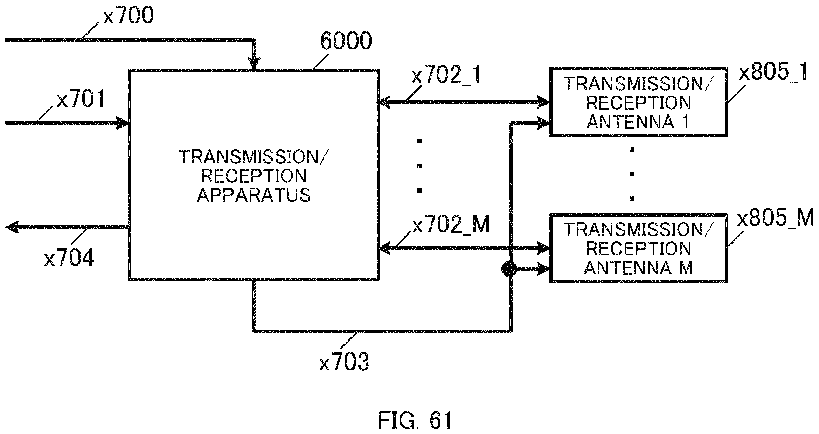

FIG. 61 illustrates another exemplary configuration of a base station, terminal, repeater, access point, gNB, eNB, etc. In FIG. 61, the components that operate in the same manner as in FIG. 60 are denoted by the same reference signs, and the descriptions thereof will be omitted.

In a case where the communication apparatus has the configuration in FIG. 61, transmit beamforming (transmission directivity control) and receive beamforming (reception directivity control) are performed based on antenna control signal x703 using one or more of "transmission/reception antenna 1 labeled x805_1 to transmission/reception antenna M labeled x805_M".

Then, the communication apparatus such as gNB, a terminal, etc. with the configuration in FIG. 61 performs transmit beamforming (transmission directivity control) and transmits sector sweep reference signals described above.

For example, a base station with the configuration in FIG. 61 uses a first transmit beam to transmit a first sector sweep reference signal, uses a second transmit beam to transmit a second sector sweep reference signal, and so forth.

The base station then determines "transmit beamforming and receive beamforming" to be used for communication with each terminal, and transmits and receives a feedback signal, frame, slot, modulation signal, data symbol, and the like.

In a case where a terminal has the configuration in FIG. 61, transmit beamforming (transmission directivity control) and receive beamforming (reception directivity control) are performed using one or more of "transmission/reception antenna 1 labeled x805_1 to transmission/reception antenna M labeled x805_M".

Then, the terminal with the configuration in FIG. 61 performs transmit beamforming (transmission directivity control) and transmits sector sweep reference signals described above.

For example, the terminal with the configuration in FIG. 61 uses a first transmit beam to transmit a first sector sweep reference signal, uses a second transmit beam to transmit a second sector sweep reference signal, and so forth.

The terminal then determines "transmit beamforming and receive beamforming" to be used for communication with the base station, and transmits and receives a feedback signal, frame, slot, modulation signal, data symbol, and the like.

Note that FIGS. 60 and 61 illustrating "a configuration of the base station and a configuration of the terminal" are merely examples and the configurations are not limited to these.

The transmission/reception panel antenna (x705_1 to x705_M) in FIG. 60 may be composed of a single antenna or a plurality of antennas. In addition, the transmission/reception panel antenna (x705_1 to x705_M) may be composed of a single antenna element or a plurality of antenna elements. A configuration of the transmission/reception panel antenna (x705_1 to x705_M) is not limited to the configuration described in the present embodiment, and may be the configuration described in the other embodiments, for example.

The transmission/reception antenna (x805_1 to x805_M) in FIG. 61 may be composed of a single antenna or a plurality of antennas. In addition, the transmission/reception antenna (x805_1 to x805_M) may be composed of a single antenna element or a plurality of antenna elements. A configuration of the transmission/reception antenna (x805_1 to x805_M) is not limited to the configuration described in the present embodiment.

Note that, in a case where transmission/reception panel antenna i labeled x705_i in FIG. 60 shares, for example, the transmission panel antenna with the configuration in FIG. 3 and the reception panel antenna with the configuration in FIG. 4, transmission antenna 306_1 in FIG. 3 and reception antenna 401_1 in FIG. 4 are shared to configure a single antenna, and multiplier 304_1 and multiplier 403_1 are connected to the shared antenna.

Likewise, transmission antenna 306_2 in FIG. 3 and reception antenna 401_2 in FIG. 4 are shared to configure a single antenna, and multiplier 304_2 and multiplier 403_2 are connected to the shared antenna. In addition, transmission antenna 306_3 in FIG. 3 and reception antenna 401_3 in FIG. 4 are shared to configure a single antenna, and multiplier 304_3 and multiplier 403_3 are connected to the shared antenna. Then, transmission antenna 306_4 in FIG. 3 and reception antenna 401_4 in FIG. 4 are shared to configure a single antenna, and multiplier 304_4 and multiplier 403_4 are connected to the shared antenna.

The embodiments of the present disclosure can be implemented using a communication apparatus with the configuration in FIG. 60 or 61 described above.

(Embodiment 8)

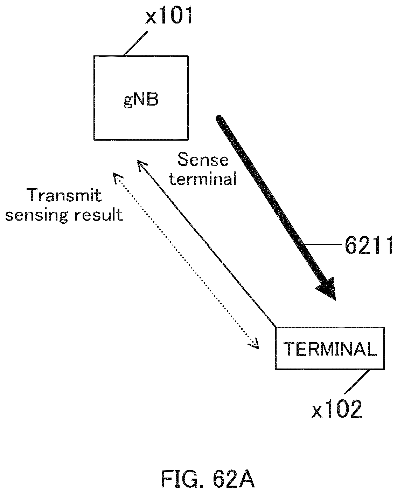

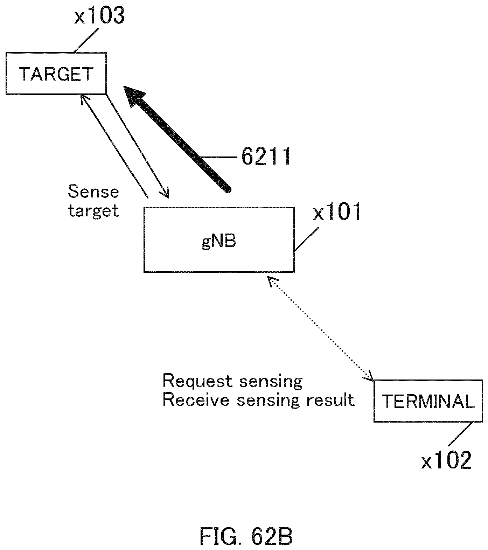

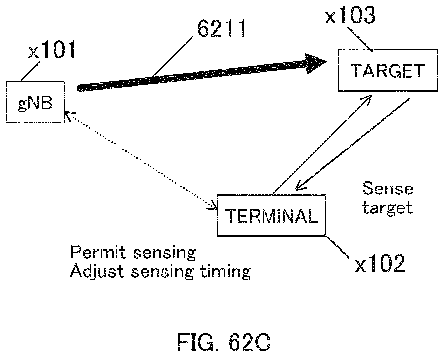

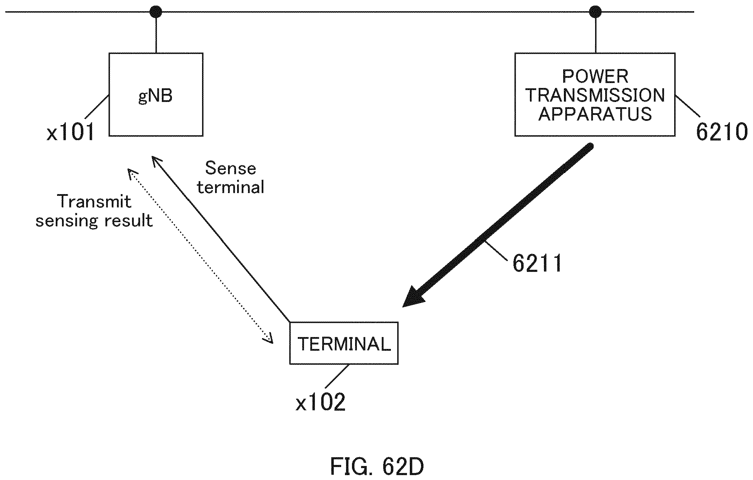

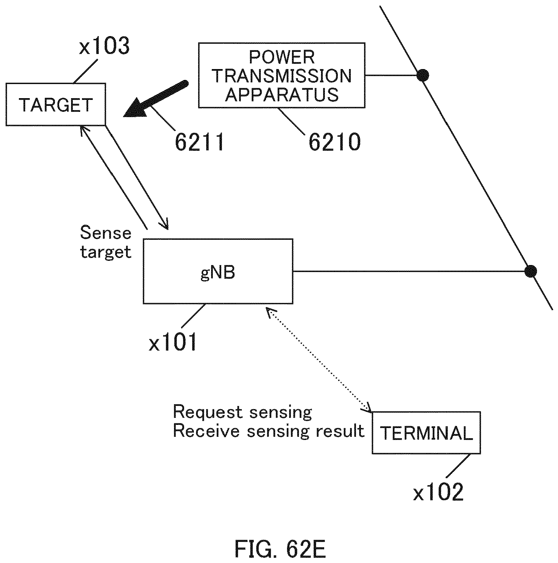

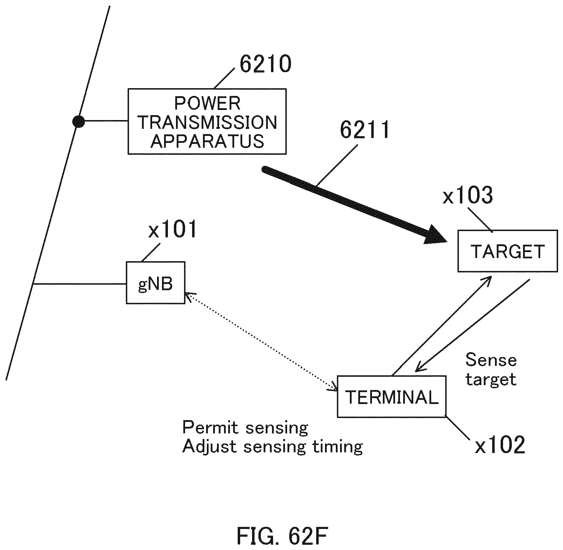

In the present embodiment, a description will be given of exemplary "communication and sensing with the gNB and terminal involved" and "communication and sensing with the gNB, terminal, and target involved" other than those described in FIGS. 38A, 38B, and 38C, with reference to FIGS. 62A, 62B, 62C, 62D, 62E, and 62F.

FIG. 62A illustrates a variation of "communication and sensing with the gNB and terminal involved" in FIG. 38A. Note that, in FIG. 62A, components that operate in the same manner as in FIG. 38A are denoted by the same reference signs, and the description thereof will be partially omitted.

As already described in other embodiments, gNB x101 and terminal x102 communicate with each other, and gNB x101 senses terminal x102. The detailed operations at this time have already been described, and thus the description thereof will be omitted.

As described in other embodiments, gNB x101 senses terminal x102, and this allows gNB x101 to obtain "information on location and/or direction" such as the location, direction, distance, etc. of terminal x102. Then, gNB x101 performs power transmission to terminal x102 based on the "information on location and/or direction" (6211 in FIG. 62A). This allows terminal x102 to perform charging.

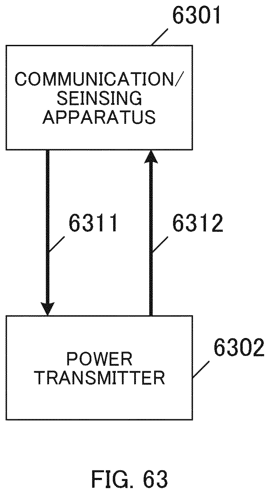

FIG. 63 illustrates an exemplary configuration of "gNB x101" in FIG. 62A. As in FIG. 63, "gNB x101" includes "communication/sensing apparatus 6301" and power transmitter 6302.

Note that "communication/sensing apparatus 6301" is an apparatus having a communication function and/or a sensing function. Accordingly, "communication/sensing apparatus 6301" is a communication apparatus when having only a communication function. "Communication/sensing apparatus 6301" is a sensing apparatus when having only a sensing function. "Communication/sensing apparatus 6301" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

For example, "communication/sensing apparatus 6301" outputs control signal 6311. At this time, control signal 6311 includes "information on location and/or direction" of terminal x102 and control information related to a power transmission operation such as performing power transmission and stopping power transmission.

Power transmitter 6302 takes control signal 6311 as input and operates based on the control information related to power transmission included in control signal 6311.

When control signal 6311 includes information of "performing power transmission", for example, power transmitter 6302 performs power transmission. Note that the power transmission may be performed using radio waves or may be performed using light, for example. When transmitting power using radio waves, power transmitter 6302 may include an antenna for power transmission. When transmitting power using light, power transmitter 6302 may include an emitter.

When control signal 6311 includes "information on location and/or direction" of terminal x102, power transmitter 6302 can perform power transmission in a fixed direction based on the "information on location and/or direction" of terminal x102. (This produces an effect of improving charging efficiency in terminal x102.)

In addition, power transmitter 6302 may output state information 6312 including information on a power transmission state. At this time, "communication/sensing apparatus 6301" may take state information 6312 as input and transmit the information of a power transmission state to terminal x102 based on state information 6312.

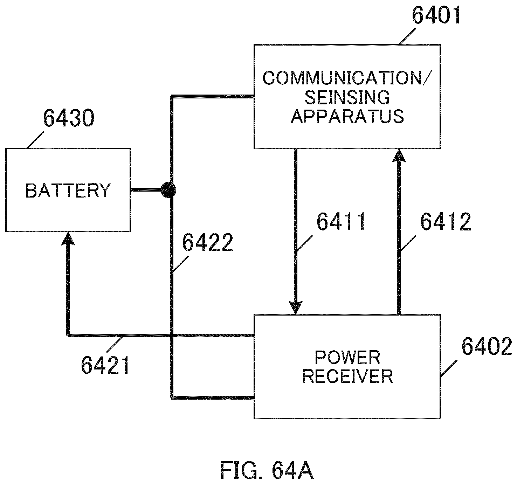

FIG. 64A illustrates an exemplary configuration of terminal x102 in FIG. 62A. Terminal x102 includes "communication/sensing apparatus 6401", power receiver 8802, and battery 8830 as in FIG. 64A.

Note that "communication/sensing apparatus 6401" is an apparatus having a communication function and/or a sensing function. Accordingly, "communication/sensing apparatus 6401" is a communication apparatus when having only a communication function. "Communication/sensing apparatus 6401" is a sensing apparatus when having only a sensing function. "Communication/sensing apparatus 6401" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

For example, "communication/sensing apparatus 6401" outputs control signal 6411. At this time, control signal 6411 includes control information related to a power reception operation such as performing power reception and stopping power reception.

Power receiver 6402 takes control signal 6411 as input and operates based on the control information related to power reception included in control signal 6411.

When control signal 6411 includes information of "performing power reception", for example, power receiver 6402 receives a signal of power transmission transmitted by "gNB x101" and performs an operation for power reception. Note that the power transmission may be performed using radio waves or may be performed using light, for example. When the power transmission is performed using radio waves, power receiver 6402 may include an antenna for power reception. When the power transmission is performed using light, power receiver 6402 may include a light receiver.

Battery 6430 performs charging by signal 6421 outputted from power receiver 6402.

In addition, power receiver 6402 may output state information 6412 including information on a power reception state. At this time, "communication/sensing apparatus 6401" may take state information 6412 as input and transmit the information of a power reception state to "gNB x101" based on state information 6412.

Battery 6430 supplies power (voltage and current) to "communication/sensing apparatus 6401" and power receiver 6402 (6422).

A description will be given of exemplary information included in a modulation signal transmitted by "terminal x102" and exemplary information included in a modulation signal transmitted by "gNB x101" in the state of FIG. 62A.

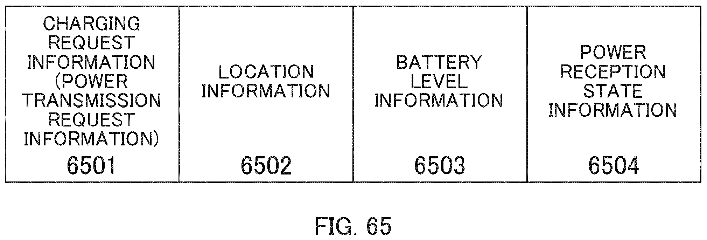

FIG. 65 illustrates exemplary information included in a modulation signal transmitted by "terminal x102". Note that FIG. 65 does not illustrate information for data communication and information for sensing. The information for data communication and information for sensing have been described in other embodiments, and thus the description thereof will be omitted here. As illustrated in FIG. 65, a modulation signal transmitted by "terminal x102" includes, for example, charging request information (power transmission request information) 6501, location information 6502, battery level information 6503, and power reception state information 6504.

Charging request information 6501 is information for "terminal x102 to make a charging request to gNB etc.". Thus, the gNB etc. knows that "terminal x102 has requested charging" by obtaining this information.

Note that power transmission request information may replace charging request information 6501. The power transmission request information is information for "terminal x102 to make a power transmission request to gNB etc.". Thus, the gNB etc. knows that "terminal x102 has requested power transmission" by obtaining this information.

Location information 6502 includes location information obtained by "terminal x102" estimating its location, for example. By obtaining this information, gNB etc. can select an apparatus such as gNB to be used for power transmission and perform direction control for power transmission, for example. Note that gNB etc. may select an apparatus such as gNB to be used for power transmission and perform direction control for power transmission, for example, based on location information 6502 and information on location and/or direction of "terminal x102" obtained by performing sensing. In addition, gNB etc. may select an apparatus such as gNB to be used for power transmission and perform direction control for power transmission, for example, based on the information on location and/or direction of "terminal x102" obtained by performing sensing.

Battery level information 6503 includes information of a battery level (remaining power) of a battery mounted on "terminal x102". By obtaining this information, gNB etc. can know the battery level of "terminal x102" and control power transmission duration.

Power reception state information 6504 includes information of a power reception state in "terminal x102", for example, whether "terminal x102" is receiving power and information of electric energy in "terminal x102" by power reception. By obtaining this information, gNB etc. can know the "power reception state of terminal x102" and control a power transmission method, for example, based on this information.

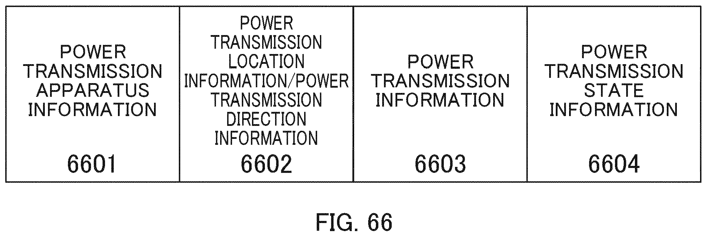

FIG. 66 illustrates exemplary information included in a modulation signal transmitted by "gNB x101". Note that FIG. 66 does not illustrate information for data communication and information for sensing. The information for data communication and information for sensing have been described in other embodiments, and thus the description thereof will be omitted here. As illustrated in FIG. 66, a modulation signal transmitted by "gNB x101" includes, for example, power transmission apparatus information 6601, "power transmission location information and/or power transmission direction information 6602", power transmission information 6603, and power transmission state information 6604.

Power transmission apparatus information 6601 includes information of the power transmission apparatus itself (e.g., identification (ID) of the power transmission apparatus). Thus, terminal x102 can obtain the information of the power transmission apparatus actually transmitting power by obtaining this information.

"Power transmission location information and/or power transmission direction information 6602" includes location information of the power transmission apparatus and/or information on the direction in which power transmission is performed. Terminal x102 may perform direction control so that the terminal x102 effectively performs power reception, by obtaining this information.

Power transmission information 6603 includes information on how the power transmission apparatus performs power transmission (e.g., whether it performs power transmission by radio waves or light). The terminal performs power reception in a power reception method according to the power transmission method by obtaining this information. In a case where the terminal supports both power reception by radio waves and power reception by light, for example, the terminal selects whether it performs power reception by radio waves or light based on power transmission information 9003. In a case where the terminal supports either one of power reception by radio waves and power reception by light, the terminal determines whether to perform power reception after obtaining power transmission information 6603.

Power transmission state information 6604 includes information on a power transmission state, for example, information of electric energy of power transmission and information on the duration for performing power transmission. The terminal may control power reception duration, a power reception method, etc. by obtaining this information.

As described above, communication with a terminal that possibly moves allows sharing information on power transmission and charging, and this produces an effect of transmitting power and charging effectively.

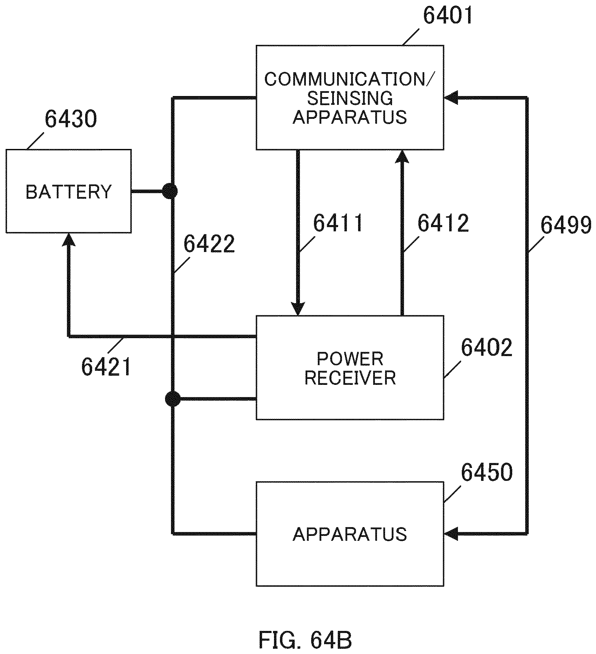

FIG. 64B illustrates an exemplary configuration of terminal x102 in FIG. 62A different from that in FIG. 64A. Note that, in FIG. 64B, the components that operate in the same manner as in FIG. 64A are denoted by the same reference signs, and already-described components will not be described. Terminal x102 includes "communication/sensing apparatus 6401", power receiver 6402, battery 6430, and apparatus 6450 as in FIG. 64B.

Note that "communication/sensing apparatus 6401" is an apparatus having a communication function and/or a sensing function. Accordingly, "communication/sensing apparatus 6401" is a communication apparatus when having only a communication function. "Communication/sensing apparatus 6401" is a sensing apparatus when having only a sensing function. "Communication/sensing apparatus 6401" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

A difference from FIG. 64A is that apparatus 6450 is present in FIG. 64B. For example, apparatus 6450 may be a moving apparatus based on electricity such as an "electric car, electric bike (e-bike), electric bicycle, moving robot, electric scooter, battery-assisted bicycle, and battery-assisted scooter", and may also be a "display apparatus such as a display, projector, head mounted display, augmented reality (AR) glasses, AR headset, virtual reality (VR) glasses, VR headset, mixed reality (MR) glasses, and MR headset". Apparatus 6450, however, is not limited to these examples and only needs to be an apparatus that operates using electricity.

For example, "communication/sensing apparatus 6401" outputs control signal 6411. At this time, control signal 6411 includes control information related to a power reception operation such as performing power reception and stopping power reception.

Power receiver 6402 takes control signal 6411 as input and operates based on the control information related to power reception included in control signal 6411.

When control signal 6411 includes information of "performing power reception", for example, power receiver 6402 receives a signal of power transmission transmitted by "gNB x101" and performs an operation for power reception. Note that the power transmission may be performed using radio waves or may be performed using light, for example. When the power transmission is performed using radio waves, power receiver 6402 may include an antenna for power reception. When the power transmission is performed using light, power receiver 6402 may include a light receiver.

Battery 6430 performs charging by signal 6421 outputted from power receiver 6402.

In addition, power receiver 6402 may output state information 6412 including information on a power reception state. At this time, "communication/sensing apparatus 6401" may take state information 6412 as input and transmit the information of a power reception state to "gNB x101" based on state information 6412.

Battery 6430 supplies power (voltage and current) to "communication/sensing apparatus 6401" and power receiver 6402 (6422).

Apparatus 6450 and "communication/sensing apparatus 6401" may transmit/receive information each other (6499).

A description will be given of exemplary information included in a modulation signal transmitted by "terminal x102" and exemplary information included in a modulation signal transmitted by "gNB x101" in the state of FIG. 62A.

FIG. 65 illustrates exemplary information included in a modulation signal transmitted by "terminal x102" with the configuration in FIG. 64B. Note that FIG. 65 does not illustrate information for data communication and information for sensing. The information for data communication and information for sensing have been described in other embodiments, and thus the description thereof will be omitted here. As illustrated in FIG. 65, a modulation signal transmitted by "terminal x102" includes, for example, charging request information (power transmission request information) 6501, location information 6502, battery level information 6503, and power reception state information 6504. Note that the detail has already been described, and thus the description thereof will be omitted.

FIG. 66 illustrates exemplary information included in a modulation signal transmitted by "gNB x101". Note that FIG. 66 does not illustrate information for data communication and information for sensing. The information for data communication and information for sensing have been described in other embodiments, and thus the description thereof will be omitted here. As illustrated in FIG. 66, a modulation signal transmitted by "gNB x101" includes, for example, power transmission apparatus information 6601, "power transmission location information and/or power transmission direction information 6602", power transmission information 6603, and power transmission state information 6604. Note that the detail has already been described, and thus the description thereof will be omitted.

As described above, communication with a terminal that possibly moves allows sharing information on power transmission and charging, and this produces effects of transmitting power and charging effectively and operating the apparatus intermittently.

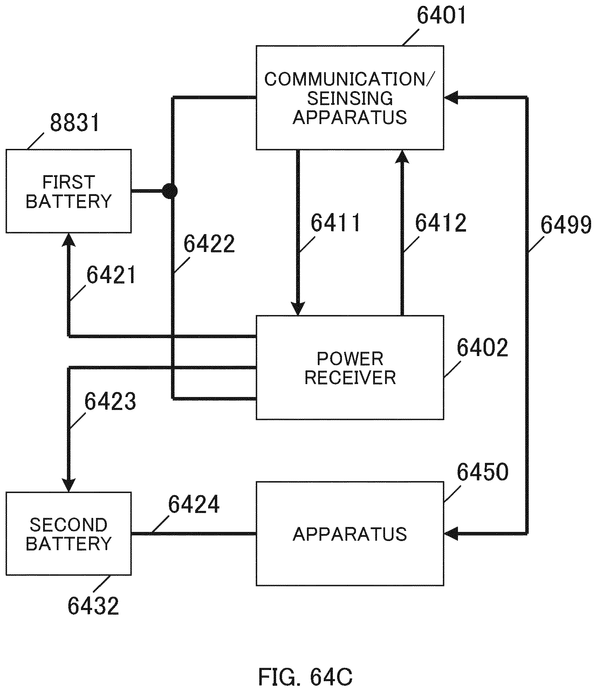

FIG. 64C illustrates an exemplary configuration of terminal x102 in FIG. 62A different from those in FIGS. 64A and 64B. Note that, in FIG. 64C, the components that operate in the same manner as in FIGS. 64A and 64B are denoted by the same reference signs, and already-described components will not be described. Terminal x102 includes "communication/sensing apparatus 6401", power receiver 6402, first battery 6431, second battery 6432, and apparatus 6450 as in FIG. 64C.

Note that "communication/sensing apparatus 6401" is an apparatus having a communication function and/or a sensing function. Accordingly, "communication/sensing apparatus 6401" is a communication apparatus when having only a communication function. "Communication/sensing apparatus 6401" is a sensing apparatus when having only a sensing function. "Communication/sensing apparatus 6401" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

A difference from FIGS. 64A and 64B is that there are first battery 6431 for ""communication/sensing apparatus 6401" and power receiver 6402" and second battery 6432 for apparatus 6450 in FIG. 64C.

For example, "communication/sensing apparatus 6401" outputs control signal 6411. At this time, control signal 6411 includes control information related to a power reception operation such as performing power reception and stopping power reception.

Power receiver 6402 takes control signal 6411 as input and operates based on the control information related to power reception included in control signal 6411.

When control signal 6411 includes information of "performing power reception", for example, power receiver 6402 receives a signal of power transmission transmitted by "gNB x101" and performs an operation for power reception. Note that the power transmission may be performed using radio waves or may be performed using light, for example. When the power transmission is performed using radio waves, power receiver 6402 may include an antenna for power reception. When the power transmission is performed using light, power receiver 6402 may include a light receiver.

In the case of FIG. 64C, for example, when power receiver 6402 determines to charge first battery 6431, first battery 6431 performs charging by signal 6421 outputted from charger 6402.

For example, when power receiver 6402 determines to charge second battery 6432, second battery 6432 performs charging by signal 6423 outputted from charger 6402.

Power receiver 6402 may output state information 6412 including information on a power reception state. At this time, "communication/sensing apparatus 6401" may take state information 6412 as input and transmit the information of a power reception state to "gNB x101" based on state information 6412.

First battery 6431 supplies power (voltage and current) to "communication/sensing apparatus 6401" and power receiver 6402 (6422).

Second battery 6432 supplies power (voltage and current) to apparatus 6450 (6424).

Apparatus 6450 and "communication/sensing apparatus 6401" may transmit/receive information each other (6499).

A description will be given of exemplary information included in a modulation signal transmitted by "terminal x102" with the configuration in FIG. 64C and exemplary information included in a modulation signal transmitted by "gNB x101" in the state of FIG. 62A.

FIG. 65 illustrates exemplary information included in a modulation signal transmitted by "terminal x102" with the configuration in FIG. 64C. Note that FIG. 65 does not illustrate information for data communication and information for sensing. The information for data communication and information for sensing have been described in other embodiments, and thus the description thereof will be omitted here. As illustrated in FIG. 65, a modulation signal transmitted by "terminal x102" includes, for example, charging request information (power transmission request information) 6501, location information 6502, battery level information 6503, and power reception state information 6504. Note that the detail has already been described, and thus the description thereof will be omitted.

FIG. 66 illustrates exemplary information included in a modulation signal transmitted by "gNB x101". Note that FIG. 66 does not illustrate information for data communication and information for sensing. The information for data communication and information for sensing have been described in other embodiments, and thus the description thereof will be omitted here. As illustrated in FIG. 66, a modulation signal transmitted by "gNB x101" includes, for example, power transmission apparatus information 6601, "power transmission location information and/or power transmission direction information 6602", power transmission information 6603, and power transmission state information 6604. Note that the detail has already been described, and thus the description thereof will be omitted.

As described above, communication with a terminal that possibly moves allows sharing information on power transmission and charging, and this produces effects of transmitting power and charging effectively and operating the apparatus intermittently.

FIG. 62B illustrates a variation of "communication and sensing with the gNB and terminal involved" in FIG. 38B. Note that, in FIG. 62B, components that operate in the same manner as in FIG. 38B are denoted by the same reference signs, and the description thereof will be partially omitted.

As already described in other embodiments, gNB x101 and terminal x102 communicate with each other. In addition, gNB x101 and target x103 may communicate with each other. Further, gNB x101 senses target x103. Detailed operations of these have already been described, and thus the description thereof will be omitted.

As described in other embodiments, gNB x101 senses target x103, and this allows gNB x101 to obtain "information on location and/or direction" such as the location, direction, distance, etc. of target x103. Then, gNB x101 performs power transmission to target x103 based on the "information on location and/or direction" (6211 in FIG. 62B). This allows target x103 to perform charging.

FIG. 63 illustrates an exemplary configuration of "gNB x101" in FIG. 62B. As in FIG. 63, "gNB x101" includes "communication/sensing apparatus 6301" and power transmitter 6302.

Note that "communication/sensing apparatus 6301" is an apparatus having a communication function and/or a sensing function. Accordingly, "communication/sensing apparatus 6301" is a communication apparatus when having only a communication function. "Communication/sensing apparatus 6301" is a sensing apparatus when having only a sensing function. "Communication/sensing apparatus 6301" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

For example, "communication/sensing apparatus 6301" outputs control signal 6311. At this time, control signal 6311 includes "information on location and/or direction" of target x103 and control information related to a power transmission operation such as performing power transmission and stopping power transmission.

Power transmitter 6302 takes control signal 6311 as input and operates based on the control information related to power transmission included in control signal 6311.

When control signal 6311 includes information of "performing power transmission", for example, power transmitter 6302 performs power transmission. Note that the power transmission may be performed using radio waves or may be performed using light, for example. When transmitting power using radio waves, power transmitter 6302 may include an antenna for power transmission. When transmitting power using light, power transmitter 6302 may include an emitter.

When control signal 6311 includes "information on location and/or direction" of target x103, power transmitter 6302 can perform power transmission in a fixed direction based on the "information on location and/or direction" of target x103. (This produces an effect of improving charging efficiency in target x103.)

In addition, power transmitter 6302 may output state information 6312 including information on a power transmission state. At this time, "communication/sensing apparatus 6301" may take state information 6312 as input and transmit the information of a power transmission state to terminal x102 and target x103 based on state information 6312.

FIG. 64A illustrates an exemplary configuration of target x103 in FIG. 62B. Target x103 includes "communication/sensing apparatus 6401", power receiver 8802, and battery 8830 as in FIG. 64A.

Note that "communication/sensing apparatus 6401" is an apparatus having a communication function and/or a sensing function. Accordingly, "communication/sensing apparatus 6401" is a communication apparatus when having only a communication function. "Communication/sensing apparatus 6401" is a sensing apparatus when having only a sensing function. "Communication/sensing apparatus 6401" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

For example, "communication/sensing apparatus 6401" outputs control signal 6411. At this time, control signal 6411 includes control information related to a power reception operation such as performing power reception and stopping power reception.

Power receiver 6402 takes control signal 6411 as input and operates based on the control information related to power reception included in control signal 6411.

When control signal 6411 includes information of "performing power reception", for example, power receiver 6402 receives a signal of power transmission transmitted by "gNB x101" and performs an operation for power reception. Note that the power transmission may be performed using radio waves or may be performed using light, for example. When the power transmission is performed using radio waves, power receiver 6402 may include an antenna for power reception. When the power transmission is performed using light, power receiver 6402 may include a light receiver.

Battery 6430 performs charging by signal 6421 outputted from power receiver 6402.

In addition, power receiver 6402 may output state information 6412 including information on a power reception state. At this time, "communication/sensing apparatus 6401" may take state information 6412 as input and transmit the information of a power reception state to "gNB x101" based on state information 6412.

Battery 6430 supplies power (voltage and current) to "communication/sensing apparatus 6401" and power receiver 6402 (6422).

Terminal x102 in FIG. 62B has a communication function. As another configuration, terminal x102 may have a configuration as in FIG. 64A, 64B, or 64C.

A description will be given of exemplary information included in a modulation signal transmitted by "target x103" and exemplary information included in a modulation signal transmitted by "gNB x101" in the state of FIG. 62B.

FIG. 65 illustrates exemplary information included in a modulation signal transmitted by "target x103". Note that FIG. 65 does not illustrate information for data communication and information for sensing. The information for data communication and information for sensing have been described in other embodiments, and thus the description thereof will be omitted here. As illustrated in FIG. 65, a modulation signal transmitted by "target x103" includes, for example, charging request information (power transmission request information) 6501, location information 6502, battery level information 6503, and power reception state information 6504.

Charging request information 6501 is information for "target x103 to make a charging request to gNB etc.". Thus, the gNB etc. knows that "target x103 has requested charging" by obtaining this information.

Note that power transmission request information may replace charging request information 6501. The power transmission request information is information for "target x103 to make a power transmission request to gNB etc.". Thus, the gNB etc. knows that "target x103 has requested power transmission" by obtaining this information.

Location information 6502 includes location information obtained by "target x103" estimating its location, for example. By obtaining this information, gNB etc. can select an apparatus such as gNB to be used for power transmission and perform direction control for power transmission, for example. Note that gNB etc. may select an apparatus such as gNB to be used for power transmission and perform direction control for power transmission, for example, based on location information 6502 and information on location and/or direction of "target x103" obtained by performing sensing. In addition, gNB etc. may select an apparatus such as gNB to be used for power transmission and perform direction control for power transmission, for example, based on the information on location and/or direction of "target x103" obtained by performing sensing.

Battery level information 6503 includes information of a battery level (remaining power) of a battery mounted on "target x103". By obtaining this information, gNB etc. can know the battery level of "target x103" and control power transmission duration.

Power reception state information 6504 includes information of a power reception state in "target x103", for example, whether "target x103" is receiving power and information of electric energy in "target x103" by power reception. By obtaining this information, gNB etc. can know the "power reception state of target x103" and control a power transmission method, for example, based on this information.

FIG. 66 illustrates exemplary information included in a modulation signal transmitted by "gNB x101". Note that FIG. 66 does not illustrate information for data communication and information for sensing. The information for data communication and information for sensing have been described in other embodiments, and thus the description thereof will be omitted here. As illustrated in FIG. 66, a modulation signal transmitted by "gNB x101" includes, for example, power transmission apparatus information 6601, "power transmission location information and/or power transmission direction information 6602", power transmission information 6603, and power transmission state information 6604. Note that the detail has already been described, and thus the description thereof will be omitted.

Power transmission apparatus information 6601 includes information of the power transmission apparatus itself (e.g., identification (ID) of the power transmission apparatus). Thus, target x103 can obtain the information of the power transmission apparatus actually transmitting power by obtaining this information.

"Power transmission location information and/or power transmission direction information 6602" includes location information of the power transmission apparatus and/or information on the direction in which power transmission is performed. Target x103 may perform direction control so that target x103 effectively performs power reception, by obtaining this information.

Power transmission information 6603 includes information on how the power transmission apparatus performs power transmission (e.g., whether it performs power transmission by radio waves or light). Target x103 performs power reception in a power reception method according to the power transmission method by obtaining this information. In a case where target x103 supports both power reception by radio waves and power reception by light, for example, target x103 selects whether it performs power reception by radio waves or light based on power transmission information 9003. In a case where target x103 supports either one of power reception by radio waves and power reception by light, target x103 determines whether to perform power reception after obtaining power transmission information 6603.

Power transmission state information 6604 includes information on a power transmission state, for example, information of electric energy of power transmission and information on the duration for performing power transmission. Target x103 may control power reception duration, a power reception method, etc. by obtaining this information.

As described above, communication with target x103 that possibly moves allows sharing information on power transmission and charging, and this produces an effect of transmitting power and charging effectively.

FIG. 64B illustrates an exemplary configuration of target x103 in FIG. 62B different from that in FIG. 64A. Note that, in FIG. 64B, the components that operate in the same manner as in FIG. 64A are denoted by the same reference signs, and already-described components will not be described. Target x103 includes "communication/sensing apparatus 6401", power receiver 6402, battery 6430, and apparatus 6450 as in FIG. 64B.

Note that "communication/sensing apparatus 6401" is an apparatus having a communication function and/or a sensing function. Accordingly, "communication/sensing apparatus 6401" is a communication apparatus when having only a communication function. "Communication/sensing apparatus 6401" is a sensing apparatus when having only a sensing function. "Communication/sensing apparatus 6401" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

A difference from FIG. 64A is that apparatus 6450 is present in FIG. 64B. For example, apparatus 6450 may be a moving apparatus based on electricity such as an "electric car, electric bike (e-bike), electric bicycle, moving robot, electric scooter, battery-assisted bicycle, and battery-assisted scooter", and may also be a "display apparatus such as a display, projector, head mounted display, AR glasses, AR headset, VR glasses, VR headset, MR glasses, and MR headset". Apparatus 6450, however, is not limited to these examples and only needs to be an apparatus that operates using electricity.

For example, "communication/sensing apparatus 6401" outputs control signal 6411. At this time, control signal 6411 includes control information related to a power reception operation such as performing power reception and stopping power reception.

Power receiver 6402 takes control signal 6411 as input and operates based on the control information related to power reception included in control signal 6411.

When control signal 6411 includes information of "performing power reception", for example, power receiver 6402 receives a signal of power transmission transmitted by "gNB x101" and performs an operation for power reception. Note that the power transmission may be performed using radio waves or may be performed using light, for example. When the power transmission is performed using radio waves, power receiver 6402 may include an antenna for power reception. When the power transmission is performed using light, power receiver 6402 may include a light receiver.

Battery 6430 performs charging by signal 6421 outputted from power receiver 6402.

In addition, power receiver 6402 may output state information 6412 including information on a power reception state. At this time, "communication/sensing apparatus 6401" may take state information 6412 as input and transmit the information of a power reception state to "gNB x101" based on state information 6412.

Battery 6430 supplies power (voltage and current) to "communication/sensing apparatus 6401" and power receiver 6402 (6422).

Apparatus 6450 and "communication/sensing apparatus 6401" may transmit/receive information each other (6499).

Terminal x102 in FIG. 62B has a communication function. As another configuration, terminal x102 may have a configuration as in FIG. 64A, 64B, or 64C.

A description will be given of exemplary information included in a modulation signal transmitted by "target x103" and exemplary information included in a modulation signal transmitted by "gNB x101" in the state of FIG. 62B.

FIG. 65 illustrates exemplary information included in a modulation signal transmitted by "target x103" with the configuration in FIG. 64B. Note that FIG. 65 does not illustrate information for data communication and information for sensing. The information for data communication and information for sensing have been described in other embodiments, and thus the description thereof will be omitted here. As illustrated in FIG. 65, a modulation signal transmitted by "target x103" includes, for example, charging request information (power transmission request information) 6501, location information 6502, battery level information 6503, and power reception state information 6504. Note that the detail has already been described, and thus the description thereof will be omitted.

FIG. 66 illustrates exemplary information included in a modulation signal transmitted by "gNB x101". Note that FIG. 66 does not illustrate information for data communication and information for sensing. The information for data communication and information for sensing have been described in other embodiments, and thus the description thereof will be omitted here. As illustrated in FIG. 66, a modulation signal transmitted by "gNB x101" includes, for example, power transmission apparatus information 6601, "power transmission location information and/or power transmission direction information 6602", power transmission information 6603, and power transmission state information 6604. Note that the detail has already been described, and thus the description thereof will be omitted.

As described above, communication with target x103 that possibly moves allows sharing information on power transmission and charging, and this produces effects of transmitting power and charging effectively and operating the apparatus intermittently.

FIG. 64C illustrates an exemplary configuration of target x103 in FIG. 62B different from those in FIGS. 64A and 64B. Note that, in FIG. 64C, the components that operate in the same manner as in FIGS. 64A and 64B are denoted by the same reference signs, and already-described components will not be described. Target x103 includes "communication/sensing apparatus 6401", power receiver 6402, first battery 6431, second battery 6432, and apparatus 6450 as in FIG. 64C.

Note that "communication/sensing apparatus 6401" is an apparatus having a communication function and/or a sensing function. Accordingly, "communication/sensing apparatus 6401" is a communication apparatus when having only a communication function. "Communication/sensing apparatus 6401" is a sensing apparatus when having only a sensing function. "Communication/sensing apparatus 6401" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

A difference from FIGS. 64A and 64B is that there are first battery 6431 for ""communication/sensing apparatus 6401" and power receiver 6402" and second battery 6432 for apparatus 6450 in FIG. 64C.

For example, "communication/sensing apparatus 6401" outputs control signal 6411. At this time, control signal 6411 includes control information related to a power reception operation such as performing power reception and stopping power reception.

Power receiver 6402 takes control signal 6411 as input and operates based on the control information related to power reception included in control signal 6411.

When control signal 6411 includes information of "performing power reception", for example, power receiver 6402 receives a signal of power transmission transmitted by "gNB x101" and performs an operation for power reception. Note that the power transmission may be performed using radio waves or may be performed using light, for example. When the power transmission is performed using radio waves, power receiver 6402 may include an antenna for power reception. When the power transmission is performed using light, power receiver 6402 may include a light receiver.

In the case of FIG. 64C, for example, when power receiver 6402 determines to charge first battery 6431, first battery 6431 performs charging by signal 6421 outputted from charger 6402.

For example, when power receiver 6402 determines to charge second battery 6432, second battery 6432 performs charging by signal 6423 outputted from charger 6402.

Power receiver 6402 may output state information 6412 including information on a power reception state. At this time, "communication/sensing apparatus 6401" may take state information 6412 as input and transmit the information of a power reception state to "gNB x101" based on state information 6412.

First battery 6431 supplies power (voltage and current) to "communication/sensing apparatus 6401" and power receiver 6402 (6422).

Second battery 6432 supplies power (voltage and current) to apparatus 6450 (6424).

Apparatus 6450 and "communication/sensing apparatus 6401" may transmit/receive information each other (6499).

Terminal x102 in FIG. 62B has a communication function. As another configuration, terminal x102 may have a configuration as in FIG. 64A, 64B, or 64C.

A description will be given of exemplary information included in a modulation signal transmitted by "target x103" with the configuration in FIG. 64C and exemplary information included in a modulation signal transmitted by "gNB x101" in the state of FIG. 62B.

FIG. 65 illustrates exemplary information included in a modulation signal transmitted by "target x103" with the configuration in FIG. 64C. Note that FIG. 65 does not illustrate information for data communication and information for sensing. The information for data communication and information for sensing have been described in other embodiments, and thus the description thereof will be omitted here. As illustrated in FIG. 65, a modulation signal transmitted by "target x103" includes, for example, charging request information (power transmission request information) 6501, location information 6502, battery level information 6503, and power reception state information 6504. Note that the detail has already been described, and thus the description thereof will be omitted.

FIG. 66 illustrates exemplary information included in a modulation signal transmitted by "gNB x101". Note that FIG. 66 does not illustrate information for data communication and information for sensing. The information for data communication and information for sensing have been described in other embodiments, and thus the description thereof will be omitted here. As illustrated in FIG. 66, a modulation signal transmitted by "gNB x101" includes, for example, power transmission apparatus information 6601, "power transmission location information and/or power transmission direction information 6602", power transmission information 6603, and power transmission state information 6604. Note that the detail has already been described, and thus the description thereof will be omitted.

As described above, communication with target x103 that possibly moves allows sharing information on power transmission and charging, and this produces effects of transmitting power and charging effectively and operating the apparatus intermittently.

FIG. 62C illustrates a variation of "communication and sensing with the gNB and terminal involved" in FIG. 38C. Note that, in FIG.62C, components that operate in the same manner as in FIG. 38C are denoted by the same reference signs, and the description thereof will be partially omitted.

As already described in other embodiments, gNB x101 and terminal x102 communicate with each other. In addition, gNB x101 and target x103 may communicate with each other. Further, terminal x102 senses target x103. Detailed operations of these have already been described, and thus the description thereof will be omitted.

As described in other embodiments, terminal x102 senses target x103, and terminal x102 indicates the sensing result of target x103 to gNB x101. Thus, gNB x101 obtains the "information on location and/or direction" such as the location, direction, distance, etc. of target x103 from terminal x102. Then, gNB x101 performs power transmission to target x103 based on the "information on location and/or direction" (6211 in FIG. 62C). This allows target x103 to perform charging.

FIG. 63 illustrates an exemplary configuration of "gNB x101" in FIG. 62C. As in FIG. 63, "gNB x101" includes "communication/sensing apparatus 6301" and power transmitter 6302.

Note that "communication/sensing apparatus 6301" is an apparatus having a communication function and/or a sensing function. Accordingly, "communication/sensing apparatus 6301" is a communication apparatus when having only a communication function. "Communication/sensing apparatus 6301" is a sensing apparatus when having only a sensing function. "Communication/sensing apparatus 6301" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

For example, "communication/sensing apparatus 6301" outputs control signal 6311. At this time, control signal 6311 includes "information on location and/or direction" of target x103 and control information related to a power transmission operation such as performing power transmission and stopping power transmission.

Power transmitter 6302 takes control signal 6311 as input and operates based on the control information related to power transmission included in control signal 6311.

When control signal 6311 includes information of "performing power transmission", for example, power transmitter 6302 performs power transmission. Note that the power transmission may be performed using radio waves or may be performed using light, for example. When transmitting power using radio waves, power transmitter 6302 may include an antenna for power transmission. When transmitting power using light, power transmitter 6302 may include an emitter.

When control signal 6311 includes "information on location and/or direction" of target x103, power transmitter 6302 can perform power transmission in a fixed direction based on the "information on location and/or direction" of target x103. (This produces an effect of improving charging efficiency in target x103.)

In addition, power transmitter 6302 may output state information 6312 including information on a power transmission state. At this time, "communication/sensing apparatus 6301" may take state information 6312 as input and transmit the information of a power transmission state to terminal x102 and target x103 based on state information 6312.

FIG. 64A illustrates an exemplary configuration of target x103 in FIG. 62C. Target x103 includes "communication/sensing apparatus 6401", power receiver 8802, and battery 8830 as in FIG. 64A.

Note that "communication/sensing apparatus 6401" is an apparatus having a communication function and/or a sensing function. Accordingly, "communication/sensing apparatus 6401" is a communication apparatus when having only a communication function. "Communication/sensing apparatus 6401" is a sensing apparatus when having only a sensing function. "Communication/sensing apparatus 6401" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

For example, "communication/sensing apparatus 6401" outputs control signal 6411. At this time, control signal 6411 includes control information related to a power reception operation such as performing power reception and stopping power reception.

Power receiver 6402 takes control signal 6411 as input and operates based on the control information related to power reception included in control signal 6411.

When control signal 6411 includes information of "performing power reception", for example, power receiver 6402 receives a signal of power transmission transmitted by "gNB x101" and performs an operation for power reception. Note that the power transmission may be performed using radio waves or may be performed using light, for example. When the power transmission is performed using radio waves, power receiver 6402 may include an antenna for power reception. When the power transmission is performed using light, power receiver 6402 may include a light receiver.

Battery 6430 performs charging by signal 6421 outputted from power receiver 6402.

In addition, power receiver 6402 may output state information 6412 including information on a power reception state. At this time, "communication/sensing apparatus 6401" may take state information 6412 as input and transmit the information of a power reception state to "gNB x101" based on state information 6412.

Battery 6430 supplies power (voltage and current) to "communication/sensing apparatus 6401" and power receiver 6402 (6422).

Terminal x102 in FIG. 62C has a communication function and a sensing function. As another configuration, terminal x102 may have a configuration as in FIG. 64A, 64B, or 64C with a sensing function added.

A description will be given of exemplary information included in a modulation signal transmitted by "target x103" and exemplary information included in a modulation signal transmitted by "gNB x101" in the state of FIG. 62C.

FIG. 65 illustrates exemplary information included in a modulation signal transmitted by "target x103". Note that FIG. 65 does not illustrate information for data communication and information for sensing. The information for data communication and information for sensing have been described in other embodiments, and thus the description thereof will be omitted here. As illustrated in FIG. 65, a modulation signal transmitted by "target x103" includes, for example, charging request information (power transmission request information) 6501, location information 6502, battery level information 6503, and power reception state information 6504.

Charging request information 6501 is information for "target x103 to make a charging request to gNB etc.". Thus, the gNB etc. knows that "target x103 has requested charging" by obtaining this information.

Note that power transmission request information may replace charging request information 6501. The power transmission request information is information for "target x103 to make a power transmission request to gNB etc.". Thus, the gNB etc. knows that "target x103 has requested power transmission" by obtaining this information.

Location information 6502 includes location information obtained by "target x103" estimating its location, for example. By obtaining this information, gNB etc. can select an apparatus such as gNB to be used for power transmission and perform direction control for power transmission, for example. Note that gNB etc. may select an apparatus such as gNB to be used for power transmission and perform direction control for power transmission, for example, based on location information 6502 and information on location and/or direction of "target x103" obtained by performing sensing. In addition, gNB etc. may select an apparatus such as gNB to be used for power transmission and perform direction control for power transmission, for example, based on the information on location and/or direction of "target x103" obtained by performing sensing.

Battery level information 6503 includes information of a battery level (remaining power) of a battery mounted on "target x103". By obtaining this information, gNB etc. can know the battery level of "target x103" and control power transmission duration.

Power reception state information 6504 includes information of a power reception state in "target x103", for example, whether "target x103" is receiving power and information of electric energy in "target x103" by power reception. By obtaining this information, gNB etc. can know the "power reception state of target x103" and control a power transmission method, for example, based on this information.

FIG. 66 illustrates exemplary information included in a modulation signal transmitted by "gNB x101". Note that FIG. 66 does not illustrate information for data communication and information for sensing. The information for data communication and information for sensing have been described in other embodiments, and thus the description thereof will be omitted here. As illustrated in FIG. 66, a modulation signal transmitted by "gNB x101" includes, for example, power transmission apparatus information 6601, "power transmission location information and/or power transmission direction information 6602", power transmission information 6603, and power transmission state information 6604.

Power transmission apparatus information 6601 includes information of the power transmission apparatus itself (e.g., identification (ID) of the power transmission apparatus). Thus, target x103 can obtain the information of the power transmission apparatus actually transmitting power by obtaining this information.

"Power transmission location information and/or power transmission direction information 6602" includes location information of the power transmission apparatus and/or information on the direction in which power transmission is performed. Target x103 may perform direction control so that target x103 effectively performs power reception, by obtaining this information.

Power transmission information 6603 includes information on how the power transmission apparatus performs power transmission (e.g., whether it performs power transmission by radio waves or light). Target x103 performs power reception in a power reception method according to the power transmission method by obtaining this information. In a case where target x103 supports both power reception by radio waves and power reception by light, for example, target x103 selects whether it performs power reception by radio waves or light based on power transmission information 9003. In a case where target x103 supports either one of power reception by radio waves and power reception by light, target x103 determines whether to perform power reception after obtaining power transmission information 6603.

Power transmission state information 6604 includes information on a power transmission state, for example, information of electric energy of power transmission and information on the duration for performing power transmission. Target x103 may control power reception duration, a power reception method, etc. by obtaining this information.

As described above, communication with target x103 that possibly moves allows sharing information on power transmission and charging, and this produces an effect of transmitting power and charging effectively.

FIG. 64B illustrates an exemplary configuration of target x103 in FIG. 62C different from that in FIG. 64A. Note that, in FIG. 64B, the components that operate in the same manner as in FIG. 64A are denoted by the same reference signs, and already-described components will not be described. Target x103 includes "communication/sensing apparatus 6401", power receiver 6402, battery 6430, and apparatus 6450 as in FIG. 64B.

Note that "communication/sensing apparatus 6401" is an apparatus having a communication function and/or a sensing function. Accordingly, "communication/sensing apparatus 6401" is a communication apparatus when having only a communication function. "Communication/sensing apparatus 6401" is a sensing apparatus when having only a sensing function. "Communication/sensing apparatus 6401" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

A difference from FIG. 64A is that apparatus 6450 is present in FIG. 64B. For example, apparatus 6450 may be a moving apparatus based on electricity such as an "electric car, electric bike (e-bike), electric bicycle, moving robot, electric scooter, battery-assisted bicycle, and battery-assisted scooter", and may also be a "display apparatus such as a display, projector, head mounted display, AR glasses, AR headset, VR glasses, VR headset, MR glasses, and MR headset". Apparatus 6450, however, is not limited to these examples and only needs to be an apparatus that operates using electricity.

For example, "communication/sensing apparatus 6401" outputs control signal 6411. At this time, control signal 6411 includes control information related to a power reception operation such as performing power reception and stopping power reception.

Power receiver 6402 takes control signal 6411 as input and operates based on the control information related to power reception included in control signal 6411.

When control signal 6411 includes information of "performing power reception", for example, power receiver 6402 receives a signal of power transmission transmitted by "gNB x101" and performs an operation for power reception. Note that the power transmission may be performed using radio waves or may be performed using light, for example. When the power transmission is performed using radio waves, power receiver 6402 may include an antenna for power reception. When the power transmission is performed using light, power receiver 6402 may include a light receiver.

Battery 6430 performs charging by signal 6421 outputted from power receiver 6402.

In addition, power receiver 6402 may output state information 6412 including information on a power reception state. At this time, "communication/sensing apparatus 6401" may take state information 6412 as input and transmit the information of a power reception state to "gNB x101" based on state information 6412.

Battery 6430 supplies power (voltage and current) to "communication/sensing apparatus 6401" and power receiver 6402 (6422).

Apparatus 6450 and "communication/sensing apparatus 6401" may transmit/receive information each other (6499).

Terminal x102 in FIG. 62C has a communication function and a sensing function. As another configuration, terminal x102 may have a configuration as in FIG. 64A, 64B, or 64C with a sensing function added.

A description will be given of exemplary information included in a modulation signal transmitted by "target x103" and exemplary information included in a modulation signal transmitted by "gNB x101" in the state of FIG. 62C.

FIG. 65 illustrates exemplary information included in a modulation signal transmitted by "target x103" with the configuration in FIG. 64B. Note that FIG. 65 does not illustrate information for data communication and information for sensing. The information for data communication and information for sensing have been described in other embodiments, and thus the description thereof will be omitted here. As illustrated in FIG. 65, a modulation signal transmitted by "target x103" includes, for example, charging request information (power transmission request information) 6501, location information 6502, battery level information 6503, and power reception state information 6504. Note that the detail has already been described, and thus the description thereof will be omitted.

FIG. 66 illustrates exemplary information included in a modulation signal transmitted by "gNB x101". Note that FIG. 66 does not illustrate information for data communication and information for sensing. The information for data communication and information for sensing have been described in other embodiments, and thus the description thereof will be omitted here. As illustrated in FIG. 66, a modulation signal transmitted by "gNB x101" includes, for example, power transmission apparatus information 6601, "power transmission location information and/or power transmission direction information 6602", power transmission information 6603, and power transmission state information 6604. Note that the detail has already been described, and thus the description thereof will be omitted.

As described above, communication with target x103 that possibly moves allows sharing information on power transmission and charging, and this produces effects of transmitting power and charging effectively and operating the apparatus intermittently.

FIG. 64C illustrates an exemplary configuration of target x103 in FIG. 62C different from those in FIGS. 64A and 64B. Note that, in FIG. 64C, the components that operate in the same manner as in FIGS. 64A and 64B are denoted by the same reference signs, and already-described components will not be described. Target x103 includes "communication/sensing apparatus 6401", power receiver 6402, first battery 6431, second battery 6432, and apparatus 6450 as in FIG. 64C.

Note that "communication/sensing apparatus 6401" is an apparatus having a communication function and/or a sensing function. Accordingly, "communication/sensing apparatus 6401" is a communication apparatus when having only a communication function. "Communication/sensing apparatus 6401" is a sensing apparatus when having only a sensing function. "Communication/sensing apparatus 6401" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

A difference from FIGS. 64A and 64B is that there are first battery 6431 for ""communication/sensing apparatus 6401" and power receiver 6402" and second battery 6432 for apparatus 6450 in FIG. 64C.

For example, "communication/sensing apparatus 6401" outputs control signal 6411. At this time, control signal 6411 includes control information related to a power reception operation such as performing power reception and stopping power reception.

Power receiver 6402 takes control signal 6411 as input and operates based on the control information related to power reception included in control signal 6411.

When control signal 6411 includes information of "performing power reception", for example, power receiver 6402 receives a signal of power transmission transmitted by "gNB x101" and performs an operation for power reception. Note that the power transmission may be performed using radio waves or may be performed using light, for example. When the power transmission is performed using radio waves, power receiver 6402 may include an antenna for power reception. When the power transmission is performed using light, power receiver 6402 may include a light receiver.

In the case of FIG. 64C, for example, when power receiver 6402 determines to charge first battery 6431, first battery 6431 performs charging by signal 6421 outputted from charger 6402.

For example, when power receiver 6402 determines to charge second battery 6432, second battery 6432 performs charging by signal 6423 outputted from charger 6402.

Power receiver 6402 may output state information 6412 including information on a power reception state. At this time, "communication/sensing apparatus 6401" may take state information 6412 as input and transmit the information of a power reception state to "gNB x101" based on state information 6412.

First battery 6431 supplies power (voltage and current) to "communication/sensing apparatus 6401" and power receiver 6402 (6422).

Second battery 6432 supplies power (voltage and current) to apparatus 6450 (6424).

Apparatus 6450 and "communication/sensing apparatus 6401" may transmit/receive information each other (6499).

Terminal x102 in FIG. 62C has a communication function and a sensing function. As another configuration, terminal x102 may have a configuration as in FIG. 64A, 64B, or 64C with a sensing function added.

A description will be given of exemplary information included in a modulation signal transmitted by "target x103" with the configuration in FIG. 64C and exemplary information included in a modulation signal transmitted by "gNB x101" in the state of FIG. 62C.

FIG. 65 illustrates exemplary information included in a modulation signal transmitted by "target x103" with the configuration in FIG. 64C. Note that FIG. 65 does not illustrate information for data communication and information for sensing. The information for data communication and information for sensing have been described in other embodiments, and thus the description thereof will be omitted here. As illustrated in FIG. 65, a modulation signal transmitted by "target x103" includes, for example, charging request information (power transmission request information) 6501, location information 6502, battery level information 6503, and power reception state information 6504. Note that the detail has already been described, and thus the description thereof will be omitted.

FIG. 66 illustrates exemplary information included in a modulation signal transmitted by "gNB x101". Note that FIG. 66 does not illustrate information for data communication and information for sensing. The information for data communication and information for sensing have been described in other embodiments, and thus the description thereof will be omitted here. As illustrated in FIG. 66, a modulation signal transmitted by "gNB x101" includes, for example, power transmission apparatus information 6601, "power transmission location information and/or power transmission direction information 6602", power transmission information 6603, and power transmission state information 6604. Note that the detail has already been described, and thus the description thereof will be omitted.

As described above, communication with target x103 that possibly moves allows sharing information on power transmission and charging, and this produces effects of transmitting power and charging effectively and operating the apparatus intermittently.

FIG. 62D illustrates a variation of "communication and sensing with the gNB and terminal involved" in FIG. 38A. Note that, in FIG. 62D, components that operate in the same manner as in FIG. 38A are denoted by the same reference signs, and the description thereof will be partially omitted.

As already described in other embodiments, gNB x101 and terminal x102 communicate with each other, and gNB x101 senses terminal x102. The detailed operations at this time have already been described, and thus the description thereof will be omitted.

Example 1:

It is assumed that terminal x102 communicates with "gNB x101", and gNB x101 senses terminal x102. Then, "gNB x101 or another apparatus" indicates power transmission to power transmission apparatus 6210 based on "information obtained from terminal x102 through the communication and/or a sensing result (e.g., "information on location and/or direction" such as the location, direction, distance, etc. of terminal x102)", and power transmission apparatus 6210 performs power transmission. Note that another apparatus is not illustrated in FIG. 62D. Power transmission apparatus 6210 does not have a function of communicating with terminal x102 directly.

Terminal x102 performs charging along with the power transmission by power transmission apparatus 6210 (6211 in FIG. 62D).

Example 2:

It is assumed that terminal x102 communicates with "gNB x101", and gNB x101 senses terminal x102. Then, power transmission apparatus 6210 obtains "information obtained from terminal x102 through the communication and/or a sensing result (e.g., "information on location and/or direction" such as the location, direction, distance, etc. of terminal x102)" by performing communication, and determines whether to perform power transmission. When determining to perform power transmission, power transmission apparatus 6210 performs power transmission. Note that power transmission apparatus 6210 does not have a function of communicating with terminal x102 directly.

Terminal x102 performs charging along with the power transmission by power transmission apparatus 6210 (6211 in FIG. 62D).

Note that, in FIG. 62D, "gNB x101, power transmission apparatus 6210, and another apparatus" may have a function of communicating by wire or radio, and this enables communication among these three apparatuses. The communication method is not limited thereto, however.

In addition, "gNB x101" may or may not have a function of transmitting power to terminal x102.

FIG. 64A illustrates an exemplary configuration of terminal x102 in FIG. 62D. Terminal x102 includes "communication/sensing apparatus 6401", power receiver 8802, and battery 8830 as in FIG. 64A.

Note that "communication/sensing apparatus 6401" is an apparatus having a communication function and/or a sensing function. Accordingly, "communication/sensing apparatus 6401" is a communication apparatus when having only a communication function. "Communication/sensing apparatus 6401" is a sensing apparatus when having only a sensing function. "Communication/sensing apparatus 6401" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

For example, "communication/sensing apparatus 6401" outputs control signal 6411. At this time, control signal 6411 includes control information related to a power reception operation such as performing power reception and stopping power reception.

Power receiver 6402 takes control signal 6411 as input and operates based on the control information related to power reception included in control signal 6411.

When control signal 6411 includes information of "performing power reception", for example, power receiver 6402 receives a signal of power transmission transmitted by "power transmission apparatus 6210" and performs an operation for power reception. Note that the power transmission may be performed using radio waves or may be performed using light, for example. When the power transmission is performed using radio waves, power receiver 6402 may include an antenna for power reception. When the power transmission is performed using light, power receiver 6402 may include a light receiver.

Battery 6430 performs charging by signal 6421 outputted from power receiver 6402.

In addition, power receiver 6402 may output state information 6412 including information on a power reception state. At this time, "communication/sensing apparatus 6401" may take state information 6412 as input and transmit the information of a power reception state to "gNB x101" based on state information 6412.

Battery 6430 supplies power (voltage and current) to "communication/sensing apparatus 6401" and power receiver 6402 (6422).

A description will be given of exemplary information included in a modulation signal transmitted by "terminal x102" and exemplary information included in a modulation signal transmitted by "gNB x101" in the state of FIG. 62D.

FIG. 65 illustrates exemplary information included in a modulation signal transmitted by "terminal x102". Note that FIG. 65 does not illustrate information for data communication and information for sensing. The information for data communication and information for sensing have been described in other embodiments, and thus the description thereof will be omitted here. As illustrated in FIG. 65, a modulation signal transmitted by "terminal x102" includes, for example, charging request information (power transmission request information) 6501, location information 6502, battery level information 6503, and power reception state information 6504.

Charging request information 6501 is information for "terminal x102 to make a charging request to a power transmission apparatus etc. via gNB etc.". Thus, the gNB etc. knows that "terminal x102 has requested charging" by obtaining this information.

Note that power transmission request information may replace charging request information 6501. The power transmission request information is information for "terminal x102 to make a power transmission request to a power transmission apparatus etc. via gNB etc.". Thus, the gNB etc. knows that "terminal x102 has requested power transmission" by obtaining this information.

Location information 6502 includes location information obtained by "terminal x102" estimating its location, for example. By obtaining this information, gNB etc. can select an apparatus such as a power transmission apparatus to be used for power transmission and perform direction control for power transmission, for example. Note that gNB etc. may select an apparatus such as gNB to be used for power transmission and perform direction control for power transmission, for example, based on location information 6502 and information on location and/or direction of "terminal x102" obtained by performing sensing. In addition, gNB etc. may select an apparatus such as gNB to be used for power transmission and perform direction control for power transmission, for example, based on the information on location and/or direction of "terminal x102" obtained by performing sensing.

Battery level information 6503 includes information of a battery level (remaining power) of a battery mounted on "terminal x102". By obtaining this information, gNB etc. can know the battery level of "terminal x102" and control power transmission duration.

Power reception state information 6504 includes information of a power reception state in "terminal x102", for example, whether "terminal x102" is receiving power and information of electric energy in "terminal x102" by power reception. By obtaining this information, gNB etc. can know the "power reception state of terminal x102" and control a power transmission method, for example, based on this information.

FIG. 66 illustrates exemplary information included in a modulation signal transmitted by "gNB x101". Note that FIG. 66 does not illustrate information for data communication and information for sensing. The information for data communication and information for sensing have been described in other embodiments, and thus the description thereof will be omitted here. As illustrated in FIG. 66, a modulation signal transmitted by "gNB x101" includes, for example, power transmission apparatus information 6601, "power transmission location information and/or power transmission direction information 6602", power transmission information 6603, and power transmission state information 6604.

Power transmission apparatus information 6601 includes information of the power transmission apparatus itself (e.g., identification (ID) of the power transmission apparatus). Thus, terminal x102 can obtain the information of the power transmission apparatus actually transmitting power by obtaining this information.

"Power transmission location information and/or power transmission direction information 6602" includes location information of the power transmission apparatus and/or information on the direction in which power transmission is performed. Terminal x102 may perform direction control so that the terminal x 102 effectively performs power reception, by obtaining this information.

Power transmission information 6603 includes information on how the power transmission apparatus performs power transmission (e.g., whether it performs power transmission by radio waves or light). The terminal performs power reception in a power reception method according to the power transmission method by obtaining this information. In a case where the terminal supports both power reception by radio waves and power reception by light, for example, the terminal selects whether it performs power reception by radio waves or light based on power transmission information 9003. In a case where the terminal supports either one of power reception by radio waves and power reception by light, the terminal determines whether to perform power reception after obtaining power transmission information 6603.

Power transmission state information 6604 includes information on a power transmission state, for example, information of electric energy of power transmission and information on the duration for performing power transmission. The terminal may control power reception duration, a power reception method, etc. by obtaining this information.

As described above, communication with a terminal that possibly moves allows sharing information on power transmission and charging, and this produces an effect of transmitting power and charging effectively.

FIG. 64B illustrates an exemplary configuration of terminal x102 in FIG. 62D different from that in FIG. 64A. Note that, in FIG. 64B, the components that operate in the same manner as in FIG. 64A are denoted by the same reference signs, and already-described components will not be described. Terminal x102 includes "communication/sensing apparatus 6401", power receiver 6402, battery 6430, and apparatus 6450 as in FIG. 64B.

Note that "communication/sensing apparatus 6401" is an apparatus having a communication function and/or a sensing function. Accordingly, "communication/sensing apparatus 6401" is a communication apparatus when having only a communication function. "Communication/sensing apparatus 6401" is a sensing apparatus when having only a sensing function. "Communication/sensing apparatus 6401" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

A difference from FIG. 64A is that apparatus 6450 is present in FIG. 64B. For example, apparatus 6450 may be a moving apparatus based on electricity such as an "electric car, electric bike (e-bike), electric bicycle, moving robot, electric scooter, battery-assisted bicycle, and battery-assisted scooter", and may also be a "display apparatus such as a display, projector, head mounted display, AR glasses, AR headset, VR glasses, VR headset, mixed reality (MR) glasses, and MR headset". Apparatus 6450, however, is not limited to these examples and only needs to be an apparatus that operates using electricity.

For example, "communication/sensing apparatus 6401" outputs control signal 6411. At this time, control signal 6411 includes control information related to a power reception operation such as performing power reception and stopping power reception.

Power receiver 6402 takes control signal 6411 as input and operates based on the control information related to power reception included in control signal 6411.

When control signal 6411 includes information of "performing power reception", for example, power receiver 6402 receives a signal of power transmission transmitted by "power transmission apparatus 6210" and performs an operation for power reception. Note that the power transmission may be performed using radio waves or may be performed using light, for example. When the power transmission is performed using radio waves, power receiver 6402 may include an antenna for power reception. When the power transmission is performed using light, power receiver 6402 may include a light receiver.

Battery 6430 performs charging by signal 6421 outputted from power receiver 6402.

In addition, power receiver 6402 may output state information 6412 including information on a power reception state. At this time, "communication/sensing apparatus 6401" may take state information 6412 as input and transmit the information of a power reception state to "gNB x101" based on state information 6412.

Battery 6430 supplies power (voltage and current) to "communication/sensing apparatus 6401" and power receiver 6402 (6422).

Apparatus 6450 and "communication/sensing apparatus 6401" may transmit/receive information each other (6499).

A description will be given of exemplary information included in a modulation signal transmitted by "terminal x102" and exemplary information included in a modulation signal transmitted by "gNB x101" in the state of FIG. 62D.

FIG. 65 illustrates exemplary information included in a modulation signal transmitted by "terminal x102" with the configuration in FIG. 64B. Note that FIG. 65 does not illustrate information for data communication and information for sensing. The information for data communication and information for sensing have been described in other embodiments, and thus the description thereof will be omitted here. As illustrated in FIG. 65, a modulation signal transmitted by "terminal x102" includes, for example, charging request information (power transmission request information) 6501, location information 6502, battery level information 6503, and power reception state information 6504. Note that the detail has already been described, and thus the description thereof will be omitted.

FIG. 66 illustrates exemplary information included in a modulation signal transmitted by "gNB x101". Note that FIG. 66 does not illustrate information for data communication and information for sensing. The information for data communication and information for sensing have been described in other embodiments, and thus the description thereof will be omitted here. As illustrated in FIG. 66, a modulation signal transmitted by "gNB x101" includes, for example, power transmission apparatus information 6601, "power transmission location information and/or power transmission direction information 6602", power transmission information 6603, and power transmission state information 6604. Note that the detail has already been described, and thus the description thereof will be omitted.

As described above, communication with a terminal that possibly moves allows sharing information on power transmission and charging, and this produces effects of transmitting power and charging effectively and operating the apparatus intermittently.

FIG. 64C illustrates an exemplary configuration of terminal x102 in FIG. 62D different from those in FIGS. 64A and 64B. Note that, in FIG. 64C, the components that operate in the same manner as in FIGS. 64A and 64B are denoted by the same reference signs, and already-described components will not be described. Terminal x102 includes "communication/sensing apparatus 6401", power receiver 6402, first battery 6431, second battery 6432, and apparatus 6450 as in FIG. 64C.

Note that "communication/sensing apparatus 6401" is an apparatus having a communication function and/or a sensing function. Accordingly, "communication/sensing apparatus 6401" is a communication apparatus when having only a communication function. "Communication/sensing apparatus 6401" is a sensing apparatus when having only a sensing function. "Communication/sensing apparatus 6401" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

A difference from FIGS. 64A and 64B is that there are first battery 6431 for ""communication/sensing apparatus 6401" and power receiver 6402" and second battery 6432 for apparatus 6450 in FIG. 64C.

For example, "communication/sensing apparatus 6401" outputs control signal 6411. At this time, control signal 6411 includes control information related to a power reception operation such as performing power reception and stopping power reception.

Power receiver 6402 takes control signal 6411 as input and operates based on the control information related to power reception included in control signal 6411.

When control signal 6411 includes information of "performing power reception", for example, power receiver 6402 receives a signal of power transmission transmitted by "power transmission apparatus 6210" and performs an operation for power reception. Note that the power transmission may be performed using radio waves or may be performed using light, for example. When the power transmission is performed using radio waves, power receiver 6402 may include an antenna for power reception. When the power transmission is performed using light, power receiver 6402 may include a light receiver.

In the case of FIG. 64C, for example, when power receiver 6402 determines to charge first battery 6431, first battery 6431 performs charging by signal 6421 outputted from charger 6402.

For example, when power receiver 6402 determines to charge second battery 6432, second battery 6432 performs charging by signal 6423 outputted from charger 6402.

Power receiver 6402 may output state information 6412 including information on a power reception state. At this time, "communication/sensing apparatus 6401" may take state information 6412 as input and transmit the information of a power reception state to "gNB x101" based on state information 6412.

First battery 6431 supplies power (voltage and current) to "communication/sensing apparatus 6401" and power receiver 6402 (6422).

Second battery 6432 supplies power (voltage and current) to apparatus 6450 (6424).

Apparatus 6450 and "communication/sensing apparatus 6401" may transmit/receive information each other (6499).

A description will be given of exemplary information included in a modulation signal transmitted by "terminal x102" with the configuration in FIG. 64C and exemplary information included in a modulation signal transmitted by "gNB x101" in the state of FIG. 62D.

FIG. 65 illustrates exemplary information included in a modulation signal transmitted by "terminal x102" with the configuration in FIG. 64C. Note that FIG. 65 does not illustrate information for data communication and information for sensing. The information for data communication and information for sensing have been described in other embodiments, and thus the description thereof will be omitted here. As illustrated in FIG. 65, a modulation signal transmitted by "terminal x102" includes, for example, charging request information (power transmission request information) 6501, location information 6502, battery level information 6503, and power reception state information 6504. Note that the detail has already been described, and thus the description thereof will be omitted.

FIG. 66 illustrates exemplary information included in a modulation signal transmitted by "gNB x101". Note that FIG. 66 does not illustrate information for data communication and information for sensing. The information for data communication and information for sensing have been described in other embodiments, and thus the description thereof will be omitted here. As illustrated in FIG. 66, a modulation signal transmitted by "gNB x101" includes, for example, power transmission apparatus information 6601, "power transmission location information and/or power transmission direction information 6602", power transmission information 6603, and power transmission state information 6604. Note that the detail has already been described, and thus the description thereof will be omitted.

As described above, communication with a terminal that possibly moves allows sharing information on power transmission and charging, and this produces effects of transmitting power and charging effectively and operating the apparatus intermittently.

FIG. 62E illustrates a variation of "communication and sensing with the gNB and terminal involved" in FIG. 38B. Note that, in FIG.62E, components that operate in the same manner as in FIG. 38B are denoted by the same reference signs, and the description thereof will be partially omitted.

As already described in other embodiments, gNB x101 and terminal x102 communicate with each other. In addition, gNB x101 and target x103 may communicate with each other. Further, gNB x 10 1 senses target x 103. Detailed operations of these have already been described, and thus the description thereof will be omitted.

Example 1:

It is assumed that terminal x102 communicates with "gNB x101". It is also assumed that target x103 communicates with "gNB x101", and gNB x101 senses target x103. Then, "gNB x101 or another apparatus" indicates power transmission to power transmission apparatus 6210 based on "information obtained from target x103 through the communication and/or a sensing result (e.g., "information on location and/or direction" such as the location, direction, distance, etc. of target x103)", and power transmission apparatus 6210 performs power transmission. Note that another apparatus is not illustrated in FIG. 62E. Power transmission apparatus 6210 does not have a function of communicating with target x103 directly.

Target x103 performs charging along with the power transmission by power transmission apparatus 6210 (6211 in FIG. 62E).

Example 2:

It is assumed that terminal x102 communicates with "gNB x101". It is also assumed that target x103 communicates with "gNB x101", and gNB x101 senses target x103. Then, power transmission apparatus 6210 obtains "information obtained from target x103 through the communication and/or a sensing result (e.g., "information on location and/or direction" such as the location, direction, distance, etc. of target x103)" by performing communication, and determines whether to perform power transmission. When determining to perform power transmission, power transmission apparatus 6210 performs power transmission. Note that power transmission apparatus 6210 does not have a function of communicating with target x 103 directly.

Target x103 performs charging along with the power transmission by power transmission apparatus 6210 (6211 in FIG. 62E).

Note that, in FIG. 62E, "gNB x101, power transmission apparatus 6210, and another apparatus" may have a function of communicating by wire or radio, and this enables communication among these three apparatuses. The communication method is not limited thereto, however.

In addition, "gNB x101" may or may not have a function of transmitting power to target x103.

FIG. 64A illustrates an exemplary configuration of target x103 in FIG. 62E. Target x103 includes "communication/sensing apparatus 6401", power receiver 8802, and battery 8830 as in FIG. 64A.

Note that "communication/sensing apparatus 6401" is an apparatus having a communication function and/or a sensing function. Accordingly, "communication/sensing apparatus 6401" is a communication apparatus when having only a communication function. "Communication/sensing apparatus 6401" is a sensing apparatus when having only a sensing function. "Communication/sensing apparatus 6401" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

For example, "communication/sensing apparatus 6401" outputs control signal 6411. At this time, control signal 6411 includes control information related to a power reception operation such as performing power reception and stopping power reception.

Power receiver 6402 takes control signal 6411 as input and operates based on the control information related to power reception included in control signal 6411.

When control signal 6411 includes information of "performing power reception", for example, power receiver 6402 receives a signal of power transmission transmitted by "power transmission apparatus 6210" and performs an operation for power reception. Note that the power transmission may be performed using radio waves or may be performed using light, for example. When the power transmission is performed using radio waves, power receiver 6402 may include an antenna for power reception. When the power transmission is performed using light, power receiver 6402 may include a light receiver.

Battery 6430 performs charging by signal 6421 outputted from power receiver 6402.

In addition, power receiver 6402 may output state information 6412 including information on a power reception state. At this time, "communication/sensing apparatus 6401" may take state information 6412 as input and transmit the information of a power reception state to "gNB x101" based on state information 6412.

Battery 6430 supplies power (voltage and current) to "communication/sensing apparatus 6401" and power receiver 6402 (6422).

Terminal x102 in FIG. 62E has a communication function. As another configuration, terminal x102 may have a configuration as in FIG. 64A, 64B, or 64C.

A description will be given of exemplary information included in a modulation signal transmitted by "target x103" and exemplary information included in a modulation signal transmitted by "gNB x101" in the state of FIG. 62E.

FIG. 65 illustrates exemplary information included in a modulation signal transmitted by "target x103". Note that FIG. 65 does not illustrate information for data communication and information for sensing. The information for data communication and information for sensing have been described in other embodiments, and thus the description thereof will be omitted here. As illustrated in FIG. 65, a modulation signal transmitted by "terminal x102" includes, for example, charging request information (power transmission request information) 6501, location information 6502, battery level information 6503, and power reception state information 6504.

Charging request information 6501 is information for "target x103 to make a charging request to a power transmission apparatus etc. via gNB etc.". Thus, the gNB etc. knows that "target x103 has requested charging" by obtaining this information.

Note that power transmission request information may replace charging request information 6501. The power transmission request information is information for "target x103 to make a power transmission request to a power transmission apparatus etc. via gNB etc.". Thus, the gNB etc. knows that "target x103 has requested power transmission" by obtaining this information.

Location information 6502 includes location information obtained by "target x103" estimating its location, for example. By obtaining this information, gNB etc. can select an apparatus such as a power transmission apparatus to be used for power transmission and perform direction control for power transmission, for example. Note that gNB etc. may select an apparatus such as gNB to be used for power transmission and perform direction control for power transmission, for example, based on location information 6502 and information on location and/or direction of "target x103" obtained by performing sensing. In addition, gNB etc. may select an apparatus such as gNB to be used for power transmission and perform direction control for power transmission, for example, based on the information on location and/or direction of "target x103" obtained by performing sensing.

Battery level information 6503 includes information of a battery level (remaining power) of a battery mounted on "target x103". By obtaining this information, gNB etc. can know the battery level of "target x103" and control power transmission duration.

Power reception state information 6504 includes information of a power reception state in "target x103", for example, whether "target x103" is receiving power and information of electric energy in "target x103" by power reception. By obtaining this information, gNB etc. can know the "power reception state of target x103" and control a power transmission method, for example, based on this information.

FIG. 66 illustrates exemplary information included in a modulation signal transmitted by "gNB x101". Note that FIG. 66 does not illustrate information for data communication and information for sensing. The information for data communication and information for sensing have been described in other embodiments, and thus the description thereof will be omitted here. As illustrated in FIG. 66, a modulation signal transmitted by "gNB x101" includes, for example, power transmission apparatus information 6601, "power transmission location information and/or power transmission direction information 6602", power transmission information 6603, and power transmission state information 6604.

Power transmission apparatus information 6601 includes information of the power transmission apparatus itself (e.g., identification (ID) of the power transmission apparatus). Thus, target x103 can obtain the information of the power transmission apparatus actually transmitting power by obtaining this information.

"Power transmission location information and/or power transmission direction information 6602" includes location information of the power transmission apparatus and/or information on the direction in which power transmission is performed. Target x103 may perform direction control so that target x103 effectively performs power reception, by obtaining this information.

Power transmission information 6603 includes information on how the power transmission apparatus performs power transmission (e.g., whether it performs power transmission by radio waves or light). Target x103 performs power reception in a power reception method according to the power transmission method by obtaining this information. In a case where target x103 supports both power reception by radio waves and power reception by light, for example, target x103 selects whether it performs power reception by radio waves or light based on power transmission information 9003. In a case where target x103 supports either one of power reception by radio waves and power reception by light, target x103 determines whether to perform power reception after obtaining power transmission information 6603.

Power transmission state information 6604 includes information on a power transmission state, for example, information of electric energy of power transmission and information on the duration for performing power transmission. Target x103 may control power reception duration, a power reception method, etc. by obtaining this information.

As described above, communication with target x103 that possibly moves allows sharing information on power transmission and charging, and this produces an effect of transmitting power and charging effectively.

FIG. 64B illustrates an exemplary configuration of target x103 in FIG. 62E different from that in FIG. 64A. Note that, in FIG. 64B, the components that operate in the same manner as in FIG. 64A are denoted by the same reference signs, and already-described components will not be described. Target x103 includes "communication/sensing apparatus 6401", power receiver 6402, battery 6430, and apparatus 6450 as in FIG. 64B.

Note that "communication/sensing apparatus 6401" is an apparatus having a communication function and/or a sensing function. Accordingly, "communication/sensing apparatus 6401" is a communication apparatus when having only a communication function. "Communication/sensing apparatus 6401" is a sensing apparatus when having only a sensing function. "Communication/sensing apparatus 6401" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

A difference from FIG. 64A is that apparatus 6450 is present in FIG. 64B. For example, apparatus 6450 may be a moving apparatus based on electricity such as an "electric car, electric bike (e-bike), electric bicycle, moving robot, electric scooter, battery-assisted bicycle, and battery-assisted scooter", and may also be a "display apparatus such as a display, projector, head mounted display, AR glasses, AR headset, VR glasses, VR headset, MR glasses, and MR headset". Apparatus 6450, however, is not limited to these examples and only needs to be an apparatus that operates using electricity.

For example, "communication/sensing apparatus 6401" outputs control signal 6411. At this time, control signal 6411 includes control information related to a power reception operation such as performing power reception and stopping power reception.

Power receiver 6402 takes control signal 6411 as input and operates based on the control information related to power reception included in control signal 6411.

When control signal 6411 includes information of "performing power reception", for example, power receiver 6402 receives a signal of power transmission transmitted by "power transmission apparatus 6210" and performs an operation for power reception. Note that the power transmission may be performed using radio waves or may be performed using light, for example. When the power transmission is performed using radio waves, power receiver 6402 may include an antenna for power reception. When the power transmission is performed using light, power receiver 6402 may include a light receiver.

Battery 6430 performs charging by signal 6421 outputted from power receiver 6402.

In addition, power receiver 6402 may output state information 6412 including information on a power reception state. At this time, "communication/sensing apparatus 6401" may take state information 6412 as input and transmit the information of a power reception state to "gNB x101" based on state information 6412.

Battery 6430 supplies power (voltage and current) to "communication/sensing apparatus 6401" and power receiver 6402 (6422).

Apparatus 6450 and "communication/sensing apparatus 6401" may transmit/receive information each other (6499).

Terminal x102 in FIG. 62E has a communication function. As another configuration, terminal x102 may have a configuration as in FIG. 64A, 64B, or 64C.

A description will be given of exemplary information included in a modulation signal transmitted by "target x103" and exemplary information included in a modulation signal transmitted by "gNB x101" in the state of FIG. 62E.

FIG. 65 illustrates exemplary information included in a modulation signal transmitted by "target x103" with the configuration in FIG. 64B. Note that FIG. 65 does not illustrate information for data communication and information for sensing. The information for data communication and information for sensing have been described in other embodiments, and thus the description thereof will be omitted here. As illustrated in FIG. 65, a modulation signal transmitted by "target x103" includes, for example, charging request information (power transmission request information) 6501, location information 6502, battery level information 6503, and power reception state information 6504. Note that the detail has already been described, and thus the description thereof will be omitted.

FIG. 66 illustrates exemplary information included in a modulation signal transmitted by "gNB x101". Note that FIG. 66 does not illustrate information for data communication and information for sensing. The information for data communication and information for sensing have been described in other embodiments, and thus the description thereof will be omitted here. As illustrated in FIG. 66, a modulation signal transmitted by "gNB x101" includes, for example, power transmission apparatus information 6601, "power transmission location information and/or power transmission direction information 6602", power transmission information 6603, and power transmission state information 6604. Note that the detail has already been described, and thus the description thereof will be omitted.

As described above, communication with target x103 that possibly moves allows sharing information on power transmission and charging, and this produces effects of transmitting power and charging effectively and operating the apparatus intermittently.

FIG. 64C illustrates an exemplary configuration of target x103 in FIG. 62E different from those in FIGS. 64A and 64B. Note that, in FIG. 64C, the components that operate in the same manner as in FIGS. 64A and 64B are denoted by the same reference signs, and already-described components will not be described. Target x103 includes "communication/sensing apparatus 6401", power receiver 6402, first battery 6431, second battery 6432, and apparatus 6450 as in FIG. 64C.

Note that "communication/sensing apparatus 6401" is an apparatus having a communication function and/or a sensing function. Accordingly, "communication/sensing apparatus 6401" is a communication apparatus when having only a communication function. "Communication/sensing apparatus 6401" is a sensing apparatus when having only a sensing function. "Communication/sensing apparatus 6401" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

A difference from FIGS. 64A and 64B is that there are first battery 6431 for ""communication/sensing apparatus 6401" and power receiver 6402" and second battery 6432 for apparatus 6450 in FIG. 64C.

For example, "communication/sensing apparatus 6401" outputs control signal 6411. For example, "communication/sensing apparatus 6401" outputs control signal 6411.

Power receiver 6402 takes control signal 6411 as input and operates based on the control information related to power reception included in control signal 6411.

When control signal 6411 includes information of "performing power reception", for example, power receiver 6402 receives a signal of power transmission transmitted by "power transmission apparatus 6210" and performs an operation for power reception. Note that the power transmission may be performed using radio waves or may be performed using light, for example. When the power transmission is performed using radio waves, power receiver 6402 may include an antenna for power reception. When the power transmission is performed using light, power receiver 6402 may include a light receiver.

In the case of FIG. 64C, for example, when power receiver 6402 determines to charge first battery 6431, first battery 6431 performs charging by signal 6421 outputted from charger 6402.

For example, when power receiver 6402 determines to charge second battery 6432, second battery 6432 performs charging by signal 6423 outputted from charger 6402.

Power receiver 6402 may output state information 6412 including information on a power reception state. At this time, "communication/sensing apparatus 6401" may take state information 6412 as input and transmit the information of a power reception state to "gNB x101" based on state information 6412.

First battery 6431 supplies power (voltage and current) to "communication/sensing apparatus 6401" and power receiver 6402 (6422).

Second battery 6432 supplies power (voltage and current) to apparatus 6450 (6424).

Apparatus 6450 and "communication/sensing apparatus 6401" may transmit/receive information each other (6499).

Terminal x102 in FIG. 62B has a communication function. As another configuration, terminal x102 may have a configuration as in FIG. 64A, 64B, or 64C.

A description will be given of exemplary information included in a modulation signal transmitted by "target x103" with the configuration in FIG. 64C and exemplary information included in a modulation signal transmitted by "gNB x101" in the state of FIG. 62E.

FIG. 65 illustrates exemplary information included in a modulation signal transmitted by "target x103" with the configuration in FIG. 64C. Note that FIG. 65 does not illustrate information for data communication and information for sensing. The information for data communication and information for sensing have been described in other embodiments, and thus the description thereof will be omitted here. As illustrated in FIG. 65, a modulation signal transmitted by "target x103" includes, for example, charging request information (power transmission request information) 6501, location information 6502, battery level information 6503, and power reception state information 6504. Note that the detail has already been described, and thus the description thereof will be omitted.

FIG. 66 illustrates exemplary information included in a modulation signal transmitted by "gNB x101". Note that FIG. 66 does not illustrate information for data communication and information for sensing. The information for data communication and information for sensing have been described in other embodiments, and thus the description thereof will be omitted here. As illustrated in FIG. 66, a modulation signal transmitted by "gNB x101" includes, for example, power transmission apparatus information 6601, "power transmission location information and/or power transmission direction information 6602", power transmission information 6603, and power transmission state information 6604. Note that the detail has already been described, and thus the description thereof will be omitted.

As described above, communication with target x103 that possibly moves allows sharing information on power transmission and charging, and this produces effects of transmitting power and charging effectively and operating the apparatus intermittently.

FIG. 62F illustrates a variation of "communication and sensing with the gNB and terminal involved" in FIG. 38C. Note that, in FIG.62F, components that operate in the same manner as in FIG. 38C are denoted by the same reference signs, and the description thereof will be partially omitted.

As already described in other embodiments, gNB x101 and terminal x102 communicate with each other. In addition, gNB x101 and target x103 may communicate with each other. Further, terminal x102 senses target x103. Detailed operations of these have already been described, and thus the description thereof will be omitted.

Example 1:

It is assumed that terminal x102 communicates with "gNB x101", and terminal x102 senses target x103. Then, "gNB x101 or another apparatus" indicates power transmission to power transmission apparatus 6210 based on "information obtained from terminal x102 through the communication, for example, a sensing result (e.g., "information on location and/or direction" such as the location, direction, distance, etc. of target x103)", and power transmission apparatus 6210 performs power transmission. Note that another apparatus is not illustrated in FIG. 62F. Power transmission apparatus 6210 does not have a function of communicating with terminal x102 directly.

Target x103 performs charging along with the power transmission by power transmission apparatus 6210 (6211 in FIG. 62F).

Example 2:

It is assumed that terminal x102 communicates with "gNB x101", and terminal x102 senses target x103. Then, power transmission apparatus 6210 obtains "information obtained from terminal x102 through the communication, for example, a sensing result (e.g., "information on location and/or direction" such as the location, direction, distance, etc. of target x103)" by performing communication, and determines whether to perform power transmission. When determining to perform power transmission, power transmission apparatus 6210 performs power transmission. Note that power transmission apparatus 6210 does not have a function of communicating with terminal x102 directly.

Target x103 performs charging along with the power transmission by power transmission apparatus 6210 (6211 in FIG. 62F).

Note that, in FIG. 62F, "gNB x101, power transmission apparatus 6210, and another apparatus" may have a function of communicating by wire or radio, and this enables communication among these three apparatuses. The communication method is not limited thereto, however.

In addition, "gNB x101" may or may not have a function of transmitting power to terminal x102.

FIG. 64A illustrates an exemplary configuration of target x103 in FIG. 62F. Target x103 includes "communication/sensing apparatus 6401", power receiver 8802, and battery 8830 as in FIG. 64A.

Note that "communication/sensing apparatus 6401" is an apparatus having a communication function and/or a sensing function. Accordingly, "communication/sensing apparatus 6401" is a communication apparatus when having only a communication function. "Communication/sensing apparatus 6401" is a sensing apparatus when having only a sensing function. "Communication/sensing apparatus 6401" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

For example, "communication/sensing apparatus 6401" outputs control signal 6411. At this time, control signal 6411 includes control information related to a power reception operation such as performing power reception and stopping power reception.

Power receiver 6402 takes control signal 6411 as input and operates based on the control information related to power reception included in control signal 6411.

When control signal 6411 includes information of "performing power reception", for example, power receiver 6402 receives a signal of power transmission transmitted by "power transmission apparatus 6210" and performs an operation for power reception. Note that the power transmission may be performed using radio waves or may be performed using light, for example. When the power transmission is performed using radio waves, power receiver 6402 may include an antenna for power reception. When the power transmission is performed using light, power receiver 6402 may include a light receiver.

Battery 6430 performs charging by signal 6421 outputted from power receiver 6402.

In addition, power receiver 6402 may output state information 6412 including information on a power reception state. At this time, "communication/sensing apparatus 6401" may take state information 6412 as input and transmit the information of a power reception state to "gNB x101" based on state information 6412.

Battery 6430 supplies power (voltage and current) to "communication/sensing apparatus 6401" and power receiver 6402 (6422).

Terminal x102 in FIG. 62F has a communication function and a sensing function. As another configuration, terminal x102 may have a configuration as in FIG. 64A, 64B, or 64C with a sensing function added.

A description will be given of exemplary information included in a modulation signal transmitted by "target x103" and exemplary information included in a modulation signal transmitted by "gNB x101" in the state of FIG. 62F.

FIG. 65 illustrates exemplary information included in a modulation signal transmitted by "target x103". Note that FIG. 65 does not illustrate information for data communication and information for sensing. The information for data communication and information for sensing have been described in other embodiments, and thus the description thereof will be omitted here. As illustrated in FIG. 65, a modulation signal transmitted by "target x103" includes, for example, charging request information (power transmission request information) 6501, location information 6502, battery level information 6503, and power reception state information 6504.

Charging request information 6501 is information for "target x103 to make a charging request to a power transmission apparatus etc. via gNB etc.". Thus, the gNB etc. knows that "target x103 has requested charging" by obtaining this information.

Note that power transmission request information may replace charging request information 6501. The power transmission request information is information for "target x103 to make a power transmission request to a power transmission apparatus etc. via gNB etc.". Thus, the gNB etc. knows that "target x103 has requested power transmission" by obtaining this information.

Location information 6502 includes location information obtained by "target x103" estimating its location, for example. By obtaining this information, gNB etc. can select an apparatus such as a power transmission apparatus to be used for power transmission and perform direction control for power transmission, for example. Note that gNB etc. may select an apparatus such as gNB to be used for power transmission and perform direction control for power transmission, for example, based on location information 6502 and information on location and/or direction of "target x103" obtained by performing sensing. In addition, gNB etc. may select an apparatus such as gNB to be used for power transmission and perform direction control for power transmission, for example, based on the information on location and/or direction of "target x103" obtained by performing sensing.

Battery level information 6503 includes information of a battery level (remaining power) of a battery mounted on "target x103". By obtaining this information, gNB etc. can know the battery level of "target x103" and control power transmission duration.

Power reception state information 6504 includes information of a power reception state in "target x103", for example, whether "target x103" is receiving power and information of electric energy in "target x103" by power reception. By obtaining this information, gNB etc. can know the "power reception state of target x103" and control a power transmission method, for example, based on this information.

FIG. 66 illustrates exemplary information included in a modulation signal transmitted by "gNB x101". Note that FIG. 66 does not illustrate information for data communication and information for sensing. The information for data communication and information for sensing have been described in other embodiments, and thus the description thereof will be omitted here. As illustrated in FIG. 66, a modulation signal transmitted by "gNB x101" includes, for example, power transmission apparatus information 6601, "power transmission location information and/or power transmission direction information 6602", power transmission information 6603, and power transmission state information 6604.

Power transmission apparatus information 6601 includes information of the power transmission apparatus itself (e.g., identification (ID) of the power transmission apparatus). Thus, target x103 can obtain the information of the power transmission apparatus actually transmitting power by obtaining this information.

"Power transmission location information and/or power transmission direction information 6602" includes location information of the power transmission apparatus and/or information on the direction in which power transmission is performed. Target x103 may perform direction control so that target x103 effectively performs power reception, by obtaining this information.

Power transmission information 6603 includes information on how the power transmission apparatus performs power transmission (e.g., whether it performs power transmission by radio waves or light). Target x103 performs power reception in a power reception method according to the power transmission method by obtaining this information. In a case where target x103 supports both power reception by radio waves and power reception by light, for example, target x103 selects whether it performs power reception by radio waves or light based on power transmission information 9003. In a case where target x103 supports either one of power reception by radio waves and power reception by light, target x103 determines whether to perform power reception after obtaining power transmission information 6603.

Power transmission state information 6604 includes information on a power transmission state, for example, information of electric energy of power transmission and information on the duration for performing power transmission. Target x103 may control power reception duration, a power reception method, etc. by obtaining this information.

As described above, communication with target x103 that possibly moves allows sharing information on power transmission and charging, and this produces an effect of transmitting power and charging effectively.

FIG. 64B illustrates an exemplary configuration of target x103 in FIG. 62F different from that in FIG. 64A. Note that, in FIG. 64B, the components that operate in the same manner as in FIG. 64A are denoted by the same reference signs, and already-described components will not be described. Target x103 includes "communication/sensing apparatus 6401", power receiver 6402, battery 6430, and apparatus 6450 as in FIG. 64B.

Note that "communication/sensing apparatus 6401" is an apparatus having a communication function and/or a sensing function. Accordingly, "communication/sensing apparatus 6401" is a communication apparatus when having only a communication function. "Communication/sensing apparatus 6401" is a sensing apparatus when having only a sensing function. "Communication/sensing apparatus 6401" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

A difference from FIG. 64A is that apparatus 6450 is present in FIG. 64B. For example, apparatus 6450 may be a moving apparatus based on electricity such as an "electric car, electric bike (e-bike), electric bicycle, moving robot, electric scooter, battery-assisted bicycle, and battery-assisted scooter", and may also be a "display apparatus such as a display, projector, head mounted display, AR glasses, AR headset, VR glasses, VR headset, MR glasses, and MR headset". Apparatus 6450, however, is not limited to these examples and only needs to be an apparatus that operates using electricity.

For example, "communication/sensing apparatus 6401" outputs control signal 6411. At this time, control signal 6411 includes control information related to a power reception operation such as performing power reception and stopping power reception.

Power receiver 6402 takes control signal 6411 as input and operates based on the control information related to power reception included in control signal 6411.

When control signal 6411 includes information of "performing power reception", for example, power receiver 6402 receives a signal of power transmission transmitted by "power transmission apparatus 6210" and performs an operation for power reception. Note that the power transmission may be performed using radio waves or may be performed using light, for example. When the power transmission is performed using radio waves, power receiver 6402 may include an antenna for power reception. When the power transmission is performed using light, power receiver 6402 may include a light receiver.

Battery 6430 performs charging by signal 6421 outputted from power receiver 6402.

In addition, power receiver 6402 may output state information 6412 including information on a power reception state. At this time, "communication/sensing apparatus 6401" may take state information 6412 as input and transmit the information of a power reception state to "gNB x101" based on state information 6412.

Battery 6430 supplies power (voltage and current) to "communication/sensing apparatus 6401" and power receiver 6402 (6422).

Apparatus 6450 and "communication/sensing apparatus 6401" may transmit/receive information each other (6499).

Terminal x102 in FIG. 62F has a communication function and a sensing function. As another configuration, terminal x102 may have a configuration as in FIG. 64A, 64B, or 64C with a sensing function added.

A description will be given of exemplary information included in a modulation signal transmitted by "target x103" and exemplary information included in a modulation signal transmitted by "gNB x101" in the state of FIG. 62F.

FIG. 65 illustrates exemplary information included in a modulation signal transmitted by "target x103" with the configuration in FIG. 64B. Note that FIG. 65 does not illustrate information for data communication and information for sensing. The information for data communication and information for sensing have been described in other embodiments, and thus the description thereof will be omitted here. As illustrated in FIG. 65, a modulation signal transmitted by "target x103" includes, for example, charging request information (power transmission request information) 6501, location information 6502, battery level information 6503, and power reception state information 6504. Note that the detail has already been described, and thus the description thereof will be omitted.

FIG. 66 illustrates exemplary information included in a modulation signal transmitted by "gNB x101". Note that FIG. 66 does not illustrate information for data communication and information for sensing. The information for data communication and information for sensing have been described in other embodiments, and thus the description thereof will be omitted here. As illustrated in FIG. 66, a modulation signal transmitted by "gNB x101" includes, for example, power transmission apparatus information 6601, "power transmission location information and/or power transmission direction information 6602", power transmission information 6603, and power transmission state information 6604. Note that the detail has already been described, and thus the description thereof will be omitted.

As described above, communication with target x103 that possibly moves allows sharing information on power transmission and charging, and this produces effects of transmitting power and charging effectively and operating the apparatus intermittently.

FIG. 64C illustrates an exemplary configuration of target x103 in FIG. 62F different from those in FIGS. 64A and 64B. Note that, in FIG. 64C, the components that operate in the same manner as in FIGS. 64A and 64B are denoted by the same reference signs, and already-described components will not be described. Target x103 includes "communication/sensing apparatus 6401", power receiver 6402, first battery 6431, second battery 6432, and apparatus 6450 as in FIG. 64C.

Note that "communication/sensing apparatus 6401" is an apparatus having a communication function and/or a sensing function. Accordingly, "communication/sensing apparatus 6401" is a communication apparatus when having only a communication function. "Communication/sensing apparatus 6401" is a sensing apparatus when having only a sensing function. "Communication/sensing apparatus 6401" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

A difference from FIGS. 64A and 64B is that there are first battery 6431 for ""communication/sensing apparatus 6401" and power receiver 6402" and second battery 6432 for apparatus 6450 in FIG. 64C.

For example, "communication/sensing apparatus 6401" outputs control signal 6411. At this time, control signal 6411 includes control information related to a power reception operation such as performing power reception and stopping power reception.

Power receiver 6402 takes control signal 6411 as input and operates based on the control information related to power reception included in control signal 6411.

When control signal 6411 includes information of "performing power reception", for example, power receiver 6402 receives a signal of power transmission transmitted by "power transmission apparatus 6210" and performs an operation for power reception. Note that the power transmission may be performed using radio waves or may be performed using light, for example. When the power transmission is performed using radio waves, power receiver 6402 may include an antenna for power reception. When the power transmission is performed using light, power receiver 6402 may include a light receiver.

In the case of FIG. 64C, for example, when power receiver 6402 determines to charge first battery 6431, first battery 6431 performs charging by signal 6421 outputted from charger 6402.

For example, when power receiver 6402 determines to charge second battery 6432, second battery 6432 performs charging by signal 6423 outputted from charger 6402.

Power receiver 6402 may output state information 6412 including information on a power reception state. At this time, "communication/sensing apparatus 6401" may take state information 6412 as input and transmit the information of a power reception state to "gNB x101" based on state information 6412.

First battery 6431 supplies power (voltage and current) to "communication/sensing apparatus 6401" and power receiver 6402 (6422).

Second battery 6432 supplies power (voltage and current) to apparatus 6450 (6424).

Apparatus 6450 and "communication/sensing apparatus 6401" may transmit/receive information each other (6499).

Terminal x102 in FIG. 62F has a communication function and a sensing function. As another configuration, terminal x102 may have a configuration as in FIG. 64A, 64B, or 64C with a sensing function added.

A description will be given of exemplary information included in a modulation signal transmitted by "target x103" with the configuration in FIG. 64C and exemplary information included in a modulation signal transmitted by "gNB x101" in the state of FIG. 62F.

FIG. 65 illustrates exemplary information included in a modulation signal transmitted by "target x103" with the configuration in FIG. 64C. Note that FIG. 65 does not illustrate information for data communication and information for sensing. The information for data communication and information for sensing have been described in other embodiments, and thus the description thereof will be omitted here. As illustrated in FIG. 65, a modulation signal transmitted by "target x103" includes, for example, charging request information (power transmission request information) 6501, location information 6502, battery level information 6503, and power reception state information 6504. Note that the detail has already been described, and thus the description thereof will be omitted.

FIG. 66 illustrates exemplary information included in a modulation signal transmitted by "gNB x101". Note that FIG. 66 does not illustrate information for data communication and information for sensing. The information for data communication and information for sensing have been described in other embodiments, and thus the description thereof will be omitted here. As illustrated in FIG. 66, a modulation signal transmitted by "gNB x101" includes, for example, power transmission apparatus information 6601, "power transmission location information and/or power transmission direction information 6602", power transmission information 6603, and power transmission state information 6604. Note that the detail has already been described, and thus the description thereof will be omitted.

As described above, communication with target x103 that possibly moves allows sharing information on power transmission and charging, and this produces effects of transmitting power and charging effectively and operating the apparatus intermittently.

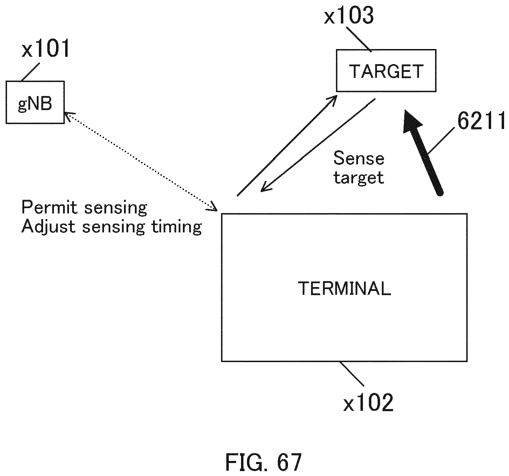

FIG. 67 illustrates a variation of "communication and sensing with the gNB and terminal involved" in FIGS. 38C and 62C. Note that, in FIG. 67, components that operate in the same manner as in FIGS. 38C and 62C are denoted by the same reference signs, and the description thereof will be partially omitted.

As already described in other embodiments, gNB x101 and terminal x102 communicate with each other. In addition, gNB x101 and target x103 may communicate with each other. Further, terminal x102 senses target x103. Detailed operations of these have already been described, and thus the description thereof will be omitted.

As described in other embodiments, terminal x102 senses target x103, and this allows terminal x102 to obtain "information on location and/or direction" such as the location, direction, distance, etc. of target x103. Then, terminal x102 performs power transmission to target x103 based on the "information on location and/or direction" (6211 in FIG. 67). This allows target x103 to perform charging.

"gNB x101" may or may not have a function of transmitting power to terminal x102 and target x103.

FIG. 63 illustrates an exemplary configuration of "terminal x102" in FIG. 67. As in FIG. 63, "terminal x102" includes "communication/sensing apparatus 6301" and power transmitter 6302.

Note that "communication/sensing apparatus 6301" is an apparatus having a communication function and/or a sensing function. Accordingly, "communication/sensing apparatus 6301" is a communication apparatus when having only a communication function. "Communication/sensing apparatus 6301" is a sensing apparatus when having only a sensing function. "Communication/sensing apparatus 6301" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

For example, "communication/sensing apparatus 6301" outputs control signal 6311. At this time, control signal 6311 includes "information on location and/or direction" of target x103 and control information related to a power transmission operation such as performing power transmission and stopping power transmission.

Power transmitter 6302 takes control signal 6311 as input and operates based on the control information related to power transmission included in control signal 6311.

When control signal 6311 includes information of "performing power transmission", for example, power transmitter 6302 performs power transmission. Note that the power transmission may be performed using radio waves or may be performed using light, for example. When transmitting power using radio waves, power transmitter 6302 may include an antenna for power transmission. When transmitting power using light, power transmitter 6302 may include an emitter.

When control signal 6311 includes "information on location and/or direction" of target x103, power transmitter 6302 can perform power transmission in a fixed direction based on the "information on location and/or direction" of target x103. (This produces an effect of improving charging efficiency in target x103.)

In addition, power transmitter 6302 may output state information 6312 including information on a power transmission state. At this time, "communication/sensing apparatus 6301" may take state information 6312 as input and transmit the information of a power transmission state to gNB x101 and target x103 based on state information 6312.

FIG. 64A illustrates an exemplary configuration of target x103 in FIG. 67. Target x103 includes "communication/sensing apparatus 6401", power receiver 8802, and battery 8830 as in FIG. 64A.

Note that "communication/sensing apparatus 6401" is an apparatus having a communication function and/or a sensing function. Accordingly, "communication/sensing apparatus 6401" is a communication apparatus when having only a communication function. "Communication/sensing apparatus 6401" is a sensing apparatus when having only a sensing function. "Communication/sensing apparatus 6401" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

For example, "communication/sensing apparatus 6401" outputs control signal 6411. At this time, control signal 6411 includes control information related to a power reception operation such as performing power reception and stopping power reception.

Power receiver 6402 takes control signal 6411 as input and operates based on the control information related to power reception included in control signal 6411.

When control signal 6411 includes information of "performing power reception", for example, power receiver 6402 receives a signal of power transmission transmitted by "terminal x102" and performs an operation for power reception. Note that the power transmission may be performed using radio waves or may be performed using light, for example. When the power transmission is performed using radio waves, power receiver 6402 may include an antenna for power reception. When the power transmission is performed using light, power receiver 6402 may include a light receiver.

Battery 6430 performs charging by signal 6421 outputted from power receiver 6402.

In addition, power receiver 6402 may output state information 6412 including information on a power reception state. At this time, "communication/sensing apparatus 6401" may take state information 6412 as input and transmit the information of a power reception state to "gNB x101 and/or terminal x102" based on state information 6412.

Battery 6430 supplies power (voltage and current) to "communication/sensing apparatus 6401" and power receiver 6402 (6422).

A description will be given of exemplary information included in a modulation signal transmitted by "target x103" and exemplary information included in a modulation signal transmitted by "terminal x102 and/or gNB x101" in the state of FIG. 67.

FIG. 65 illustrates exemplary information included in a modulation signal transmitted by "target x103". Note that FIG. 65 does not illustrate information for data communication and information for sensing. The information for data communication and information for sensing have been described in other embodiments, and thus the description thereof will be omitted here. As illustrated in FIG. 65, a modulation signal transmitted by "target x103" includes, for example, charging request information (power transmission request information) 6501, location information 6502, battery level information 6503, and power reception state information 6504.

Charging request information 6501 is information for "target x103 to make a charging request to terminal x102 etc.". Thus, terminal x102 etc. knows that "target x103 has requested charging" by obtaining this information.

Note that power transmission request information may replace charging request information 6501. The power transmission request information is information for "target x103 to make a power transmission request to terminal x102 etc.". Thus, terminal x102 etc. knows that "target x103 has requested power transmission" by obtaining this information.

Location information 6502 includes location information obtained by "target x103" estimating its location, for example. By obtaining this information, terminal x102 etc. can select an apparatus such as terminal x102 to be used for power transmission and perform direction control for power transmission, for example. Note that terminal x102 etc. may select an apparatus such as terminal x102 to be used for power transmission and perform direction control for power transmission, for example, based on location information 6502 and information on location and/or direction of "target x103" obtained by performing sensing. In addition, terminal x102 etc. may select an apparatus such as terminal x102 to be used for power transmission and perform direction control for power transmission, for example, based on information on location and/or direction of "target x103" obtained by performing sensing.

Battery level information 6503 includes information of a battery level (remaining power) of a battery mounted on "target x103". By obtaining this information, terminal x102 etc. can know the battery level of "target x103" and control power transmission duration.

Power reception state information 6504 includes information of a power reception state in "target x103", for example, whether "target x103" is receiving power and information of electric energy in "target x103" by power reception. By obtaining this information, terminal x102 etc. can know the "power reception state of target x103" and control a power transmission method, for example, based on this information.

FIG. 66 illustrates exemplary information included in a modulation signal transmitted by "terminal x102". Note that FIG. 66 does not illustrate information for data communication and information for sensing. The information for data communication and information for sensing have been described in other embodiments, and thus the description thereof will be omitted here. As illustrated in FIG. 66, a modulation signal transmitted by "terminal x102" includes, for example, power transmission apparatus information 6601, "power transmission location information and/or power transmission direction information 6602", power transmission information 6603, and power transmission state information 6604.

Power transmission apparatus information 6601 includes information of the power transmission apparatus itself (e.g., identification (ID) of the power transmission apparatus). Thus, target x103 can obtain the information of the power transmission apparatus actually transmitting power by obtaining this information.

"Power transmission location information and/or power transmission direction information 6602" includes location information of the power transmission apparatus and/or information on the direction in which power transmission is performed. Target x103 may perform direction control so that target x103 effectively performs power reception, by obtaining this information.

Power transmission information 6603 includes information on how the power transmission apparatus performs power transmission (e.g., whether it performs power transmission by radio waves or light). Target x103 performs power reception in a power reception method according to the power transmission method by obtaining this information. In a case where target x103 supports both power reception by radio waves and power reception by light, for example, target x103 selects whether it performs power reception by radio waves or light based on power transmission information 9003. In a case where target x103 supports either one of power reception by radio waves and power reception by light, target x103 determines whether to perform power reception after obtaining power transmission information 6603.

Power transmission state information 6604 includes information on a power transmission state, for example, information of electric energy of power transmission and information on the duration for performing power transmission. Target x103 may control power reception duration, a power reception method, etc. by obtaining this information.

As described above, communication with target x103 that possibly moves allows sharing information on power transmission and charging, and this produces an effect of transmitting power and charging effectively.

FIG. 64B illustrates an exemplary configuration of target x103 in FIG. 67 different from that in FIG. 64A. Note that, in FIG. 64B, the components that operate in the same manner as in FIG. 64A are denoted by the same reference signs, and already-described components will not be described. Target x103 includes "communication/sensing apparatus 6401", power receiver 6402, battery 6430, and apparatus 6450 as in FIG. 64B.

Note that "communication/sensing apparatus 6401" is an apparatus having a communication function and/or a sensing function. Accordingly, "communication/sensing apparatus 6401" is a communication apparatus when having only a communication function. "Communication/sensing apparatus 6401" is a sensing apparatus when having only a sensing function. "Communication/sensing apparatus 6401" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

A difference from FIG. 64A is that apparatus 6450 is present in FIG. 64B. For example, apparatus 6450 may be a moving apparatus based on electricity such as an "electric car, electric bike (e-bike), electric bicycle, moving robot, electric scooter, battery-assisted bicycle, and battery-assisted scooter", and may also be a "display apparatus such as a display, projector, head mounted display, AR glasses, AR headset, VR glasses, VR headset, MR glasses, and MR headset". Apparatus 6450, however, is not limited to these examples and only needs to be an apparatus that operates using electricity.

For example, "communication/sensing apparatus 6401" outputs control signal 6411. At this time, control signal 6411 includes control information related to a power reception operation such as performing power reception and stopping power reception.

Power receiver 6402 takes control signal 6411 as input and operates based on the control information related to power reception included in control signal 6411.

When control signal 6411 includes information of "performing power reception", for example, power receiver 6402 receives a signal of power transmission transmitted by "terminal x102" and performs an operation for power reception. Note that the power transmission may be performed using radio waves or may be performed using light, for example. When the power transmission is performed using radio waves, power receiver 6402 may include an antenna for power reception. When the power transmission is performed using light, power receiver 6402 may include a light receiver.

Battery 6430 performs charging by signal 6421 outputted from power receiver 6402.

In addition, power receiver 6402 may output state information 6412 including information on a power reception state. At this time, "communication/sensing apparatus 6401" may take state information 6412 as input and transmit the information of a power reception state to "gNB x101 and/or terminal x102" based on state information 6412.

Battery 6430 supplies power (voltage and current) to "communication/sensing apparatus 6401" and power receiver 6402 (6422).

Apparatus 6450 and "communication/sensing apparatus 6401" may transmit/receive information each other (6499).

A description will be given of exemplary information included in a modulation signal transmitted by "target x103" and exemplary information included in a modulation signal transmitted by "terminal x102 and/or gNB x101" in the state of FIG. 67.

FIG. 65 illustrates exemplary information included in a modulation signal transmitted by "target x103" with the configuration in FIG. 64B. Note that FIG. 65 does not illustrate information for data communication and information for sensing. The information for data communication and information for sensing have been described in other embodiments, and thus the description thereof will be omitted here. As illustrated in FIG. 65, a modulation signal transmitted by "target x103" includes, for example, charging request information (power transmission request information) 6501, location information 6502, battery level information 6503, and power reception state information 6504. Note that the detail has already been described, and thus the description thereof will be omitted.

FIG. 66 illustrates exemplary information included in a modulation signal transmitted by "terminal x102". Note that FIG. 66 does not illustrate information for data communication and information for sensing. The information for data communication and information for sensing have been described in other embodiments, and thus the description thereof will be omitted here. As illustrated in FIG. 66, a modulation signal transmitted by "terminal x102" includes, for example, power transmission apparatus information 6601, "power transmission location information and/or power transmission direction information 6602", power transmission information 6603, and power transmission state information 6604. Note that the detail has already been described, and thus the description thereof will be omitted.

As described above, communication with target x103 that possibly moves allows sharing information on power transmission and charging, and this produces effects of transmitting power and charging effectively and operating the apparatus intermittently.

FIG. 64C illustrates an exemplary configuration of target x103 in FIG. 67 different from those in FIGS. 64A and 64B. Note that, in FIG. 64C, the components that operate in the same manner as in FIGS. 64A and 64B are denoted by the same reference signs, and already-described components will not be described. Target x103 includes "communication/sensing apparatus 6401", power receiver 6402, first battery 6431, second battery 6432, and apparatus 6450 as in FIG. 64C.

Note that "communication/sensing apparatus 6401" is an apparatus having a communication function and/or a sensing function. Accordingly, "communication/sensing apparatus 6401" is a communication apparatus when having only a communication function. "Communication/sensing apparatus 6401" is a sensing apparatus when having only a sensing function. "Communication/sensing apparatus 6401" is a communication and sensing apparatus when having only a communication function and a sensing function. Note that operations related to communication and operations related to sensing have already been described, and thus the description thereof will be omitted here. The detailed operations have already been described, and thus the description thereof will be omitted. "Operations related to communication and operations related to sensing", however, are not limited to the operations described above.

A difference from FIGS. 64A and 64B is that there are first battery 6431 for ""communication/sensing apparatus 6401" and power receiver 6402" and second battery 6432 for apparatus 6450 in FIG. 64C.

For example, "communication/sensing apparatus 6401" outputs control signal 6411. At this time, control signal 6411 includes control information related to a power reception operation such as performing power reception and stopping power reception.

Power receiver 6402 takes control signal 6411 as input and operates based on the control information related to power reception included in control signal 6411.

When control signal 6411 includes information of "performing power reception", for example, power receiver 6402 receives a signal of power transmission transmitted by "terminal x102" and performs an operation for power reception. Note that the power transmission may be performed using radio waves or may be performed using light, for example. When the power transmission is performed using radio waves, power receiver 6402 may include an antenna for power reception. When the power transmission is performed using light, power receiver 6402 may include a light receiver.

In the case of FIG. 64C, for example, when power receiver 6402 determines to charge first battery 6431, first battery 6431 performs charging by signal 6421 outputted from charger 6402.

For example, when power receiver 6402 determines to charge second battery 6432, second battery 6432 performs charging by signal 6423 outputted from charger 6402.

Power receiver 6402 may output state information 6412 including information on a power reception state. At this time, "communication/sensing apparatus 6401" may take state information 6412 as input and transmit the information of a power reception state to "gNB x101 and/or terminal x102" based on state information 6412.

First battery 6431 supplies power (voltage and current) to "communication/sensing apparatus 6401" and power receiver 6402 (6422).

Second battery 6432 supplies power (voltage and current) to apparatus 6450 (6424).

Apparatus 6450 and "communication/sensing apparatus 6401" may transmit/receive information each other (6499).

A description will be given of exemplary information included in a modulation signal transmitted by "target x103" with the configuration in FIG. 64C and exemplary information included in a modulation signal transmitted by "terminal x102 and/or gNB x101" in the state of FIG. 67.

FIG. 65 illustrates exemplary information included in a modulation signal transmitted by "target x103" with the configuration in FIG. 64C. Note that FIG. 65 does not illustrate information for data communication and information for sensing. The information for data communication and information for sensing have been described in other embodiments, and thus the description thereof will be omitted here. As illustrated in FIG. 65, a modulation signal transmitted by "target x103" includes, for example, charging request information (power transmission request information) 6501, location information 6502, battery level information 6503, and power reception state information 6504. Note that the detail has already been described, and thus the description thereof will be omitted.

FIG. 66 illustrates exemplary information included in a modulation signal transmitted by "terminal x102". Note that FIG. 66 does not illustrate information for data communication and information for sensing. The information for data communication and information for sensing have been described in other embodiments, and thus the description thereof will be omitted here. As illustrated in FIG. 66, a modulation signal transmitted by "terminal x102" includes, for example, power transmission apparatus information 6601, "power transmission location information and/or power transmission direction information 6602", power transmission information 6603, and power transmission state information 6604. Note that the detail has already been described, and thus the description thereof will be omitted.

As described above, communication with target x103 that possibly moves allows sharing information on power transmission and charging, and this produces effects of transmitting power and charging effectively and operating the apparatus intermittently.

Note that, although the term "power transmission apparatus" is used here, the apparatus is not limited to be called this way, and it may be called, for example, a power feeding apparatus, power supply apparatus, etc.

Further, a terminal includes a "battery, first battery, and second battery" as in the configuration in FIGS. 64A, 64B, and 64C, for example, but the batteries are not limited to be called a "battery, first battery, and second battery" and may be called a secondary battery, storage battery, battery, etc.

The present embodiment has been described using gNB, but the same can be implemented by replacing the gNB with any of a "base station, TRP, repeater, terminal, access point, broadcasting station, e Node B (eNB), node, server, satellite, etc.". Thus, the gNB in the present embodiment may be referred to as a "base station, TRP, repeater, terminal, access point, broadcasting station, e Node B (eNB), node, server, satellite, etc.".

Further, the present embodiment has been described using a terminal, but the same can be implemented by replacing the NR-UE with any of "communication equipment/broadcasting equipment such as a mobile phone, smartphone, tablet, laptop PC, PC, personal computer, home appliance (household electrical machinery equipment), factory apparatus, Internet of Things (IoT) equipment, etc., and a moving device exemplified above". Thus, the terminal in the present embodiment may be referred to as "communication equipment/broadcasting equipment such as a mobile phone, smartphone, tablet, laptop PC, PC, personal computer, home appliance (household electrical machinery equipment), factory apparatus, Internet of Things (IoT) equipment, etc.,

and a moving device exemplified above".

The gNB that performs power transmission (feeding or power supply) described in the present embodiment may perform operations of a "TRP, base station, TRP, communication apparatus", etc. described in the other embodiments.

In addition, the terminal that performs power reception (charging) described in the present embodiment may perform operations of "communication apparatus", etc. described in the other embodiments.

The methods described in the present embodiment are exemplified as methods of sensing performed by an apparatus such as gNB and a terminal described in the present embodiment, but the methods are not limited to those examples.

(Embodiment 9)

In the present disclosure, it is described that an apparatus such as a base station, gNB, TRP, and terminal is an apparatus performing sensing. In this case, examples of a sensing method performed by the apparatus performing sensing are not limited to the methods described above. With this regard, in the present embodiment, a description will be given of different examples of a specific operation of a sensing method.

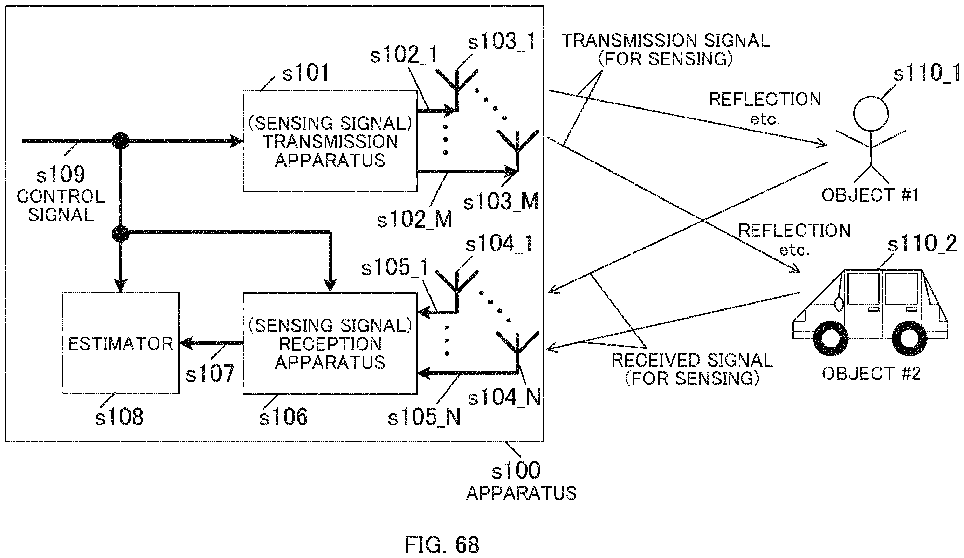

FIG. 68 illustrates an exemplary configuration of apparatus s100 such as a "base station, gNB, TRP, and terminal" that performs sensing by transmitting a sensing signal and receiving the sensing signal reflected back from a surrounding object. Apparatus s100 transmits a sensing signal and receives the sensing signal reflected back from a surrounding object to sense the object.

Transmission apparatus s101 generates transmission signals s102_1 to s102_M. Transmission signals s102_1 to s102_M are sensing signals. Transmission apparatus s101 transmits generated transmission signals s102_1 to s102_M from antennas s103_1 to s103_M respectively. Here, M is the number of antennas used for transmission, and M is an integer of 1 or more or an integer of 2 or more.

Transmission apparatus s101, for example, may perform directivity control of a sensing signal by multiplying the same sensing signal by a coefficient determined for each antenna to generate transmission signals s102_1 to s102_M and transmitting the signals from antennas s103_1 to s103_M. Alternatively, transmission apparatus s101, for example, may generate transmission signals s102_1 to s102_M by multiplying each of a plurality of sensing signals by a coefficient determined for each sensing signal and each antenna and combining them, and transmit the signals from antennas s103_1 to s103_M. This enables directivity control for each sensing signal.

The coefficient determined for each antenna or coefficient determined for each sensing signal and each antenna described above is represented by a complex number or real number. The amplitude and/or phase of a sensing signal transmitted from each antenna is changed according to the value of the coefficient. The coefficient may be 1. In this case, a sensing signal generated by transmission apparatus s101 is transmitted as it is from the antenna with the coefficient value of 1.

Note that transmission apparatus s101 may transmit a transmission signal without performing directivity control. For example, transmission apparatus s101 may output a plurality of sensing signals as transmission signals of corresponding antennas and transmit the signals from antennas s103_1 to s103_M respectively.

The case of a plurality of sensing signals and antennas has been described above, but the number of sensing signals generated by transmission apparatus s101 and the number of antennas from which the sensing signals are transmitted may be 1.

The sensing signals transmitted from antennas s103_1 to s103_M are reflected by object #1 (s110_1) or object #2 (s1 10_2). The reflected sensing signals are received at antennas s104_1 to s104_N included in apparatus s100. Here, N is the number of antennas receiving sensing signals, and N is an integer of 1 or more or an integer of 2 or more. The number M of antennas used for transmission may be the same as or different from the number N of antennas used for reception.

Received signals s105_1 to s105_N that are received at antennas s104_1 to s104_N are inputted to reception apparatus s106. Reception apparatus s106 outputs estimation signal s107 after performing, on received signals s105_1 to s105_N, filtering processing for extracting only a component of a frequency bandwidth where the sensing signals have been transmitted or a channel in the frequency bandwidth, frequency conversion processing for converting a radio frequency band into an intermediate frequency band (IF) and/or a frequency band of a baseband signal, and weighting combining processing on N received signals, for example.

The coefficient used for the weighting combining processing on N received signals may be set for each of received signals s105_1 to s105_N. Changing the coefficient values allows apparatus s100 to perform reception directivity control. The coefficient may be estimated in advance, estimated, using received signals s105_1 to s105_N, so that the amplitude or signal-to-noise ratio (CNR) of a component of a weighting-combined sensing signal is greater than that in cases of using other coefficients, or estimated to be over a predetermined threshold.

In addition, reception apparatus s106 may use a plurality of groups ofN coefficients corresponding to received signals s105_1 to s105_N to obtain directivity signals respectively corresponding to the coefficient groups at the same time. Note that reception apparatus s106 need not perform the weighting combining processing.

Estimator s108 performs sensing, i.e., estimation processing for the surrounding environment using estimation signal s107. At this time, estimation of a position and/or direction may be naturally performed as sensing. Details of the estimation processing performed by estimator s108 will be described later.

Control signal s109 is a control signal inputted to transmission apparatus s101, reception apparatus s106, and estimator s108, and indicates sensing, indicates the sensing range, and controls the sensing timing for transmission apparatus s101, reception apparatus s106, and estimator s108.

An exemplary configuration of apparatus s100 has been described, thus far. Note that, in FIG. 68, the described example is the case where signals generated by apparatus s100 are transmitted from M antennas, and signals received at N antennas are subjected to signal processing in reception apparatus X106, but the configuration of an apparatus performing the sensing methods described in the present disclosure is not limited thereto.

For example, the plurality of transmission antennas that transmit signals may be each composed of a plurality of antenna units including a plurality of antennas. Here, the plurality of antenna units may have the same directivity and directivity control function, or may have different directivity control ranges between the antenna units. In this case, a single transmission apparatus s101 may select an antenna unit to be used for transmitting a sensing signal from the plurality of antenna units, or may transmit the same sensing signal from the plurality of antenna units at the same time.

In addition, transmission apparatus s101 may switch between transmitting a single sensing signal from a single antenna unit and transmitting the sensing signal from the plurality of antenna units at the same time. Further, apparatus X100 may include a plurality of transmission apparatuses s101 or may include transmission apparatus s101 for each antenna unit.

Likewise, the plurality of reception antennas that receive signals may be each composed of a plurality of antenna units including a plurality of antennas. Here, the plurality of antenna units may have the same directivity control ability such as the directivity control range and directivity control accuracy, or may have different directivity control abilities between the antenna units. Further, the plurality of antenna units may be arranged to have different directivity control space regions while having the same directivity control ability such as the directivity control range and directivity control accuracy. In this case, a single reception apparatus s106 may select an antenna unit for obtaining a received signal from the plurality of antenna units, or may perform signal processing simultaneously on signals received from the plurality of antenna units.

In addition, reception apparatus s106 may switch between performing signal processing on only a received signal from a single antenna unit and performing signal processing on received signals from the plurality of antenna units at the same time. Further, apparatus s100 may include a plurality of reception apparatuses s106 or may include reception apparatus s106 for each antenna unit.

Apparatus s100 may also include a plurality of antennas that can be used for both transmission and reception of signals instead of including a plurality of transmission antennas and a plurality of reception antennas separately. In this case, apparatus s100 may switch the antennas by selecting whether each antenna is used for transmission or reception, or may switch by time between using the plurality of antennas for transmission and using them for reception.

Apparatus s100 may include a transmission/reception antenna that can be commonly used for transmission and reception of signals. Here, the transmission/reception antenna includes a plurality of antenna units and can switch between using each antenna unit for transmission and using it for reception. Apparatus s100 may include a selector that selects and switches an antenna unit used for transmitting a signal generated by transmission apparatus s101 and an antenna unit used for receiving a signal to be subjected to signal processing in reception apparatus s106.

In a case where sensing signals are transmitted using the plurality of antenna units at the same time, the directivities of the signals transmitted from the antenna units may be the same or different from each other. When apparatus s100 transmits sensing signals from the plurality of antenna units with the same directivity, the sensing signals possibly reach farther or a reflection point which apparatus s100 can receive the sensing signals reflected from is possibly set farther.

Note that the number of antennas composing the above-described antenna unit need not be the same between the antenna units, and the antenna units may be composed of different numbers of antennas respectively.

Next, estimation processing performed by estimator s108 will be described with examples.

For example, estimator s108 estimates a distance between apparatus s100 and an object reflecting a sensing signal. The estimated distance between apparatus s100 and the object reflecting a sensing signal can be derived by, for example, detecting a delay time of the reception time of the sensing signal with respect to the transmission time and multiplying the delay time by the propagation speed of an electromagnetic wave.

For example, estimator s108 may estimate the direction of arrival of a received signal, i.e., the direction of an object that has reflected a sensing signal, using direction of arrival estimation such as multiple signal classification (MUSIC). Estimating the direction in addition to the distance between apparatus s100 and the object allows estimator s108 to estimate the position and/or direction of the object that has reflected a transmitted signal.

Estimator s108 can estimate the position and/or direction of the object by performing triangulation using, for example, information of the direction of arrival estimation such as MUSIC, the positions of transmission antennas, the positions of reception antennas, the direction of transmission directivity control, and the like. Estimator s108 may detect the object, the motion of the object, the material of the object, etc. using the received signal. Note that, although the transmission apparatus and the reception apparatus are included in a single apparatus in FIG. 68, the transmission apparatus and the reception apparatus may be separated as different apparatuses in the case where triangulation is performed. In this case, the "transmission apparatus and/or reception apparatus" may obtain "information of the distance between the transmission apparatus and the reception apparatus" by performing sensing, and the transmission apparatus and the reception apparatus may share information of the "information of distance between the transmission apparatus and the reception apparatus".

In a case where the transmission apparatus and the reception apparatus are fixedly installed, the transmission apparatus and the reception apparatus may hold the "information of the distance between the transmission apparatus and the reception apparatus" in advance.

In addition, estimator s108 may detect an object and estimate the position and/or direction of the object, the motion of the object, etc. by an estimation method other than triangulation. Note that, for a sensing method, the methods described in the present specification can be exemplified.

The position of the object may be represented in a polar coordinate system or in a three-dimensional orthogonal coordinate system. The origin of the coordinate system may be, for example, any position in apparatus s100, and the coordinate axis of the coordinate system may be any direction.

Note that, in a case where a device including apparatus s100 includes a plurality of radio sensors having configurations identical to or different from the configuration of apparatus s100 or other distance sensors in addition to apparatus s100, the origin and the coordinate axis of the coordinate system of data acquired by the sensors may be the same between the sensors or may be specific to each sensor. Estimator s108 may output position information represented in the specific coordinate system as it is, or may output the information after converting it to a common coordinate system in the device. The converted coordinate system may be a coordinate system specific to the device, or may be a coordinate system common to another device, such as the same coordinate system as that of three-dimensional map data used by the device.

Further, estimator s108 may estimate a distance to an object that has reflected a signal in each of a plurality of directions, and obtain three-dimensional coordinates of the plurality of estimated reflection positions as point cloud. Note that the format of data of a plurality of distance measurement results obtained by estimator s108 need not be a point cloud format with three-dimensional coordinate values, and may be, for example, a distance image or another format. When a distance image format is used, a position (coordinates) in the two-dimensional plane of a distance image corresponds to the direction of arrival of a received signal viewed from apparatus s100, and a distance to the object in the direction corresponding to the pixel position of each image is stored as a sample value of the pixel.

Further, estimator s108 may perform recognition processing such as estimation of the shape of the object using the point cloud data or distance image data. For example, estimator s108 extracts "one or more points at a neighboring position with the distance within a predetermined range", a plurality of points, or an image area regarding as the same object, and can estimate the shape of the obj ect based on a position relation of the one or the plurality of points or the shape of the image area. Estimator s108 may, for example, identify a sensed object as the recognition processing using the estimation result of the shape of the object. In this case, estimator s108 identifies, for example, whether there is a person or an animal in the sensing area, and identifies the type of the object.

Note that the recognition processing performed by estimator s108 may be other than the identification of the object. For example, as the recognition processing, estimator s108 may detect the number of people in the sensing area, the number of vehicles, and the like, or may estimate the position of the face or the posture of a detected person. As the recognition processing other than the above recognition processing, estimator s108 may perform processing such as face recognition for determining whether the shape of the face of the detected person matches a previously registered person, which person the shape of the face looks like, etc.

In addition, estimator s108 may measure the distance between apparatus s100 and the object a plurality of times at different timings, and obtain a temporal change in the distance between apparatus s100 and the object or the position of the detected point. In this case, estimator s108 may estimate the velocity, acceleration, etc. of a moving object as the recognition processing using the temporal change in the distance between apparatus s100 and the object or the position of the detected point. For example, estimator s108 may estimate the velocity of a vehicle traveling in the sensing area, the moving direction, and the like.

Note that the recognition processing performed by estimator s108 using the temporal change in the distance or the position of the point may be other than the estimation of the velocity or the acceleration of the object. For example, estimator s108 may detect whether a detected person has performed a particular action based on a change in the posture of the person, and apparatus s100 may be used as a gesture-inputting device of an electronic device such as a smartphone, tablet, or personal computer.

For above-described estimation of the velocity of a moving object, it may be derived by comparing the frequency of a transmitted sensing signal with the frequency of a received reflection signal and estimating the change in frequency due to the Doppler effect received by the reflection signal.

Next, the sensing signals used in transmission apparatus s101 and reception apparatus s106 will be described with examples.

Apparatus s100 may transmit, for example, a pulse signal disclosed in NPL 1 or NPL 2 as a sensing signal. Apparatus s100 transmits a pulse signal in a frequency band used for sensing, and measures a distance to an object that has reflected the sensing signal based on a delay time of the reception time of the reflection signal with respect to the transmission time of the pulse signal.

As different examples of the sensing signal, apparatus s100 may use a signal of a frequency modulated continuous wave (FMCW) scheme or pseudo-random modulated continuous wave (PMCW) scheme described in NPL 3. The FMCW signal is a signal obtained by converting a Chirp signal in which the frequency is temporally changed into a radio frequency. Estimator s108 superimposes a signal transmitted from transmission apparatus s101 and a signal received by reception apparatus s106 in a mixer as estimation processing using the FMCW signal. As a consequence, the superimposed signal becomes a signal of an intermediate frequency of a frequency corresponding to the flight time of the received signal, and thus the distance to the object that has reflected the FMCW signal is measured by detecting a frequency component included in the superimposed signal.

As another example of the sensing signal, apparatus s100 may use a signal obtained by frequency-converting a modulation signal of a predetermined frequency into a signal in a frequency band used for sensing. In this case, estimator s108 can estimate the distance to an object that has reflected a sensing signal based on, for example, the difference between the phase of a modulation component of a signal transmitted from transmission apparatus s101 and the phase of a modulation component of a signal received by reception apparatus s106.

Further, estimator s108 may compare the frequency of a transmitted modulation signal with the frequency of a received modulation signal to detect a variation in the frequency received by the Doppler effect from the reflection to the reception of a sensing signal, and estimate the moving velocity and direction of a moving object. Note that a plurality of frequency components may be included in the modulation signal, and for example, multi-carrier transmission including a plurality of frequency components, for example, an OFDM signal, may be used as the modulation signal described in NPL 4.

The example of the sensing signal is not limited to the above, and may include a signal modulated by a modulation scheme and an unmodulated carrier, or another signal may be used.

As described above, apparatus s100 may simultaneously transmit a plurality of sensing signals using a plurality of antennas, or may simultaneously transmit a plurality of sensing signals using a plurality of antenna units each including a plurality of antennas.

In the above, the estimation processing performed by estimator s108 has been described with the example where the distance is measured from the difference between the transmission time of a sensing signal and the reception time of a reflection signal. The estimation processing performed by estimator s108, however, is not limited to the above-described example.

For example, estimator s108 may determine whether there is an object in the sensing area, detect whether the object is moving, and detect the direction and the position by estimating the state of a transmission path from a received reflection signal and performing recognition processing based on a temporal change in the estimated state of the transmission path and a comparison with a mean value or a feature amount of the transmission path state estimated in the past. Further, estimator s108 may detect whether it is raining, for example, based on the attenuation state of a received signal.

The example where a reflection wave of a transmitted sensing signal is used for sensing has also been described above. An apparatus performing sensing using a sensing signal, however, is not limited to an apparatus that has transmitted the sensing signal.

For example, reception apparatus s106 of apparatus s100 may receive a sensing signal transmitted from another apparatus, and estimator s 108 may determine that the another apparatus is within the reach of a sensing signal based on the received signal, or estimate the direction in which the another apparatus is present. Further, the distance to the another apparatus may be estimated based on the signal strength of the received sensing signal.

Reception apparatus s106 of apparatus s100 may transmit a sensing signal so that another apparatus can use it for sensing. The sensing signal transmitted at this time may be a sensing signal transmitted for sensing in apparatus s100 using a reflection wave, or the sensing signal may be periodically transmitted for sensing in another apparatus. In addition, when receiving a sensing signal transmitted from another apparatus, apparatus s100 may transmit a sensing signal in a direction in which the received signal is received using transmission apparatus s101. Note that a sensing signal transmitted to another apparatus may be transmitted without directivity control. A sensing signal may be generated by the methods described in the present specification.

Although FIG. 68 illustrates the example where apparatus X100 performing sensing receives signals reflected by object #1 and object #2, detection of the object and estimation of the distance to the object, the position, etc. may be performed by using a signal reflected by object #1 or object #2 and further reflected by another object or material.

Next, an exemplary sensing method using radio waves, which is different from FIG. 68, will be described.

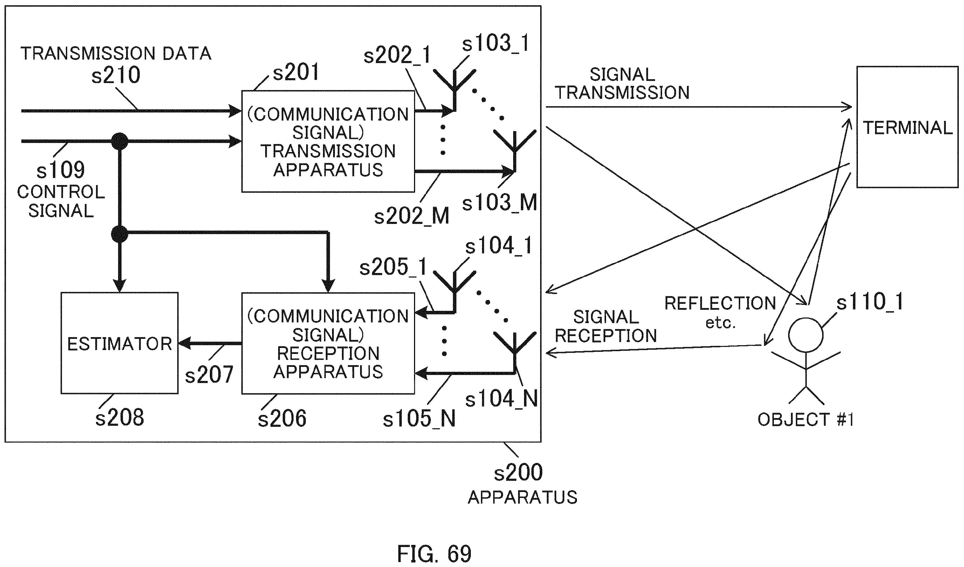

FIG. 69 illustrates an exemplary configuration of apparatus s200 that performs sensing using radio waves. For the configuration illustrated in FIG. 69, the components that have the same functions as those illustrated in FIG. 68 are denoted by the same reference signs, and the detailed descriptions thereof will be omitted.

Apparatus X200 performs sensing using a modulation signal for sensing and/or modulation signal for communication, which is a difference from apparatus s100. Here, for example, apparatus s200 transmits a signal, and a terminal, which is a communication counterpart, estimates the position of an object (e.g., object #1 in FIG. 69), the size, distance to an object (e.g., object #2 in FIG. 69), position, direction, etc. by capturing a change in the signal transmitted by apparatus s200. Note that, when apparatus s200 transmits a modulation signal for communication, data communication with the terminal is also enabled. In the following, a case where sensing is performed using a modulation signal for communication will be described.

Transmission apparatus s201 takes control signal s109 and transmission data s210 as input, performs error correction coding processing, modulation processing, precoding, multiplexing processing, etc., and generates transmission signals for communication s202_1 to s202_M. Apparatus s200 transmits transmission signals s202_1 to s202_M from antennas s103_1 to s103_M respectively.

The description for FIG. 68 is similarly applied to the number of antennas used for transmission signals and transmission, and it may be two or more, or may be one. Compared to the description for FIG. 68, the transmission signals in the description for FIG. 68 include components of sensing signals, whereas the transmission signals in FIG. 69 include components of signals obtained by modulating transmission data. Note that transmission apparatus s201 can perform directivity control by a coefficient used in weighting combining processing for generating a transmission signal, which is the same as transmission apparatus s101. Similar to apparatus s100, apparatus s200 may include only one antenna unit including a plurality of antennas, or may include a plurality of antenna units.

When directivity control is performed, transmission apparatus s101 in FIG. 68 performs transmission directivity control in a direction in which sensing is to be performed, while transmission apparatus s201 in FIG. 69 performs transmission directivity control so as to improve communication quality with the terminal, which is a communication counterpart. Note that transmission apparatus s201 may perform directivity control of a transmission signal toward a direction in which sensing is to be performed, or may perform directivity control such that the terminal, which is a communication counterpart, can obtain a desired sensing result in performing sensing using the signal transmitted by apparatus s200.

When transmission apparatus s201 performs directivity control for sensing in the terminal, transmission apparatus s201 transmits a signal using a coefficient specified by the terminal. The signal transmitted here may include a signal component modulated using transmission data, or may not include a signal component modulated using transmission data. The signal that does not include a signal component modulated using transmission data is, for example, a signal modulated with a known value on the terminal side, such as a preamble or a reference signal. In addition, transmission apparatus s201 may perform different directivity control between the case of transmitting a signal including a signal component modulated using transmission data and the case of transmitting a signal not including a signal component modulated using transmission data.

Note that the terminal obtains data (performs communication) and also performs sensing by receiving a modulation signal transmitted by apparatus s200.

Further, the terminal may transmit a signal, and apparatus s200, which is a communication counterpart, may estimate the position of an object (e.g., object #1 in FIG. 69), the size, distance to an object (e.g., object #1 in FIG. 2), position, direction, the type and material of the object (e.g., object #1 in FIG. 69), etc. by capturing a change in the signal transmitted by the terminal. Note that, when the terminal transmits a modulation signal for communication, data communication with apparatus s200 is also enabled.

For example, apparatus s200 receives modulation signals transmitted by the terminal using antennas s104_1 to s104_N. Reception apparatus s206 takes control signal s109 and received signals s205_1 to s205_N as input, performs demodulation processing, error correction decoding processing, etc., and obtains received data. Reception apparatus s206 also outputs, as estimation signal s207, a transmission path characteristic and the like obtained by the reception processing.

The coefficient used for the weighting combining processing on N received signals may be set for each of received signals s105_1 to s105_N, and reception directivity control can be performed by changing the value of the coefficient. The coefficient may be estimated in advance, estimated, using received signals s105_1 to s105_N, so that the amplitude or signal-to-noise (power) ratio (SNR) of a component of a weighting-combined sensing signal is greater than that in cases of using other coefficients, or estimated to be over a predetermined threshold. In addition, reception apparatus s206 may use a plurality of groups of N coefficients corresponding to received signals s105_1 to s105_N to obtain directivity signals respectively corresponding to the coefficient groups at the same time.

Estimator s208 takes control signal s109 and estimation signal s207 as input and performs estimation processing using estimation signal s207. For example, estimator s208 estimates the surrounding environment, such as whether an object is present in the surroundings, based on the transmission path characteristic included in estimation signal s207. Further, estimator s208 may detect movement of an object, approach of an object, etc. based on the temporal change in the transmission path characteristic.

For example, estimator s208 may estimate the direction of arrival of a received signal, i.e., the direction of an object that has reflected a sensing signal, using direction of arrival estimation such as MUSIC. Estimator s208 may estimate the position and direction of the object by performing triangulation using, for example, information of the direction of arrival estimation such as MUSIC, the positions of antennas (e.g., positions of transmission apparatus and reception apparatus), the direction of transmission directivity control, and the like. Estimator s208 may detect the object, the motion of the object, the material of the object, etc. using the received signal. Note that, although the transmission apparatus and the reception apparatus are included in a single apparatus in FIG. 69, the transmission apparatus and the reception apparatus may be separated as different apparatuses in the case where triangulation is performed. Further, in FIG. 69, triangulation can be performed by the signal terminal to be transmitted and reception apparatus s206 receiving the signal.

In this case, the "transmission apparatus and/or reception apparatus" may obtain "information of the distance between the transmission apparatus and the reception apparatus" by performing sensing, and the transmission apparatus and the reception apparatus may share information of the "information of distance between the transmission apparatus and the reception apparatus".

In a case where the transmission apparatus and the reception apparatus are fixedly installed, the transmission apparatus and the reception apparatus may hold the "information of the distance between the transmission apparatus and the reception apparatus" in advance.

Estimator s208 performs the above-described estimation processing on estimation signal s207, for example, signal processing in accordance with an event desired to be detected, such as the presence or absence of an object or whether an object has moved, as described above. At this time, the estimation processing is performed based on a determination result of, for example, whether the feature amount extracted by the signal processing exceeds a predetermined threshold.

Estimator s208 may perform the estimation processing based on signal processing other than the processing exemplified above. For example, the estimation processing may be performed using a model created by machine learning using a neural network with a multilayer structure. In a case where the model created by machine learning using a neural network with a multilayer structure is used for the estimation processing, estimator X208 may perform predetermined preprocessing on estimation signal X207 and then input the preprocessed data into the model created by machine learning using a neural network with a multi-layer structure.

Estimator s208 may use information such as a frequency band or a channel number in the frequency band used for communication. Further, estimator s208 may use the address of a communication apparatus that has transmitted a signal for communication received by estimator s208 and the address of a communication apparatus to which the signal is addressed. As described above, by using information on the received communication signal such as the frequency band and the address of a communication apparatus, it is possible to compare communication signals with the same or similar condition such as the position of a communication apparatus that has transmitted the signal and the directivity used at the time of signal transmission, and thus the estimation accuracy is possibly improved.

In the above, the case where sensing is performed using a communication signal transmitted by a communication counterpart has been described. In FIG. 69, transmission apparatus s201 that is a configuration for performing transmission processing, antennas s103_1 to s103_M, reception apparatus s206 that is a configuration for performing reception processing, and antennas s104_1 to s104_N are illustrated as different configurations in apparatus s200, but the configuration of apparatus s200 is not limited to this.

For example, transmission apparatus s201 and reception apparatus s206 may be realized as a single component, and a plurality of antennas may be commonly used for transmission and reception. Similar to the description of FIG. 68, the plurality of antennas for transmission in apparatus s200 may be composed of a plurality of antenna units, and the plurality of antennas for reception may be composed of a plurality of antenna units. In addition, the plurality of antennas for transmission and the plurality of antennas for reception in apparatus s200 may be configured as a shared transmission/reception antenna.

Further, a signal for sensing may be used instead of a signal for communication. That is, the first terminal may use a sensing signal transmitted by another apparatus to estimate the position of an object (e.g., object #1 in FIG. 69), the direction, size, distance to the object (e.g., object #1 in FIG. 69), the type and material of the object (e.g., object #1 in FIG. 69), etc.

The sensing method using a signal for communication can also be used for the same purpose as the example of transmitting a sensing signal to another apparatus described with reference to FIG. 68. That is, apparatus s200 may use a communication signal transmitted from another apparatus such as a terminal not for sensing the surrounding environment from a transmission path characteristic, etc. of the signal, but for determining that the another apparatus is within the reach of a communication signal or estimating the direction in which the another apparatus is present.

Note that apparatus s200 may perform only a demodulation operation without performing a sensing operation when receiving a modulation signal for communication transmitted by a communication counterpart, e.g., a terminal.

Next, an apparatus performing communication and sensing will be described.

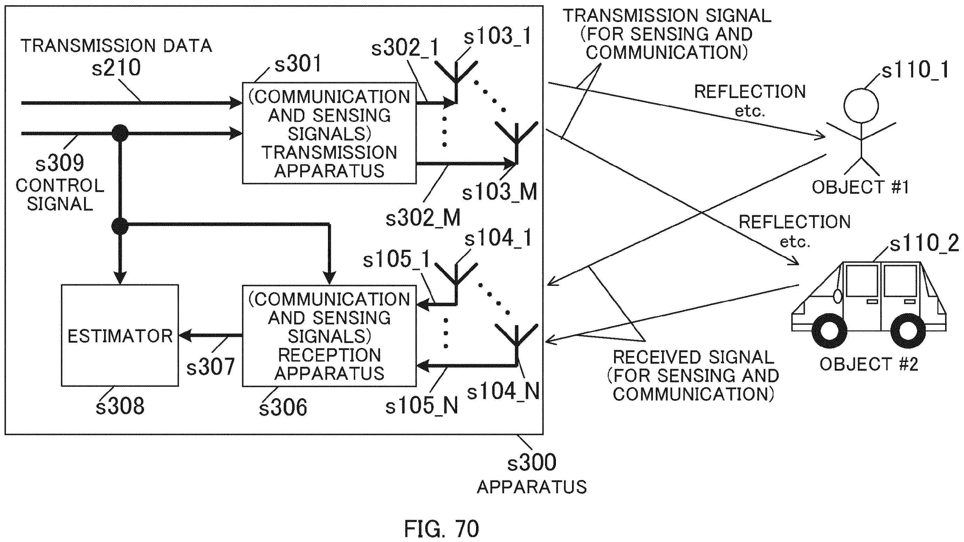

FIG. 70 illustrates an exemplary configuration of apparatus s300 that performs communication and sensing. For the configuration illustrated in FIG. 70, the components that have the same functions as those illustrated in FIGS. 68 and 69 are denoted by the same reference signs, and the detailed descriptions thereof will be omitted.

Apparatus s300 performs both sensing using a modulation signal for sensing and sensing using a modulation signal for communication.

That is, transmission apparatus s301 of apparatus s300 has a function of transmitting a sensing signal as is the case with transmission apparatus s101 and a function of transmitting a communication signal to another communication apparatus as is the case with transmission apparatus s201.

In addition, reception apparatus s306 of apparatus s300 has a function of receiving a sensing signal as is the case with reception apparatus s106, and a function of receiving a communication signal transmitted by another communication apparatus as is the case with reception apparatus s206.

Further, estimator s308 performs both estimation processing using a sensing signal as is the case with estimator s108 and estimation processing using a communication signal as is the case with estimator s208.

For the processing performed by the components of apparatus s300, the processing of transmitting and receiving a sensing signal is the same as that of apparatus s100 in FIG. 68, and the processing of transmitting and receiving a communication signal is the same as that of apparatus s200 of FIG. 2, and thus, the description thereof will be omitted.

In FIG. 70, transmission apparatus s301 performing transmission processing, antennas s103_1 to s103_M, reception apparatus X306 performing reception processing, and antennas s104_1 to s104_N are illustrated as different configurations in apparatus s300, but the configuration of apparatus s300 is not limited to this. For example, transmission apparatus s301 and reception apparatus s306 may be realized as a single component, and one or more antennas or a plurality of antennas may be commonly used for transmission and reception.

Apparatus s300 may include a transmission apparatus for sensing separately from a transmission apparatus for communication. In this case, the transmission apparatus for communication and the transmission apparatus for sensing may use the same one or more or a plurality of antennas by switching, or may include one or more or a plurality of antennas separately for communication and sensing.

Note that transmission apparatus s301 may transmit communication and sensing signals from antennas by switching between transmission of a sensing signal and transmission of a modulation signal for communication based on mode information included in control signal s309. That is, there may be a mode of transmitting a sensing signal and a mode of transmitting a modulation signal for communication. In addition, transmission apparatus s301 for communication and sensing may transmit a signal obtained by combining a sensing signal and a modulation signal for communication.

Apparatus s300 may include a reception apparatus for sensing separately from a reception apparatus for communication. In this case, the reception apparatus for communication and the reception apparatus for sensing may use the same one or more or a plurality of antennas by switching, or may include one or more or a plurality of antennas separately for communication and sensing.

Apparatus s300 may include a transmission apparatus for communication, a transmission apparatus for sensing, a reception apparatus for communication, and a reception apparatus for sensing, separately. Apparatus s300 may include a transmission/reception apparatus for communication and a transmission/reception apparatus for sensing. Apparatus s300 may also include a transmission/reception apparatus for communication, a transmission apparatus for sensing, and a reception apparatus for sensing.

In addition, in FIG. 70, similar to the description of FIG. 68 and the description of FIG. 69, one or more or the plurality of antennas for transmission may be composed of one or more or a plurality of antenna units, and one or more or the plurality of antennas for reception may be composed of one or more or a plurality of antenna units. Further, one or more or the plurality of antennas for transmission and one or more or the plurality of antennas for reception may be configured as a shared transmission/reception antenna.

Although the terms "apparatus", "terminal", etc. are used in FIGS. 68, 69, and 70, the terms are not limited thereto and they may be called in any way. In this respect, specific examples are given in other sections.

As a sensing method other than the above-described sensing methods, the second apparatus may transmit a signal and the first apparatus may sense the second apparatus such that "a "terminal" transmits a signal, and "gNB" senses the "terminal"", or "a "target" transmits a signal, and "gNB" senses the "target"" as described in FIGS. 38A, 38B, and 38C. At this time, the first apparatus estimates the position, direction, shape, material, type, etc. of the second apparatus.

As another method, triangulation may be performed as sensing, as described below.

The first apparatus may receive a signal transmitted by the third apparatus, the second apparatus may receive a signal transmitted by the third apparatus, and the first apparatus or the second apparatus may perform triangulation for sensing the third apparatus. At this time, triangulation is performed based on direction information and/or distance information. Since the sensing method for obtaining the direction information and distance information has already been described, the description thereof will be omitted.

Although sensing using radio waves has been described so far, a signal may be generated using light such as visible light instead of radio waves to perform sensing. At this time, a reception apparatus performs sensing by receiving an optical signal. Thus, in the case where sensing is performed using light, a light emitting diode (LED) or an organic electro-luminescence (EL) is used instead of a transmission antenna, and a photodiode, an image sensor, or the like is used instead of a reception antenna.

Further, sensing using light such as light detection and ranging (LIDAR) may be performed, for example, instead of sensing using radio waves. When a plurality of sensors are used in combination, any combination of sensors may be used. For example, using a camera a sensor, a captured image itself and a result obtained by performing image processing such as image processing or pattern recognition for extracting a feature amount of the image may be used as sensing data. Further, for example, data obtained by any sensor included in a wearable terminal worn by a user, such as a microphone, position sensor, acceleration sensor, myoelectric potential sensor, and temperature sensor, may be used as sensing data.

(Supplement 1)

It is needless to say that the embodiments described in the present specification may be implemented while combined with each other or combined with other contents.

Further, the embodiments and other contents are merely examples. For example, even though the "modulation scheme, error correction coding scheme (error correction code, code length, coding rate, and the like for use), control information, and the like" are illustrated as the examples, it is possible to implement the embodiments with a similar configuration even when a "modulation scheme, error correction coding scheme (error correction code, code length, coding rate, and the like for use), control information, and the like" different from those in the examples are applied.

Regarding the modulation scheme, the embodiments and other contents described in the present specification can be implemented also by using modulation schemes other than the modulation schemes described in the present specification. For example, amplitude phase shift keying (APSK) (e.g., 16APSK, 64APSK, 128APSK, 256APSK, 1024APSK, 4096APSK), pulse amplitude modulation (PAM) (e.g., 4PAM, 8PAM, 16PAM, 64PAM, 128PAM, 256PAM, 1024PAM, 4096PAM), phase shift keying (PSK) (e.g., BPSK, QPSK, 8PSK, 16PSK, 64PSK, 128PSK, 256PSK, 1024PSK, 4096PSK), quadrature amplitude modulation (QAM) (e.g., 4QAM, 8QAM, 16QAM, 64QAM, 128QAM, 256QAM, 1024QAM, 4096QAM), or the like may be applied, or uniform mapping and non-uniform mapping may be applied for each of the modulation schemes. The number of signal points in in-phase (I)-quadrature (phase) (Q) is not limited to those in the examples above, and may be an integer equal to or greater than 3.

In addition, the method of arranging signal points (e.g., 2, 4, 8, 16, 64, 128, 256, or 1024 signal points) on the I-Q plane (modulation scheme with 2, 4, 8, 16, 64, 128, 256, 1024, or other numbers of signal points) is not particularly limited to the signal point arrangement methods of the modulation schemes described in the present specification. Thus, the function of outputting an in-phase component and a quadrature component based on a plurality of bits is a function in a mapper, and performing a matrix operation (e.g., precoding) to perform MIMO transmission and phase changing for a baseband signal after the outputting function is one of the effective functions of the present disclosure.

In addition, when "∀"and "∃" are present in the present specification, "∀" represents a universal quantifier, and "∃" represents an existential quantifier.

Further, when the present specification describes a complex plane, the unit of phase, such as, e.g., an argument, is "radian".

The use of the complex plane allows representation of complex numbers in polar form as a representation of the complex numbers using polar coordinates. Letting a point (a, b) on the complex plane correspond to a complex number $z = a + jb$ (where both of "a" and "b" are real numbers and "j" is an imaginary unit), $a = r \times \cos\theta$ and $b = r \times \sin\theta$ when this point is expressed as $[r, \theta]$ with the polar coordinates.
[1]

$$r = \sqrt{a^2 + b^2} \quad \text{... (Equation 1)}$$

holds true. The character "r" is the absolute value of z (r = |z|) and θ is the argument. Then, $z = a + jb$ is expressed as $r \times e^{j\theta}$.

In the present specification, the "terminal, base station, access point, gateway, etc." may each have a configuration in which a reception apparatus and an antenna of which are separate from each other. For example, the reception apparatus includes an interface for inputting, through a cable, a signal received by the antenna or a signal received by the antenna and subjected to frequency conversion, and the reception apparatus performs subsequent processing. Further, the data and information obtained by the reception apparatus are then converted into a video and sound, and displayed on a display (monitor), or outputted from a speaker in the case of sound. Further, the data and information obtained by the reception apparatus may be subjected to signal processing relevant to the video and sound (such signal processing does not have to be performed), and outputted from an RCA terminal (a video terminal and a sound terminal), universal serial bus (USB), high-definition multimedia interface (HDMI) (registered trademark), digital terminal, or the like provided in the reception apparatus.

It is contemplated herein that the transmission apparatus and/or transmitter is included in, for example, communication equipment/broadcasting equipment such as a broadcasting station, base station, access point, terminal, mobile phone, smartphone, tablet, laptop PC, server, PC, personal computer, television, home appliance (household electrical machinery equipment), factory apparatus, and Internet of Things (IoT) equipment or the like, g Node B (gNB), e Node B (eNB), repeater, node, car (e.g., electric car, etc.), bicycle (e.g., electric bicycle, batter-assisted bicycle, etc.), motorcycle (e.g., electric motorcycle, etc.), ship, satellite, airplane, drone, mobile equipment, robot, or transmission (Tx)/reception (Rx) point (TRP). Meanwhile, it is contemplated that the reception apparatus and/or receiver is included in, for example, communication equipment such as a radio, terminal, personal computer, mobile phone, access point, and base station, communication equipment/broadcasting equipment such as a smartphone, tablet, laptop PC, server, PC, personal computer, television, home appliance (household electrical machinery equipment), factory apparatus, and Internet of Things (IoT) equipment or the like, g Node B (gNB), e Node B (eNB), repeater, node, car (e.g., electric car, etc.), bicycle (e.g., electric bicycle, battery-assisted bicycle, etc.), motorcycle, ship, satellite, airplane, drone, mobile equipment, robot, or transmission (Tx)/reception (Rx) point (TRP). Further, it is considered that the transmission apparatus and the reception apparatus in the present disclosure are devices having a communication function, and the devices are configured to be capable of connecting via a certain interface to an apparatus for executing an application of a television, a radio, a personal computer, a mobile phone, or the like. Further, it is considered that the communication apparatus in the present specification is included in, for example, communication equipment/broadcasting equipment such as a broadcasting station, base station, access point, terminal, mobile phone, smartphone, tablet, laptop PC, server, PC, personal computer, television, home appliance (household electrical machinery equipment), factory apparatus, and Internet of Things (IoT) equipment or the like, g Node B (gNB), e Node B (eNB), repeater, node, car (e.g., electric car, etc.), bicycle (e.g., electric bicycle, battery-assisted bicycle, etc.), motorcycle (e.g., electric motorcycle, etc.), ship, satellite, airplane, drone, mobile equipment, robot, or transmission (Tx)/reception (Rx) point (TRP).

In addition, symbols other than a data symbol (for example, a reference signal (preamble, unique word, postamble, reference symbol, pilot symbol, pilot signal, and the like), a control information symbol, a sector sweep, etc.) may be mapped in any manner in a frame in the present embodiments. Although the present specification uses the terms "reference signal", "control information symbol", and "sector sweep", the important part is the function itself. The sector sweep may be replaced by a sector-level sweep, for example.

It is contemplated that the reference signal and/or a signal relevant to sector sweep are, for example, known symbols modulated using PSK modulation by the transmitter and receiver (alternatively, the receiver may be capable of knowing a symbol transmitted by the transmitter by synchronization by the receiver), non-zero power signals, zero power signals, signals known to the transmitter and receiver, or the like. The receiver performs, using these signals, frequency synchronization, time synchronization, channel estimation (estimation of channel state information (CSI)) (for each modulation signal), signal detection, estimation of a reception state, estimation of a transmission state, or the like.

Further, the control information symbol is a symbol for transmitting information (e.g., a modulation scheme, an error correction coding scheme, and a coding rate of the error correction coding scheme; configuration information in a higher layer; a modulation and coding scheme (MCS); a frame configuration; channel information; information on a using frequency band; information on the number of using channels; and the like used for communication) that needs to be transmitted to a communication counterpart to achieve communication (of an application or the like) other than data communication.

The transmission apparatus and/or reception apparatus sometimes need to be notified of a transmission method (MIMO, single-input single-output (SISO), multiple-input single-output (MISO), single-input multiple-output (SIMO), space-time block code, interleaving scheme, MCS, etc.), modulation scheme, and error correction coding scheme. This description may be omitted in some of the embodiments.

The terms such as "precoding", "precoding weight", etc. are sometimes used in the present specification, but they may be called in any manner and the important part is the signal processing itself in the present disclosure.

Regarding both the transmission panel antenna of the transmission apparatus and the reception panel antenna of the reception apparatus, a single antenna illustrated in the drawings may be composed of one antenna or a plurality of antennas.

Further, in the explanation of the embodiments and the like, the transmission panel antenna and the reception panel antenna may be described separately; however, a configuration of "transmission/reception panel antenna" serving as both of the transmission panel antenna and the reception panel antenna may be used.

In addition, the transmission panel antenna, reception panel antenna, and transmission/reception panel antenna may be referred to, for example, as an antenna port. The transmission panel antenna, reception panel antenna, and transmission/reception panel antenna may be referred to as another name, and a method of configuring the transmission panel antenna with one or more antennas or a plurality of antennas is conceivable. Additionally, a method of configuring the reception panel antenna with one or more antennas or a plurality of antennas is conceivable. Also, a method of configuring the transmission/reception panel antenna with one or more antennas or a plurality of antennas is conceivable. Further, an apparatus may be configured for each transmission panel antenna, an apparatus may be configured for each reception panel antenna, and an apparatus may be configured for each transmission/reception panel antenna. That is, it may be regarded as a multiple transmitter (TX)/receiver (RX) point (TRP) (transmission (TX)/reception (RX) point (TRP)).

The antenna port may be a logical antenna (antenna group) composed of one or more physical antennas. That is, the antenna port does not necessarily refer to one physical antenna, but may refer to an array antenna or the like composed of a plurality of antennas. For example, the number of physical antennas composing the antenna port is not specified, but the number of physical antennas may be specified as the minimum unit in which a terminal station is capable of transmitting a reference signal. Further, the antenna port may also be specified as a unit or a minimum unit for multiplication by a precoding vector or a weight of a precoding matrix.

There are a plurality of methods of generating a modulation signal by a single-carrier scheme in the present specification, and the present embodiments can be implemented by using any of the schemes. For example, examples of the single-carrier scheme include "discrete Fourier transform (DFT)-spread orthogonal frequency division multiplexing (OFDM)" (DFT-S OFDM), "trajectory constrained DFT-spread OFDM", "constrained DFT-spread OFDM" (constrained DFT-S OFDM), "OFDM based single carrier (SC)", "single carrier (SC)-frequency division multiple access (FDMA)", "guard interval DFT-spread OFDM", a time-domain implementation single carrier scheme (e.g., single carrier (SC)-QAM), and the like.

In the present specification, the ID of the transmission panel antenna and the ID of beamforming are described separately from each other; however, an ID may be assigned without distinguishing between the two.

For example, "ID 0 of beamforming by using transmission panel antenna #1" may be referred to as ID $\flat 0$, "ID 1 of beamforming by using transmission panel antenna #1" may be referred to as ID $\flat 1$, "ID 0 of beamforming by using transmission panel antenna #2" may be referred to as ID $\flat 2$, "ID 1 of beamforming by using transmission panel antenna #2" may be referred to as ID $\flat 3$, and so forth.

Thus, a signal for sector sweep may be generated based on the IDs, and the base station and the terminal may transmit information including the IDs.

It has been indicated above that the waveforms of the modulation signal transmitted by the communication apparatus herein may be either the single-carrier scheme or the multi-carrier scheme such as OFDM. In a case of using the multi-carrier scheme such as OFDM, a frame also includes a symbol on the frequency axis.

In the present specification, a "sector sweep reference signal transmitted by a base station" described in the embodiments and drawings such as FIGS. 10, 11, 12, 18, 19, and 27, for example, may be included in a "synchronization signal (SS) block", "physical broadcast channel (PBCH) block", or SS/PBCH block. In this case, it need not be called the "sector sweep reference signal". In addition, a "feedback signal transmitted by a base station and feedback signal group transmitted by a base station" described in the embodiments and drawings such as FIGS. 10, 16A, 16B, 18, 19, 27, etc., for example, may be included in a "synchronization signal (SS) block", "physical broadcast channel (PBCH) block", or SS/PBCH block. In this case, it need not be called the "feedback signal and feedback signal group".

Although it has been explained that a sector sweep reference signal includes the ID of a transmission panel antenna when a base station transmits the sector sweep reference signal, the sector sweep reference signal may include the ID of a sector antenna and/or information of an antenna port number as "the ID of a transmission panel antenna". Likewise, although it has been explained that a sector sweep reference signal includes the ID of a transmission panel antenna when a terminal transmits the sector sweep reference signal, the sector sweep reference signal may include the ID of a sector antenna and/or information of an antenna port number as "the ID of a transmission panel antenna".

The configurations of the transmission panel antenna and the reception panel antenna of the communication apparatus in the present disclosure are not limited to the configurations in FIGS. 3 and 4. The transmission panel antenna and the reception panel antenna may be composed of one or more antennas and/or antenna elements and may be composed of two or more antennas and/or antenna elements.

Additionally, the antennas illustrated in FIGS. 3 and 4 may be composed of one or more antennas and/or antenna elements or may be composed of two or more antennas and/or antenna elements.

In the present specification, the embodiments have been described using OFDM as an example of multi-carrier schemes, but the embodiments in the present specification can be similarly implemented using another multi-carrier scheme.

By way of example, multi-carrier transmission may be implemented by assigning a "single-carrier scheme using a single frequency band" and assigning a "single-carrier scheme using one or more frequency bands" to the frequency band described in the present specification.

As another example, multi-carrier transmission may be implemented by assigning one or more carriers or two or more carriers to the frequency band described in the present specification. Note that the multi-carrier transmission scheme is not limited to the above examples.

In the present specification, a "sector sweep reference signal transmitted by a base station" described in the embodiments and drawings such as FIGS. 10, 11, 12, 18, 19, and 27, for example, may be included in a "synchronization signal (SS) block", "physical broadcast channel (PBCH) block", or SS/PBCH block. In this case, it need not be called the "sector sweep reference signal".

In addition, a "feedback signal transmitted by a base station and feedback signal group transmitted by a base station" described in the embodiments and drawings such as FIGS. 10, 16A, 16B, 18, 19, 27, etc., for example, may be included in a "synchronization signal (SS) block", "physical broadcast channel (PBCH) block", or SS/PBCH block. In this case, it need not be called the "feedback signal and feedback signal group".

Although it has been explained that a sector sweep reference signal includes the ID of a transmission panel antenna when a base station transmits the sector sweep reference signal, the sector sweep reference signal may include the ID of a sector antenna and/or information of an antenna port number as "the ID of a transmission panel antenna".

Likewise, although it has been explained that a sector sweep reference signal includes the ID of a transmission panel antenna when a terminal transmits the sector sweep reference signal, the sector sweep reference signal may include the ID of a sector antenna and/or information of an antenna port number as "the ID of a transmission panel antenna".

The configurations of the transmission panel antenna and the reception panel antenna of the communication apparatus in the present disclosure are not limited to the configurations in FIGS. 3 and 4. The transmission panel antenna and the reception panel antenna may be composed of one or more antennas and/or antenna elements and may be composed of two or more antennas and/or antenna elements.

Additionally, the antennas illustrated in FIGS. 3 and 4 may be composed of one or more antennas and/or antenna elements or may be composed of two or more antennas and/or antenna elements.

In the present specification, the embodiments have been described using OFDM as an example of multi-carrier schemes, but the embodiments in the present specification can be similarly implemented using another multi-carrier scheme.

By way of example, multi-carrier transmission may be implemented by assigning a "single-carrier scheme using a single frequency band" and assigning a "single-carrier scheme using one or more frequency bands" to the frequency band described in the present specification.

As another example, multi-carrier transmission may be implemented by assigning one or more carriers or two or more carriers to the frequency band described in the present specification.

Note that the multi-carrier transmission scheme is not limited to the above examples.

In the present specification, a "sector sweep reference signal transmitted by a base station" described in the embodiments and drawings such as FIGS. 10, 11, 12, 18, 19, 21, 29, and 34, for example, may be included in a "physical downlink control channel (PDCCH)". In this case, it need not be called the "sector sweep reference signal".

For example, it is assumed that information A is present as one piece of information in PDCCH. It is also assumed that a "sector sweep reference signal subjected to beamforming #1", "sector sweep reference signal subjected to beamforming #2", ..., "sector sweep reference signal subjected to beamforming #N" are present as the "sector sweep reference signals transmitted by a base station". Note that N is an integer equal to or greater than 1 or an integer equal to or greater than 2.

At this time, information A is included in the ""sector sweep reference signal subjected to beamforming #1", "sector sweep reference signal subjected to beamforming #2", ..., "sector sweep reference signal subjected to beamforming #N"". This produces an effect that a terminal is more likely to obtain information A.

A "sector sweep reference signal transmitted by a terminal" described in the embodiments of the present specification may be included in a "physical uplink control channel (PUCCH)". In this case, it need not be called the "sector sweep reference signal".

For example, it is assumed that information B is present as one piece of information in PUCCH. It is also assumed that a "sector sweep reference signal subjected to beamforming $1", "sector sweep reference signal subjected to beamforming $2", ..., "sector sweep reference signal subjected to beamforming $M" are present as the "sector sweep reference signals transmitted by a terminal". Note that M is an integer equal to or greater than 1 or an integer equal to or greater than 2.

At this time, information B is included in the ""sector sweep reference signal subjected to beamforming $1", "sector sweep reference signal subjected to beamforming $2", ..., "sector sweep reference signal subjected to beamforming $M"". This produces an effect that a base station is more likely to obtain information B.

Note that, in the present specification, "sections of describing configurations and operations of a base station" may be considered as "configurations and operations of a terminal, AP, or repeater". Likewise, "sections of describing configurations and operations of a terminal" may be considered as "configurations and operations of a base station, AP, or repeater".

In the present specification, a server may provide an application related to processing relevant to the reception apparatus and the receiver, and the terminal may implement the functions of the reception apparatus described in the present specification by installing this application. Note that the application may be provided to the terminal by connection of a communication apparatus including the transmission apparatus described in the present specification to the server via a network, or the application may be provided to the terminal by connection of a communication apparatus having another transmission function to the server via the network.

Likewise, in the present specification, a server may provide an application related to processing relevant to the transmission apparatus and the transmitter, and the communication apparatus may implement the functions of the transmission apparatus described in the present specification by installing this application. Note that a method can be envisaged in which this communication apparatus is provided with the application by connection of another communication apparatus to the server via the network.

Note that the present disclosure is not limited to the embodiments and can be implemented with various modifications. For example, the embodiments are performed by a communication apparatus in the description, but the present invention is not limited to this and the communication methods can be realized by software.

In addition, a program for performing the above communication methods may be stored in read only memory (ROM) in advance, for example, and the program may be executed by a central processor unit (CPU).

Further, a program for performing the communication method may be stored in a computer-readable storage medium, and the program stored in the storage medium may be recorded in a random access memory (RAM) of the computer so that the computer operates according to the program.

Each configuration in the each of the embodiments described above can be typically realized by a large scale integration (LSI), which is an integrated circuit. The LSI may be individually formed as chips, or one chip may be formed so as to include a part or all of the configurations in each embodiment. The LSI here may be referred to as an integrated circuit (IC), a system LSI, a super LSI, or an ultra LSI depending on a difference in the degree of integration. In addition, the technique of implementing an integrated circuit is not limited to the LSI and may be realized by using a dedicated circuit or a general-purpose processor. A field programmable gate array (FPGA) that can be programmed after the manufacture of the LSI or a reconfigurable processor in which the connections and the settings of circuit cells disposed inside the LSI can be reconfigured may be used.

Note that at least one of the FPGA and the CPU may be configured to download all or some of software required for implementing the communication methods described in the present disclosure by radio communication or wired communication. Further, at least one of the FPGA and the CPU may be configured to download all or some of software for updating by radio communication or wired communication. Then, the downloaded software may be stored in storage, and at least one of the FPGA and the CPU may be operated based on the stored software to execute the digital signal processing described in the present disclosure.

The device including at least one of the FPGA and the CPU may be connected to a communication modem by radio or wire, and the communication methods described in the present disclosure may be implemented by the device and the communication modem.

For example, a communication apparatus such as the base station, AP, and terminal described in the present specification may include at least one of the FPGA and the CPU, and the communication apparatus may include an interface for externally obtaining software for operating at least one of the FPGA and the CPU. Further, the communication apparatus may include storage for storing the externally-obtained software, and the FPGA and/or the CPU may be operated based on the stored software to implement the signal processing described in the present disclosure.

If future integrated circuit technology replaces LSIs as a result of the advancement of semiconductor technology or other derivative technology, the functional blocks could be integrated using the future integrated circuit technology. Biotechnology can also be applied.

The present disclosure is widely applicable to radio systems for transmitting different modulation signals from a plurality of antennas, respectively. It is also applicable to the case of using MIMO transmission in wired communication systems with a plurality of transmission points (e.g., power line communication (PLC) system, optical communication system, and digital subscriber line (DSL) system).

(Supplement 2)

The "data", "data symbol", and "data frame" may be, for example, a physical downlink shared channel (PDSCH) or a physical uplink shared channel (PUSCH).

In the present disclosure, it has been explained that the gNB and user equipment for new radio (NR-UE) form transmit beams, but not all the transmit beams need to be the same polarization. In a case where the gNB and NR-UE can generate transmit beam #1, transmit beam #2, transmit beam #3, and so forth, it may be configured so that transmit beam #1 is the first polarization, transmit beam #2 is the second polarization other than the first polarization, and so forth.

In addition, it has been explained that the gNB and NR-UE form receive beams, but not all the receive beams need to be the same polarization. In a case where the gNB and NR-UE can generate receive beam #1, receive beam #2, receive beam #3, and so forth, it may be configured so that receive beam #1 is the first polarization, receive beam #2 is the second polarization other than the first polarization, and so forth.

It has been explained that the gNB and NR-UE form transmit beams in the present disclosure, and the polarization of a transmit beam may be changed as time passes. For example, the first polarization is used for transmit beam #1 at the beginning and may be later changed to the second polarization other than the first polarization.

In addition, it has been explained that the gNB and NR-UE form receive beams, and the polarization of a receive beam may be changed as time passes. For example, the first polarization is used for receive beam #1 at the beginning and may be later changed to the second polarization other than the first polarization.

The unlicensed band may be referred to as a shared spectrum.

In a case where an apparatus of NR such as gNB and NR-UE transmits a synchronization signal block (SSB), the SSB may include the sector sweep reference signal described in the present specification.

Communication in which a plurality of channels are aggregated may be referred to as channel aggregation. Communication in which a plurality of carriers are aggregated may be referred to as carrier aggregation. All or some of the above-described first channel of NR to fifth channel of NR may be aggregated (channel aggregation) and used for communication. The first standard is not limited to IEEE 802.11ad or IEEE 802.11ay. The first standard may be, for example, IEEE 802.11aj.

Note that "A and/or B" in the present specification may be interpreted as "A and B" or may also be interpreted as "A or B".

Operations related to sensing have been described in the present specification. The operations related to sensing may be performed using any frequencies, and sensing may be performed using an ultra wide band (UWB) system, for example.

The disclosure of Japanese Patent Application No. 2021-114138, filed on July 9, 2021, including the specification, drawings and abstract, is incorporated herein by reference in its entirety.

Industrial Applicability

The present disclosure is widely applicable to radio systems for transmitting modulation signals from one or more antennas, and is suitable for the application to, for example, a communication system using a single carrier and a communication system using a multi-carrier transmission scheme such as OFDM. The present disclosure is also applicable to wired communication systems such as a power line communication (PLC) system, an optical communication system, and a digital subscriber line (DSL) system.

Reference Signs List

    100 Control signal
    101_i i-th data
    102_i i-th transmitter
    103_i i-th modulation signal

104 First processor
105_j j-th transmission signal
106_j Transmission panel antenna j
151_i Reception panel antenna i
152_i i-th received signal
153 Second processor
154j-th signal-processing-subjected signal
155_j j-th receiver
156_j j-th control data
157_j j-th data
158 Third processor
200 Control signal
201 Data
202 Data symbol generator
203 Data symbol modulation signal
204 Sector sweep reference signal generator
205 Sector sweep reference signal
206 Other-signal generator
207 Other signals
251 Processor
252 Frame configuration-based modulation signal
300 Control signal
301 Transmission signal
302 Distributor
303_1 First transmission signal
303_2 Second transmission signal
303_3 Third transmission signal
303_4 Fourth transmission signal
304_1, 304_2, 304_3, 304_4 Multiplier
305_1 Coefficient-multiplication-subjected first transmission signal
305_2 Coefficient-multiplication-subjected second transmission signal
305_3 Coefficient-multiplication-subjected third transmission signal
305_4 Coefficient-multiplication-subjected fourth transmission signal
306_1, 306_2, 306_3, 306_4 Antenna
400 Control signal
401_1, 401_2, 401_3, 401_4 Antenna
402_1 First received signal
402_2 Second received signal
402_3 Third received signal
402_4 Fourth received signal
403_1, 403_2, 403_3, 403_4 Multiplier
404_1 Coefficient-multiplication-subjected first received signal
404_2 Coefficient-multiplication-subjected second received signal
404_3 Coefficient-multiplication-subjected third received signal
404_4 Coefficient-multiplication-subjected fourth received signal
405 Coupler/combiner
406 Modulation signal
501 Constellation mapper
502 Serial/parallel converter
503 IFFT

601 Rx FE processing
602 FFT
603 Parallel/serial converter
604 Demapper
701 Rx FE processing
702 CP removal
703 FFT
704 Tone demapping
705 FDE
706 DFT
707 Demapper
801 Rx FE processing
802 Down-sampling and match filtering
803 TDE
804 CP removal
805 Demapper
901_1 Base station #1
902_1 Terminal #1
902_2 Terminal #2
902_3 Terminal #3
1000 Modulation signal
1001, 1801_1, 1801_2, 1851_1, 1851_2, 2401_1 to 2401_3, 3601_1, 3601_2, 4101_3, 4201_3 Sector sweep reference signal
1002, 1802_1 Feedback signal
1003, 1803_1, 1803_2, 1803_3, 1852_1, 1852_2, 1852_3 Data-symbol-included frame
1101_pi Sector sweep reference signal in transmission panel antenna i for frequency $b_p$
1201_j Reference signal according to j-th parameter in transmission panel antenna i for frequency $b_p$
1301_1 to 1301_8 Terminal "sector sweep reference signal" first transmission period to terminal "sector sweep reference signal" eighth transmission period
1401_i Terminal #i "sector sweep reference signal"
1501_xi Sector sweep reference signal in terminal #i transmission panel antenna xi
1511_j Reference signal according to j-th parameter in transmission panel antenna xi
1601_11 to 1601_K4 Feedback signal first transmission period for frequency $b1$ to feedback signal fourth transmission period for frequency $bK$
1611_i Terminal #i-addressed feedback signal
1701_11 to 1701_K4 Modulation signal (slot) first transmission period for frequency $b1$ to modulation signal (slot) fourth transmission period for frequency $bK$
1711 to 1716, 3011_1 to 3011_6 Terminal #1-addressed modulation signal (slot) to terminal #6-addressed modulation signal (slot)
1802_1, 1802_2 Feedback signal
1803_1, 1803_2, 1803_3, 1803_4 Data-symbol-included frame
1852_1, 1852_2, 1852_3, 1852_4 Data-symbol-included frame
2001_1 to 2001_6, 2501_1 to 2501_6, 3111_1 to 3111_6 Terminal #1 transmission frame to terminal #6 transmission frame

2701_1 Terminal "sector sweep reference signal"

2801_1 to 2801_K "Sector sweep reference signal" for frequency $b1$ to "sector sweep reference signal" for frequency $bK$

2811_1 to 2801_6 Terminal #1 "sector sweep reference signal" to terminal #6 "sector sweep reference signal"

2901_1 to 2901_K Feedback signal for frequency $b1$ to feedback signal for frequency $bK$

3001_1 to 3001_K Modulation signal (slot) for frequency $b1$ to modulation signal (slot) for frequency $bK$

2811_2, 2811_3 Terminal #2 "sector sweep reference signal", terminal #3 "sector sweep reference signal"

3401_1 to 3401_M Sector sweep reference signal in transmission panel antenna 1 to sector sweep reference signal in transmission panel antenna M

3501_1 to 3501_4 Reference signal according to first parameter in transmission panel antenna i to reference signal according to fourth parameter in transmission panel antenna i

3401_xi Sector sweep reference signal in transmission panel antenna xi

3701_1 to 3701_4 Reference signal according to first parameter in transmission panel antenna xi to reference signal according to fourth parameter in transmission panel antenna xi

3801_1 to 3801_4 First terminal-addressed feedback signal to fourth terminal-addressed feedback signal

3901_1 to 3901_4 First terminal-addressed modulation signal (slot) to fourth terminal-addressed modulation signal (slot)

4301_1 to 4301_K Sector sweep reference signal in frequency $b1$ to sector sweep reference signal in frequency $bK$

4401_1 to 4401_H Reference signal according to first parameter for frequency $bp$ to reference signal according to H-th parameter for frequency $bp$

4511_1 to 4511_G Reference signal according to first parameter to reference signal according to G-th parameter

4611_1 to 4611_F Reference signal according to first parameter to reference signal according to F-th parameter

**Claims**

1. A radio apparatus, comprising:

   a radio, which in operation, performs radio communication in a frame unit including a first resource group divided in a frequency direction and a second resource group divided in a time direction; and
   a controller, which in operation, selects a resource to be used for sensing from the first resource group and the second resource group included in the frame unit.

2. The radio apparatus according to claim 1, wherein the radio apparatus senses a target based on a request from another radio apparatus.

3. The radio apparatus according to claim 2, wherein the radio apparatus transmits a sensing result to the another radio apparatus.

4. The radio apparatus according to claim 1, wherein the radio apparatus asks another radio apparatus for permission to sense a target and senses the target when receiving sensing permission from the another radio apparatus.

5. The radio apparatus according to claim 1, wherein,

   the frame unit is composed of a first communication unit and a second communication unit,
   the first resource group is included in the first communication unit, and
   the second resource group is included in the second communication unit.

6. The radio apparatus according to claim 1, wherein the radio apparatus determines a resource to be used for data signal communication from the first resource group.

7. A sensing method, comprising:

   performing radio communication in a frame unit including a first resource group divided in a frequency direction and a second resource group divided in a time direction; and
   selecting a resource to be used for sensing from the first resource group and the second resource group included in the frame unit.

FIG. 1A

FIG. 1B

FIG. 1C

EP 4 369 671 A1

FIG. 2

EP 4 369 671 A1

FIG. 3

EP 4 369 671 A1

FIG. 4

FIG. 5

601 Rx FE processing

602 FFT

603 PARALLEL/SERIAL CONVERTER

604 Demapper

FIG. 6

FIG. 7

EP 4 369 671 A1

FIG. 8

FIG. 9

EXEMPLARY MODULATION SIGNAL 1000 TRANSMITTED BY BASE STATION:

FREQUENCY

| 1001 | 1002 | 1003 |
| --- | --- | --- |
| SECTOR SWEEP REFERENCE SIGNAL | FEEDBACK SIGNAL | DATA-SYMBOL -INCLUDED FRAME |

TIME

t0    t1    t2    t3    t4    t5

TERMINAL RESPONSE PERIOD

FIG. 10

EP 4 369 671 A1

FREQUENCY

| | 1101_K1 | 1101_K2 | | 1101_KM |
|---|---|---|---|---|
| FREQUENCY BAND ♭K | SECTOR SWEEP REFERENCE SIGNAL IN TRANSMISSION PANEL ANTENNA 1 FOR FREQUENCY ♭K | SECTOR SWEEP REFERENCE SIGNAL IN TRANSMISSION PANEL ANTENNA 2 FOR FREQUENCY ♭K | · · · | SECTOR SWEEP REFERENCE SIGNAL IN TRANSMISSION PANEL ANTENNA M FOR FREQUENCY ♭K |
| | 1101_21 | 1101_22 | | 1101_2M |
| FREQUENCY BAND ♭2 | SECTOR SWEEP REFERENCE SIGNAL IN TRANSMISSION PANEL ANTENNA 1 FOR FREQUENCY ♭2 | SECTOR SWEEP REFERENCE SIGNAL IN TRANSMISSION PANEL ANTENNA 2 FOR FREQUENCY ♭2 | · · · | SECTOR SWEEP REFERENCE SIGNAL IN TRANSMISSION PANEL ANTENNA M FOR FREQUENCY ♭2 |
| FREQUENCY BAND ♭1 | SECTOR SWEEP REFERENCE SIGNAL IN TRANSMISSION PANEL ANTENNA 1 FOR FREQUENCY ♭1 | SECTOR SWEEP REFERENCE SIGNAL IN TRANSMISSION PANEL ANTENNA 2 FOR FREQUENCY ♭1 | · · · | SECTOR SWEEP REFERENCE SIGNAL IN TRANSMISSION PANEL ANTENNA M FOR FREQUENCY ♭1 |
| | 1101_11 | 1101_12 | | 1101_1M |
| | FIRST TIME PERIOD | SECOND TIME PERIOD | | M-TH TIME PERIOD |

TIME

FIG. 11

1101_pi

SECTOR SWEEP REFERENCE
SIGNAL IN TRANSMISSION
PANEL ANTENNA i FOR
FREQUENCY ♭p

1201_1

REFERENCE SIGNAL
ACCORDING TO
FIRST PARAMETER
IN TRANSMISSION
PANEL ANTENNA i
FOR FREQUENCY ♭p

1201_2

REFERENCE SIGNAL
ACCORDING TO
SECOND PARAMETER
IN TRANSMISSION
PANEL ANTENNA i
FOR FREQUENCY ♭p

1201_3

REFERENCE SIGNAL
ACCORDING TO
THIRD PARAMETER
IN TRANSMISSION
PANEL ANTENNA i
FOR FREQUENCY ♭p

1201_4

REFERENCE SIGNAL
ACCORDING TO
FOURTH PARAMETER
IN TRANSMISSION
PANEL ANTENNA i
FOR FREQUENCY ♭p

TIME

FIG. 12

FIG. 13

EP 4 369 671 A1

FIG. 14

1401_i

TERMINAL #i
"SECTOR SWEEP
REFERENCE SIGNAL"

1501_1

SECTOR SWEEP
REFERENCE SIGNAL
IN TERMINAL #i
TRANSMISSION
PANEL ANTENNA 1

1501_2

SECTOR SWEEP
REFERENCE SIGNAL
IN TERMINAL #i
TRANSMISSION
PANEL ANTENNA 2

・・・

1501_M

SECTOR SWEEP
REFERENCE SIGNAL
IN TERMINAL #i
TRANSMISSION
PANEL ANTENNA M

→ TIME

FIG. 15A

EP 4 369 671 A1

1501_xi

SECTOR SWEEP
REFERENCE SIGNAL
IN TERMINAL #i
TRANSMISSION
PANEL ANTENNA xi

| 1511_1 | 1511_2 | 1511_3 | 1511_4 |
|---|---|---|---|
| REFERENCE SIGNAL ACCORDING TO FIRST PARAMETER IN TRANSMISSION PANEL ANTENNA xi | REFERENCE SIGNAL ACCORDING TO SECOND PARAMETER IN TRANSMISSION PANEL ANTENNA xi | REFERENCE SIGNAL ACCORDING TO THIRD PARAMETER IN TRANSMISSION PANEL ANTENNA xi | REFERENCE SIGNAL ACCORDING TO FOURTH PARAMETER IN TRANSMISSION PANEL ANTENNA xi |

TIME

FIG. 15B

1002

FEEDBACK SIGNAL

1601_K1 — FEEDBACK SIGNAL FIRST TRANSMISSION PERIOD FOR FREQUENCY b K

1601_K2 — FEEDBACK SIGNAL SECOND TRANSMISSION PERIOD FO FREQUENCY b K

1601_K3 — FEEDBACK SIGNAL THIRD TRANSMISSION PERIOD FOR FREQUENCY b K

1601_K4 — FEEDBACK SIGNAL FOURTH TRANSMISSION PERIOD FOR FREQUENCY b K

1601_21 — FEEDBACK SIGNAL FIRST TRANSMISSION PERIOD FOR FREQUENCY b 2

1601_22 — FEEDBACK SIGNAL SECOND TRANSMISSION PERIOD FOR FREQUENCY b 2

1601_23 — FEEDBACK SIGNAL THIRD TRANSMISSION PERIOD FOR FREQUENCY b 2

1601_24 — FEEDBACK SIGNAL FOURTH TRANSMISSION PERIOD FOR FREQUENCY b 2

1601_11 — FEEDBACK SIGNAL FIRST TRANSMISSION PERIOD FOR FREQUENCY b 1

1601_12 — FEEDBACK SIGNAL SECOND TRANSMISSION PERIOD FOR FREQUENCY b 1

1601_13 — FEEDBACK SIGNAL THIRD TRANSMISSION PERIOD FOR FREQUENCY b 1

1601_14 — FEEDBACK SIGNAL FOURTH TRANSMISSION PERIOD FOR FREQUENCY b 1

FIRST TRANSMISSION PERIOD

SECOND TRANSMISSION PERIOD

THIRD TRANSMISSION PERIOD

FOURTH TRANSMISSION PERIOD

FREQUENCY

FREQUENCY BAND b K

FREQUENCY BAND b 2

FREQUENCY BAND b 1

TIME

t2 ... t3

FIG. 16A

121

FIG. 16B

EP 4 369 671 A1

FIG. 17A

FIG. 17B

EP 4 369 671 A1

(A) MODULATION SIGNAL TRANSMISSION STATE OF BASE STATION:

1801_1 SECTOR SWEEP REFERENCE SIGNAL

1802_1 FEEDBACK SIGNAL

1803_1 DATA-SYMBOL-INCLUDED FRAME

1803_2 DATA-SYMBOL-INCLUDED FRAME

TIME

(B) MODULATION SIGNAL TRANSMISSION STATE OF TERMINAL:

1851_1 SECTOR SWEEP REFERENCE SIGNAL

1852_1 DATA-SYMBOL-INCLUDED FRAME

1852_2 DATA-SYMBOL-INCLUDED FRAME

TIME

FIG. 18

FIG. 19

EP 4 369 671 A1

FIG. 20A

EP 4 369 671 A1

FIG. 20B

FREQUENCY

DATA-SYMBOL-INCLUDED FRAME  1852_i

FREQUENCY
BAND
♭ K

FREQUENCY
BAND
♭ 2

2001_3

TERMINAL #3
TRANSMISSION
FRAME

FREQUENCY
BAND
♭ 1

TIME

| FIRST TRANSMISSION PERIOD | SECOND TRANSMISSION PERIOD | THIRD TRANSMISSION PERIOD | FOURTH TRANSMISSION PERIOD |

FIG. 20C

FIG. 20D

EP 4 369 671 A1

EP 4 369 671 A1

DATA-SYMBOL-INCLUDED FRAME — 1852_i

FREQUENCY

FREQUENCY
BAND
♭ K

⋮

2001_5

FREQUENCY
BAND
♭ 2

TERMINAL #5
TRANSMISSION
FRAME

FREQUENCY
BAND
♭ 1

TIME

| FIRST TRANSMISSION PERIOD | SECOND TRANSMISSION PERIOD | THIRD TRANSMISSION PERIOD | FOURTH TRANSMISSION PERIOD |

FIG. 20E

FIG. 20F

FIG. 21

EP 4 369 671 A1

FIG. 22A

EP 4 369 671 A1

FIG. 22B

FIG. 23A

EP 4 369 671 A1

FIG. 23B

EP 4 369 671 A1

FREQUENCY

| DATA-SYMBOL-INCLUDED FRAME | 1003 |

FREQUENCY BAND ♭K — MODULATION SIGNAL (SLOT) FOR FREQUENCY ♭K — x3001_K

⋮

FREQUENCY BAND ♭7 — MODULATION SIGNAL (SLOT) FOR FREQUENCY ♭7 — x3001_7

FREQUENCY BAND ♭6 — MODULATION SIGNAL (SLOT) FOR FREQUENCY ♭6 — x3001_6

FREQUENCY BAND ♭5 — MODULATION SIGNAL (SLOT) FOR FREQUENCY ♭5 — x3001_5

FREQUENCY BAND ♭4 — MODULATION SIGNAL (SLOT) FOR FREQUENCY ♭4 — x3001_4

FREQUENCY BAND ♭3 — MODULATION SIGNAL (SLOT) FOR FREQUENCY ♭3 — x3001_3

FREQUENCY BAND ♭2 — MODULATION SIGNAL (SLOT) FOR FREQUENCY ♭2 — x3001_2

FREQUENCY BAND ♭1 — MODULATION SIGNAL (SLOT) FOR FREQUENCY ♭1 — x3001_1

TIME

t4          t5

FIG. 24A

FIG. 24B

EP 4 369 671 A1

FIG. 25A

FIG. 25B

FREQUENCY

FREQUENCY BAND ♭ K

FREQUENCY BAND ♭ 7

FREQUENCY BAND ♭ 6

FREQUENCY BAND ♭ 5

FREQUENCY BAND ♭ 4

FREQUENCY BAND ♭ 3

FREQUENCY BAND ♭ 2

FREQUENCY BAND ♭ 1

DATA-SYMBOL-INCLUDED FRAME — 1852_i

TERMINAL #2 TRANSMISSION FRAME — x3111_2

TIME

EP 4 369 671 A1

FIG. 25C

EP 4 369 671 A1

FIG. 25D

EP 4 369 671 A1

FIG. 25E

EP 4 369 671 A1

FIG. 25F

EP 4 369 671 A1

FIG. 26

EP 4 369 671 A1

x3401_1

x3401_2

x3401_M

| SECTOR SWEEP REFERENCE SIGNAL IN TRANSMISSION PANEL ANTENNA 1 | SECTOR SWEEP REFERENCE SIGNAL IN TRANSMISSION PANEL ANTENNA 2 | ... | SECTOR SWEEP REFERENCE SIGNAL IN TRANSMISSION PANEL ANTENNA M |

TIME

FIG. 27

FIG. 28

FIG. 29

EP 4 369 671 A1

x3401_xi

SECTOR SWEEP REFERENCE
SIGNAL IN TRANSMISSION
PANEL ANTENNA xi

| x3701_1 | x3701_2 | x3701_3 | x3701_4 |
|---|---|---|---|
| REFERENCE SIGNAL ACCORDING TO FIRST PARAMETER IN TRANSMISSION PANEL ANTENNA xi | REFERENCE SIGNAL ACCORDING TO SECOND PARAMETER IN TRANSMISSION PANEL ANTENNA xi | REFERENCE SIGNAL ACCORDING TO THIRD PARAMETER IN TRANSMISSION PANEL ANTENNA xi | REFERENCE SIGNAL ACCORDING TO FOURTH PARAMETER IN TRANSMISSION PANEL ANTENNA xi |

→ TIME

FIG. 30

EP 4 369 671 A1

FIG. 31

FIG. 32

EP 4 369 671 A1

FIG. 33

EP 4 369 671 A1

FIG. 34

EP 4 369 671 A1

FIG. 35

1401_i

TERMINAL #i
"SECTOR SWEEP
REFERENCE SIGNAL"

x4511_1

x4511_2

x4511_G

| REFERENCE SIGNAL ACCORDING TO FIRST PARAMETER | REFERENCE SIGNAL ACCORDING TO SECOND PARAMETER | · · · · · · · · · | REFERENCE SIGNAL ACCORDING TO G-th PARAMETER |

TIME

FIG. 36

FIG. 37

x101

gNB    Sense
       terminal

Transmit
sensing result

TERMINAL

x102

FIG. 38A

x103

TARGET

Sense
target

gNB    x101

Request sensing
Receive sensing result    TERMINAL

x102

FIG. 38B

x103

x101

TARGET

gNB

Sense
target

TERMINAL

Permit sensing
Adjust sensing timing

x102

FIG. 38C

FIG. 39

| | Transmit response | Transmit sensing signal | Sense target (object) | Transmit target (object) estimation result information |
|---|---|---|---|---|
| | x311 | x312 | x313 | x314 |

gNB

TERMINAL

Transmit sensing request information
x301

Receive response
x302

Receive estimation result information
x303

FIG. 40

FREQUENCY

x401

SSW

x402_1 CONTROL INFORMATION SYMBOL

x403_1 COMMUNICATION SIGNAL

x404_1 SENSING SIGNAL

gNB

TIME

FIG. 41A

FREQUENCY

x451

SSW RESPONSE

x452_1 CONTROL INFORMATION SYMBOL

x453_1 COMMUNICATION SIGNAL

TERMINAL

TIME

FIG. 41B

FREQUENCY

| x402_2 | x403_2 | x404_2 |
|--------|--------|--------|
| CONTROL INFORMATION SYMBOL | COMMUNICATION SIGNAL | SENSING SIGNAL |

gNB

TIME

FIG. 41C

FREQUENCY

| x452_2 | x453_2 |
|--------|--------|
| CONTROL INFORMATION SYMBOL | COMMUNICATION SIGNAL |

TERMINAL

TIME

FIG. 41D

FREQUENCY

x403_i

COMMUNICATION
SIGNAL

x411

TIME

FIG. 42A

FREQUENCY

x403_i

COMMUNICATION
SIGNAL

x411

TIME

FIG. 42B

FREQUENCY

x403_i        x411

COMMUNICATION
SIGNAL

TIME

FIG. 42C

FREQUENCY

x403_i

x411

COMMUNICATION
SIGNAL

TIME

FIG. 42D

FREQUENCY

x403_i    x411

COMMUNICATION
SIGNAL

→TIME

FIG. 42E

FREQUENCY

x403_i    x411

COMMUNICATION
SIGNAL

→TIME

FIG. 42F

FREQUENCY   x404_i

SENSING SIGNAL

x412

TIME

FIG. 43A

FREQUENCY   x404_i

SENSING SIGNAL

x412

TIME

FIG. 43B

FREQUENCY    x404_i    x412

SENSING
SIGNAL

→ TIME

FIG. 43C

FREQUENCY    x404_i

x412

SENSING
SIGNAL

→ TIME

FIG. 43D

FREQUENCY x404_i x412

SENSING
SIGNAL

TIME

FIG. 43E

FREQUENCY x404_i x412

SENSING SIGNAL

TIME

FIG. 43F

gNB

Transmit
response
y311

Indicate
transmission of
"sensing signal"
y312

Sense
terminal
y313

Transmit terminal
estimation
result information
y314

TERMINAL

Transmit sensing
request information
y301

Receive
response
y302

Transmit
sensing signal
y303

Receive estimation
result information
y304

FIG. 44

Indicate
transmission of
"sensing signal"
y412

Sense
terminal
y413

Transmit terminal
estimation result
information
y414

gNB

TERMINAL

Transmit
sensing signal
y403

Receive estimation
result information
y404

FIG. 45

FIG. 46A

FIG. 46B

FIG. 46C

EP 4 369 671 A1

y601     y602     y603     y604

| TIME INFORMATION | MODULATION SIGNAL TYPE INFORMATION | FREQUENCY BANDWIDTH REQUEST INFORMATION | MODULATION SIGNAL |
|---|---|---|---|

FIG. 47

| y701 | y702 | y703 | y704 | y705 |
|---|---|---|---|---|
| SECTOR SWEEP-RELATED FEEDBACK INFORMATION | SENSING REQUEST -RELATED INFORMATION | REQUEST INFORMATION FOR TERMINAL TO IMPLEMENT SENSING | REQUEST INFORMATION FOR TERMINAL TO IMPLEMENT INDIVIDUAL COMMUNICATION | FREQUENCY BANDWIDTH REQUEST INFORMATION |

FIG. 48

EP 4 369 671 A1

y801　　　　　y802　　　　　y803

| RESOURCE ALLOCATION INFORMATION | INFORMATION ON SENSING IMPLEMENTATION PERMISSION | INFORMATION ON INDIVIDUAL COMMUNICATION IMPLEMENTATION PERMISSION |
|---|---|---|

FIG. 49

FIG. 50

FIG. 51

EP 4 369 671 A1

FIG. 52A

FIG. 52B

FIG. 53A

FIG. 53B

FIG. 53C

FIG. 54

FIG. 55A

FIG. 55B

FIG. 56A

FIG. 56B

FIG. 56C

EP 4 369 671 A1

FIG. 57A

FIG. 57B

EP 4 369 671 A1

FREQUENCY

y1102    y1103    y1403

gNB
RESOURCE

| OFDMA APPLIED AREA | OFDM (TDM) APPLIED AREA | SC (TDM) APPLIED AREA |

THIRD TIME

TIME

FIG. 58A

FREQUENCY

y1701

gNB
RESOURCE

OFDMA APPLIED AREA OR
OFDM (TDM) APPLIED AREA
OR SC (TDM) APPLIED AREA

THIRD TIME

TIME

FIG. 58B

EP 4 369 671 A1

FREQUENCY

TERMINAL
RESOURCE

FIFTH TIME

| y1152 | y1153 | y1453 |
|---|---|---|
| OFDMA APPLIED AREA | OFDM (TDM) APPLIED AREA | SC (TDM) APPLIED AREA |

TIME

**FIG. 59A**

FREQUENCY

TERMINAL
RESOURCE

FIFTH TIME

| y1801 |
|---|
| OFDMA APPLIED AREA OR OFDM (TDM) APPLIED AREA OR SC (TDM) APPLIED AREA |

TIME

**FIG. 59B**

FIG. 60

FIG. 61

x101

gNB

Sense
terminal

Transmit
sensing result

6211

TERMINAL

x102

FIG. 62A

x103

TARGET

6211

Sense
target

gNB

x101

Request sensing
Receive sensing result

TERMINAL

x102

FIG. 62B

x101

6211

x103

gNB

TARGET

Sense
target

TERMINAL

Permit sensing
Adjust sensing timing

x102

FIG. 62C

gNB

x101

Transmit
sensing result

Sense
terminal

POWER
TRANSMISSION
APPARATUS

6210

6211

TERMINAL

x102

FIG. 62D

x103

TARGET

POWER
TRANSMISSION
APPARATUS

6211

6210

Sense
target

gNB

x101

Request sensing
Receive sensing result

TERMINAL

x102

FIG. 62E

6210

POWER
TRANSMISSION
APPARATUS

6211

x103

TARGET

x101

gNB

Sense
target

TERMINAL

Permit sensing
Adjust sensing timing

x102

FIG. 62F

6301

COMMUNICATION/
SEINSING
APPARATUS

6311    6312

POWER
TRANSMITTER    6302

FIG. 63

6401

COMMUNICATION/
SEINSING
APPARATUS

6430

BATTERY

6422

6411    6412

6421

POWER
RECEIVER

6402

FIG. 64A

6401

COMMUNICATION/
SEINSING
APPARATUS

6430

BATTERY

6422

6411

6412

6499

6421

POWER
RECEIVER

6402

6450

APPARATUS

FIG. 64B

FIG. 64C

| CHARGING REQUEST INFORMATION (POWER TRANSMISSION REQUEST INFORMATION) | LOCATION INFORMATION | BATTERY LEVEL INFORMATION | POWER RECEPTION STATE INFORMATION |
|---|---|---|---|
| 6501 | 6502 | 6503 | 6504 |

FIG. 65

| POWER TRANSMISSION APPARATUS INFORMATION | POWER TRANSMISSION LOCATION INFORMATION/POWER TRANSMISSION DIRECTION INFORMATION | POWER TRANSMISSION INFORMATION | POWER TRANSMISSION STATE INFORMATION |
|---|---|---|---|
| 6601 | 6602 | 6603 | 6604 |

FIG. 66

EP 4 369 671 A1

x103

x101

TARGET

gNB

6211

Permit sensing
Adjust sensing timing

Sense
target

TERMINAL

x102

FIG. 67

FIG. 68

EP 4 369 671 A1

FIG. 69

FIG. 70

001

RADIO
COMMUNICATION
DEVICE

051

RADIO
COMMUNICATION
DEVICE

FIG. 71

## INTERNATIONAL SEARCH REPORT

International application No.

**PCT/JP2022/019838**

### A. CLASSIFICATION OF SUBJECT MATTER

*H04L 27/26*(2006.01)i; *H04B 7/06*(2006.01)i; *H04W 16/14*(2009.01)i; *H04W 16/28*(2009.01)i; *H04W 72/04*(2009.01)i
FI:   H04L27/26 110; H04B7/06 984; H04B7/06 956; H04W16/14; H04W72/04 131; H04W72/04 133; H04W16/28

According to International Patent Classification (IPC) or to both national classification and IPC

### B. FIELDS SEARCHED

Minimum documentation searched (classification system followed by classification symbols)

H04L27/26; H04B7/06; H04W16/14; H04W16/28; H04W72/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2020-12773 A (SONY CORP) 23 January 2020 (2020-01-23) paragraphs [0016]-[0017], [0094]-[0095], [0168], [0173]-[0176], [0189], fig. 1, 11, 20, 21, 23 | 1-5, 7 |
| Y | | 6 |
| X | WO 2019/190788 A1 (QUALCOMM INCORPORATED) 03 October 2019 (2019-10-03) paragraphs [0051], [0082], [0096]-[0097], fig. 1, 7A | 1, 7 |
| Y | JP 2020-523805 A (GOOGLE LLC) 06 August 2020 (2020-08-06) paragraph [0058], fig. 10 | 6 |
| A | JP 2019-41354 A (PANASONIC CORP) 14 March 2019 (2019-03-14) entire text, all drawings | 1-7 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **06 July 2022** | **19 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/019838**

| Patent document cited in search report | | | Publication date (day/month/year) | Patent family member(s) | Publication date (day/month/year) |
|---|---|---|---|---|---|
| JP | 2020-12773 | A | 23 January 2020 | US 2021/0270951 A1 paragraphs [0055]-[0057], [0151]-[0152], [0228], [0233]-[0236], [0249], fig. 1, 11, 20, 21, 23<br>WO 2020/017475 A1 | |
| WO | 2019/190788 | A1 | 03 October 2019 | US 2019/0293748 A1 paragraphs [0051], [0082], [0096]-[0097], fig. 1, 7A<br>CN 111902728 A<br>KR 10-2020-0135504 A | |
| JP | 2020-523805 | A | 06 August 2020 | US 2018/0348339 A1 paragraph [0079], fig. 10<br>TW 201904244 A<br>CN 110192119 A | |
| JP | 2019-41354 | A | 14 March 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018518855 W

- JP 2021114138 A

**Non-patent literature cited in the description**

- **S. SCHUSTER ; S. SCHEIBLHOFER ; R. FEGER ; A. STELZER.** Signal model and statistical analysis for the sequential sampling pulse radar technique. *Proc. IEEE Radar Conf, 2008,* 2008, 1-6
- **D. CAO ; T. LI ; P. KANG ; H. LIU ; S. ZHOU ; H. SU.** Single-Pulse Multi-Beams Operation of Phased Array Radar. *2016 CIE International Conference on Radar (RADAR),* 2016, 1-4

- **A. BOURDOUX ; K. PARASHAR ; M. BAUDUIN.** Phenomenology of mutual interference of FMCW and PMCW automotive radars. *2017 IEEE Radar Conference (Radar Conf.),* 2017, 1709-1714
- **J. FINK ; F. K. JONDRAL.** Comparison of OFDM radar and chirp sequence radar. *2015 16th International Radar Symposium (IRS),* 2015, 315-320